# EUROPÄISCHE PATENTANMELDUNG

(11) **EP 3 332 645 A1**
(43) Veröffentlichungstag der Anmeldung: **13.06.2018**
(21) Anmeldenummer: 16203415.1
(22) Anmeldetag: 12.12.2016
(51) Int. Cl.: A01N 43/54, A01N 43/90, A01N 47/38, A01P 15/00

(54) **VERWENDUNG SUBSTITUIERTER PYRIMIDINDIONE ODER JEWEILS DEREN SALZE ALS WIRKSTOFFE GEGEN ABIOTISCHEN PFLANZENSTRESS**

(71) Anmelder: Bayer CropScience AG, 40789 Monheim (DE)
(72) Erfinder: FRACKENPOHL, Jens, 60322 Frankfurt am Main (DE); BOJACK, Guido, 65207 Wiesbaden-Naurod (DE); Lehr, Stefan, 65835 Liederbach (DE); HELMKE, Hendrik, 65835 Liederbach (DE); MÜLLER, Thomas, 60323 Frankfurt am Main (DE); SCHNATTERER, Stefan, 65795 Hattersheim (DE); DITTGEN, Jan, 60316 Frankfurt (DE); SCHMUTZLER, Dirk, 65795 Hattersheim (DE); BALTZ, Rachel, 69660 Collonges au Mont dor (FR); BICKERS, Udo, 50737 Köln (DE); RUIZ-SANTAELLA, Juan Pedro, 08022 Barcelona (ES); HILLS, Martin Jeffrey, 65510 Idstein (DE)
(74) Vertreter: BIP Patents

(57) **Zusammenfassung**

Die Erfindung betrifft die Verwendung substituierter Pyrimidindione der Formel (I) oder deren Salze 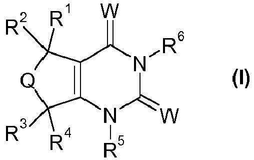 wobei die Reste in der allgemeinen Formel (I) den in der Beschreibung gegebenen Definitionen entsprechen,
zur Erhöhung der Stresstoleranz in Pflanzen gegenüber abiotischem Stress und/oder zur Erhöhung des Pflanzenertrags.

## Beschreibung

Die Erfindung betrifft die Verwendung substituierter Pyrimidindione oder jeweils deren Salze, zur Steigerung der Stresstoleranz in Pflanzen gegenüber abiotischem Stress, zur Stärkung des Pflanzenwachstums und/oder zur Erhöhung des Pflanzenertrags.

Es ist bekannt, dass bestimmte substituierte Tetrahydrochinazolinone als Wirkstoffe zur Therapie von Ischämie- und Reperfusionsschäden eingesetzt werden können (vgl. WO 2002/06247, WO 2003/059892). Die Dopamin-agonistische Wirkung (vgl. CA2053475) von substituierten Chinazolin-2,4-dionen ist ebenfalls beschrieben. Es ist außerdem bekannt, dass bestimmte bicyclische 2,4-(1H,3H)-Pyrimidinone als 5-HT₂-Antagonisten zur Behandlung kardiovaskulärer Krankheiten, Depression und anderer mentaler Krankheiten eingesetzt werden können (vgl. JP 03264579 und Chem. Pharm. Bull. 1990, 38, 2726). Die Patentschrift US 5859014 offenbart Tetrahydrochinazolindion-Derivate als α1-adrenerge Rezeptor-Antagonisten zur Behandlung von Prostata-Hypertrophie.

In DE 1959705, DE 2041996, DE 2024942 und DE 2126148 werden Pyrimidindion-Derivate zur Herstellung von Pflanzenschutzmitteln aufgeführt. Die Verwendung von substituierten Pyrimidindionen als Hypnotika ist ebenfalls bekannt (DE 2142317). Außerdem werden in der Literatur verschiedene überbrückte Pyrimidindione als Nucleosid-Analoga mit potentieller antiviraler Wirkung beschrieben (vgl. Nucleosides Nucleotides 1994, 13, 891; J. Med. Chem. 1996, 39, 789; Eur. J. Med. Chem. 2010, 45, 831). Die Herstellung von bestimmten substituierten Tetrahydrochinazolindionen und ihre inhibierende Wirkung an Enzymen aus der Familie der Poly(ADP-ribose)polymerase wird in Bioorg. Med. Chem. Lett. 2002, 12, 3187 beschrieben. Es ist außerdem bekannt, dass substituierte Tetrahydrochinazolindione als Deoxynucleosidkinase-Inhibitoren verwendet werden können (vgl. Pol. J. Chem. 1978, 52, 1035).

Bisher nicht beschrieben ist dagegen die Verwendung der in den oben zitierten Patentanmeldungen und Publikationen beschriebenen substituierten Pyrimidindione zur Steigerung der Stresstoleranz in Pflanzen gegenüber abiotischem Stress, zur Stärkung des Pflanzenwachstums und/oder zur Erhöhung des Pflanzenertrags.

Es ist bekannt, dass Pflanzen auf natürliche Stressbedingungen, wie beispielsweise Kälte, Hitze, Trockenheit, Verwundung, Pathogenbefall (Viren, Bakterien, Pilze, Insekten) etc. aber auch auf Herbizide mit spezifischen oder unspezifischen Abwehrmechanismen reagieren können [Pflanzenbiochemie, S. 393-462 , Spektrum Akademischer Verlag, Heidelberg, Berlin, Oxford, Hans W. Heldt, 1996.; Biochemistry and Molecular Biology of Plants, S. 1102-1203, American Society of Plant Physiologists, Rockville, Maryland, eds. Buchanan, Gruissem, Jones, 2000].

In Pflanzen sind zahlreiche Proteine und die sie codierenden Gene bekannt, die an Abwehrreaktionen gegen abiotischen Stress (z.B. Kälte, Hitze, Trockenheit, Salz, Überflutung) beteiligt sind. Diese gehören teilweise zu Signaltransduktionsketten (z.B. Transkriptionsfaktoren, Kinasen, Phosphatasen) oder bewirken eine physiologische Antwort der Pflanzenzelle (z.B. Ionentransport, Entgiftung reaktiver Sauerstoff-Spezies). Zu den Signalkettengenen der abiotischen Stressreaktion gehören u.a. Transkriptionsfaktoren der Klassen DREB und CBF (Jaglo-Ottosen et al., 1998, Science 280: 104-106). An der Reaktion auf Salzstress sind Phosphatasen vom Typ ATPK und MP2C beteiligt. Ferner wird bei Salzstress häufig die Biosynthese von Osmolyten wie Prolin oder Sucrose aktiviert. Beteiligt sind hier z.B. die Sucrose-Synthase und Prolin-Transporter (Hasegawa et al., 2000, Annu Rev Plant Physiol Plant Mol Biol 51: 463-499). Die Stressabwehr der Pflanzen gegen Kälte und Trockenheit benutzt z.T. die gleichen molekularen Mechanismen. Bekannt ist die Akkumulation von sogenannten Late Embryogenesis Abundant Proteins (LEA-Proteine), zu denen als wichtige Klasse die Dehydrine gehören (Ingram and Bartels, 1996, Annu Rev Plant Physiol Plant Mol Biol 47: 277-403, Close, 1997, Physiol Plant 100: 291-296). Es handelt sich dabei um Chaperone, die Vesikel, Proteine und Membranstrukturen in gestressten Pflanzen stabilisieren (Bray, 1993, Plant Physiol 103: 1035-1040). Außerdem erfolgt häufig eine Induktion von Aldehyd-Deydrogenasen, welche die bei oxidativem Stress entstehenden reaktiven Sauerstoff-Spezies (ROS) entgiften (Kirch et al., 2005, Plant Mol Biol 57: 315-332).

Heat Shock Faktoren (HSF) und Heat Shock Proteine (HSP) werden bei Hitzestress aktiviert und spielen hier als Chaperone eine ähnliche Rolle wie die Dehydrine bei Kälte- und Trockenstress (Yu et al., 2005, Mol Cells 19: 328-333).

Eine Reihe von pflanzenendogenen Signalstoffen, die in die Stresstoleranz bzw. die Pathogenabwehr involviert sind, sind bereits bekannt. Zu nennen sind hier beispielsweise Salicylsäure, Benzoesäure, Jasmonsäure oder Ethylen [Biochemistry and Molecular Biology of Plants, S. 850-929, American Society of Plant Physiologists, Rockville, Maryland, eds. Buchanan, Gruissem, Jones, 2000]. Einige dieser Substanzen oder deren stabile synthetische Derivate und abgeleitete Strukturen sind auch bei externer Applikation auf Pflanzen oder Saatgutbeizung wirksam und aktivieren Abwehrreaktionen, die eine erhöhte Stress- bzw. Pathogentoleranz der Pflanze zur Folge haben [Sembdner, and Parthier, 1993, Ann. Rev. Plant Physiol. Plant Mol. Biol. 44: 569-589].

Es ist weiter bekannt, dass chemische Substanzen die Toleranz von Pflanzen gegen abiotischen Stress erhöhen können. Derartige Substanzen werden dabei entweder durch Saatgut-Beizung, durch Blattspritzung oder durch Bodenbehandung appliziert. So wird eine Erhöhung der abiotischen Stresstoleranz von Kulturpflanzen durch Behandlung mit Elicitoren der Systemic Acquired Resistance (SAR) oder Abscisinsäure-Derivaten beschrieben (Schading and Wei, WO 2000/28055; Abrams and Gusta, US 5201931; Abrams et al, WO 97/23441, Churchill et al., 1998, Plant Growth Regul 25: 35-45). Desweiteren wurden Effekte von Wachstumsregulatoren auf die Stresstoleranz von Kulturpflanzen beschrieben (Morrison and Andrews, 1992, J Plant Growth Regul 11: 113-117, RD-259027). In diesem Zusammenhang ist ebenfalls bekannt, dass ein wachstumsregulierendes Naphthylsulfonamid (4-Brom-N-(pyridin-2-ylmethyl)naphthalin-1-sulfonamid) die Keimung von Pflanzensamen in der gleichen Weise wie Abscisinsäure beeinflusst (Park et al. Science 2009, 324, 1068-1071). Außerdem ist bekannt, dass ein weiteres Naphthylsulfonamid, N-(6-aminohexyl)-5-chlornaphthalin-1-sulfonamid, den Calcium-Spiegel in Pflanzen beeinflusst, die einem Kälteschock ausgesetzt wurden (Cholewa et al. Can. J. Botany 1997, 75, 375-382).

Auch bei Anwendung von Fungiziden, insbesondere aus der Gruppe der Strobilurine oder der Succinat Dehydrogenase Inhibitoren werden ähnliche Effekte beobachtet, die häufig auch mit einer Ertragssteigerung einhergehen (Draber et al., DE3534948, Bartlett et al., 2002, Pest Manag Sci 60: 309). Es ist ebenfalls bekannt, dass das Herbizid Glyphosat in niedriger Dosierung das Wachstum einiger Pflanzenarten stimuliert (Cedergreen, Env. Pollution 2008, 156, 1099).

Bei osmotischem Stress ist eine Schutzwirkung durch Applikation von Osmolyten wie z.B. Glycinbetain oder deren biochemischen Vorstufen, z.B. Cholin-Derivate beobachtet worden (Chen et al., 2000, Plant Cell Environ 23: 609-618, Bergmann et al., DE 4103253). Auch die Wirkung von Antioxidantien wie z.B Naphtole und Xanthine zur Erhöhung der abiotischen Stresstoleranz in Pflanzen wurde bereits beschrieben (Bergmann et al., DD 277832, Bergmann et al., DD 277835). Die molekularen Ursachen der Anti-Stress-Wirkung dieser Substanzen sind jedoch weitgehend unbekannt.

Es ist weiter bekannt, dass die Toleranz von Pflanzen gegenüber abiotischem Stress durch eine Modifikation der Aktivität von endogenen Poly-ADP-ribose Polymerasen (PARP) oder Poly-(ADP-ribose) glycohydrolasen (PARG) erhöht werden kann (de Block et al., The Plant Journal, 2004, 41, 95; Levine et al., FEBS Lett. 1998, 440, 1; WO 2000/04173; WO 2004/090140).

Somit ist bekannt, dass Pflanzen über mehrere endogene Reaktionsmechanismen verfügen, die eine wirksame Abwehr gegenüber verschiedensten Schadorganismen und/oder natürlichem abiotischem Stress bewirken können.

Da sich die ökologischen und ökonomischen Anforderungen an moderne Pflanzenbehandlungsmittel laufend erhöhen, beispielsweise was Toxizität, Selektivität, Aufwandmenge, Rückstandsbildung und günstige Herstellbarkeit angeht, besteht die ständige Aufgabe, neue Pflanzenbehandlungsmittel zu entwickeln, die zumindest in Teilbereichen Vorteile gegenüber den bekannten aufweisen.

Daher bestand die Aufgabe der vorliegenden Erfindung darin, weitere Verbindungen bereitzustellen, die die Toleranz gegenüber abiotischem Stress in Pflanzen erhöhen, eine Stärkung des Pflanzenwachstums bewirken und/oder zur Erhöhung des Pflanzenertrags beitragen.

Gegenstand der vorliegenden Erfindung ist demnach die Verwendung substituierter Pyrimidindione der allgemeinen Formel (I) oder jeweils deren Salze 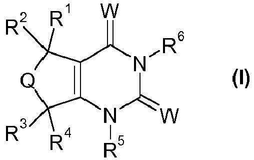 zur Erhöhung der Stresstoleranz in Pflanzen gegenüber abiotischem Stress und/oder zur Erhöhung des Pflanzenertrags, wobei
- Q: für 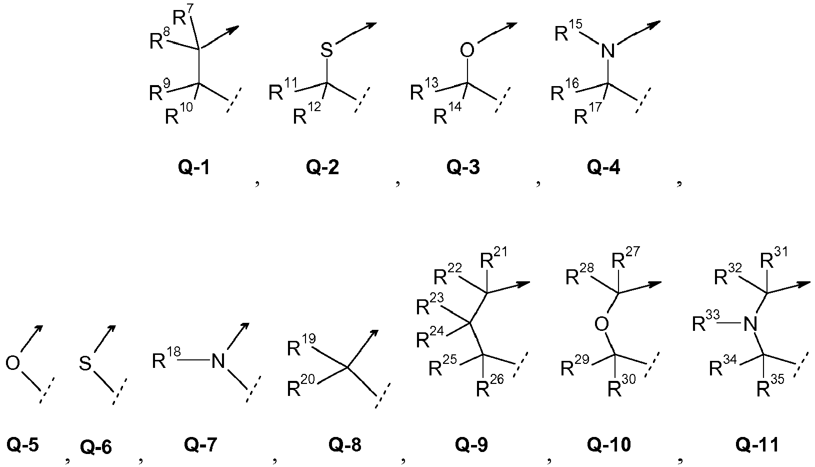
steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
- W: für Sauerstoff oder Schwefel steht,
- R¹, R⁴: unabhängig voneinander für Wasserstoff, Halogen, Alkyl, Cycloalkyl, Alkenyl, Cycloalkenyl, Alkinyl, Aryl, Arylalkyl, Arylalkenyl, Arylalkinyl, Heteroaryl, Heterocyclyl, Cycloalkylalkyl, Cycloalkylalkenyl, Cycloalkylalkinyl, Heteroarylalkyl, Heterocyclylalkyl, Heteroarylalkenyl, Heteroarylalkinyl, Cycloalkenyl, Haloalkyl, Halocycloalkyl, Haloalkenyl, Halocycloalkenyl, Haloalkinyl, Alkoxyalkylalkinyl, Tris-alkylsilylalkinyl, Bisalkyl(aryl)silylalkinyl, Bisaryl(alkyl)silylalkinyl, Alkoxyalkyl, Alkoxy, Haloalkoxy, Cycloalkyloxy, Alkenyloxyalkyl, Heteroarylalkoxy, Arylalkoxy, Alkylthio, Alkylthioalkyl, Haloalkylthio, Arylthio, Cycloalkylthio, Alkylsulfonyl, Alkylsulfinyl, Arylsulfonyl, Arylsulfinyl, Cycloalkylsulfonyl, Cycloalkylsulfinyl, Cycloalkylalkoxy, Alkinylalkoxy, Alkenylalkoxy, Alkenyloxyalkoxy, Alkyloxyalkoxy, Alkylaminoalkoxy, Bisalkylaminoalkoxy, Cycloalkylaminoalkoxy, Heterocyclyl-N-alkoxy, Aryloxy, Heteroaryloxy, Tris-(alkyl)silyl, Bis-(alkyl)arylsilyl, Bis-(alkyl)alkylsilyl, Alkylamino, Alkenylamino, Cycloalkylamino, Arylalkylamino, Arylamino, Bis(alkyl)amino, Hydroxy, Amino, Nitro, Cyano, Alkoxyalkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
- R², R³: unabhängig voneinander für Wasserstoff, Halogen, Alkyl, Cycloalkyl, Arylalkyl, Alkenyl, Haloalkyl, Alkoxy, Haloalkoxy, Alkylthio, Haloalkylthio, Alkylsulfonyl, Alkylsulfinyl, Arylsulfonyl, Arylsulfinyl stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R⁵: für Alkyl, Cycloalkyl, Alkenyl, Alkinyl, Haloalkyl, Haloalkoxyalkyl, Cyanoalkoxyalkyl, Halocycloalkyl, Cycloalkenyl, Halocycloalkenyl, Hydroxyalkyl, Tris-[Alkylsilyl]oxyalkyl, Bis-[alkyl]arylsilyloxyalkyl, Alkoxyalkyl, Alkinyl, Alkenyl, Cycloalkylalkyl, Cyanoalkyl, Nitroalkyl, Aminoalkyl, Arylalkyl, Heteroarylalkyl, Heterocyclylalkyl, Heterocyclyl-N-Alkyl, Cycloalkyloxyalkyl, Aryl, Heterocyclyl, Aryloxyalkyl, Arylalkoxyalkyl, Heteroaryloxyalkyl, Heterocyclyloxyalkyl, Alkoxycarbonyl-N-Heterocyclyl, Heteroaryl, Alkylaminoalkyl, Alkylaminocycloalkyl, Bis-Alkylaminocycloalkyl, Bisalkylaminoalkyl, Cyanoalkylaminoalkyl, Haloalkylaminoalkyl, Halocycloalkylaminoalkyl, Arylaminoalkyl, Heteroarylaminoalkyl, Heterocyclylaminoalkyl,Heterocyclylalkylaminoalkyl, Heteroarylalkylaminoalkyl, Arylalkylaminoalkyl, Cycloalkylaminoalkyl, Aryl(alkyl)aminoalkyl, Heteroaryl(alkyl)aminoalkyl, Heterocyclyl(alkyl)aminoalkyl, Arylalkyl(alkyl)aminoalkyl, Cycloalkyl(alkyl)aminoalkyl, Heteroarylalkyl(alkyl)aminoalkyl, Heterocyclylalkyl(alkyl)aminoalkyl, Aryl(arylsulfonyl)aminoalkyl, Alkyl(arylsulfonyl)aminoalkyl, Heteroaryl(arylsulfonyl)aminoalkyl, Heterocyclyl(arylsulfonyl)aminoalkyl, Arylalkyl(arylsulfonyl)aminoalkyl, Heteroarylalkyl(arylsulfonyl)aminoalkyl, Heterocyclylalkyl(arylsulfonyl)aminoalkyl, Cycloalkyl(arylsulfonyl)aminoalkyl, Aryl(alkylsulfonyl)aminoalkyl, Alkyl(alkylsulfonyl)aminoalkyl, Heteroaryl(alkylsulfonyl)aminoalkyl, Heterocyclyl(alkylsulfonyl)aminoalkyl, Arylalkyl(alkylsulfonyl)aminoalkyl, Heteroarylalkyl(alkylsulfonyl)aminoalkyl, Heterocyclylalkyl(alkylsulfonyl)aminoalkyl, Cycloalkyl(alkylsulfonyl)aminoalkyl, Aryl(heteroarylsulfonyl)aminoalkyl, Alkyl(heteroarylsulfonyl)aminoalkyl, Heteroaryl(heteroarylsulfonyl)aminoalkyl, Heterocyclyl(heteroarylsulfonyl)aminoalkyl, Arylalkyl(heteroarylsulfonyl)aminoalkyl, Heteroarylalkyl(heteroarylsulfonyl)aminoalkyl, Heterocyclylalkyl(heteroarylsulfonyl)aminoalkyl, Cycloalkyl(heteroarylsulfonyl)aminoalkyl, Aryl(arylheteroarylsulfonyl)aminoalkyl, Alkyl(arylheteroarylsulfonyl)aminoalkyl, Heteroaryl(arylheteroarylsulfonyl)aminoalkyl, Heterocyclyl(arylheteroarylsulfonyl)aminoalkyl, Arylalkyl(arylheteroarylsulfonyl)aminoalkyl, Heteroarylalkyl(arylheteroarylsulfonyl)aminoalkyl, Heterocyclylalkyl(arylheteroarylsulfonyl)aminoalkyl, Cycloalkyl(arylheteroarylsulfonyl)aminoalkyl, Aryl(heteroarylheteroarylsulfonyl)aminoalkyl, Alkyl(heteroarylheteroarylsulfonyl)aminoalkyl, Heteroaryl(heteroarylheteroarylsulfonyl)aminoalkyl, Heterocyclyl(heteroarylheteroarylsulfonyl)aminoalkyl, Arylalkyl(heteroarylheteroarylsulfonyl)aminoalkyl, Heteroarylalkyl(heteroarylheteroarylsulfonyl)aminoalkyl, Heterocyclylalkyl(heteroarylheteroarylsulfonyl)aminoalkyl, Cycloalkyl(heteroarylheteroarylsulfonyl)aminoalkyl, Aminocarbonylalkyl, Alkylaminocarbonylalkyl, Bisalkylaminocarbonylalkyl, Alkenylaminocarbonylalkyl, Alkinylaminocarbonylalkyl, Cyanoalkylaminocarbonylalkyl, Cycloalkylaminocarbonylalkyl, Heterocyclylaminocarbonylalkyl, Alkoxycarbonylalkyl, Hydroxycarbonylalkyl, Haloalkoxycarbonylalkyl, Hetaroarylalkylaminocarbonylalkyl, Alkenyloxycarbonylalkyl, Cycloalkylalkoxycarbonylalkyl, Arylalkylaminocarbonylalkyl, Alkylthioalkyl, Haloalkylthioalkyl, Arylthioalkyl, Heteroarylthioalkyl, Arylalkylthioalkyl, Alkylsulfonylalkyl, Arylsulfonylalkyl, Cycloalkylsulfonylalkyl, Heteroarylsulfonylalkyl, Heterocyclylsulfinylalkyl, Haloalkylsulfinylalkyl, Halocycloalkylsulfinylalkyl, Alkylsulfinylalkyl, Arylsulfinylalkyl, Cycloalkylsulfinylalkyl, Heteroarylsulfinylalkyl, Heterocyclylsulfinylalkyl, Haloalkylsulfinylalkyl, Halocycloalkylsulfinylalkyl, Alkoxycarbonylaminoalkyl, Aminocarbonylaminoalkyl, Alkylaminocarbonylaminoalkyl, Cycloalkylaminocarbonylaminoalkyl, Aminoalkylcarbonylaminophenylalkyl, Alkoxycarbonylaminoalkylcarbonylaminophenylalkyl, Arylsulfonylaminophenylalkyl, Heteroarylsulfonylaminophenylalkyl, Alkoxycarbonylphenylalkyl, Hydroxycarbonylphenylalkyl, Heterocyclylcarbonylphenylalkyl, Alkylaminocarbonylphenylalkyl, Bis-alkylaminocarbonylphenylalkyl, Cycloalkylaminocarbonylphenylalkyl, Alkoxycarbonylalkylaminocarbonylphenylalkyl, Alkoxycarbonyl(alkyl)aminoalkyl, Alkenyloxycarbonyl(alkyl)aminoalkyl, Arylalkoxycarbonyl(alkyl)aminoalkyl, Cycloalkylalkoxycarbonyl(alkyl)aminoalkyl, Heteroaryl-N-alkyl, Arylheteroaryl-N-alkyl, Alkenyloxycarbonyl-N-heterocyclyl, Arylalkoxycarbonyl-N-heterocyclyl, Aryl-N-Heterocyclyl, Heteroaryl-N-heterocyclyl, Arylcarbonyl-N-heterocyclyl, Alkylcarbonyl-N-heterocyclyl, Alkylcarbonylalkylaminocarbonylalkyl, Arylcarbonylalkylaminocarbonylalkyl, Heterocyclylalkylaminocarbonylalkyl, Alkylcarbonyl, Cycloalkylcarbonyl, Haloalkylcarbonyl, Alkoxycarbonyl, Alkenyloxycarbonyl, Arylalkoxycarbonyl, Cycloalkoxycarbonyl, Cycloalkylalkoxycarbonyl, Alkylaminocarbonyl, Cycloalkylaminocarbonyl, Arylalkylaminocarbonyl, Alkylsulfonyl, Arylsulfonyl, Cycloalkylsulfonyl, Arylalkylsulfonyl, Alkenylsulfonyl, Heteroarylsulfonyl, Alkinylsulfonyl, Alkylsulfinyl, Arylsulfinyl, Cycloalkylsulfinyl, Alkenylsulfinyl, Alkinylsulfinyl, Arylcarbonyl, Heteroarylcarbonyl, Arylsulfonylaminoalkyl, Alkylsulfonylaminoalkyl, Cycloalkylsulfonylaminoalkyl, Heteroarylsulfonylaminoalkyl, Alkylcarbonylaminoalkyl, Cycloalkylcarbonylaminoalkyl, Arylcarbonylaminoalkyl, Heteroarylcarbonylaminoalkyl steht,
- R⁶: für Wasserstoff, Hydroxy, Alkyl, Cycloalkyl, Halogen, Haloalkyl, Alkoxyalkyl, Alkinyl, Alkenyl, Cycloalkylalkyl, Cyanoalkyl, Nitroalkyl, Arylalkyl, Heteroarylalkyl, Heterocyclylalkyl, Aryl, Alkylamino, Alkylaminoalkyl, Bisalkylaminoalkyl, Aminocarbonylalkyl, Alkylaminocarbonylalkyl, Bisalkylaminocarbonylalkyl, Alkoxycarbonylalkyl, Hydroxycarbonylalkyl, Alkylcarbonyl, Cycloalkylcarbonyl, Haloalkylcarbonyl, Alkoxycarbonyl, Alkenyloxycarbonyl, Arylalkoxycarbonyl, Cycloalkoxycarbonyl, Cycloalkylalkoxycarbonyl, Alkylaminocarbonyl, Cycloalkylaminocarbonyl, Arylalkylaminocarbonyl, Alkylsulfonyl, Arylsulfonyl, Cycloalkylsulfonyl, Arylalkylsulfonyl, Alkenylsulfonyl, Heteroarylsulfonyl, Alkinylsulfonyl, Alkylsulfinyl, Arylsulfinyl, Cycloalkylsulfinyl, Alkenylsulfinyl, Alkinylsulfinyl, Arylcarbonyl, Heteroarylcarbonyl, Alkoxycarbonylalkyl, Alkenyloxycarbonylalkyl, Hydroxycarbonylalkyl, Cyanoalkylaminocarbonyl, Alkinylaminocarbonyl, Heterocyclylcarbonyl, Hetaroarylalkylaminocarbonyl, Cycloalkylalkoxycarbonylcarbonyl, Alkoxycarbonylcarbonyl, Cycloalkylalkylaminocarbonyl, Arylalkylaminocarbonyl, Heterocyclyl oder eine negative Ladung steht,
- R⁷, R⁸, R⁹, R¹⁰: unabhängig voneinander für Wasserstoff, Halogen, Alkyl, Cycloalkyl, Cycloalkenyl, Arylalkyl, Alkenyl, Haloalkyl, Alkoxy, Haloalkoxy, Alkylthio, Haloalkylthio, Aryl, Heteroaryl, Heterocyclyl, Alkoxyalkyl, Alkinyl, Haloalkinyl, Hydroxy, Amino, Alkylamino, Bis(alkyl)amino, Cyano, Alkoxyalkoxy stehen,
oder wobei R⁴ und R⁷, mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷, und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷, und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹¹, R¹², R¹³, R¹⁴: unabhängig voneinander für Wasserstoff, Alkyl, Cycloalkyl, Arylalkyl, Alkenyl, Haloalkyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁵, R¹⁵, R³³: unabhängig voneinander für Wasserstoff, Alkyl, Alkoxy, Cycloalkyl, Haloalkyl, Alkoxyalkyl, Alkinyl, Alkenyl, Cycloalkylalkyl, Cyanoalkyl, Nitroalkyl, Arylalkyl, Heteroarylalkyl, Heterocyclylalkyl, Aryl, Alkylaminoalkyl, Bisalkylaminoalkyl, Aminocarbonylalkyl, Alkylaminocarbonylalkyl, Bisalkylaminocarbonylalkyl, Alkoxycarbonylalkyl, Hydroxycarbonylalkyl, Alkylcarbonyl, Cycloalkylcarbonyl, Haloalkylcarbonyl, Alkoxycarbonyl, Alkenyloxycarbonyl, Alkylaminocarbonyl, Cyclopropylaminocarbonyl, Alkylsulfonyl, Arylsulfonyl, Cycloalkylsulfonyl, Arylalkylsulfonyl, Alkenylsulfonyl, Heteroarylsulfonyl, Alkinylsulfonyl, Alkylsulfinyl, Arylsulfinyl, Cycloalkylsulfinyl, Alkenylsulfinyl, Alkinylsulfinyl, Arylcarbonyl, Heteroarylcarbonyl, Heterocyclylcarbonyl, Cycloalkylalkoxycarbonylalkyl, Alkenyloxycarbonylalkyl, Cyanoalkylaminocarbonyl, Alkinylaminocarbonyl, Heterocyclylcarbonyl, Hetaroarylalkylaminocarbonyl, Alkinyloxycarbonyl, Cycloalkylalkoxycarbonyl, Cycloalkylalkoxycarbonylcarbonyl, Alkoxycarbonylcarbonyl, Cycloalkylalkylaminocarbonyl, Arylalkylaminocarbonyl, Arylthioalkylcarbonyl, Alkylthioalkylcarbonyl, Alkylaminoalkylcarbonyl, Arylaminoalkylcarbonyl, Cycloalkylaminoalkylcarbonyl, Arylaminocarbonyl, Heteroarylaminocarbonyl, Alkoxycarbonylalkylaminocarbonyl steht,
- R¹⁶, R¹⁷: unabhängig voneinander für Wasserstoff, Alkyl, Aryl, Cycloalkyl, Arylalkyl, Alkenyl, Haloalkyl stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁹, R²⁰, R²¹, R²², R²³, R²⁴, R²⁵, R²⁶: unabhängig voneinander für Wasserstoff, Halogen, Alkyl, Cycloalkyl, Arylalkyl, Aryl, Heteroaryl, Heterocyclyl, Alkenyl, Haloalkyl, Alkylthio, Haloalkylthio, Arylthio, Alkinyl, Alkylamino, Bis(alkyl)amino, Alkoxy, Haloalkoxy stehen,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
- R²⁷, R²⁸, R²⁹, R³⁰, R³¹, R³², R³⁴, R³⁵: unabhängig voneinander für Wasserstoff, Alkyl, Aryl, Cycloalkyl, Arylalkyl, Alkenyl, Haloalkyl, Alkoxy, Haloalkoxy, Alkylamino, Bis(alkyl)amino, Alkylthio stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,

Die Verbindungen der allgemeinen Formel (I) können durch Anlagerung einer geeigneten anorganischen oder organischen Säure, wie beispielsweise Mineralsäuren, wie beispielsweise HCl, HBr, H₂SO₄, H₃PO₄ oder HNO₃, oder organische Säuren, z. B. Carbonsäuren, wie Ameisensäure, Essigsäure, Propionsäure, Oxalsäure, Milchsäure oder Salicylsäure oder Sulfonsäuren, wie zum Beispiel p-Toluolsulfonsäure, an eine basische Gruppe, wie z.B. Amino, Alkylamino, Dialkylamino, Piperidino, Morpholino oder Pyridino, Salze bilden. Diese Salze enthalten dann die konjugierte Base der Säure als Anion.

Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden.

Im Folgenden werden die erfindungsgemäß verwendeten Verbindungen der Formel (I) und ihre Salze "Verbindungen der allgemeinen Formel (I)" bezeichnet.

Bevorzugt ist die erfindungsgemäße Verwendung von Verbindungen der allgemeinen Formel (I), worin
- Q: für 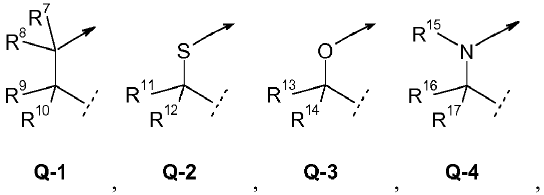 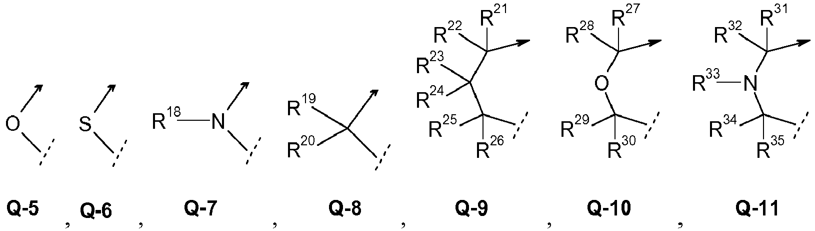
steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
- W: für Sauerstoff oder Schwefel steht,
- R¹, R⁴: unabhängig voneinander für Wasserstoff, Halogen, (C₁-C₈)-Alkyl, (C₃-C₁₀)-Cycloalkyl, (C₂-C₈)-Alkenyl, (C₄-C₈)-Cycloalkenyl, (C₂-C₈)-Alkinyl, Aryl, Aryl-(C₁-C₈)-alkyl, Aryl-(C₂-C₈)-alkenyl, Aryl-(C₂-C₈)-alkinyl, Heteroaryl, Heterocyclyl, (C₃-C₈)-Cycloalkyl-(C₁-C₈)-alkyl, (C₃-C₈)-Cycloalkyl-(C₂-C₈)-alkenyl, (C₃-C₈)-Cycloalkyl-(C₂-C₈)-alkinyl, Heteroaryl-(C₁-C₈)-alkyl, Heterocyclyl-(C₁-C₈)-alkyl, Heteroaryl-(C₂-C₈)-alkenyl, Heteroaryl-(C₂-C₈)-alkinyl, (C₁-C₈)-Haloalkyl, (C₃-C₈)-Halocycloalkyl, (C₂-C₈)-Haloalkenyl, (C₄-C₈)-Halocycloalkenyl, (C₂-C₈)-Haloalkinyl, (C₃-C₈)- Alkoxy-(C₁-C₈)-alkyl-(C₂-C₈)-alkinyl, Tris[(C₁-C₈)-alkyl]silyl-(C₂-C₈)-alkinyl, Bis[(C₁-C₈)-alkyl](aryl)silyl-(C₂-C₈)-alkinyl, Bisaryl](C₁-C₈)-alkyl]silyl-(C₂-C₈)-alkinyl, (C₁-C₈)-Alkoxy-(C₁-C₈)-alkyl, (C₁-C₈)-Alkoxy, (C₁-C₈)-Haloalkoxy, (C₃-C₈)-Cycloalkyloxy, (C₂-C₈)-Alkenyloxy-(C₁-C₈)-alkyl, Heteroaryl-(C₁-C₈)-alkoxy, Aryl-(C₁-C₈)-alkoxy, (C₁-C₈)-Alkylthio, (C₁-C₈)-Alkylthio-(C₁-C₈)-alkyl, (C₁-C₈)-Haloalkylthio, Arylthio, (C₃-C₈)-Cycloalkylthio, (C₁-C₈)-Alkylsulfonyl, (C₁-C₈)-Alkylsulfinyl, Arylsulfonyl, Arylsulfinyl, (C₃-C₈)-Cycloalkylsulfonyl, (C₃-C₈)-Cycloalkylsulfinyl, (C₃-C₈)-Cycloalkyl-(C₁-C₈)-alkoxy, (C₂-C₈)-Alkinyl-(C₁-C₈)-alkoxy, (C₂-C₈)-Alkenyl-(C₁-C₈)-alkoxy, (C₂-C₈)-Alkenyloxy-(C₁-C₈)-alkoxy, (C₁-C₈)-Alkyloxy-(C₁-C₈)-alkoxy, (C₁-C₈)-Alkylamino-(C₁-C₈)-alkoxy, Bis[(C₁-C₈)-alkyl]amino-(C₁-C₈)-alkoxy, (C₃-C₈)-Cycloalkylamino-(C₁-C₈)-alkoxy, Heterocyclyl-N-(C₁-C₈)-alkoxy, Aryloxy, Heteroaryloxy, Tris-[(C₁-C₈)-alkyl]silyl, Bis-[(C₁-C₈)-alkyl]arylsilyl, Bis-[(C₁-C₈)-alkyl]-[(C₁-C₈)-alkyl]silyl, (C₁-C₈)-Alkylamino, (C₂-C₈)-Alkenylamino, (C₃-C₈)-Cycloalkylamino, Aryl-(C₁-C₈)-alkylamino, Arylamino, Bis[(C₁-C₈)-alkyl]amino, Hydroxy, Amino, Nitro, Cyano, (C₁-C₈)-Alkoxy-(C₁-C₈)-alkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
- R², R³: unabhängig voneinander für Wasserstoff, Halogen, (C₁-C₈)-Alkyl, (C₃-C₈)-Cycloalkyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R⁵: für (C₁-C₈)-Alkyl, (C₃-C₁₀)-Cycloalkyl, (C₂-C₈)-Alkenyl, (C₂-C₈)-Alkinyl, (C₁-C₈)-Haloalkyl, (C₁-C₈)-Haloalkoxy-(C₁-C₈)-alkyl, Cyano-(C₁-C₈)-alkoxy-(C₁-C₈)-alkyl, (C₃-C₈)-Halocycloalkyl, (C₄-C₈)-Cycloalkenyl, (C₄-C₈)-Halocycloalkenyl, Hydroxy-(C₁-C₈)-alkyl, Tris-[(C₁-C₈)-Alkylsilyl]oxy-(C₁-C₈)-alkyl, Bis-[(C₁-C₈)-alkyl]arylsilyloxy-(C₁-C₈)-alkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Amino-(C₁-C₈)-alkyl, Aryl-(C₁-C₈)-alkyl, Heteroaryl-(C₁-C₈)-alkyl, Heterocyclyl-(C₁-C₈)-alkyl, Heterocyclyl-N-(C₁-C₈)-Alkyl, (C₃-C₈)-Cycloalkyloxy-(C₁-C₈)-alkyl, Aryl, Heterocyclyl, Aryloxy-(C₁-C₈)-alkyl, Aryl-(C₁-C₈)-alkoxy-(C₁-C₈)-alkyl, Heteroaryloxy-(C₁-C₈)-alkyl, Heterocyclyloxy-(C₁-C₈)-alkyl, (C₁-C₈)-Alkoxycarbonyl-N-Heterocyclyl, Heteroaryl, (C₁-C₈)-Alkylamino-(C₁-C₈)-alkyl, (C₁-C₈)-Alkylamino-(C₃-C₈)-cycloalkyl, Bis-[(C₁-C₈)-Alkyl]amino-(C₃-C₈)-cycloalkyl, Bis-[(C₁-C₈)-alkyl]amino-(C₁-C₈)-alkyl, Cyano-(C₁-C₈)-alkylamino-(C₁-C₈)-alkyl, (C₁-C₈)-Haloalkylamino-(C₁-C₈)-alkyl, (C₃-C₈)-Halocycloalkylamino-(C₁-C₈)-alkyl, Arylamino-(C₁-C₈)-alkyl, Heteroarylamino-(C₁-C₈)-alkyl, Heterocyclylamino-(C₁-C₈)-alkyl,Heterocyclyl-(C₁-C₈)-alkylamino-(C₁-C₈)-alkyl, Heteroaryl-(C₁-C₈)-alkylamino-(C₁-C₈)-alkyl, Aryl-(C₁-C₈)-alkylamino-(C₁-C₈)-alkyl, (C₃-C₈)-Cycloalkylamino-(C₁-C₈)-alkyl, Aryl[(C₁-C₈)-alkyl]amino-(C₁-C₈)-alkyl, Heteroaryl[(C₁-C₈)-alkyl]amino-(C₁-C₈)-alkyl, Heterocyclyl[(C₁-C₈)-alkyl]amino-(C₁-C₈)-alkyl, Aryl-(C₁-C₈)-alkyl[(C₁-C₈)-alkyl]amino-(C₁-C₈)-alkyl, (C₃-C₈)-Cycloalkyl-[(C₁-C₈)-alkyl]amino-(C₁-C₈)-alkyl, Heteroaryl-(C₁-C₈)-alkyl[(C₁-C₈)-alkyl]amino-(C₁-C₈)-alkyl, Heterocyclyl-(C₁-C₈)-alkyl[(C₁-C₈)-alkyl]amino-(C₁-C₈)-alkyl, Aryl(arylsulfonyl)amino-(C₁-C₈)-alkyl, (C₁-C₈)-Alkyl(arylsulfonyl)amino-(C₁-C₈)-alkyl, Heteroaryl(arylsulfonyl)amino-(C₁-C₈)-alkyl, Heterocyclyl(arylsulfonyl)amino-(C₁-C₈)-alkyl, Aryl-(C₁-C₈)-alkyl(arylsulfonyl)amino-(C₁-C₈)-alkyl, Heteroaryl-(C₁-C₈)-alkyl(arylsulfonyl)aminoalkyl, Heterocyclylalkyl(arylsulfonyl)aminoalkyl, Cycloalkyl(arylsulfonyl)amino-(C₁-C₈)-alkyl, Aryl[(C₁-C₈)-alkylsulfonyl]amino-(C₁-C₈)-alkyl, (C₁-C₈)-Alkyl[(C₁-C₈)-alkylsulfonyl]amino-(C₁-C₈)-alkyl, Heteroaryl[(C₁-C₈)-alkylsulfonyl]amino-(C₁-C₈)-alkyl, Heterocyclyl-[(C₁-C₈)-alkylsulfonyl]amino-(C₁-C₈)-alkyl, Aryl-(C₁-C₈)-alkyl[(C₁-C₈)-alkylsulfonyl]amino-(C₁-C₈)-alkyl, Heteroaryl-(C₁-C₈)-alkyl[(C₁-C₈)-alkylsulfonyl]amino-(C₁-C₈)-alkyl, Heterocyclyl-(C₁-C₈)-alkyl[(C₁-C₈)-alkylsulfonyl]amino-(C₁-C₈)-alkyl, (C₃-C₈)-Cycloalkyl[(C₁-C₈)-alkylsulfonyl]amino-(C₁-C₈)-alkyl, Aryl(heteroarylsulfonyl)amino-(C₁-C₈)-alkyl, (C₁-C₈)-Alkyl(heteroarylsulfonyl)amino-(C₁-C₈)-alkyl, Heteroaryl(heteroarylsulfonyl)amino-(C₁-C₈)-alkyl, Heterocyclyl(heteroarylsulfonyl)amino-(C₁-C₈)-alkyl, Aryl-(C₁-C₈)-alkyl(heteroarylsulfonyl)amino-(C₁-C₈)-alkyl, Heteroaryl-(C₁-C₈)-alkyl(heteroarylsulfonyl)amino-(C₁-C₈)-alkyl, Heterocyclyl-(C₁-C₈)-alkyl(heteroarylsulfonyl)amino-(C₁-C₈)-alkyl, (C₃-C₈)-Cycloalkyl(heteroarylsulfonyl)amino-(C₁-C₈)-alkyl, Aryl(arylheteroarylsulfonyl)amino-(C₁-C₈)-alkyl, (C₁-C₈)-Alkyl(arylheteroarylsulfonyl)amino-(C₁-C₈)-alkyl, Heteroaryl(arylheteroarylsulfonyl)amino-(C₁-C₈)-alkyl, Heterocyclyl(arylheteroarylsulfonyl)amino-(C₁-C₈)-alkyl, Aryl-(C₁-C₈)-alkyl(arylheteroarylsulfonyl)amino-(C₁-C₈)-alkyl, Heteroaryl-(C₁-C₈)-alkyl(arylheteroarylsulfonyl)amino-(C₁-C₈)-alkyl, Heterocyclyl-(C₁-C₈)-alkyl(arylheteroarylsulfonyl)amino-(C₁-C₈)-alkyl, (C₃-C₈)-Cycloalkyl(arylheteroarylsulfonyl)amino-(C₁-C₈)-alkyl, Aryl(heteroarylheteroarylsulfonyl)amino-(C₁-C₈)-alkyl, (C₁-C₈)-Alkyl(heteroarylheteroarylsulfonyl)amino-(C₁-C₈)-alkyl, Heteroaryl(heteroarylheteroarylsulfonyl)amino-(C₁-C₈)-alkyl, Heterocyclyl(heteroarylheteroarylsulfonyl)amino-(C₁-C₈)-alkyl, Aryl-(C₁-C₈)-alkyl(heteroarylheteroarylsulfonyl)amino-(C₁-C₈)-alkyl, Heteroaryl-(C₁-C₈)-alkyl(heteroarylheteroarylsulfonyl)amino-(C₁-C₈)-alkyl, Heterocyclyl-(C₁-C₈)-alkyl(heteroarylheteroarylsulfonyl)amino-(C₁-C₈)-alkyl, (C₃-C₈)-Cycloalkyl(heteroarylheteroarylsulfonyl)amino-(C₁-C₈)-alkyl, Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₂-C₈)-Alkenylaminocarbonyl-(C₁-C₈)-alkyl, (C₂-C₈)-Alkinylaminocarbonyl-(C₁-C₈)-alkyl, Cyano-(C₁-C₈)-alkylaminocarbonyl-(C₁-C₈)-alkyl, (C₃-C₈)-Cycloalkylammocarbonyl-(C₁-C₈)-alkyl, Heterocyclylaminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Haloalkoxycarbonyl-(C₁-C₈)-alkyl, Hetaroaryl-(C₁-C₈)-alkylaminocarbonyl-(C₁-C₈)-alkyl, (C₂-C₈)-Alkenyloxycarbonyl-(C₁-C₈)-alkyl, (C₃-C₈)-Cycloalkyl-(C₁-C₈)-alkoxycarbonyl-(C₁-C₈)-alkyl, Aryl-(C₁-C₈)-alkylaminocarbonyl-(C₁-C₈)-alkyl, (C₁-C₈)-Alkylthio-(C₁-C₈)-alkyl, (C₁-C₈)-Haloalkylthio-(C₁-C₈)-alkyl, Arylthio-(C₁-C₈)-alkyl, Heteroarylthio-(C₁-C₈)-alkyl, Aryl-(C₁-C₈)-alkylthio-(C₁-C₈)-alkyl, (C₁-C₈)-Alkylsulfonyl-(C₁-C₈)-alkyl, Arylsulfonyl-(C₁-C₈)-alkyl, (C₃-C₈)-Cycloalkylsulfonyl-(C₁-C₈)-alkyl, Heteroarylsulfonyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkylsulfinyl-(C₁-C₈)-alkyl, Arylsulfinyl-(C₁-C₈)-alkyl, (C₃-C₈)-Cycloalkylsulfinyl-(C₁-C₈)-alkyl, Heteroarylsulfinyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkoxycarbonylamino-(C₁-C₈)-alkyl, Aminocarbonylamino-(C₁-C₈)-alkyl, (C₁-C₈)-Alkylaminocarbonylamino-(C₁-C₈)-alkyl, (C₃-C₈)-Cycloalkylaminocarbonylamino-(C₁-C₈)-alkyl, Amino-(C₁-C₈)-alkylcarbonylaminophenyl-(C₁-C₈)-alkyl, (C₁-C₈)-Alkoxycarbonylamino-(C₁-C₈)-alkylcarbonylaminophenyl-(C₁-C₈)-alkyl, Arylsulfonylaminophenyl-(C₁-C₈)-alkyl, Heteroarylsulfonylaminophenyl-(C₁-C₈)-alkyl, (C₁-C₈)-Alkoxycarbonylphenyl-(C₁-C₈)-alkyl, Hydroxycarbonylphenyl-(C₁-C₈)-alkyl, Heterocyclylcarbonylphenyl-(C₁-C₈)-alkyl, (C₁-C₈)-Alkylaminocarbonylphenyl-(C₁-C₈)-alkyl, Bis-[(C₁-C₈)-alkyl]aminocarbonylphenyl-(C₁-C₈)-alkyl, (C₃-C₈)-Cycloalkylaminocarbonylphenyl-(C₁-C₈)-alkyl, (C₁-C₈)-Alkoxycarbonyl-(C₁-C₈)-alkylaminocarbonylphenyl-(C₁-C₈)-alkyl, (C₁-C₈)-Alkoxycarbonyl[(C₁-C₈)-alkyl]amino-(C₁-C₈)-alkyl, (C₂-C₈)-Alkenyloxycarbonyl[(C₁-C₈)-alkyl]amino-(C₁-C₈)-alkyl, Aryl-(C₁-C₈)-alkoxycarbonyl[(C₁-C₈)-alkyl]amino-(C₁-C₈)-alkyl, (C₃-C₈)-Cycloalkyl-(C₁-C₈)-alkoxycarbonyl[(C₁-C₈)-alky]amino-(C₁-C₈)-alkyl, Heteroaryl-N-(C₁-C₈)-alkyl, Arylheteroaryl-N-(C₁-C₈)-alkyl, (C₂-C₈)-Alkenyloxycarbonyl-N-heterocyclyl, Aryl-(C₁-C₈)-alkoxycarbonyl-N-heterocyclyl, Aryl-N-Heterocyclyl, Heteroaryl-N-heterocyclyl, Arylcarbonyl-N-heterocyclyl, (C₁-C₈)-Alkylcarbonyl-N-heterocyclyl, (C₁-C₈)-Alkylcarbonyl-(C₁-C₈)-alkylaminocarbonyl-(C₁-C₈)-alkyl, Arylcarbonyl-(C₁-C₈)-alkylaminocarbonyl-(C₁-C₈)-alkyl, Heterocyclyl-(C₁-C₈)-alkylaminocarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cycloalkylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsufinyl, (C₂-C₈)-Alkenylsulfinyl, (C₂-C₈)-Alkinylsulfinyl, Arylcarbonyl, Heteroarylcarbonyl, Arylsulfonylamino-(C₁-C₈)-alkyl, (C₁-C₈)-Alkylsulfonylamino-(C₁-C₈)-alkyl, (C₃-C₈)-Cycloalkylsulfonylamino-(C₁-C₈)-alkyl, Heteroarylsulfonylamino-(C₁-C₈)-alkyl, (C₁-C₈)-Alkylcarbonylamino-(C₁-C₈)-alkyl, (C₃-C₈)-Cycloalkylcarbonylamino-(C₁-C₈)-alkyl, Arylcarbonylamino-(C₁-C₈)-alkyl, Heteroarylcarbonylamino-(C₁-C₈)-alkyl steht,
- R⁶: für Wasserstoff, Hydroxy, (C₁-C₈)-Alkyl, (C₃-C₈)-Cycloalkyl, Halogen, (C₁-C₈)-Haloalkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Aryl-(C₁-C₈)-alkyl, Heteroaryl-(C₁-C₈)-alkyl, Heterocyclyl-(C₁-C₈)-alkyl, Aryl, (C₁-C₈)-Alkylamino, (C₁-C₈)-Alkylamino-(C₁-C₈)-alkyl, Bis-[(C₁-C₈)-alkyl]amino-(C₁-C₈)-alkyl, Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cyclopropylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, (C₁-C₈)-Alkoxycarbonyl-(C₁-C₈)-alkyl, (C₂-C₈)-Alkenyloxycarbonyl-(C₁-C₈)-alkyl, Hydroxycarbonyl-(C₁-C₈)-alkyl, Cyano-(C₁-C₈)-alkylaminocarbonyl, (C₂-C₈)-Alkinylaminocarbonyl, Heterocyclylcarbonyl, Hetaroaryl-(C₁-C₈)-alkylaminocarbonyl, (C₃-C₈)-Cycloalkyl-(C₁-C₈)-alkoxycarbonylcarbonyl, (C₁-C₈)-Alkoxycarbonylcarbonyl, (C₃-C₈)-Cycloalkyl-(C₁-C₈)-alkylaminocarbonyl, Aryl-(C₁-C₈)-alkylaminocarbonyl, Heterocyclyl oder eine negative Ladung steht,
- R⁷, R⁸, R⁹, R¹⁰: unabhängig voneinander für Wasserstoff, Halogen, (C₁-C₈)-Alkyl, (C₃-C₈)-Cycloalkyl, (C₄-C₈)-Cycloalkenyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio, Aryl, Heteroaryl, Heterocyclyl, (C₁-C₈)-Alkoxy-(C₁-C₈)-alkyl, (C₂-C₈)-Alkinyl, (C₂-C₈)-Haloalkinyl, Hydroxy, Amino, (C₁-C₈)-Alkylamino, Bis[(C₁-C₈)-alkyl]amino, Cyano, (C₁-C₈)-Alkoxy-(C₁-C₈)-alkoxy stehen,
oder wobei R⁴ und R⁷, mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷, und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷, und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹¹, R¹², R¹³, R¹⁴: unabhängig voneinander für Wasserstoff, (C₁-C₈)-Alkyl, (C₃-C₈)-Cycloalkyl, Aryl-(C₁-C₈)-alkyl, (C₂-C₈)-Alkenyl, (C₁-C₈)-Haloalkyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁵, R¹⁵, R³³: unabhängig voneinander für Wasserstoff, (C₁-C₈)-Alkyl, (C₁-C₈)-Alkoxy, (C₃-C₈)-Cycloalkyl, (C₁-C₈)-Haloalkyl, (C₁-C₈)-Alkoxy-(C₁-C₈)-alkyl, (C₂-C₈)-Alkinyl, (C₁-C₈)-Alkenyl, (C₃-C₈)-Cycloalkyl-(C₁-C₈)-alkyl, Cyano-(C₁-C₈)-alkyl, Nitro-(C₁-C₈)-alkyl, Aryl-(C₁-C₈)-alkyl, Heteroaryl-(C₁-C₈)-alkyl, Heterocyclyl-(C₁-C₈)-alkyl, Aryl, (C₁-C₈)-Alkylamino-(C₁-C₈)-alkyl, Bis-[(C₁-C₈)-alkyl]amino-(C₁-C₈)-alky Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, (C₁-C₈)-Alkylaminocarbonyl, (C₃-C₈)-Cycloalkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, Heterocyclylcarbonyl, (C₃-C₈)-Cycloalkyl-(C₁-C₈)-alkoxycarbonyl-(C₁-C₈)-alkyl, (C₂-C₈)-Alkenyloxycarbonyl-(C₁-C₈)-alkyl, Cyano-(C₁-C₈)-alkylaminocarbonyl, (C₂-C₈)-Alkinylaminocarbonyl, Heterocyclylcarbonyl, Hetaroaryl-(C₁-C₈)-alkylaminocarbonyl, (C₂-C₈)-Alkinyloxycarbonyl, (C₃-C₈)-Cycloalkyl-(C₁-C₈)-alkoxycarbonyl, (C₃-C₈)-Cycloalkyl-(C₁-C₈)-alkoxycarbonylcarbonyl, (C₁-C₈)-Alkoxycarbonylcarbonyl, (C₃-C₈)-Cycloalkyl-(C₁-C₈)-alkylaminocarbonyl, Aryl-(C₁-C₈)-alkylaminocarbonyl, Arylthio-(C₁-C₈)-alkylcarbonyl, (C₁-C₈)-Alkylthio-(C₁-C₈)-alkylcarbonyl, (C₁-C₈)-Alkylamino-(C₁-C₈)-alkylcarbonyl, Arylamino-(C₁-C₈)-alkylcarbonyl, (C₃-C₈)-Cycloalkylamino-(C₁-C₈)-alkylcarbonyl, Arylaminocarbonyl, Heteroarylaminocarbonyl, (C₁-C₈)-Alkoxycarbonyl-(C₁-C₈)-alkylaminocarbonyl steht,
- R¹⁶, R¹⁷: unabhängig voneinander für Wasserstoff, (C₁-C₈)-Alkyl, Aryl, (C₃-C₈)-Cycloalkyl, Aryl-(C₁-C₈)-alkyl, (C₂-C₈)-Alkenyl, (C₁-C₈)-Haloalkyl stehen,
- R¹⁹, R²⁰, R²¹, R²², R²³, R²⁴, R²⁵, R²⁶: unabhängig voneinander für Wasserstoff,
Halogen, (C₁-C₈)-Alkyl, (C₃-C₈)-Cycloalkyl, Aryl-(C₁-C₈)-alkyl, Aryl, Heteroaryl, Heterocyclyl, (C₂-C₈)-Alkenyl, (C₁-C₈)-Haloalkyl, (C₁-C₈)-Alkylthio, (C₁-C₈)-Haloalkylthio, Arylthio, (C₂-C₈)-Alkinyl, (C₁-C₈)-Alkylamino, Bis[(C₁-C₈)-alkyl]amino, (C₁-C₈)-Alkoxy, (C₁-C₈)-Haloalkoxy stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
- R²⁷, R²⁸, R²⁹, R³⁰, R³¹, R³², R³⁴, R³⁵: unabhängig voneinander für Wasserstoff, (C₁-C₈)-Alkyl, Aryl, (C₃-C₈)-Cycloalkyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylamino, Bis[(C₁-C₈)-alkyl]amino, (C₁-C₈)-Alkylthio stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,

Besonders bevorzugt ist die erfindungsgemäße Verwendung von Verbindungen der allgemeinen Formel (I), worin
- Q: für 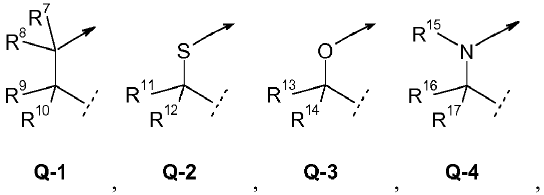 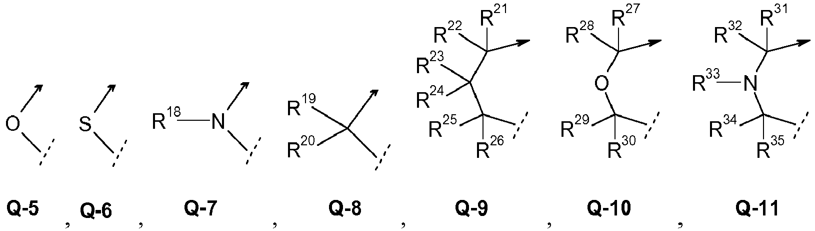
steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
- W: für Sauerstoff oder Schwefel steht,
- R¹, R⁴: unabhängig voneinander für Wasserstoff, Halogen, (C₁-C₇)-Alkyl, (C₃-C₁₀)-Cycloalkyl, (C₂-C₇)-Alkenyl, (C₄-C₇)-Cycloalkenyl, (C₂-C₇)-Alkinyl, Aryl, Aryl-(C₁-C₇)-alkyl, Aryl-(C₂-C₇)-alkenyl, Aryl-(C₂-C₇)-alkinyl, Heteroaryl, Heterocyclyl, (C₃-C₇)-Cycloalkyl-(C₁-C₇)-alkyl, (C₃-C₇)-Cycloalkyl-(C₂-C₇)-alkenyl, (C₃-C₇)-Cycloalkyl-(C₂-C₇)-alkinyl, Heteroaryl-(C₁-C₇)-alkyl, Heterocyclyl-(C₁-C₇)-alkyl, Heteroaryl-(C₂-C₇)-alkenyl, Heteroaryl-(C₂-C₇)-alkinyl, (C₁-C₇)-Haloalkyl, (C₃-C₇)-Halocycloalkyl, (C₂-C₇)-Haloalkenyl, (C₄-C₇)-Halocycloalkenyl, (C₂-C₇)-Haloalkinyl, (C₃-C₇)- Alkoxy-(C₁-C₇)-alkyl-(C₂-C₇)-alkinyl, Tris[(C₁-C₇)-alkyl]silyl-(C₂-C₇)-alkinyl, Bis[(C₁-C₇)-alkyl](aryl)silyl-(C₂-C₇)-alkinyl, Bisaryl[(C₁-C₇)-alkyl]silyl-(C₂-C₇)-alkinyl, (C₁-C₇)-Alkoxy-(C₁-C₇)-alkyl, (C₁-C₇)-Alkoxy, (C₁-C₇)-Haloalkoxy, (C₃-C₇)-Cycloalkyloxy, (C₂-C₇)-Alkenyloxy-(C₁-C₇)-alkyl, Heteroaryl-(C₁-C₇)-alkoxy, Aryl-(C₁-C₇)-alkoxy, (C₁-C₇)-Alkylthio, (C₁-C₇)-Alkylthio-(C₁-C₇)-alkyl, (C₁-C₇)-Haloalkylthio, Arylthio, (C₃-C₇)-Cycloalkylthio, (C₁-C₇)-Alkylsulfonyl, (C₁-C₇)-Alkylsulfinyl, Arylsulfonyl, Arylsulfinyl, (C₃-C₇)-Cycloalkylsulfonyl, (C₃-C₇)-Cycloalkylsulfinyl, (C₃-C₇)-Cycloalkyl-(C₁-C₇)-alkoxy, (C₂-C₇)-Alkinyl-(C₁-C₇)-alkoxy, (C₂-C₇)-Alkenyl-(C₁-C₇)-alkoxy, (C₂-C₇)-Alkenyloxy-(C₁-C₇)-alkoxy, (C₁-C₇)-Alkyloxy-(C₁-C₇)-alkoxy, (C₁-C₇)-Alkylamino-(C₁-C₇)-alkoxy, Bis[(C₁-C₇)-alkyl]amino-(C₁-C₇)-alkoxy, (C₃-C₇)-Cycloalkylamino-(C₁-C₇)-alkoxy, Heterocyclyl-N-(C₁-C₇)-alkoxy, Aryloxy, Heteroaryloxy, Tris-[(C₁-C₇)-alkyl]silyl, Bis-[(C₁-C₇)-alkyl]arylsilyl, Bis-[(C₁-C₇)-alkyl]-[(C₁-C₇)-alkyl]silyl, (C₁-C₇)-Alkylamino, (C₂-C₇)-Alkenylamino, (C₃-C₇)-Cycloalkylamino, Aryl-(C₁-C₇)-alkylamino, Arylamino, Bis[(C₁-C₇)-alkyl]amino, Hydroxy, Amino, Nitro, Cyano, (C₁-C₇)-Alkoxy-(C₁-C₇)-alkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
- R², R³: unabhängig voneinander für Wasserstoff, Halogen, (C₁-C₇)-Alkyl, (C₃-C₇)-Cycloalkyl, Aryl-(C₁-C₇)-alkyl, (C₂-C₇)-Alkenyl, (C₁-C₇)-Haloalkyl, (C₁-C₇)-Alkoxy, (C₁-C₇)-Haloalkoxy, (C₁-C₇)-Alkylthio, (C₁-C₇)-Haloalkylthio stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R⁵: für (C₁-C₇)-Alkyl, (C₃-C₁₀)-Cycloalkyl, (C₂-C₇)-Alkenyl, (C₂-C₇)-Alkinyl, (C₁-C₇)-Haloalkyl, (C₁-C₇)-Haloalkoxy-(C₁-C₇)-alkyl, Cyano-(C₁-C₇)-alkoxy-(C₁-C₇)-alkyl, (C₃-C₇)-Halocycloalkyl, (C₄-C₇)-Cycloalkenyl, (C₄-C₇)-Halocycloalkenyl, Hydroxy-(C₁-C₇)-alkyl, Tris-[(C₁-C₇)-Alkylsilyl]oxy-(C₁-C₇)-alkyl, Bis-[(C₁-C₇)-alkyl]arylsilyloxy-(C₁-C₇)-alkyl, (C₁-C₇)-Alkoxy-(C₁-C₇)-alkyl, (C₂-C₇)-Alkinyl, (C₂-C₇)-Alkenyl, (C₃-C₇)-Cycloalkyl-(C₁-C₇)-alkyl, Cyano-(C₁-C₇)-alkyl, Nitro-(C₁-C₇)-alkyl, Amino-(C₁-C₇)-alkyl, Aryl-(C₁-C₇)-alkyl, Heteroaryl-(C₁-C₇)-alkyl, Heterocyclyl-(C₁-C₇)-alkyl, Heterocyclyl-N-(C₁-C₇)-Alkyl, (C₃-C₇)-Cycloalkyloxy-(C₁-C₇)-alkyl, Aryl, Heterocyclyl, Aryloxy-(C₁-C₇)-alkyl, Aryl-(C₁-C₇)-alkoxy-(C₁-C₇)-alkyl, Heteroaryloxy-(C₁-C₇)-alkyl, Heterocyclyloxy-(C₁-C₇)-alkyl, (C₁-C₇)-Alkoxycarbonyl-N-Heterocyclyl, Heteroaryl, (C₁-C₇)-Alkylamino-(C₁-C₇)-alkyl, (C₁-C₇)-Alkylamino-(C₃-C₇)-cycloalkyl, Bis-[(C₁-C₇)-Alkyl]amino-(C₃-C₇)-cycloalkyl, Bis-[(C₁-C₇)-alkyl]amino-(C₁-C₇)-alkyl, Cyano-(C₁-C₇)-alkylamino-(C₁-C₇)-alkyl, (C₁-C₇)-Haloalkylamino-(C₁-C₇)-alkyl, (C₃-C₇)-Halocycloalkylamino-(C₁-C₇)-alkyl, Arylamino-(C₁-C₇)-alkyl, Heteroarylamino-(C₁-C₇)-alkyl, Heterocyclylamino-(C₁-C₇)-alkyl,Heterocyclyl-(C₁-C₇)-alkylamino-(C₁-C₇)-alkyl, Heteroaryl-(C₁-C₇)-alkylamino-(C₁C₇)-alkyl, Aryl-(C₁-C₇)-alkylamino-(C₁-C₇)-alkyl, (C₃-C₇)-Cycloalkylamino-(C₁-C₇)-alkyl, Aryl[(C₁-C₇)-alkyl]amino-(C₁-C₇)-alkyl, Heteroaryl[(C₁-C₇)-alkyl]amino-(C₁-C₇)-alkyl, Heterocyclyl[(C₁-C₇)-alkyl]amino-(C₁-C₇)-alkyl, Aryl-(C₁-C₇)-alkyl[(C₁-C₇)-alkyl]amino-(C₁-C₇)-alkyl, (C₃-C₇)-Cycloalkyl-[(C₁-C₇)-alkyl]amino-(C₁-C₇)-alkyl, Heteroaryl-(C₁-C₇)-alkyl[(C₁-C₇)-alkyl]amino-(C₁-C₇)-alkyl, Heterocyclyl-(C₁-C₇)-alkyl[(C₁-C₇)-alkyl]amino-(C₁-C₇)-alkyl, Aryl(arylsulfonyl)amino-(C₁-C₇)-alkyl, (C₁-C₇)-Alkyl(arylsulfonyl)amino-(C₁-C₇)-alkyl, Heteroaryl(arylsulfonyl)amino-(C₁-C₇)-alkyl, Heterocyclyl(arylsulfonyl)amino-(C₁-C₇)-alkyl, Aryl-(C₁-C₇)-alkyl(arylsulfonyl)amino-(C₁-C₇)-alkyl, Heteroaryl-(C₁-C₇)-alkyl(arylsulfonyl)aminoalkyl, Heterocyclyl-(C₁-C₇)-alkyl(arylsulfonyl)amino-(C₁-C₇)-alkyl, (C₃-C₇)-Cycloalkyl(arylsulfonyl)amino-(C₁-C₇)-alkyl, Aryl[(C₁-C₇)-alkylsulfonyl]amino-(C₁-C₇)-alkyl, (C₁-C₇)-Alkyl[(C₁-C₇)-alkylsulfonyl]amino-(C₁-C₇)-alkyl, Heteroaryl[(C₁-C₇)-alkylsulfonyl]amino-(C₁-C₇)-alkyl, Heterocyclyl-[(C₁-C₇)-alkylsulfonyl]amino-(C₁-C₇)-alkyl, Aryl-(C₁-C₇)-alkyl[(C₁-C₇)-alkylsulfonyl]amino-(C₁-C₇)-alkyl, Heteroaryl-(C₁-C₇)-alkyl[(C₁-C₇)-alkylsulfonyl]amino-(C₁-C₇)-alkyl, Heterocyclyl-(C₁-C₇)-alkyl[(C₁-C₇)-alkylsulfonyl]amino-(C₁-C₇)-alkyl, (C₃-C₇)-Cycloalkyl[(C₁-C₇)-alkylsulfonyl]amino-(C₁-C₇)-alkyl, Aryl(heteroarylsulfonyl)amino-(C₁-C₇)-alkyl, (C₁-C₇)-Alkyl(heteroarylsulfonyl)amino-(C₁-C₇)-alkyl, Heteroaryl(heteroarylsulfonyl)amino-(C₁-C₇)-alkyl, Heterocyclyl(heteroarylsulfonyl)amino-(C₁-C₇)-alkyl, Aryl-(C₁-C₇)-alkyl(heteroarylsulfonyl)amino-(C₁-C₇)-alkyl, Heteroaryl-(C₁-C₇)-alkyl(heteroarylsulfonyl)amino-(C₁-C₇)-alkyl, Heterocyclyl-(C₁-C₇)-alkyl(heteroarylsulfonyl)amino-(C₁-C₇)-alkyl, (C₃-C₇)-Cycloalkyl(heteroarylsulfonyl)amino-(C₁-C₇)-alkyl, Aryl(arylheteroarylsulfonyl)amino-(C₁-C₇)-alkyl, (C₁-C₇)-Alkyl(arylheteroarylsulfonyl)amino-(C₁-C₇)-alkyl, Heteroaryl(arylheteroarylsulfonyl)amino-(C₁-C₇)-alkyl, Heterocyclyl(arylheteroarylsulfonyl)amino-(C₁-C₇)-alkyl, Aryl-(C₁-C₇)-alkyl(arylheteroarylsulfonyl)amino-(C₁-C₇)-alkyl, Heteroaryl-(C₁-C₇)-alkyl(arylheteroarylsulfonyl)amino-(C₁-C₇)-alkyl, Heterocyclyl-(C₁-C₇)-alkyl(arylheteroarylsulfonyl)amino-(C₁-C₇)-alkyl, (C₃-C₇)-Cycloalkyl(arylheteroarylsulfonyl)amino-(C₁-C₇)-alkyl, Aryl(heteroarylheteroarylsulfonyl)amino-(C₁-C₇)-alkyl, (C₁-C₇)-Alkyl(heteroarylheteroarylsulfonyl)amino-(C₁-C₇)-alkyl, Heteroaryl(heteroarylheteroarylsulfonyl)amino-(C₁-C₇)-alkyl, Heterocyclyl(heteroarylheteroarylsulfonyl)amino-(C₁-C₇)-alkyl, Aryl-(C₁-C₇)-alkyl(heteroarylheteroarylsulfonyl)amino-(C₁-C₇)-alkyl, Heteroaryl-(C₁-C₇)-alkyl(heteroarylheteroarylsulfonyl)amino-(C₁-C₇)-alkyl, Heterocyclyl-(C₁-C₇)-alkyl(heteroarylheteroarylsulfonyl)amino-(C₁-C₇)-alkyl, (C₃-C₇)-Cycloalkyl(heteroarylheteroarylsulfonyl)amino-(C₁-C₇)-alkyl, Aminocarbonyl-(C₁-C₇)-alkyl, (C₁-C₇)-Alkylaminocarbonyl-(C₁-C₇)-alkyl, Bis-[(C₁-C₇)-alkyl]aminocarbonyl-(C₁-C₇)-alkyl, (C₂-C₇)-Alkenylaminocarbonyl-(C₁-C₇)-alkyl, (C₂-C₇)-Alkinylaminocarbonyl-(C₁-C₇)-alkyl, Cyano-(C₁-C₇)-alkylaminocarbonyl-(C₁-C₇)-alkyl, (C₃-C₇)-Cycloalkylaminocarbonyl-(C₁-C₇)-alkyl, Heterocyclylaminocarbonyl-(C₁-C₇)-alkyl, (C₁-C₇)-Alkoxycarbonyl-(C₁-C₇)-alkyl, Hydroxycarbonyl-(C₁-C₇)-alkyl, (C₁-C₇)-Haloalkoxycarbonyl-(C₁-C₇)-alkyl, Hetaroaryl-(C₁-C₇)-alkylaminocarbonyl-(C₁-C₇)-alkyl, (C₂-C₇)-Alkenyloxycarbonyl-(C₁-C₇)-alkyl, (C₃-C₇)-Cycloalkyl-(C₁-C₇)-alkoxycarbonyl-(C₁-C₇)-alkyl, Aryl-(C₁-C₇)-alkylaminocarbonyl-(C₁-C₇)-alkyl, (C₁-C₇)-Alkylthio-(C₁-C₇)-alkyl, (C₁-C₇)-Haloalkylthio-(C₁-C₇)-alkyl, Arylthio-(C₁-C₇)-alkyl, Heteroarylthio-(C₁-C₇)-alkyl, Aryl-(C₁-C₇)-alkylthio-(C₁-C₇)-alkyl, (C₁-C₇)-Alkylsulfonyl-(C₁-C₇)-alkyl, Arylsulfonyl-(C₁-C₇)-alkyl, (C₃-C₇)-Cycloalkylsulfonyl-(C₁-C₇)-alkyl, Heteroarylsulfonyl-(C₁-C₇)-alkyl, Heterocyclylsulfinyl-(C₁-C₇)-alkyl, (C₁-C₇)-Haloalkylsulfinyl-(C₁-C₇)-alkyl, (C₃-C₇)-Halocycloalkylsulfinyl-(C₁-C₇)-alkyl, (C₁-C₇)-Alkylsulfinyl-(C₁-C₇)-alkyl, Arylsulfinyl-(C₁-C₇)-alkyl, (C₃-C₇)-Cycloalkylsulfinyl-(C₁-C₇)-alkyl, Heteroarylsulfinyl-(C₁-C₇)-alkyl, Heterocyclylsulfinyl-(C₁-C₇)-alkyl, (C₁-C₇)-Haloalkylsulfinyl-(C₁-C₇)-alkyl, (C₃-C₇)-Halocycloalkylsulfinyl-(C₁-C₇)-alkyl, (C₁-C₇)-Alkoxycarbonylamino-(C₁-C₇)-alkyl, Aminocarbonylamino-(C₁-C₇)-alkyl, (C₁-C₇)-Alkylaminocarbonylamino-(C₁-C₇)-alkyl, (C₃-C₇)-Cycloalkylaminocarbonylamino-(C₁-C₇)-alkyl, Amino-(C₁-C₇)-alkylcarbonylaminophenyl-(C₁-C₇)-alkyl, (C₁-C₇)-Alkoxycarbonylamino-(C₁-C₇)-alkylcarbonylaminophenyl-(C₁-C₇)-alkyl, Arylsulfonylaminophenyl-(C₁-C₇)-alkyl, Heteroarylsulfonylaminophenyl-(C₁-C₇)-alkyl, (C₁-C₇)-Alkoxycarbonylphenyl-(C₁-C₇)-alkyl, Hydroxycarbonylphenyl-(C₁-C₇)-alkyl, Heterocyclylcarbonylphenyl-(C₁-C₇)-alkyl, (C₁-C₇)-Alkylaminocarbonylphenyl-(C₁-C₇)-alkyl, Bis-[(C₁-C₇)-alkyl]aminocarbonylphenyl-(C₁-C₇)-alkyl, (C₃-C₇)-Cycloalkylaminocarbonylphenyl-(C₁-C₇)-alkyl, (C₁-C₇)-Alkoxycarbonyl-(C₁-C₇)-alkylaminocarbonylphenyl-(C₁-C₇)-alkyl, (C₁-C₇)-Alkoxycarbonyl[(C₁-C₇)-alkyl]amino-(C₁-C₇)-alkyl, (C₂-C₇)-Alkenyloxycarbonyl[(C₁-C₇)-alkyl]amino-(C₁-C₇)-alkyl, Aryl-(C₁-C₇)-alkoxycarbonyl[(C₁-C₇)-alkyl]amino-(C₁-C₇)-alkyl, (C₃-C₇)-Cycloalkyl-(C₁-C₇)-alkoxycarbonyl[(C₁-C₇)-alky]amino-(C₁-C₇)-alkyl, Heteroaryl-N-(C₁-C₇)-alkyl, Arylheteroaryl-N-(C₁-C₇)-alkyl, (C₂-C₇)-Alkenyloxycarbonyl-N-heterocyclyl, Aryl-(C₁-C₇)-alkoxycarbonyl-N-heterocyclyl, Aryl-N-Heterocyclyl, Heteroaryl-N-heterocyclyl, Arylcarbonyl-N-heterocyclyl, (C₁-C₇)-Alkylcarbonyl-N-heterocyclyl, (C₁-C₇)-Alkylcarbonyl-(C₁-C₇)-alkylaminocarbonyl-(C₁-C₇)-alkyl, Arylcarbonyl-(C₁-C₇)-alkylaminocarbonyl-(C₁-C₇)-alkyl, Heterocyclyl-(C₁-C₇)-alkylaminocarbonyl-(C₁-C₇)-alkyl, (C₁-C₇)-Alkylcarbonyl, (C₃-C₇)-Cycloalkylcarbonyl, (C₁-C₇)-Haloalkylcarbonyl, (C₁-C₇)-Alkoxycarbonyl, (C₂-C₇)-Alkenyloxycarbonyl, Aryl-(C₁-C₇)-alkoxycarbonyl, (C₃-C₇)-Cycloalkoxycarbonyl, (C₃-C₇)-Cycloalkyl-(C₁-C₇)-alkoxycarbonyl, (C₁-C₇)-Alkylaminocarbonyl, (C₃-C₇)-Cycloalkylaminocarbonyl, Aryl-(C₁-C₇)-alkylaminocarbonyl, (C₁-C₇)-Alkylsulfonyl, Arylsulfonyl, (C₃-C₇)-Cycloalkylsulfonyl, Aryl-(C₁-C₇)-alkylsulfonyl, (C₂-C₇)-Alkenylsulfonyl, Heteroarylsulfonyl, (C₂-C₇)-Alkinylsulfonyl, (C₁-C₇)-Alkylsulfinyl, Arylsulfinyl, (C₃-C₇)-Cycloalkylsulfinyl, (C₂-C₇)-Alkenylsulfinyl, (C₂-C₇)-Alkinylsulfinyl, Arylcarbonyl, Heteroarylcarbonyl, Arylsulfonylamino-(C₁-C₇)-alkyl, (C₁-C₇)-Alkylsulfonylamino-(C₁-C₇)-alkyl, (C₃-C₇)-Cycloalkylsulfonylamino-(C₁-C₇)-alkyl, Heteroarylsulfonylamino-(C₁-C₇)-alkyl, (C₁-C₇)-Alkylcarbonylamino-(C₁-C₇)-alkyl, (C₃-C₇)-Cycloalkylcarbonylamino-(C₁-C₇)-alkyl, Arylcarbonylamino-(C₁-C₇)-alkyl, Heteroarylcarbonylamino-(C₁-C₇)-alkyl steht,
- R⁶: für Wasserstoff, Hydroxy, (C₁-C₇)-Alkyl, (C₃-C₇)-Cycloalkyl, Halogen, (C₁-C₇)-Haloalkyl, (C₁-C₇)-Alkoxy-(C₁-C₇)-alkyl, (C₂-C₇)-Alkinyl, (C₂-C₇)-Alkenyl, (C₃-C₇)-Cycloalkyl-(C₁-C₇)-alkyl, Cyano-(C₁-C₇)-alkyl, Nitro-(C₁-C₇)-alkyl, Aryl-(C₁-C₇)-alkyl, Heteroaryl-(C₁-C₇)-alkyl, Heterocyclyl-(C₁-C₇)-alkyl, Aryl, (C₁-C₇)-Alkylamino, (C₁-C₇)-Alkylamino-(C₁-C₇)-alkyl, Bis-[(C₁-C₇)-alkyl]amino-(C₁-C₇)-alkyl, Aminocarbonyl-(C₁-C₇)-alkyl, (C₁-C₇)-Alkylaminocarbonyl-(C₁-C₇)-alkyl, Bis-[(C₁-C₇)-alkyl]aminocarbonyl-(C₁-C₇)-alkyl, (C₁-C₇)-Alkoxycarbonyl-(C₁-C₇)-alkyl, Hydroxycarbonyl-(C₁-C₇)-alkyl, (C₁-C₇)-Alkylcarbonyl, (C₃-C₇)-Cycloalkylcarbonyl, (C₁-C₇)-Haloalkylcarbonyl, (C₁-C₇)-Alkoxycarbonyl, (C₂-C₇)-Alkenyloxycarbonyl, Aryl-(C₁-C₇)-alkoxycarbonyl, (C₃-C₇)-Cycloalkoxycarbonyl, (C₃-C₇)-Cycloalkyl-(C₁-C₇)-alkoxycarbonyl, (C₁-C₇)-Alkylaminocarbonyl, (C₃-C₇)-Cyclopropylaminocarbonyl, Aryl-(C₁-C₇)-alkylaminocarbonyl, (C₁-C₇)-Alkylsulfonyl, Arylsulfonyl, (C₃-C₇)-Cycloalkylsulfonyl, Aryl-(C₁-C₇)-alkylsulfonyl, (C₂-C₇)-Alkenylsulfonyl, Heteroarylsulfonyl, (C₂-C₇)-Alkinylsulfonyl, (C₁-C₇)-Alkylsulfinyl, Arylsulfinyl, (C₃-C₇)-Cycloalkylsulfinyl, (C₂-C₇)-Alkenylsulfinyl, (C₂-C₇)-Alkinylsulfinyl, Arylcarbonyl, Heteroarylcarbonyl, (C₁-C₇)-Alkoxycarbonyl-(C₁-C₇)-alkyl, (C₂-C₇)-Alkenyloxycarbonyl-(C₁-C₇)-alkyl, Hydroxycarbonyl-(C₁-C₇)-alkyl, Cyano-(C₁-C₇)-alkylaminocarbonyl, (C₂-C₇)-Alkinylaminocarbonyl, Heterocyclylcarbonyl, Hetaroaryl-(C₁-C₇)-alkylaminocarbonyl, (C₃-C₇)-Cycloalkyl-(C₁-C₇)-alkoxycarbonylcarbonyl, (C₁-C₇)-Alkoxycarbonylcarbonyl, (C₃-C₇)-Cycloalkyl-(C₁-C₇)-alkylaminocarbonyl, Aryl-(C₁-C₇)-alkylaminocarbonyl, Heterocyclyl oder eine negative Ladung steht,
- R⁷, R⁸, R⁹, R¹⁰: unabhängig voneinander für Wasserstoff, Halogen, (C₁-C₇)-Alkyl, (C₃-C₇)-Cycloalkyl, (C₄-C₇)-Cycloalkenyl, Aryl-(C₁-C₇)-alkyl, (C₂-C₇)-Alkenyl, (C₁-C₇)-Haloalkyl, (C₁-C₇)-Alkoxy, (C₁-C₇)-Haloalkoxy, (C₁-C₇)-Alkylthio, (C₁-C₇)-Haloalkylthio, Aryl, Heteroaryl, Heterocyclyl, (C₁-C₇)-Alkoxy-(C₁-C₇)-alkyl, (C₂-C₇)-Alkinyl, (C₂-C₇)-Haloalkinyl, Hydroxy, Amino, (C₁-C₇)-Alkylamino, Bis[(C₁-C₇)-alkyl]amino, Cyano, (C₁-C₇)-Alkoxy-(C₁-C₇)-alkoxy stehen,
oder wobei R⁴ und R⁷ mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷ und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷ und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹¹, R¹², R¹³, R¹⁴: unabhängig voneinander für Wasserstoff, (C₁-C₇)-Alkyl, (C₃-C₇)-Cycloalkyl, Aryl-(C₁-C₇)-alkyl, (C₂-C₇)-Alkenyl, (C₁-C₇)-Haloalkyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁵, R¹⁸, R³³: unabhängig voneinander für Wasserstoff, (C₁-C₇)-Alkyl, (C₁-C₇)-Alkoxy, (C₃-C₇)-Cycloalkyl, (C₁-C₇)-Haloalkyl, (C₁-C₇)-Alkoxy-(C₁-C₇)-alkyl, (C₂-C₇)-Alkinyl, (C₁-C₇)-Alkenyl, (C₃-C₇)-Cycloalkyl-(C₁-C₇)-alkyl, Cyano-(C₁-C₇)-alkyl, Nitro-(C₁-C₇)-alkyl, Aryl-(C₁-C₇)-alkyl, Heteroaryl-(C₁-C₇)-alkyl, Heterocyclyl-(C₁-C₇)-alkyl, Aryl, (C₁-C₇)-Alkylamino-(C₁-C₇)-alkyl, Bis-[(C₁-C₇)-alkyl]amino-(C₁-C₇)-alkyl, Aminocarbonyl-(C₁-C₇)-alkyl, (C₁-C₇)-Alkylaminocarbonyl-(C₁-C₇)-alkyl, Bis-[(C₁-C₇)-alkyl]aminocarbonyl-(C₁-C₇)-alkyl, (C₁-C₇)-Alkoxycarbonyl-(C₁-C₇)-alkyl, Hydroxycarbonyl-(C₁-C₇)-alkyl, (C₁-C₇)-Alkylcarbonyl, (C₃-C₇)-Cycloalkylcarbonyl, (C₁-C₇)-Haloalkylcarbonyl, (C₁-C₇)-Alkoxycarbonyl, (C₂-C₇)-Alkenyloxycarbonyl, (C₁-C₇)-Alkylaminocarbonyl, (C₃-C₇)-Cycloalkylaminocarbonyl, (C₁-C₇)-Alkylsulfonyl, Arylsulfonyl, (C₃-C₇)-Cycloalkylsulfonyl, Aryl-(C₁-C₇)-alkylsulfonyl, (C₂-C₇)-Alkenylsulfonyl, Heteroarylsulfonyl, (C₂-C₇)-Alkinylsulfonyl, (C₁-C₇)-Alkylsulfinyl, Arylsulfinyl, (C₃-C₇)-Cycloalkylsulfinyl, (C₂-C₇)-Alkenylsulfinyl, (C₂-C₇)-Alkinylsulfinyl, Arylcarbonyl, Heteroarylcarbonyl, Heterocyclylcarbonyl, (C₃-C₇)-Cycloalkyl-(C₁-C₇)-alkoxycarbonyl-(C₁-C₇)-alkyl, (C₂-C₇)-Alkenyloxycarbonyl-(C₁-C₇)-alkyl, Cyano-(C₁-C₇)-alkylaminocarbonyl, (C₂-C₇)-Alkinylaminocarbonyl, Heterocyclylcarbonyl, Hetaroaryl-(C₁-C₇)-alkylaminocarbonyl, (C₂-C₇)-Alkinyloxycarbonyl, (C₃-C₇)-Cycloalkyl-(C₁-C₇)-alkoxycarbonyl, (C₃-C₇)-Cycloalkyl-(C₁-C₇)-alkoxycarbonylcarbonyl, (C₁-C₇)-Alkoxycarbonylcarbonyl, (C₃-C₇)-Cycloalkyl-(C₁-C₇)-alkylaminocarbonyl, Aryl-(C₁-C₇)-alkylaminocarbonyl, Arylthio-(C₁-C₇)-alkylcarbonyl, (C₁-C₇)-Alkylthio-(C₁-C₇)-alkylcarbonyl, (C₁-C₇)-Alkylamino-(C₁-C₇)-alkylcarbonyl, Arylamino-(C₁-C₇)-alkylcarbonyl, (C₃-C₇)-Cycloalkylamino-(C₁-C₇)-alkylcarbonyl, Arylaminocarbonyl, Heteroarylaminocarbonyl, (C₁-C₇)-Alkoxycarbonyl-(C₁-C₇)-alkylaminocarbonyl steht,
- R¹⁶, R¹⁷: unabhängig voneinander für Wasserstoff, (C₁-C₇)-Alkyl, Aryl, (C₃-C₇)-Cycloalkyl, Aryl-(C₁-C₇)-alkyl, (C₂-C₇)-Alkenyl, (C₁-C₇)-Haloalkyl stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁹, R²⁰, R²¹, R²², R²³, R²⁴, R²⁵, R²⁶: unabhängig voneinander für Wasserstoff, Halogen, (C₁-C₇)-Alkyl, (C₃-C₇)-Cycloalkyl, Aryl-(C₁-C₇)-alkyl, Aryl, Heteroaryl, Heterocyclyl, (C₂-C₇)-Alkenyl, (C₁-C₇)-Haloalkyl, (C₁-C₇)-Alkylthio, (C₁-C₇)-Haloalkylthio, Arylthio, (C₂-C₇)-Alkinyl, (C₁-C₇)-Alkylamino, Bis[(C₁-C₇)-alkyl]amino, (C₁-C₇)-Alkoxy, (C₁-C₇)-Haloalkoxy stehen,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
- R²⁷, R²⁸, R²⁹, R³⁰, R³¹, R³², R³⁴, R³⁵: unabhängig voneinander für Wasserstoff, (C₁-C₇)-Alkyl, Aryl, (C₃-C₇)-Cycloalkyl, Aryl-(C₁-C₇)-alkyl, (C₂-C₇)-Alkenyl, (C₁-C₇)-Haloalkyl, (C₁-C₇)-Alkoxy, (C₁-C₇)-Haloalkoxy, (C₁-C₇)-Alkylamino, Bis[(C₁-C₇)-alkyl]amino, (C₁-C₇)-Alkylthio stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,

Ganz besonders bevorzugt ist die erfindungsgemäße Verwendung von Verbindungen der allgemeinen Formel (I), worin
- Q: für 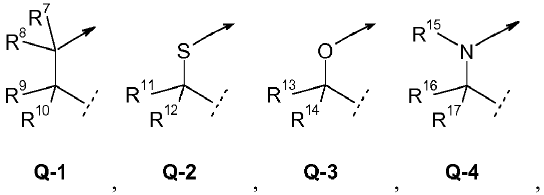 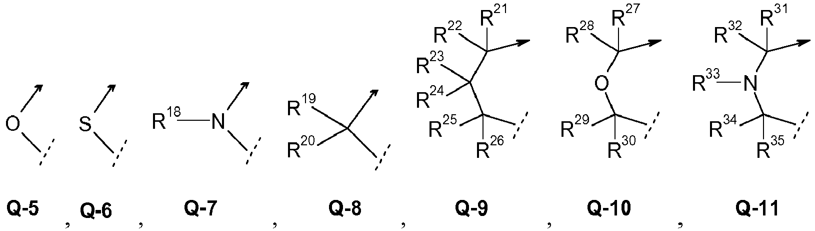
steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
- W: für Sauerstoff steht,
- R¹, R⁴: unabhängig voneinander für Wasserstoff, Fluor, Chlor, Brom, Iod, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Cyclobutenyl, Cyclopentenyl, Cyclohexenyl, Cycloheptenyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, gegebenenfalls substituiertes Phenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Aryl-(C₂-C₆)-alkenyl, Aryl-(C₂-C₆)-alkinyl, Heteroaryl, Heterocyclyl, (C₃-C₆)-Cycloalkyl-(C₁-C₆)-alkyl, (C₃-C₆)-Cycloalkyl-(C₂-C₆)-alkenyl, (C₃-C₆)-Cycloalkyl-(C₂-C₆)-alkinyl, Heteroaryl-(C₁-C₆)-alkyl, Heterocyclyl-(C₁-C₆)-alkyl, Heteroaryl-(C₂-C₆)-alkenyl, Heteroaryl-(C₂-C₆)-alkinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, (C₃-C₆)-Halocycloalkyl, (C₂-C₆)-Haloalkenyl, (C₄-C₆)-Halocycloalkenyl, (C₂-C₆)-Haloalkinyl, (C₃-C₆)- Alkoxy-(C₁-C₆)-alkyl-(C₂-C₆)-alkinyl, Tris[(C₁-C₆)-alkyl]silyl-(C₂-C₆)-alkinyl, Bis[(C₁-C₆)-alkyl](aryl)silyl-(C₂-C₆)-alkinyl, Bisaryl[(C₁-C₆)-alkyl]silyl-(C₂-C₆)-alkinyl Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Methoxy, Ethoxy, n-Propoxy, iso-Propoxy, n-Butyloxy, tert.-Butyloxy, iso-Butyloxy, n-Pentyloxy, iso-Pentyloxy, Trifluormethoxy, Difluormethoxy, 2,2-Difluorethoxy, 2,2,2-Trifluorethoxy, (C₃-C₆)-Cycloalkyloxy, (C₂-C₆)-Alkenyloxy-(C₁-C₆)-alkyl, Heteroaryl-(C₁-C₆)-alkoxy, Aryl-(C₁-C₆)-alkoxy, (C₁-C₆)-Alkylthio, (C₁-C₆)-Alkylthio-(C₁-C₆)-alkyl, (C₁-C₆)-Haloalkylthio, Arylthio, (C₃-C₆)-Cycloalkylthio, (C₁-C₆)-Alkylsulfonyl, (C₁-C₆)-Alkylsulfinyl, Arylsulfonyl, Arylsulfinyl, (C₃-C₆)-Cycloalkylsulfonyl, (C₃-C₆)-Cycloalkylsulfinyl, (C₃-C₆)-Cycloalkyl-(C₁-C₆)-alkoxy, (C₂-C₆)-Alkinyl-(C₁-C₆)-alkoxy, (C₂-C₆)-Alkenyl-(C₁-C₆)-alkoxy, (C₂-C₆)-Alkenyloxy-(C₁-C₆)-alkoxy, (C₁-C₆)-Alkyloxy-(C₁-C₆)-alkoxy, (C₁-C₆)-Alkylamino-(C₁-C₆)-alkoxy, Bis[(C₁-C₆)-alkyl]amino-(C₁-C₆)-alkoxy, (C₃-C₆)-Cycloalkylamino-(C₁-C₆)-alkoxy, Heterocyclyl-N-(C₁-C₆)-alkoxy, Aryloxy, Heteroaryloxy, Tris-[(C₁-C₆)-alkyl]silyl, Bis-[(C₁-C₆)-alkyl]arylsilyl, Bis-[(C₁-C₆)-alkyl]-[(C₁-C₆)-alkyl]silyl, (C₁-C₆)-Alkylamino, (C₂-C₆)-Alkenylamino, (C₃-C₆)-Cycloalkylamino, Aryl-(C₁-C₆)-alkylamino, Arylamino, Bis[(C₁-C₆)-alkyl]amino, Hydroxy, Amino, Nitro, Cyano, (C₁-C₆)-Alkoxy-(C₁-C₆)-alkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
- R², R³: unabhängig voneinander für Wasserstoff, Fluor, Chlor, Brom, Iod, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, Methoxy, Ethoxy, n-Propoxy, iso-Propoxy, n-Butyloxy, tert.-Butyloxy, iso-Butyloxy, n-Pentyloxy, iso-Pentyloxy, Trifluormethoxy, Difluormethoxy, 2,2-Difluorethoxy, 2,2,2-Trifluorethoxy, Methylthio, Ethylthio, Trifluormethylthio stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R⁵: für Methyl, Ethyl, n-Propyl, iso-Propyl, n-Butyl, iso-Butyl, tert-Butyl, n-Pentyl, iso-Pentyl, neo-Pentyl, n-Hexyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-ylundAdamantan-2-yl, Cyclobutenyl, Cyclopentenyl, Cyclohexenyl, Cycloheptenyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 3,3,3,2,2-Pentafluor-n-propyl,4,4-Difluor-n-butyl, 4,4,4-Trifluor-n-butyl, 2,2-Dichlor-2-fluororethyl, 2-Chlor-2,2-difluorethyl, Difluor-tert.-butyl, (C₁-C₆)-Haloalkoxy-(C₁-C₆)-alkyl, Cyano-(C₁-C₆)-alkoxy-(C₁-C₆)-alkyl, (C₃-C₆)-Halocycloalkyl, (C₄-C₆)-Halocycloalkenyl, Hydroxy-(C₁-C₆)-alkyl, Tris-[(C₁-C₆)-Alkylsilyl]oxy-(C₁-C₆)-alkyl, Bis-[(C₁-C₆)-alkyl]arylsilyloxy-(C₁-C₆)-alkyl, (C₁-C₆)-Alkoxy-(C₁-C₆)-alkyl, (C₂-C₆)-Alkinyl, (C₂-C₆)-Alkenyl, (C₃-C₆)-Cycloalkyl-(C₁-C₆)-alkyl, Cyano-(C₁-C₆)-alkyl, Nitro-(C₁-C₆)-alkyl, Amino-(C₁-C₆)-alkyl, Aryl-(C₁-C₆)-alkyl, Heteroaryl-(C₁-C₆)-alkyl, Heterocyclyl-(C₁-C₆)-alkyl, Heterocyclyl-N-(C₁-C₆)-Alkyl, (C₃-C₆)-Cycloalkyloxy-(C₁-C₆)-alkyl, gegebenenfalls substituiertes Phenyl, Heterocyclyl, Aryloxy-(C₁-C₆)-alkyl, Aryl-(C₁-C₆)-alkoxy-(C₁-C₆)-alkyl, Heteroaryloxy-(C₁-C₆)-alkyl, Heterocyclyloxy-(C₁-C₆)-alkyl, (C₁-C₆)-Alkoxycarbonyl-N-Heterocyclyl, Heteroaryl, (C₁-C₆)-Alkylamino-(C₁-C₆)-alkyl, (C₁-C₆)-Alkylamino-(C₃-C₆)-cycloalkyl, Bis-[(C₁-C₆)-Alkyl]amino-(C₃-C₆)-cycloalkyl, Bis-[(C₁-C₆)-alkyl]amino-(C₁-C₆)-alkyl, Cyano-(C₁-C₆)-alkylamino-(C₁-C₆)-alkyl, (C₁-C₆)-Haloalkylamino-(C₁-C₆)-alkyl, (C₃-C₆)-Halocycloalkylamino-(C₁-C₆)-alkyl, Arylamino-(C₁-C₆)-alkyl, Heteroarylamino-(C₁-C₆)-alkyl, Heterocyclylamino-(C₁-C₆)-alkyl,Heterocyclyl-(C₁-C₆)-alkylamino-(C₁-C₆)-alkyl, Heteroaryl-(C₁-C₆)-alkylamino-(C₁-C₆)-alkyl, Aryl-(C₁-C₆)-alkylamino-(C₁-C₆)-alkyl, (C₃-C₆)-Cycloalkylamino-(C₁-C₆)-alkyl, Aryl[(C₁-C₆)-alkyl]amino-(C₁-C₆)-alkyl, Heteroaryl[(C₁-C₆)-alkyl]amino-(C₁-C₆)-alkyl, Heterocyclyl[(C₁-C₆)-alkyl]amino-(C₁-C₆)-alkyl, Aryl-(C₁-C₆)-alkyl[(C₁-C₆)-alkyl]amino-(C₁-C₆)-alkyl, (C₃-C₆)-Cycloalkyl-[(C₁-C₆)-alkyl]amino-(C₁-C₆)-alkyl, Heteroaryl-(C₁-C₆)-alkyl[(C₁-C₆)-alkyl]amino-(C₁-C₆)-alkyl, Heterocyclyl-(C₁-C₆)-alkyl[(C₁-C₆)-alkyl]amino-(C₁-C₆)-alkyl, Aryl(arylsulfonyl)amino-(C₁-C₆)-alkyl, (C₁-C₆)-Alkyl(arylsulfonyl)amino-(C₁-C₆)-alkyl, Heteroaryl(arylsulfonyl)amino-(C₁-C₆)-alkyl, Heterocyclyl(arylsulfonyl)amino-(C₁-C₆)-alkyl, Aryl-(C₁-C₆)-alkyl(arylsulfonyl)amino-(C₁-C₆)-alkyl, Heteroaryl-(C₁-C₆)-alkyl(arylsulfonyl)aminoalkyl, Heterocyclyl-(C₁-C₆)-alkyl(arylsulfonyl)amino-(C₁-C₆)-alkyl, (C₃-C₆)-Cycloalkyl(arylsulfonyl)amino-(C₁-C₆)-alkyl, Aryl[(C₁-C₆)-alkylsulfonyl]amino-(C₁-C₆)-alkyl, (C₁-C₆)-Alkyl[(C₁-C₆)-alkylsulfonyl]amino-(C₁-C₆)-alkyl, Heteroaryl[(C₁-C₆)-alkylsulfonyl]amino-(C₁-C₆)-alkyl, Heterocyclyl-[(C₁-C₆)-alkylsulfonyl]amino-(C₁-C₆)-alkyl, Aryl-(C₁-C₆)-alkyl[(C₁-C₆)-alkylsulfonyl]amino-(C₁-C₆)-alkyl, Heteroaryl-(C₁-C₆)-alkyl[(C₁-C₆)-alkylsulfonyl]amino-(C₁-C₆)-alkyl, Heterocyclyl-(C₁-C₆)-alkyl[(C₁-C₆)-alkylsulfonyl]amino-(C₁-C₆)-alkyl, (C₃-C₆)-Cycloalkyl[(C₁-C₆)-alkylsulfonyl]amino-(C₁-C₆)-alkyl, Aryl(heteroarylsulfonyl)amino-(C₁-C₆)-alkyl, (C₁-C₆)-Alkyl(heteroarylsulfonyl)amino-(C₁-C₆)-alkyl, Heteroaryl(heteroarylsulfonyl)amino-(C₁-C₆)-alkyl, Heterocyclyl(heteroarylsulfonyl)amino-(C₁-C₆)-alkyl, Aryl-(C₁-C₆)-alkyl(heteroarylsulfonyl)amino-(C₁-C₆)-alkyl, Heteroaryl-(C₁-C₆)-alkyl(heteroarylsulfonyl)amino-(C₁-C₆)-alkyl, Heterocyclyl-(C₁-C₆)-alkyl(heteroarylsulfonyl)amino-(C₁-C₆)-alkyl, (C₃-C₆)-Cycloalkyl(heteroarylsulfonyl)amino-(C₁-C₆)-alkyl, Aryl(arylheteroarylsulfonyl)amino-(C₁-C₆)-alkyl, (C₁-C₆)-Alkyl(arylheteroarylsulfonyl)amino-(C₁-C₆)-alkyl, Heteroaryl(arylheteroarylsulfonyl)amino-(C₁-C₆)-alkyl, Heterocyclyl(arylheteroarylsulfonyl)amino-(C₁-C₆)-alkyl, Aryl-(C₁-C₆)-alkyl(arylheteroarylsulfonyl)amino-(C₁-C₆)-alkyl, Heteroaryl-(C₁-C₆)-alkyl(arylheteroarylsulfonyl)amino-(C₁-C₆)-alkyl, Heterocyclyl-(C₁-C₆)-alkyl(arylheteroarylsulfonyl)amino-(C₁-C₆)-alkyl, (C₃-C₆)-Cycloalkyl(arylheteroarylsulfonyl)amino-(C₁-C₆)-alkyl, Aryl(heteroarylheteroarylsulfonyl)amino-(C₁-C₆)-alkyl, (C₁-C₆)-Alkyl(heteroarylheteroarylsulfonyl)amino-(C₁-C₆)-alkyl, Heteroaryl(heteroarylheteroarylsulfonyl)amino-(C₁-C₆)-alkyl, Heterocyclyl(heteroarylheteroarylsulfonyl)amino-(C₁-C₆)-alkyl, Aryl-(C₁-C₆)-alkyl(heteroarylheteroarylsulfonyl)amino-(C₁-C₆)-alkyl, Heteroaryl-(C₁-C₆)-alkyl(heteroarylheteroarylsulfonyl)amino-(C₁-C₆)-alkyl, Heterocyclyl-(C₁-C₆)-alkyl(heteroarylheteroarylsulfonyl)amino-(C₁-C₆)-alkyl, (C₃-C₆)-Cycloalkyl(heteroarylheteroarylsulfonyl)amino-(C₁-C₆)-alkyl, Aminocarbonyl-(C₁-C₆)-alkyl, (C₁-C₆)-Alkylaminocarbonyl-(C₁-C₆)-alkyl, Bis-[(C₁-C₆)-alkyl]aminocarbonyl-(C₁-C₆)-alkyl, (C₂-C₆)-Alkenylaminocarbonyl-(C₁-C₆)-alkyl, (C₂-C₆)-Alkinylaminocarbonyl-(C₁-C₆)-alkyl, Cyano-(C₁-C₆)-alkylaminocarbonyl-(C₁-C₆)-alkyl, (C₃-C₆)-Cycloalkylaminocarbonyl-(C₁-C₆)-alkyl, Heterocyclylaminocarbonyl-(C₁-C₆)-alkyl, (C₁-C₆)-Alkoxycarbonyl-(C₁-C₆)-alkyl, Hydroxycarbonyl-(C₁-C₆)-alkyl, (C₁-C₆)-Haloalkoxycarbonyl-(C₁-C₆)-alkyl, Hetaroaryl-(C₁-C₆)-alkylaminocarbonyl-(C₁-C₆)-alkyl, (C₂-C₆)-Alkenyloxycarbonyl-(C₁-C₆)-alkyl, (C₃-C₆)-Cycloalkyl-(C₁-C₆)-alkoxycarbonyl-(C₁-C₆)-alkyl, Aryl-(C₁-C₆)-alkylaminocarbonyl-(C₁-C₆)-alkyl, (C₁-C₆)-Alkylthio-(C₁-C₆)-alkyl, (C₁-C₆)-Haloalkylthio-(C₁-C₆)-alkyl, Arylthio-(C₁-C₆)-alkyl, Heteroarylthio-(C₁-C₆)-alkyl, Aryl-(C₁-C₆)-alkylthio-(C₁-C₆)-alkyl, (C₁-C₆)-Alkylsulfonyl-(C₁-C₆)-alkyl, Arylsulfonyl-(C₁-C₆)-alkyl, (C₃-C₆)-Cycloalkylsulfonyl-(C₁-C₆)-alkyl, Heteroarylsulfonyl-(C₁-C₆)-alkyl, Heterocyclylsulfinyl-(C₁-C₆)-alkyl, (C₁-C₆)-Haloalkylsulfinyl-(C₁-C₆)-alkyl, (C₃-C₆)-Halocycloalkylsulfinyl-(C₁-C₆)-alkyl, (C₁-C₆)-Alkylsulfinyl-(C₁-C₆)-alkyl, Arylsulfinyl-(C₁-C₆)-alkyl, (C₃-C₆)-Cycloalkylsulfinyl-(C₁-C₆)-alkyl, Heteroarylsulfinyl-(C₁-C₆)-alkyl, Heterocyclylsulfinyl-(C₁-C₆)-alkyl, (C₁-C₆)-Haloalkylsulfinyl-(C₁-C₆)-alkyl, (C₃-C₆)-Halocycloalkylsulfinyl-(C₁-C₆)-alkyl, (C₁-C₆)-Alkoxycarbonylamino-(C₁-C₆)-alkyl, Aminocarbonylamino-(C₁-C₆)-alkyl, (C₁-C₆)-Alkylaminocarbonylamino-(C₁-C₆)-alkyl, (C₃-C₆)-Cycloalkylaminocarbonylamino-(C₁-C₆)-alkyl, Amino-(C₁-C₆)-alkylcarbonylaminophenyl-(C₁-C₆)-alkyl, (C₁-C₆)-Alkoxycarbonylamino-(C₁-C₆)-alkylcarbonylaminophenyl-(C₁-C₆)-alkyl, Arylsulfonylaminophenyl-(C₁-C₆)-alkyl, Heteroarylsulfonylaminophenyl-(C₁-C₆)-alkyl, (C₁-C₆)-Alkoxycarbonylphenyl-(C₁-C₆)-alkyl, Hydroxycarbonylphenyl-(C₁-C₆)-alkyl, Heterocyclylcarbonylphenyl-(C₁-C₆)-alkyl, (C₁-C₆)-Alkylaminocarbonylphenyl-(C₁-C₆)-alkyl, Bis-[(C₁-C₆)-alkyl]aminocarbonylphenyl-(C₁-C₆)-alkyl, (C₃-C₆)-Cycloalkylaminocarbonylphenyl-(C₁-C₆)-alkyl, (C₁-C₆)-Alkoxycarbonyl-(C₁-C₆)-alkylaminocarbonylphenyl-(C₁-C₆)-alkyl, (C₁-C₆)-Alkoxycarbonyl[(C₁-C₆)-alkyl]amino-(C₁-C₆)-alkyl, (C₂-C₆)-Alkenyloxycarbonyl[(C₁-C₆)-alkyl]amino-(C₁-C₆)-alkyl, Aryl-(C₁-C₆)-alkoxycarbonyl[(C₁-C₆)-alkyl]amino-(C₁-C₆)-alkyl, (C₃-C₆)-Cycloalkyl-(C₁-C₆)-alkoxycarbonyl[(C₁-C₆)-alky]amino-(C₁-C₆)-alkyl, Heteroaryl-N-(C₁-C₆)-alkyl, Arylheteroaryl-N-(C₁-C₆)-alkyl, (C₂-C₆)-Alkenyloxycarbonyl-N-heterocyclyl, Aryl-(C₁-C₆)-alkoxycarbonyl-N-heterocyclyl, Aryl-N-Heterocyclyl, Heteroaryl-N-heterocyclyl, Arylcarbonyl-N-heterocyclyl, (C₁-C₆)-Alkylcarbonyl-N-heterocyclyl, (C₁-C₆)-Alkylcarbonyl-(C₁-C₆)-alkylaminocarbonyl-(C₁-C₆)-alkyl, Arylcarbonyl-(C₁-C₆)-alkylaminocarbonyl-(C₁-C₆)-alkyl, Heterocyclyl-(C₁-C₆)-alkylaminocarbonyl-(C₁-C₆)-alkyl, (C₁-C₆)-Alkylcarbonyl, (C₃-C₆)-Cycloalkylcarbonyl, (C₁-C₆)-Haloalkylcarbonyl, (C₁-C₆)-Alkoxycarbonyl, (C₂-C₆)-Alkenyloxycarbonyl, Aryl-(C₁-C₆)-alkoxycarbonyl, (C₃-C₆)-Cycloalkoxycarbonyl, (C₃-C₆)-Cycloalkyl-(C₁-C₆)-alkoxycarbonyl, (C₁-C₆)-Alkylaminocarbonyl, (C₃-C₆)-Cycloalkylaminocarbonyl, Aryl-(C₁-C₆)-alkylaminocarbonyl, (C₁-C₆)-Alkylsulfonyl, Arylsulfonyl, (C₃-C₆)-Cycloalkylsulfonyl, Aryl-(C₁-C₆)-alkylsulfonyl, (C₂-C₆)-Alkenylsulfonyl, Heteroarylsulfonyl, (C₂-C₆)-Alkinylsulfonyl, (C₁-C₆)-Alkylsulfinyl, Arylsulfinyl, (C₃-C₆)-Cycloalkylsulfinyl, (C₂-C₆)-Alkenylsulfinyl, (C₂-C₆)-Alkinylsulfinyl, Arylcarbonyl, Heteroarylcarbonyl, Arylsulfonylamino-(C₁-C₆)-alkyl, (C₁-C₆)-Alkylsulfonylamino-(C₁-C₆)-alkyl, (C₃-C₆)-Cycloalkylsulfonylamino-(C₁-C₆)-alkyl, Heteroarylsulfonylamino-(C₁-C₆)-alkyl, (C₁-C₆)-Alkylcarbonylamino-(C₁-C₆)-alkyl, (C₃-C₆)-Cycloalkylcarbonylamino-(C₁-C₆)-alkyl, Arylcarbonylamino-(C₁-C₆)-alkyl, Heteroarylcarbonylamino-(C₁-C₆)-alkyl steht,
- R⁶: für Wasserstoff, Hydroxy, Methyl, Ethyl, n-Propyl, iso-Propyl, n-Butyl, iso-Butyl, tert-Butyl, n-Pentyl, iso-Pentyl, neo-Pentyl, n-Hexyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Fluor, Chlor, Brom, Iod, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, 2,2-Dichlor-2-fluororethyl, 2-Chlor-2,2-difluorethyl, Difluor-tert.-butyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, (C₃-C₆)-Cycloalkyl-(C₁-C₆)-alkyl, Cyano-(C₁-C₆)-alkyl, Nitro-(C₁-C₆)-alkyl, Aryl-(C₁-C₆)-alkyl, Heteroaryl-(C₁-C₆)-alkyl, Heterocyclyl-(C₁-C₆)-alkyl, gegebenenfalls substituiertes Phenyl, (C₁-C₆)-Alkylamino, (C₁-C₆)-Alkylamino-(C₁-C₆)-alkyl, Bis-[(C₁-C₆)-alkyl]amino-(C₁-C₆)-alkyl, Aminocarbonyl-(C₁-C₆)-alkyl, (C₁-C₆)-Alkylaminocarbonyl-(C₁-C₆)-alkyl, Bis-[(C₁-C₆)-alkyl]aminocarbonyl-(C₁-C₆)-alkyl, (C₁-C₆)-Alkoxycarbonyl-(C₁-C₆)-alkyl, Hydroxycarbonyl-(C₁-C₆)-alkyl, (C₁-C₆)-Alkylcarbonyl, (C₃-C₆)-Cycloalkylcarbonyl, (C₁-C₆)-Haloalkylcarbonyl, (C₁-C₆)-Alkoxycarbonyl, (C₂-C₆)-Alkenyloxycarbonyl, Aryl-(C₁-C₆)-alkoxycarbonyl, (C₃-C₆)-Cycloalkoxycarbonyl, (C₃-C₆)-Cycloalkyl-(C₁-C₆)-alkoxycarbonyl, (C₁-C₆)-Alkylaminocarbonyl, (C₃-C₆)-Cyclopropylaminocarbonyl, Aryl-(C₁-C₆)-alkylaminocarbonyl, (C₁-C₆)-Alkylsulfonyl, Arylsulfonyl, (C₃-C₆)-Cycloalkylsulfonyl, Aryl-(C₁-C₆)-alkylsulfonyl, (C₂-C₆)-Alkenylsulfonyl, Heteroarylsulfonyl, (C₂-C₆)-Alkinylsulfonyl, (C₁-C₆)-Alkylsulfinyl, Arylsulfinyl, (C₃-C₆)-Cycloalkylsulfinyl, (C₂-C₆)-Alkenylsulfinyl, (C₂-C₆)-Alkinylsulfinyl, Arylcarbonyl, Heteroarylcarbonyl, (C₁-C₆)-Alkoxycarbonyl-(C₁-C₆)-alkyl, (C₂-C₆)-Alkenyloxycarbonyl-(C₁-C₆)-alkyl, Hydroxycarbonyl-(C₁-C₆)-alkyl, Cyano-(C₁-C₆)-alkylaminocarbonyl, (C₂-C₆)-Alkinylaminocarbonyl, Heterocyclylcarbonyl, Hetaroaryl-(C₁-C₆)-alkylaminocarbonyl, (C₃-C₆)-Cycloalkyl-(C₁-C₆)-alkoxycarbonylcarbonyl, (C₁-C₆)-Alkoxycarbonylcarbonyl, (C₃-C₆)-Cycloalkyl-(C₁-C₆)-alkylaminocarbonyl, Aryl-(C₁-C₆)-alkylaminocarbonyl, Heterocyclyl oder eine negative Ladung steht,
- R⁷, R⁸, R⁹, R¹⁰: unabhängig voneinander für Wasserstoff, Fluor, Chlor, Brom, Iod, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, gegebenenfalls substituiertes Phenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, (C₁-C₆)-Alkoxy, (C₁-C₆)-Haloalkoxy, (C₁-C₆)-Alkylthio, (C₁-C₆)-Haloalkylthio, gegebenenfalls substituiertes Phenyl, Heteroaryl, Heterocyclyl, (C₁-C₆)-Alkoxy-(C₁-C₆)-alkyl, (C₂-C₆)-Haloalkinyl, Hydroxy, Amino, (C₁-C₆)-Alkylamino, Bis[(C₁-C₆)-alkyl]amino, Cyano, (C₁-C₆)-Alkoxy-(C₁-C₆)-alkoxy stehen,
oder wobei R⁴ und R⁷ mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷ und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷ und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹¹, R¹², R¹³, R¹⁴: unabhängig voneinander für Wasserstoff, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁵, R¹⁸, R³³: unabhängig voneinander für Wasserstoff, (C₁-C₆)-Alkyl, (C₁-C₆)-Alkoxy, (C₃-C₆)-Cycloalkyl, (C₁-C₆)-Haloalkyl, (C₁-C₆)-Alkoxy-(C₁-C₆)-alkyl, (C₂-C₆)-Alkinyl, (C₁-C₆)-Alkenyl, (C₃-C₆)-Cycloalkyl-(C₁-C₆)-alkyl, Cyano-(C₁-C₆)-alkyl, Nitro-(C₁-C₆)-alkyl, Aryl-(C₁-C₆)-alkyl, Heteroaryl-(C₁-C₆)-alkyl, Heterocyclyl-(C₁-C₆)-alkyl, gegebenenfalls substituiertes Phenyl, (C₁-C₆)-Alkylamino-(C₁-C₆)-alkyl, Bis-[(C₁-C₆)-alkyl]amino-(C₁-C₆)-alkyl, Aminocarbonyl-(C₁-C₆)-alkyl, (C₁-C₆)-Alkylaminocarbonyl-(C₁-C₆)-alkyl, Bis-[(C₁-C₆)-alkyl]aminocarbonyl-(C₁-C₆)-alkyl, (C₁-C₆)-Alkoxycarbonyl-(C₁-C₆)-alkyl, Hydroxycarbonyl-(C₁-C₆)-alkyl, (C₁-C₆)-Alkylcarbonyl, (C₃-C₆)-Cycloalkylcarbonyl, (C₁-C₆)-Haloalkylcarbonyl, (C₁-C₆)-Alkoxycarbonyl, (C₂-C₆)-Alkenyloxycarbonyl, (C₁-C₆)-Alkylaminocarbonyl, (C₃-C₆)-Cycloalkylaminocarbonyl, (C₁-C₆)-Alkylsulfonyl, Arylsulfonyl, (C₃-C₆)-Cycloalkylsulfonyl, Aryl-(C₁-C₆)-alkylsulfonyl, (C₂-C₆)-Alkenylsulfonyl, Heteroarylsulfonyl, (C₂-C₆)-Alkinylsulfonyl, (C₁-C₆)-Alkylsulfinyl, Arylsulfinyl, (C₃-C₆)-Cycloalkylsulfinyl, (C₂-C₆)-Alkenylsulfinyl, (C₂-C₆)-Alkinylsulfinyl, Arylcarbonyl, Heteroarylcarbonyl, Heterocyclylcarbonyl, (C₃-C₆)-Cycloalkyl-(C₁-C₆)-alkoxycarbonyl-(C₁-C₆)-alkyl, (C₂-C₆)-Alkenyloxycarbonyl-(C₁-C₆)-alkyl, Cyano-(C₁-C₆)-alkylaminocarbonyl, (C₂-C₆)-Alkinylaminocarbonyl, Hetaroaryl-(C₁-C₆)-alkylaminocarbonyl, (C₂-C₆)-Alkinyloxycarbonyl, (C₃-C₆)-Cycloalkyl-(C₁-C₆)-alkoxycarbonyl, (C₃-C₆)-Cycloalkyl-(C₁-C₆)-alkoxycarbonylcarbonyl, (C₁-C₆)-Alkoxycarbonylcarbonyl, (C₃-C₆)-Cycloalkyl-(C₁-C₆)-alkylaminocarbonyl, Aryl-(C₁-C₆)-alkylaminocarbonyl, Arylthio-(C₁-C₆)-alkylcarbonyl, (C₁-C₆)-Alkylthio-(C₁-C₆)-alkylcarbonyl, (C₁-C₆)-Alkylamino-(C₁-C₆)-alkylcarbonyl, Arylamino-(C₁-C₆)-alkylcarbonyl, (C₃-C₆)-Cycloalkylamino-(C₁-C₆)-alkylcarbonyl, Arylaminocarbonyl, Heteroarylaminocarbonyl, (C₁-C₆)-Alkoxycarbonyl-(C₁-C₆)-alkylaminocarbonyl steht,
- R¹⁶, R¹⁷: unabhängig voneinander für Wasserstoff, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, gegebenenfalls substituiertes Phenyl stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁹, R²⁰, R²¹, R²², R²³, R²⁴, R²⁵, R²⁶: unabhängig voneinander für Wasserstoff, Fluor, Brom, Chlor, Iod, (C₁-C₆)-Alkyl, (C₃-C₆)-Cycloalkyl, Aryl-(C₁-C₆)-alkyl, gegebenenfalls substituiertes Phenyl, Heteroaryl, Heterocyclyl, (C₂-C₆)-Alkenyl, (C₁-C₆)-Haloalkyl, (C₁-C₆)-Alkylthio, (C₁-C₆)-Haloalkylthio, Arylthio, (C₂-C₆)-Alkinyl, (C₁-C₆)-Alkylamino, Bis[(C₁-C₆)-alkyl]amino, (C₁-C₆)-Alkoxy, (C₁-C₆)-Haloalkoxy stehen,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
- R²⁷, R²⁸, R²⁹, R³⁰, R³¹, R³², R³⁴, R³⁵: unabhängig voneinander für Wasserstoff, (C₁-C₆)-Alkyl, gegebenenfalls substituiertes Phenyl, (C₃-C₆)-Cycloalkyl, Aryl-(C₁-C₆)-alkyl, (C₂-C₆)-Alkenyl, (C₁-C₆)-Haloalkyl, (C₁-C₆)-Alkoxy, (C₁-C₆)-Haloalkoxy, (C₁-C₆)-Alkylamino, Bis[(C₁-C₆)-alkyl]amino, (C₁-C₆)-Alkylthio stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
und R⁵ im Speziellen bevorzugt bevorzugt für eine der in der folgenden Tabelle beschriebenen Gruppierungen G-1 bis G-300 steht

| | | | | |
|---|---|---|---|---|
| 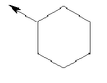 | 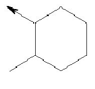 | 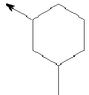 | 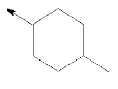 | 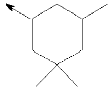 |
| G-1 | G-2 | G-3 | G-4 | G-5 |
| | | | | |
| 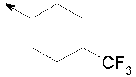 | 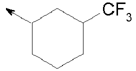 | 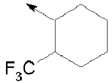 | 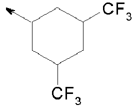 | 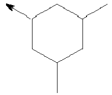 |
| G-6 | G-7 | G-8 | G-9 | G-10 |
| 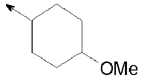 | 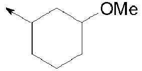 | 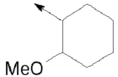 | 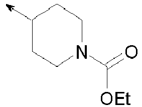 | 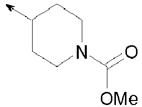 |
| G-11 | G-12 | G-13 | G-14 | G-15 |
| | | | | |
| 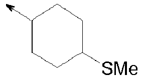 | 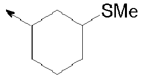 | 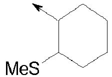 | 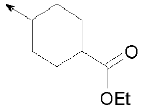 | 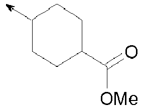 |
| G-16 | G-17 | G-18 | G-19 | G-20 |
| | | | | |
| 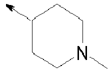 | 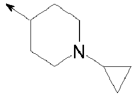 | 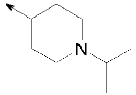 | 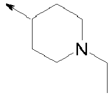 | 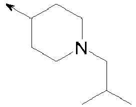 |
| G-21 | G-22 | G-23 | G-24 | G-25 |
| | | | | |
| 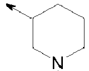 | 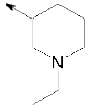 | 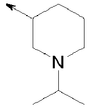 | 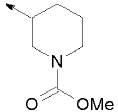 | 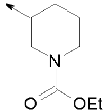 |
| G-26 | G-27 | G-28 | G-29 | G-30 |
| | | | | |
| 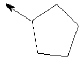 | 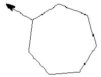 | 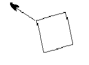 | 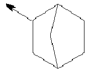 | 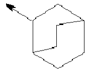 |
| G-31 | G-32 | G-33 | G-34 | G-35 |
| | | | | |
| 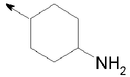 | 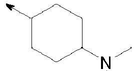 | 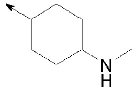 | 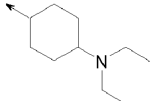 | 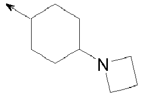 |
| G-36 | G-37 | G-38 | G-39 | G-40 |
| | | | | |
| 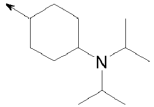 | 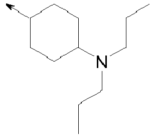 | 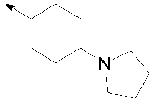 | 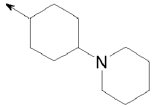 | 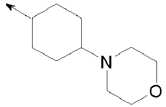 |
| G-41 | G-42 | G-43 | G-44 | G-45 |
| 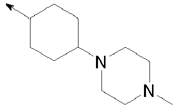 | 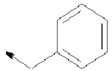 | 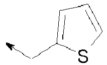 | 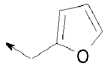 | 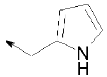 |
| G-46 | G-47 | G-48 | G-49 | G-50 |
| | | | | |
| 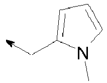 | 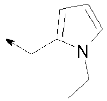 | 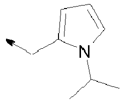 | 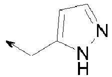 | 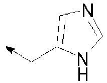 |
| G-51 | G-52 | G-53 | G-54 | G-55 |
| | | | | |
| 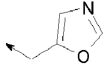 | 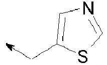 | 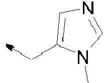 | 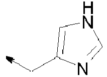 | 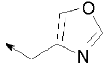 |
| G-56 | G-57 | G-58 | G-59 | G-60 |
| | | | | |
| 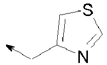 | 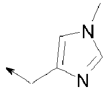 | 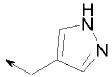 | 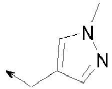 | 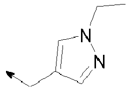 |
| G-61 | G-62 | G-63 | G-64 | G-65 |
| | | | | |
| 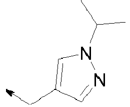 | 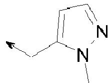 | 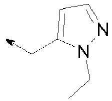 | 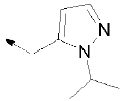 | 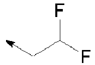 |
| G-66 | G-67 | G-68 | G-69 | G-70 |
| | | | | |
| 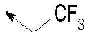 | 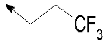 | 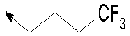 | 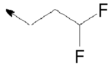 | 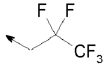 |
| G-71 | G-72 | G-73 | G-74 | G-75 |
| | | | | |
| 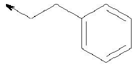 | 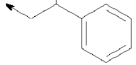 | 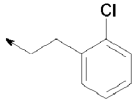 | 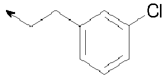 | 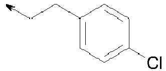 |
| G-76 | G-77 | G-78 | G-79 | G-80 |
| | | | | |
| 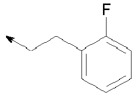 | 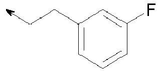 | 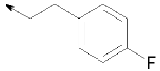 | 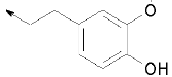 | 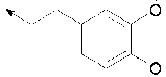 |
| G-81 | G-82 | G-83 | G-84 | G-85 |
| 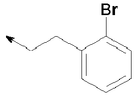 | 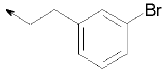 | 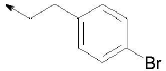 | 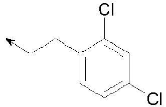 | 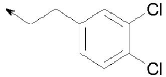 |
| G-86 | G-87 | G-88 | G-89 | G-90 |
| | | | | |
| 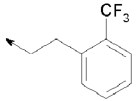 | 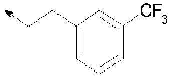 | 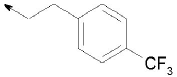 | 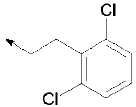 | 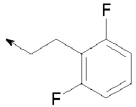 |
| G-91 | G-92 | G-93 | G-94 | G-95 |
| | | | | |
| 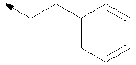 | 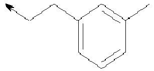 | 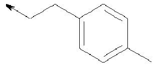 | 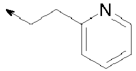 | 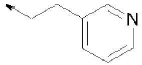 |
| G-96 | G-97 | G-98 | G-99 | G-100 |
| | | | | |
| 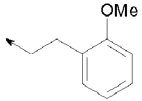 | 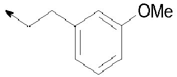 | 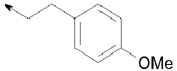 | 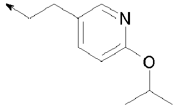 | 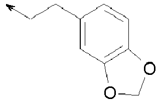 |
| G-101 | G-102 | G-103 | G-104 | G-105 |
| | | | | |
| 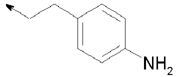 | 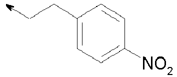 | 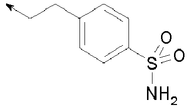 | 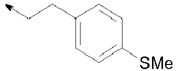 | 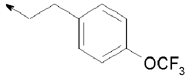 |
| G-106 | G-107 | G-108 | G-109 | G-110 |
| | | | | |
| 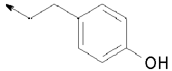 | 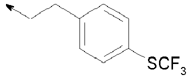 | 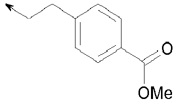 | 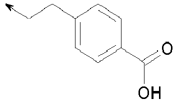 | 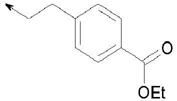 |
| G-111 | G-112 | G-113 | G-114 | G-115 |
| | | | | |
| 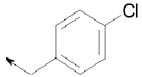 | 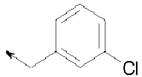 | 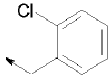 | 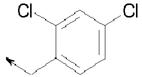 | 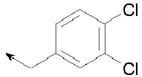 |
| G-116 | G-117 | G-118 | G-119 | G-120 |
| | | | | |
| 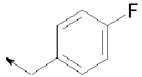 | 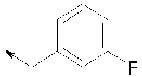 | 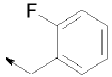 | 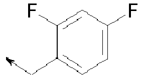 | 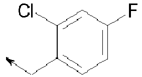 |
| G-121 | G-122 | G-123 | G-124 | G-125 |
| 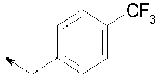 | 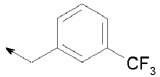 | 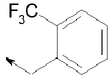 | 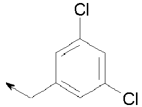 | 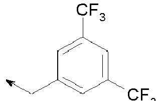 |
| G-126 | G-127 | G-128 | G-129 | G-130 |
| | | | | |
| 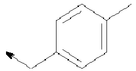 | 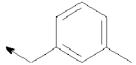 | 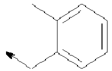 | 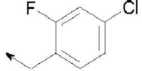 | 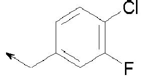 |
| G-131 | G-132 | G-133 | G-134 | G-135 |
| | | | | |
| 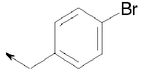 | 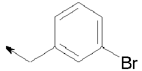 | 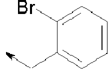 | 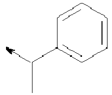 | 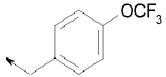 |
| G-136 | G-137 | G-138 | G-139 | G-140 |
| | | | | |
| 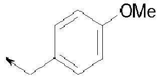 | 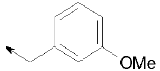 | 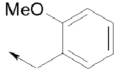 | 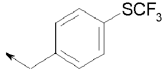 | 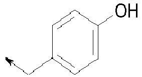 |
| G-141 | G-142 | G-143 | G-144 | G-145 |
| | | | | |
| 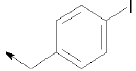 | 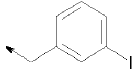 | 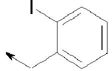 | 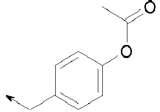 | 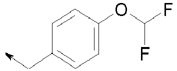 |
| G-146 | G-147 | G-148 | G-149 | G-150 |
| | | | | |
| 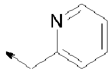 | 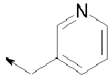 | 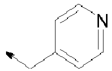 | 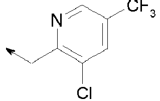 | 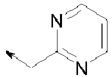 |
| G-151 | G-152 | G-153 | G-154 | G-155 |
| | | | | |
| 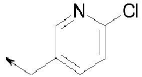 | 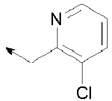 | 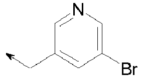 | 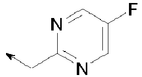 | 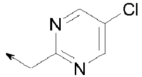 |
| G-156 | G-157 | G-158 | G-159 | G-160 |
| | | | | |
| 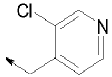 | 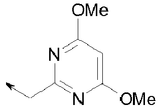 | 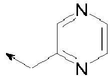 | 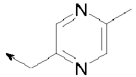 | 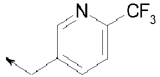 |
| G-161 | G-162 | G-163 | G-164 | G-165 |
| 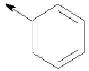 | 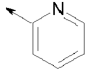 | 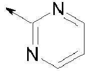 | 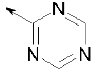 | 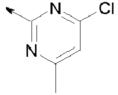 |
| G-166 | G-167 | G-168 | G-169 | G-170 |
| | | | | |
| 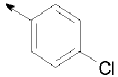 | 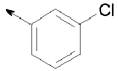 | 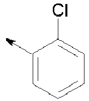 | 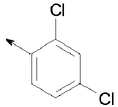 | 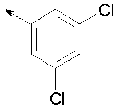 |
| G-171 | G-172 | G-173 | G-174 | G-175 |
| | | | | |
| 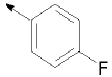 | 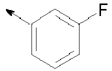 | 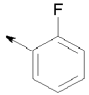 | 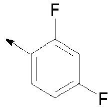 | 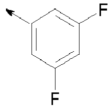 |
| G-176 | G-177 | G-178 | G-179 | G-180 |
| | | | | |
| 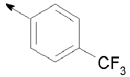 | 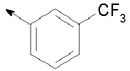 | 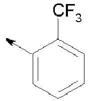 | 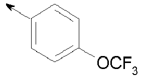 | 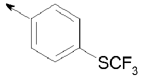 |
| G-181 | G-182 | G-183 | G-184 | G-185 |
| | | | | |
| 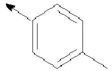 | 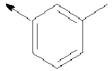 | 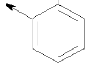 | 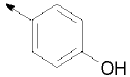 | 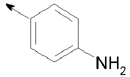 |
| G-186 | G-187 | G-188 | G-189 | G-190 |
| | | | | |
| 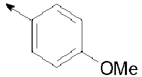 | 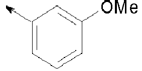 | 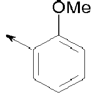 | 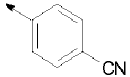 | 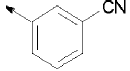 |
| G-191 | G-192 | G-193 | G-194 | G-195 |
| | | | | |
| 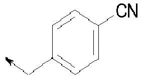 | 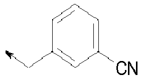 | 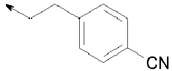 | 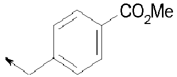 | 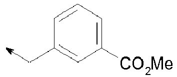 |
| G-196 | G-197 | G-198 | G-199 | G-200 |
| | | | | |
| 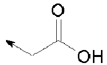 | 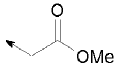 | 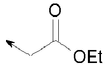 | 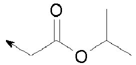 | 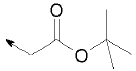 |
| G-201 | G-202 | G-203 | G-204 | G-205 |
| 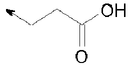 | 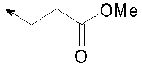 | 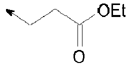 | 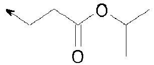 | 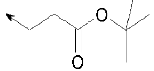 |
| G-206 | G-207 | G-208 | G-209 | G-210 |
| | | | | |
| 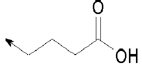 | 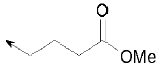 | 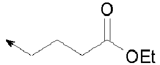 | 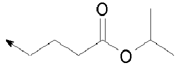 | 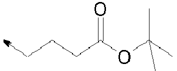 |
| G-211 | G-212 | G-213 | G-214 | G-215 |
| | | | | |
| 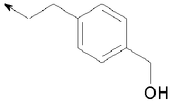 | 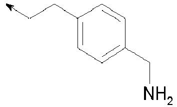 | 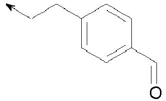 | 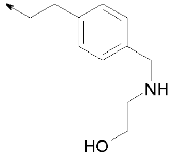 | 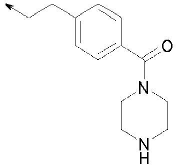 |
| G-216 | G-217 | G-218 | G-219 | G-220 |
| | | | | |
| 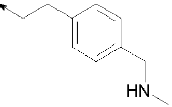 | 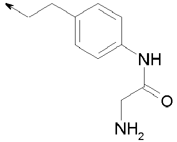 | 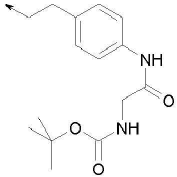 | 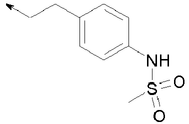 | 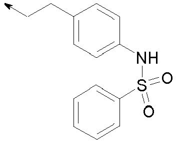 |
| G-221 | G-222 | G-223 | G-224 | G-225 |
| | | | | |
| 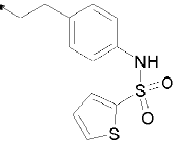 | 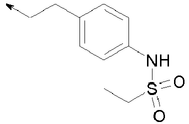 | 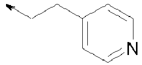 | 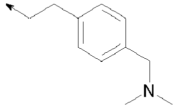 | 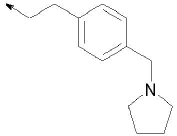 |
| G-226 | G-227 | G-228 | G-229 | G-230 |
| | | | | |
| 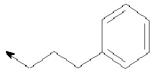 | 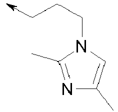 | 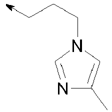 | 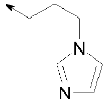 | 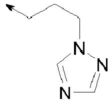 |
| G-231 | G-232 | G-233 | G-234 | G-235 |
| 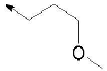 | 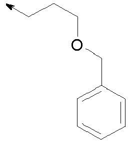 | 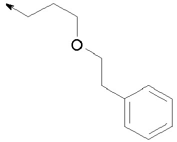 | 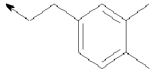 | 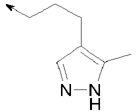 |
| G-236 | G-237 | G-238 | G-239 | G-240 |
| | | | | |
| 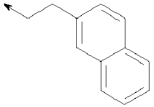 | 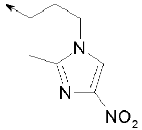 | 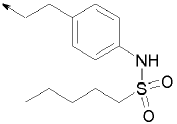 | 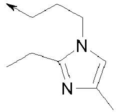 | 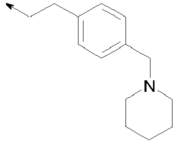 |
| G-241 | G-242 | G-243 | G-244 | G-245 |
| | | | | |
| 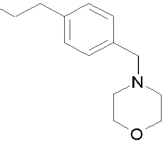 | 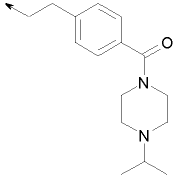 | 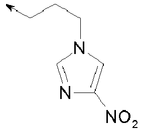 | 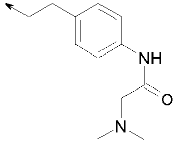 | 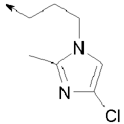 |
| G-246 | G-247 | G-248 | G-249 | G-250 |
| | | | | |
| 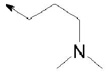 | 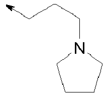 | 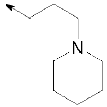 | 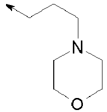 | 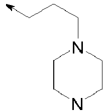 |
| G-251 | G-252 | G-253 | G-254 | G-255 |
| | | | | |
| 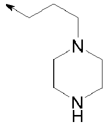 | 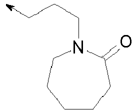 | 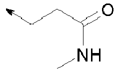 | 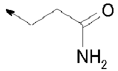 | 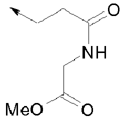 |
| G-256 | G-257 | G-258 | G-259 | G-260 |
| | | | | |
| 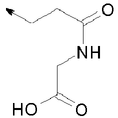 | 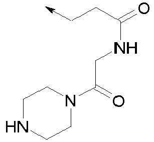 | 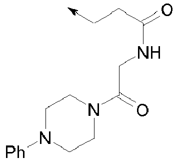 | 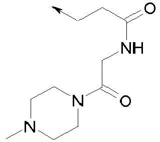 | 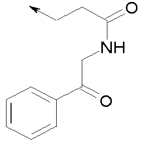 |
| G-261 | G-262 | G-263 | G-264 | G-265 |
| 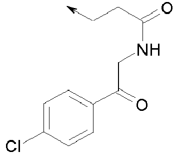 | 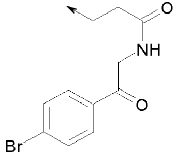 | 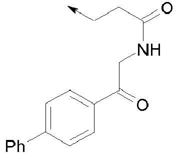 | 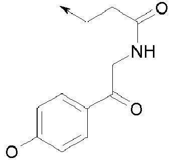 | 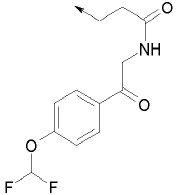 |
| G-266 | G-267 | G-268 | G-269 | G-270 |
| | | | | |
| 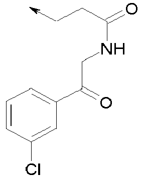 | 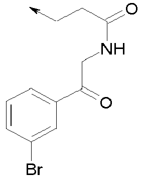 | 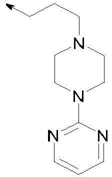 | 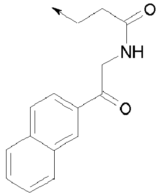 | 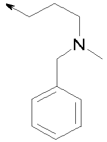 |
| G-271 | G-272 | G-273 | G-274 | G-275 |
| | | | | |
| 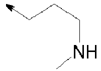 | 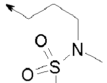 | 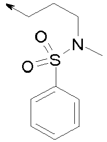 | 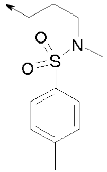 | 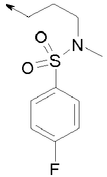 |
| G-276 | G-277 | G-278 | G-279 | G-280 |
| | | | | |
| 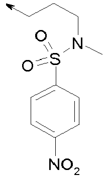 | 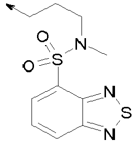 | 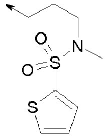 | 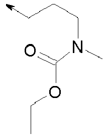 | 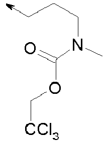 |
| G-281 | G-282 | G-283 | G-284 | G-285 |
| | | | | |
| 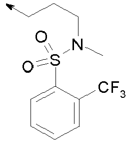 | 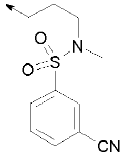 | 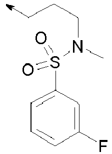 | 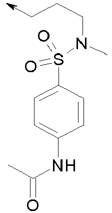 | 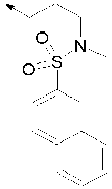 |
| G-286 | G-287 | G-288 | G-289 | G-290 |
| 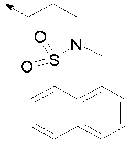 | 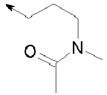 | 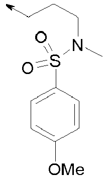 | 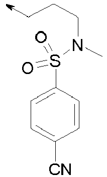 | 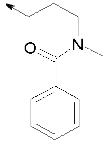 |
| G-291 | G-292 | G-293 | G-294 | G-295 |
| | | | | |
| 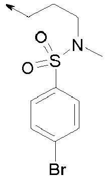 | 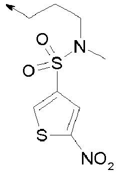 | 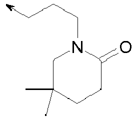 | 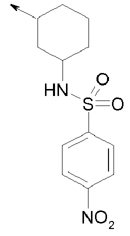 | 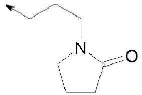 |
| G-296 | G-297 | G-298 | G-299 | G-300 |

Im ganz Speziellen bevorzugt ist die erfindungsgemäße Verwendung von Verbindungen der allgemeinen Formel (I), worin
- Q: für 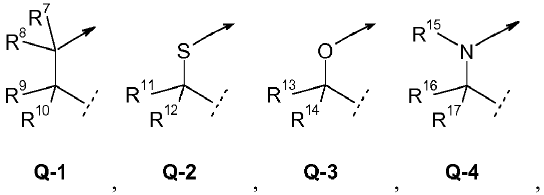 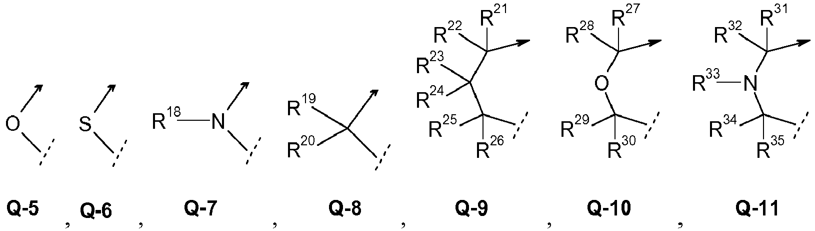
steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
- W: für Sauerstoff steht,
- R¹, R⁴: unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Vinyl, Trifluormethyl, Pentafluorethyl, 1,1,2,2-Tetrafluorethyl, Chlordifluormethyl, Difluormethyl, Methoxymethyl, Ethoxymethyl, Ethoxyethyl, Methoxyethyl, Methoxy, Ethoxy, n-Propoxy, iso-Propoxy, Trifluormethoxy, Difluormethoxy, 2,2-Difluorethoxy, 2,2,2-Trifluorethoxy, Trifluormethylthio, Difluormethylthio stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
- R², R³: unabhängig voneinander für Wasserstoff, Fluor, Methyl, Ethyl, n-Propyl, iso-Propyl, Methoxy, Ethoxy, Methylthio, Ethylthio, Trifluormethylthio stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R⁵: für eine der in der oben stehenden Tabelle beschriebenen Gruppierungen G-1 bis G-300 steht,
- R⁶: für Wasserstoff, Hydroxy, Methyl, Ethyl, n-Propyl, iso-Propyl, n-Butyl, Methoxymethyl, Ethoxymethyl, Ethoxyethyl, Methoxyethyl, Prop-1-en-1-yl, But-1-en-1-yl, Allyl, 1-Methyl-prop-2-en-1-yl, 2-Methyl-prop-2-en-1-yl, Propargyl, Cyclopropylmethyl, Benzyl, p-Methoxybenzyl, p-Chlorbenzyl, o-Chlorbenzyl, m- Chlorbenzyl, p-Fluorbenzyl, o-Fluorbenzyl, m-Fluorbenzyl, Cyanomethyl, Cyanoethyl, Cyano-n-propyl, 1-Phenylethyl, 1-(o-Chlorphenyl)ethyl, 1-(o-Fluorphenyl)ethyl, 1-(o-Methylphenyl)ethyl, 1-(o-Bromphenyl)ethyl, 1-(o-Iodphenyl)ethyl, Methoxycarbonylmethyl, Ethoxycarbonylmethyl, Methoxycarbonylethyl, Ethoxycarbonylethyl, Hydroxycarbonylmethyl, Hydroxycarbonylethyl, Methylcarbonyl, Ethylcarbonyl, n-Propylcarbonyl, iso-Propylcarbonyl, Cyclopropylcarbonyl, Cyclobutylcarbonyl, Cyclopentylcarbonyl, Cyclohexylcarbonyl, Trifluormethylcarbonyl, Pentafluormethylcarbonyl, Methoxycarbonyl, Ethoxycarbonyl, iso-Propyloxycarbonyl, tert.-Butyloxycarbonyl, Benzyloxycarbonyl, Allyloxycarbonyl, Methylaminocarbonyl, Ethylaminocarbonyl, n-Propylaminocarbonyl, iso-Propylaminocarbonyl, Phenylaminocarbonyl, Cyclopropylaminocarbonyl, Methylsulfonyl, Ethylsulfonyl, iso-Propylsulfonyl, Phenylsulfonyl, o-Chlorphenylsulfonyl, m-Chlorphenylsulfonyl, p-Chlorphenylsulfonyl, 2,3-Dichlorphenylsulfonyl, p-Cyanophenylsulfonyl, Phenylcarbonyl, p-Chlorphenylcarbonyl, o-Chlorphenylcarbonyl, o-Iodchlorphenylcarbonyl, o-Trifluormethylphenylcarbonyl, o-Bromphenylcarbonyl, 3,5-Dichlophenylcarbonyl, m-Chlorphenylcarbonyl, Heteroarylcarbonyl, Heterocyclyl oder eine negative Ladung steht,
- R⁷, R⁸, R⁹, R¹⁰: unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Vinyl, Prop-1-en-1-yl, But-1-en-1-yl, Allyl, Ethinyl, Propargyl, 1-Methyl-prop-2-in-1-yl, But-2-in-1-yl, But-3-in-1-yl, 1-Methyl-but-3-in-1-yl, Phenyl, p-Cl-Phenyl, p-F-Phenyl, p-Trifluormethylphenyl, m-Cl-Phenyl, m-F-Phenyl, m-Trifluormethylphenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Chlordifluormethyl, Difluormethyl, 2,2-Difluorethyl, 2,2,2-Trifluorethyl, Methoxy, Ethoxy, n-Propyloxy, iso-Propyloxy, n-Butyloxy, iso-Butyloxy, tert.-Butyloxy, Trifluormethoxy, Trifluormethylthio, Methylthio, Hydroxy, Amino, Dimethylamino, Methylamino, Ethylamino stehen,
oder wobei R⁴ und R⁷ mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷ und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷ und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹¹, R¹², R¹³, R¹⁴: unabhängig voneinander für Wasserstoff, Methyl, Ethyl, n-Propyl, iso-Propyl, n-Butyl, iso-Butyl, tert-Butyl, Cyclopropyl, Cyclobutyl, Cyclopentyl, Cyclohexyl, Trifluormethyl, Pentafluorethyl, Difluormethyl, 2,2-Difluorethyl, 2,2,2-Trifluorethyl, Difluor-tert.-butyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁵, R¹⁸, R³³: unabhängig voneinander für für Wasserstoff, Hydroxy, Methyl, Ethyl, n-Propyl, iso-Propyl, n-Butyl, iso-Butyl, tert-Butyl, n-Pentyl, iso-Pentyl, neo-Pentyl, n-Hexyl, Cyclopropyl, Cyclobutyl, Cyclopentyl, Cyclohexyl, Cycloheptyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Prop-1-en-1-yl, But-1-en-1-yl, Allyl, 1-Methyl-prop-2-en-1-yl, 2-Methyl-prop-2-en-1-yl, Propargyl, Cyclopropylmethyl, Benzyl, p-Methoxybenzyl, p-Chlorbenzyl, o-Chlorbenzyl, m-Chlorbenzyl, p-Fluorbenzyl, o-Fluorbenzyl, m-Fluorbenzyl, Cyanomethyl, Cyanoethyl, Cyano-n-propyl, 1-Phenylethyl, 1-(o-Chlorphenyl)ethyl, 1-(o-Fluorphenyl)ethyl, 1-(o-Methylphenyl)ethyl, 1-(o-Bromphenyl)ethyl, 1-(o-Iodphenyl)ethyl, Nitromethyl, Nitroethyl, Phenyl, p-Cl-Phenyl, p-F-Phenyl, p-Trifluormethylphenyl, m-Cl-Phenyl, m-F-Phenyl, m-Trifluormethylphenyl, o-Cl-Phenyl, o-F-Phenyl, o-Methoxyphenyl, p-Methoxyphenyl,o-Trifluormethylphenyl, Methoxycarbonylmethyl, Ethoxycarbonylmethyl, Methoxycarbonylethyl, Ethoxycarbonylethyl, Hydroxycarbonylmethyl, Hydroxycarbonylethyl, Methylcarbonyl, Ethylcarbonyl, n-Propylcarbonyl, iso-Propylcarbonyl, Cyclopropylcarbonyl, Cyclobutylcarbonyl, Cyclopentylcarbonyl, Cyclohexylcarbonyl, Trifluormethylcarbonyl, Pentafluormethylcarbonyl, Methoxycarbonyl, Ethoxycarbonyl, iso-Propyloxycarbonyl, tert.-Butyloxycarbonyl, Benzyloxycarbonyl, Allyloxycarbonyl, Methylaminocarbonyl, Ethylaminocarbonyl, n-Propylaminocarbonyl, iso-Propylaminocarbonyl, Phenylaminocarbonyl, Cyclopropylaminocarbonyl, 1-Phenylethyl-aminocarbonyl, Methylsulfonyl, Ethylsulfonyl, iso-Propylsulfonyl, Phenylsulfonyl, o-Chlorphenylsulfonyl, m-Chlorphenylsulfonyl, p-Chlorphenylsulfonyl, 2,3-Dichlorphenylsulfonyl, p-Cyanophenylsulfonyl, 2,5-Dimethyl-4-Chlorphenylsulfonyl, 3,4-Dimethoxyphenylsulfonyl, 3,4-Dichlorphenylsulfonyl, 3,5-Dichlorphenylsulfonyl, 2,5-Dichlorphenylsulfonyl, Heteroarylsulfonyl, p-Trifluormethylphenylsulfonyl, o-Trifluormethoxyphenylsulfonyl, p-Trifluormethoxyphenylsulfonyl, o-Trifluormethylphenylsulfonyl, m-Trifluormethylphenylsulfonyl, 2,4-Dimethylisoxazol-3-ylsulfonyl, 3-Chlor-5-methyl-pyrazol-4-ylsulfonyl, Phenylcarbonyl, p-Chlorphenylcarbonyl, o-Chlorphenylcarbonyl, o-Iodchlorphenylcarbonyl, o-Trifluormethylphenylcarbonyl, o-Bromphenylcarbonyl, 3,5-Dichlophenylcarbonyl, m-Chlorphenylcarbonyl, p-tert.-Butylphenylcarbonyl, 1-Phenyl-phenylmeth-1-ylcarbonyl, 3,4,5-Trimethoxyphenylcarbonyl, Pyridin-2-ylcarbonyl, Pyridin-3-ylcarbonyl, Pyridin-4-ylcarbonyl, Methylaminomethyl, Methylaminoethyl, Dimethylaminoethyl, Diethylaminoethyl, Methoxy, 1-Phenyleth-1-ylaminocarbonyl, Phenylaminocarbonyl, p-Cl-Phenylaminocarbonyl, p-F-Phenylaminocarbonyl, o-Cl-Phenylaminocarbonyl, o-F-Phenylaminocarbonyl steht,
- R¹⁶, R¹⁷: unabhängig voneinander für Wasserstoff, Methyl, Ethyl, n-Propyl, iso-Propyl, n-Butyl, iso-Butyl, tert-Butyl, Cyclopropyl, Cyclobutyl, Cyclopentyl, Cyclohexyl, Cycloheptyl, Vinyl, Prop-1-en-1-yl, But-1-en-1-yl, Allyl stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
- R¹⁹, R²⁰, R²¹, R²², R²³, R²⁴, R²⁵, R²⁶: unabhängig voneinander für Wasserstoff, Fluor, Chlor, Methyl, Ethyl, n-Propyl, iso-Propyl, Cyclopropyl, Cyclobutyl, Cyclopentyl, Cyclohexyl, Vinyl, Allyl, Trifluormethyl, Pentafluorethyl, Methylthio, Trifluormethylthio, Phenylthio, Methoxy, Ethoxy, n-Propyloxy, iso-Propyloxy, Ethinyl, Propargyl, Methylamino, Ethylamino, n-Propylamino, iso-Propylamino, Dimethylamino, Diethylamino, Trifluormethyloxy, Difluormethyloxy stehen,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
- R²⁷, R²⁸, R²⁹, R³⁰, R³¹, R³², R³⁴, R³⁵: unabhängig voneinander für Wasserstoff, Methyl, Ethyl, n-Propyl, iso-Propyl, Cyclopropyl, Cyclobutyl, Cyclopentyl, Cyclohexyl, Vinyl, Allyl, Trifluormethyl, Pentafluorethyl, Methoxy, Ethoxy, n-Propyloxy, iso-Propyloxy, Methylamino, Ethylamino, n-Propylamino, iso-Propylamino, Dimethylamino, Diethylamino stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,

Einige der zuvor genannten substituierten Pyrimidindione der allgemeinen Formel (I) ebenfalls noch nicht im Stand der Technik bekannt. Somit gelten als weiterer Teil der Erfindung tricyclische substituierte Pyrimidindione der allgemeinen Formel (I) oder deren Salze, 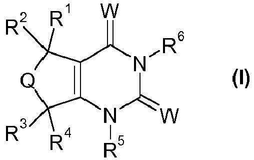 worin
- Q: für 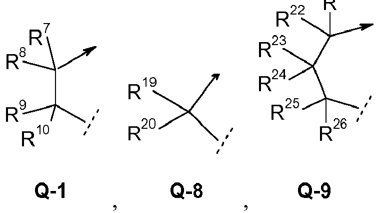
steht, wobei R⁷, R⁸, R⁹, R¹⁰, R¹⁹, R²⁰, R²¹, R²², R²³, R²⁴, R²⁵ und R²⁶ jeweils die Bedeutung gemäß der nachstehenden Definitionen haben und wobei der Pfeil für eine Bindung zur Gruppe C-R¹R² steht,
- W: für Sauerstoff oder Schwefel steht,
- R¹, R⁴: unabhängig voneinander für Wasserstoff, Halogen, (C₁-C₈)-Alkyl, (C₃-C₁₀)- Cycloalkyl, (C₂-C₈)-Alkenyl, (C₄-C₈)-Cycloalkenyl, (C₂-C₈)-Alkinyl, Aryl, Aryl-(C₁-C₈)-alkyl, Aryl-(C₂-C₈)-alkenyl, Aryl-(C₂-C₈)-alkinyl, Heteroaryl, Heterocyclyl, (C₃-C₈)-Cycloalkyl-(C₁-C₈)-alkyl, (C₃-C₈)-Cycloalkyl-(C₂-C₈)-alkenyl, (C₃-C₈)-Cycloalkyl-(C₂-C₈)-alkinyl, Heteroaryl-(C₁-C₈)-alkyl, Heterocyclyl-(C₁-C₈)-alkyl, Heteroaryl-(C₂-C₈)-alkenyl, Heteroaryl-(C₂-C₈)-alkinyl, (C₁-C₈)-Haloalkyl, (C₃-C₈)-Halocycloalkyl, (C₂-C₈)-Haloalkenyl, (C₄-C₈)-Halocycloalkenyl, (C₂-C₈)-Haloalkinyl, (C₃-C₈)- Alkoxy-(C₁-C₈)-alkyl-(C₂-C₈)-alkinyl, Tris[(C₁-C₈)-alkyl]silyl-(C₂-C₈)-alkinyl, Bis[(C₁-C₈)-alkyl](aryl)silyl-(C₂-C₈)-alkinyl, Bisaryl](C₁-C₈)-alkyl]silyl-(C₂-C₈)-alkinyl, (C₁-C₈)-Alkoxy-(C₁-C₈)-alkyl, (C₁-C₈)-Alkoxy, (C₁-C₈)-Haloalkoxy, (C₃-C₈)-Cycloalkyloxy, (C₂-C₈)-Alkenyloxy-(C₁-C₈)-alkyl, Heteroaryl-(C₁-C₈)-alkoxy, Aryl-(C₁-C₈)-alkoxy, (C₁-C₈)-Alkylthio, (C₁-C₈)-Alkylthio-(C₁-C₈)-alkyl, (C₁-C₈)-Haloalkylthio, Arylthio, (C₃-C₈)-Cycloalkylthio, (C₁-C₈)-Alkylsulfonyl, (C₁-C₈)-Alkylsulfinyl, Arylsulfonyl, Arylsulfinyl, (C₃-C₈)-Cycloalkylsulfonyl, (C₃-C₈)-Cycloalkylsulfinyl, (C₃-C₈)-Cycloalkyl-(C₁-C₈)-alkoxy, (C₂-C₈)-Alkinyl-(C₁-C₈)-alkoxy, (C₂-C₈)-Alkenyl-(C₁-C₈)-alkoxy, (C₂-C₈)-Alkenyloxy-(C₁-C₈)-alkoxy, (C₁-C₈)-Alkyloxy-(C₁-C₈)-alkoxy, (C₁-C₈)-Alkylamino-(C₁-C₈)-alkoxy, Bis[(C₁-C₈)-alkyl]amino-(C₁-C₈)-alkoxy, (C₃-C₈)-Cycloalkylamino-(C₁-C₈)-alkoxy, Heterocyclyl-N-(C₁-C₈)-alkoxy, Aryloxy, Heteroaryloxy, Tris-[(C₁-C₈)-alkyl]silyl, Bis-[(C₁-C₈)-alkyl]arylsilyl, Bis-[(C₁-C₈)-alkyl]-[(C₁-C₈)-alkyl]silyl, (C₁-C₈)-Alkylamino, (C₂-C₈)-Alkenylamino, (C₃-C₈)-Cycloalkylamino, Aryl-(C₁-C₈)-alkylamino, Arylamino, Bis[(C₁-C₈)-alkyl]amino, Hydroxy, Amino, Nitro, Cyano, (C₁-C₈)-Alkoxy-(C₁-C₈)-alkoxy stehen,
- R², R³: unabhängig voneinander für Wasserstoff, Halogen, (C₁-C₈)-Alkyl, (C₃-C₈)-Cycloalkyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio stehen,
- R⁵: für (C₁-C₈)-Alkyl, (C₃-C₁₀)-Cycloalkyl, (C₂-C₈)-Alkenyl, (C₂-C₈)-Alkinyl, (C₁-C₈)-Haloalkyl, (C₁-C₈)-Haloalkoxy-(C₁-C₈)-alkyl, Cyano-(C₁-C₈)-alkoxy-(C₁-C₈)-alkyl, (C₃-C₈)-Halocycloalkyl, (C₄-C₈)-Cycloalkenyl, (C₄-C₈)-Halocycloalkenyl, Hydroxy-(C₁-C₈)-alkyl, Tris-[(C₁-C₈)-Alkylsilyl]oxy-(C₁-C₈)-alkyl, Bis-[(C₁-C₈)-alkyl]arylsilyloxy-(C₁-C₈)-alkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Amino-(C₁-C₈)-alkyl, Aryl-(C₁-C₈)-alkyl, Heteroaryl-(C₁-C₈)-alkyl, Heterocyclyl-(C₁-C₈)-alkyl, Heterocyclyl-N-(C₁-C₈)-Alkyl, (C₃-C₈)-Cycloalkyloxy-(C₁-C₈)-alkyl, Aryl, Heterocyclyl, Aryloxy-(C₁-C₈)-alkyl, Aryl-(C₁-C₈)-alkoxy-(C₁-C₈)-alkyl, Heteroaryloxy-(C₁-C₈)-alkyl, Heterocyclyloxy-(C₁-C₈)-alkyl, (C₁-C₈)-Alkoxycarbonyl-N-Heterocyclyl, Heteroaryl, (C₁-C₈)-Alkylamino-(C₁-C₈)-alkyl, (C₁-C₈)-Alkylamino-(C₃-C₈)-cycloalkyl, Bis-[(C₁-C₈)-Alkyl]amino-(C₃-C₈)-cycloalkyl, Bis-[(C₁-C₈)-alkyl]amino-(C₁-C₈)-alkyl, Cyano-(C₁-C₈)-alkylamino-(C₁-C₈)-alkyl, (C₁-C₈)-Haloalkylamino-(C₁-C₈)-alkyl, (C₃-C₈)-Halocycloalkylamino-(C₁-C₈)-alkyl, Arylamino-(C₁-C₈)-alkyl, Heteroarylamino-(C₁-C₈)-alkyl, Heterocyclylamino-(C₁-C₈)-alkyl,Heterocyclyl-(C₁-C₈)-alkylamino-(C₁-C₈)-alkyl, Heteroaryl-(C₁-C₈)-alkylamino-(C₁-C₈)-alkyl, Aryl-(C₁-C₈)-alkylamino-(C₁-C₈)-alkyl, (C₃-C₈)-Cycloalkylamino-(C₁-C₈)-alkyl, Aryl[(C₁-C₈)-alkyl]amino-(C₁-C₈)-alkyl, Heteroaryl[(C₁-C₈)-alkyl]amino-(C₁-C₈)-alkyl, Heterocyclyl[(C₁-C₈)-alkyl]amino-(C₁-C₈)-alkyl, Aryl-(C₁-C₈)-alkyl[(C₁-C₈)-alkyl]amino-(C₁-C₈)-alkyl, (C₃-C₈)-Cycloalkyl-[(C₁-C₈)-alkyl]amino-(C₁-C₈)-alkyl, Heteroaryl-(C₁-C₈)-alkyl[(C₁-C₈)-alkyl]amino-(C₁-C₈)-alkyl, Heterocyclyl-(C₁-C₈)-alkyl[(C₁-C₈)-alkyl]amino-(C₁-C₈)-alkyl, Aryl(arylsulfonyl)amino-(C₁-C₈)-alkyl, (C₁-C₈)-Alkyl(arylsulfonyl)amino-(C₁-C₈)-alkyl, Heteroaryl(arylsulfonyl)amino-(C₁-C₈)-alkyl, Heterocyclyl(arylsulfonyl)amino-(C₁-C₈)-alkyl, Aryl-(C₁-C₈)-alkyl(arylsulfonyl)amino-(C₁-C₈)-alkyl, Heteroaryl-(C₁-C₈)-alkyl(arylsulfonyl)aminoalkyl, Heterocyclylalkyl(arylsulfonyl)aminoalkyl, Cycloalkyl(arylsulfonyl)amino-(C₁-C₈)-alkyl, Aryl[(C₁-C₈)-alkylsulfonyl]amino-(C₁-C₈)-alkyl, (C₁-C₈)-Alk-yl[(C₁-C₈)-alkylsulfonyl]amino-(C₁-C₈)-alkyl, Heteroaryl[(C₁-C₈)-alkylsulfonyl]amino-(C₁-C₈)-alkyl, Heterocyclyl-[(C₁-C₈)-alkylsulfonyl]amino-(C₁-C₈)-alkyl, Aryl-(C₁-C₈)-alkyl[(C₁-C₈)-alkylsulfonyl]amino-(C₁-C₈)-alkyl, Heteroaryl-(C₁-C₈)-alkyl[(C₁-C₈)-alkylsulfonyl]amino-(C₁-C₈)-alkyl, Heterocyclyl-(C₁-C₈)-alkyl[(C₁-C₈)-alkylsulfonyl]amino-(C₁-C₈)-alkyl, (C₃-C₈)-Cycloalkyl[(C₁-C₈)-alkylsulfonyl]amino-(C₁-C₈)-alkyl, Aryl(heteroarylsulfonyl)amino-(C₁-C₈)-alkyl, (C₁-C₈)-Alkyl(heteroarylsulfonyl)amino-(C₁-C₈)-alkyl, Heteroaryl(heteroarylsulfonyl)amino-(C₁-C₈)-alkyl, Heterocyclyl(heteroarylsulfonyl)amino-(C₁-C₈)-alkyl, Aryl-(C₁-C₈)-alkyl(heteroarylsulfonyl)amino-(C₁-C₈)-alkyl, Heteroaryl-(C₁-C₈)-alkyl(heteroarylsulfonyl)amino-(C₁-C₈)-alkyl, Heterocyclyl-(C₁-C₈)-alkyl(heteroarylsulfonyl)amino-(C₁-C₈)-alkyl, (C₃-C₈)-Cycloalkyl(heteroarylsulfonyl)amino-(C₁-C₈)-alkyl, Aryl(arylheteroarylsulfonyl)amino-(C₁-C₈)-alkyl, (C₁-C₈)-Alkyl(arylheteroarylsulfonyl)amino-(C₁-C₈)-alkyl, Heteroaryl(arylheteroarylsulfonyl)amino-(C₁-C₈)-alkyl, Heterocyclyl(arylheteroarylsulfonyl)amino-(C₁-C₈)-alkyl, Aryl-(C₁-C₈)-alkyl(arylheteroarylsulfonyl)amino-(C₁-C₈)-alkyl, Heteroaryl-(C₁-C₈)-alkyl(arylheteroarylsulfonyl)amino-(C₁-C₈)-alkyl, Heterocyclyl-(C₁-C₈)-alkyl(arylheteroarylsulfonyl)amino-(C₁-C₈)-alkyl, (C₃-C₈)-Cycloalkyl(arylheteroarylsulfonyl)amino-(C₁-C₈)-alkyl, Aryl(heteroarylheteroarylsulfonyl)amino-(C₁-C₈)-alkyl, (C₁-C₈)-Alkyl(heteroarylheteroarylsulfonyl)amino-(C₁-C₈)-alkyl, Heteroaryl(heteroarylheteroarylsulfonyl)amino-(C₁-C₈)-alkyl, Heterocyclyl(heteroarylheteroarylsulfonyl)amino-(C₁-C₈)-alkyl, Aryl-(C₁-C₈)-alkyl(heteroarylheteroarylsulfonyl)amino-(C₁-C₈)-alkyl, Heteroaryl-(C₁-C₈)-alkyl(heteroarylheteroarylsulfonyl)amino-(C₁-C₈)-alkyl, Heterocyclyl-(C₁-C₈)-alkyl(heteroarylheteroarylsulfonyl)amino-(C₁-C₈)-alkyl, (C₃-C₈)-Cycloalkyl(heteroarylheteroarylsulfonyl)amino-(C₁-C₈)-alkyl, Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₂-C₈)-Alkenylaminocarbonyl-(C₁-C₈)-alkyl, (C₂-C₈)-Alkinylaminocarbonyl-(C₁-C₈)-alkyl, Cyano-(C₁-C₈)-alkylaminocarbonyl-(C₁-C₈)-alkyl, (C₃-C₈)-Cycloalkylaminocarbonyl-(C₁-C₈)-alkyl, Heterocyclylaminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Haloalkoxycarbonyl-(C₁-C₈)-alkyl, Hetaroaryl-(C₁-C₈)-alkylaminocarbonyl-(C₁-C₈)-alkyl, (C₂-C₈)-Alkenyloxycarbonyl-(C₁-C₈)-alkyl, (C₃-C₈)-Cycloalkyl-(C₁-C₈)-alkoxycarbonyl-(C₁-C₈)-alkyl, Aryl-(C₁-C₈)-alkylaminocarbonyl-(C₁-C₈)-alkyl, (C₁-C₈)-Alkylthio-(C₁-C₈)-alkyl, (C₁-C₈)-Haloalkylthio-(C₁-C₈)-alkyl, Arylthio-(C₁-C₈)-alkyl, Heteroarylthio-(C₁-C₈)-alkyl, Aryl-(C₁-C₈)-alkylthio-(C₁-C₈)-alkyl, (C₁-C₈)-Alkylsulfonyl-(C₁-C₈)-alkyl, Arylsulfonyl-(C₁-C₈)-alkyl, (C₃-C₈)-Cycloalkylsulfonyl-(C₁-C₈)-alkyl, Heteroarylsulfonyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkylsulfinyl-(C₁-C₈)-alkyl, Arylsulfinyl-(C₁-C₈)-alkyl, (C₃-C₈)-Cycloalkylsulfinyl-(C₁-C₈)-alkyl, Heteroarylsulfmyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkoxycarbonylamino-(C₁-C₈)-alkyl, Aminocarbonylamino-(C₁-C₈)-alkyl, (C₁-C₈)-Alkylaminocarbonylamino-(C₁-C₈)-alkyl, (C₃-C₈)-Cycloalkylaminocarbonylamino-(C₁-C₈)-alkyl, Amino-(C₁-C₈)-alkylcarbonylaminophenyl-(C₁-C₈)-alkyl, (C₁-C₈)-Alkoxycarbonylamino-(C₁-C₈)-alkylcarbonylaminophenyl-(C₁-C₈)-alkyl, Arylsulfonylaminophenyl-(C₁-C₈)-alkyl, Heteroarylsulfonylaminophenyl-(C₁-C₈)-alkyl, (C₁-C₈)-Alkoxycarbonylphenyl-(C₁-C₈)-alkyl, Hydroxycarbonylphenyl-(C₁-C₈)-alkyl, Heterocyclylcarbonylphenyl-(C₁-C₈)-alkyl, (C₁-C₈)-Alkylaminocarbonylphenyl-(C₁-C₈)-alkyl, Bis-[(C₁-C₈)-alkyl]aminocarbonylphenyl-(C₁-C₈)-alkyl, (C₃-C₈)-Cycloalkylaminocarbonylphenyl-(C₁-C₈)-alkyl, (C₁-C₈)-Alkoxycarbonyl-(C₁-C₈)-alkylaminocarbonylphenyl-(C₁-C₈)-alkyl, (C₁-C₈)-Alkoxycarbonyl[(C₁-C₈)-alkyl]amino-(C₁-C₈)-alkyl, (C₂-C₈)-Alkenyloxycarbonyl[(C₁-C₈)-alkyl]amino-(C₁-C₈)-alkyl, Aryl-(C₁-C₈)-alkoxycarbonyl[(C₁-C₈)-alkyl]amino-(C₁-C₈)-alkyl, (C₃-C₈)-Cycloalkyl-(C₁-C₈)-alkoxycarbonyl[(C₁-C₈)-alky]amino-(C₁-C₈)-alkyl, Heteroaryl-N-(C₁-C₈)-alkyl, Arylheteroaryl-N-(C₁-C₈)-alkyl, (C₂-C₈)-Alkenyloxycarbonyl-N-heterocyclyl, Aryl-(C₁-C₈)-alkoxycarbonyl-N-heterocyclyl, Aryl-N-Heterocyclyl, Heteroaryl-N-heterocyclyl, Arylcarbonyl-N-heterocyclyl, (C₁-C₈)-Alkylcarbonyl-N-heterocyclyl, (C₁-C₈)-Alkylcarbonyl-(C₁-C₈)-alkylaminocarbonyl-(C₁-C₈)-alkyl, Arylcarbonyl-(C₁-C₈)-alkylaminocarbonyl-(C₁-C₈)-alkyl, Heterocyclyl-(C₁-C₈)-alkylaminocarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cycloalkylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, Arylsulfonylamino-(C₁-C₈)-alkyl, (C₁-C₈)-Alkylsulfonylamino-(C₁-C₈)-alkyl, (C₃-C₈)-Cycloalkylsulfonylamino-(C₁-C₈)-alkyl, Heteroarylsulfonylamino-(C₁-C₈)-alkyl, (C₁-C₈)-Alkylcarbonylamino-(C₁-C₈)-alkyl, (C₃-C₈)-Cycloalkylcarbonylamino-(C₁-C₈)-alkyl, Arylcarbonylamino-(C₁-C₈)-alkyl, Heteroarylcarbonylamino-(C₁-C₈)-alkyl steht,
- R⁶: für Wasserstoff, Hydroxy, (C₁-C₈)-Alkyl, (C₃-C₈)-Cycloalkyl, Halogen, (C₂-C₈)-(C₁-C₈)-Haloalkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Aryl-(C₁-C₈)-alkyl, Heteroaryl-(C₁-C₈)-alkyl, Heterocyclyl-(C₁-C₈)-alkyl, Aryl, (C₁-C₈)-Alkylamino, (C₁-C₈)-Alkylamino-(C₁-C₈)-alkyl, Bis-[(C₁-C₈)-alkyl]amino-(C₁-C₈)-alkyl, Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cyclopropylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, (C₁-C₈)-Alkoxycarbonyl-(C₁-C₈)-alkyl, (C₂-C₈)-Alkenyloxycarbonyl-(C₁-C₈)-alkyl, Hydroxycarbonyl-(C₁-C₈)-alkyl, Cyano-(C₁-C₈)-alkylaminocarbonyl, (C₂-C₈)-Alkinylaminocarbonyl, Heterocyclylcarbonyl, Hetaroaryl-(C₁-C₈)-alkylaminocarbonyl, (C₃-C₈)-Cycloalkyl-(C₁-C₈)-alkoxycarbonylcarbonyl, (C₁-C₈)-Alkoxycarbonylcarbonyl, (C₃-C₈)-Cycloalkyl-(C₁-C₈)-alkylaminocarbonyl, Aryl-(C₁-C₈)-alkylaminocarbonyl, Heterocyclyl oder eine negative Ladung steht,
- R⁷, R⁸, R⁹, R¹⁰: unabhängig voneinander für Wasserstoff, Halogen, (C₁-C₈)-Alkyl, (C₃-C₈)-Cycloalkyl, (C₄-C₈)-Cycloalkenyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio, Aryl, Heteroaryl, Heterocyclyl, (C₁-C₈)-Alkoxy-(C₁-C₈)-alkyl, (C₂-C₈)-Alkinyl, (C₂-C₈)-Haloalkinyl, Hydroxy, Amino, (C₁-C₈)-Alkylamino, Bis[(C₁-C₈)-alkyl]amino, Cyano, (C₁-C₈)-Alkoxy-(C₁-C₈)-alkoxy stehen,
- R¹⁹, R²⁰, R²¹, R²², R²³, R²⁴, R²⁵, R²⁶: unabhängig voneinander für Wasserstoff, Halogen, (C₁-C₈)-Alkyl, (C₃-C₈)-Cycloalkyl, Aryl-(C₁-C₈)-alkyl, Aryl, Heteroaryl, Heterocyclyl, (C₂-C₈)-Alkenyl, (C₁-C₈)-Haloalkyl, (C₁-C₈)-Alkylthio, (C₁-C₈)-Haloalkylthio, Arylthio, (C₂-C₈)-Alkinyl, (C₁-C₈)-Alkylamino, Bis[(C₁-C₈)-alkyl]amino, (C₁-C₈)-Alkoxy, (C₁-C₈)-Haloalkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
oder wobei R⁴ und R⁷, mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷, und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
unter der Voraussetzung, daß mindestens eines der vorgenannten Restepaare R¹ und R⁴, R⁴ und R⁷, R⁷ und R⁹, R⁴ und R²¹ sowie R⁴ und R²³ zusammen mit den anderen betreffenden vorgenannten Gruppen einen Ring bildet, so daß sich tricyclische Verbindungen der allgemeinen Formel (I) ergeben.

Bevorzugt sind Verbindungen der allgemeinen Formel (I), worin
- Q: für 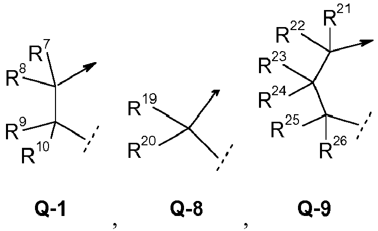
steht, wobei R⁷, R⁸, R⁹, R¹⁰, R¹⁹, R²⁰, R²¹, R²², R²³, R²⁴, R²⁵ und R²⁶ jeweils die Bedeutung gemäß der nachstehenden Definitionen haben und wobei der Pfeil für eine Bindung zur Gruppe C-R¹R² steht,
- W: für Sauerstoff steht,
- R¹, R⁴: unabhängig voneinander für Wasserstoff, Fluor, Chlor, Brom, Iod, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Cyclobutenyl, Cyclopentenyl, Cyclohexenyl, Cycloheptenyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, gegebenenfalls substituiertes Phenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Aryl-(C₂-C₆)-alkenyl, Aryl-(C₂-C₆)-alkinyl, Heteroaryl, Heterocyclyl, (C₃-C₆)-Cycloalkyl-(C₁-C₆)-alkyl, (C₃-C₆)-Cycloalkyl-(C₂-C₆)-alkenyl, (C₃-C₆)-Cycloalkyl-(C₂-C₆)-alkinyl, Heteroaryl-(C₁-C₆)-alkyl, Heterocyclyl-(C₁-C₆)-alkyl, Heteroaryl-(C₂-C₆)-alkenyl, Heteroaryl-(C₂-C₆)-alkinyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, (C₃-C₆)-Halocycloalkyl, (C₂-C₆)-Haloalkenyl, (C₄-C₆)-Halocycloalkenyl, (C₂-C₆)-Haloalkinyl, (C₃-C₆)-Alkoxy-(C₁-C₆)-alkyl-(C₂-C₆)-alkinyl, Tris[(C₁-C₆)-alkyl]silyl-(C₂-C₆)-alkinyl, Bis[(C₁-C₆)-alkyl](aryl)silyl-(C₂-C₆)-alkinyl, Bisaryl[(C₁-C₆)-alkyl]silyl-(C₂-C₆)-alkinyl Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Methoxy, Ethoxy, n-Propoxy, iso-Propoxy, n-Butyloxy, tert.-Butyloxy, iso-Butyloxy, n-Pentyloxy, iso-Pentyloxy, Trifluormethoxy, Difluormethoxy, 2,2-Difluorethoxy, 2,2,2-Trifluorethoxy, (C₃-C₆)-Cycloalkyloxy, (C₂-C₆)-Alkenyloxy-(C₁-C₆)-alkyl, Heteroaryl-(C₁-C₆)-alkoxy, Aryl-(C₁-C₆)-alkoxy, (C₁-C₆)-Alkylthio, (C₁-C₆)-Alkylthio-(C₁-C₆)-alkyl, (C₁-C₆)-Haloalkylthio, Arylthio, (C₃-C₆)-Cycloalkylthio, (C₁-C₆)-Alkylsulfonyl, (C₁-C₆)-Alkylsulfinyl, Arylsulfonyl, Arylsulfinyl, (C₃-C₆)-Cycloalkylsulfonyl, (C₃-C₆)-Cycloalkylsulfinyl, (C₃-C₆)-Cycloalkyl-(C₁-C₆)-alkoxy, (C₂-C₆)-Alkinyl-(C₁-C₆)-alkoxy, (C₂-C₆)-Alkenyl-(C₁-C₆)-alkoxy, (C₂-C₆)-Alkenyloxy-(C₁-C₆)-alkoxy, (C₁-C₆)-Alkyloxy-(C₁-C₆)-alkoxy, (C₁-C₆)-Alkylamino-(C₁-C₆)-alkoxy, Bis[(C₁-C₆)-alkyl]amino-(C₁-C₆)-alkoxy, (C₃-C₆)-Cycloalkylamino-(C₁-C₆)-alkoxy, Heterocyclyl-N-(C₁-C₆)-alkoxy, Aryloxy, Heteroaryloxy, Tris-[(C₁-C₆)-alkyl]silyl, Bis-[(C₁-C₆)-alkyl]arylsilyl, Bis-[(C₁-C₆)-alkyl]-[(C₁-C₆)-alkyl]silyl, (C₁-C₆)-Alkylamino, (C₂-C₆)-Alkenylamino, (C₃-C₆)-Cycloalkylamino, Aryl-(C₁-C₆)-alkylamino, Arylamino, Bis[(C₁-C₆)-alkyl]amino, Hydroxy, Amino, Nitro, Cyano, (C₁-C₆)-Alkoxy-(C₁-C₆)-alkoxy stehen,
- R², R³: unabhängig voneinander für Wasserstoff, Fluor, Chlor, Brom, Iod, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, Methoxy, Ethoxy, n-Propoxy, iso-Propoxy, n-Butyloxy, tert.-Butyloxy, iso-Butyloxy, n-Pentyloxy, iso-Pentyloxy, Trifluormethoxy, Difluormethoxy, 2,2-Difluorethoxy, 2,2,2-Trifluorethoxy, Methylthio, Ethylthio, Trifluormethylthio stehen,
- R⁵: für Methyl, Ethyl, n-Propyl, iso-Propyl, n-Butyl, iso-Butyl, tert-Butyl, n-Pentyl, iso-Pentyl, neo-Pentyl, n-Hexyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-ylundAdamantan-2-yl, Cyclobutenyl, Cyclopentenyl, Cyclohexenyl, Cycloheptenyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 3,3,3,2,2-Pentafluor-n-propyl,4,4-Difluor-n-butyl, 4,4,4-Trifluor-n-butyl, 2,2-Dichlor-2-fluororethyl, 2-Chlor-2,2-difluorethyl, Difluor-tert.-butyl, (C₁-C₆)-Haloalkoxy-(C₁-C₆)-alkyl, Cyano-(C₁-C₆)-alkoxy-(C₁-C₆)-alkyl, (C₃-C₆)-Halocycloalkyl, (C₄-C₆)-Halocycloalkenyl, Hydroxy-(C₁-C₆)-alkyl, Tris-[(C₁-C₆)-Alkylsilyl]oxy-(C₁-C₆)-alkyl, Bis-[(C₁-C₆)-alkyl]arylsilyloxy-(C₁-C₆)-alkyl, (C₁-C₆)-Alkoxy-(C₁-C₆)-alkyl, (C₂-C₆)-Alkinyl, (C₂-C₆)-Alkenyl, (C₃-C₆)-Cycloalkyl-(C₁-C₆)-alkyl, Cyano-(C₁-C₆)-alkyl, Nitro-(C₁-C₆)-alkyl, Amino-(C₁-C₆)-alkyl, Aryl-(C₁-C₆)-alkyl, Heteroaryl-(C₁-C₆)-alkyl, Heterocyclyl-(C₁-C₆)-alkyl, Heterocyclyl-N-(C₁-C₆)-Alkyl, (C₃-C₆)-Cycloalkyloxy-(C₁-C₆)-alkyl, gegebenenfalls substituiertes Phenyl, Heterocyclyl, Aryloxy-(C₁-C₆)-alkyl, Aryl-(C₁-C₆)-alkoxy-(C₁-C₆)-alkyl, Heteroaryloxy-(C₁-C₆)-alkyl, Heterocyclyloxy-(C₁-C₆)-alkyl, (C₁-C₆)-Alkoxycarbonyl-N-Heterocyclyl, Heteroaryl, (C₁-C₆)-Alkylamino-(C₁-C₆)-alkyl, (C₁-C₆)-Alkylamino-(C₃-C₆)-cycloalkyl, Bis-[(C₁-C₆)-Alkyl]amino-(C₃-C₆)-cycloalkyl, Bis-[(C₁-C₆)-alkyl]amino-(C₁-C₆)-alkyl, Cyano-(C₁-C₆)-alkylamino-(C₁-C₆)-alkyl, (C₁-C₆)-Haloalkylamino-(C₁-C₆)-alkyl, (C₃-C₆)-Halocycloalkylamino-(C₁-C₆)-alkyl, Arylamino-(C₁-C₆)-alkyl, Heteroarylamino-(C₁-C₆)-alkyl, Heterocyclylamino-(C₁-C₆)-alkyl,Heterocyclyl-(C₁-C₆)-alkylamino-(C₁-C₆)-alkyl, Heteroaryl-(C₁-C₆)-alkylamino-(C₁-C₆)-alkyl, Aryl-(C₁-C₆)-alkylamino-(C₁-C₆)-alkyl, (C₃-C₆)-Cycloalkylamino-(C₁-C₆)-alkyl, Aryl[(C₁-C₆)-alkyl]amino-(C₁-C₆)-alkyl, Heteroaryl[(C₁-C₆)-alkyl]amino-(C₁-C₆)-alkyl, Heterocyclyl[(C₁-C₆)-alkyl]amino-(C₁-C₆)-alkyl, Aryl-(C₁-C₆)-alkyl[(C₁-C₆)-alkyl]amino-(C₁-C₆)-alkyl, (C₃-C₆)-Cycloalkyl-[(C₁-C₆)-alkyl]amino-(C₁-C₆)-alkyl, Heteroaryl-(C₁-C₆)-alkyl[(C₁-C₆)-alkyl]amino-(C₁-C₆)-alkyl, Heterocyclyl-(C₁-C₆)-alkyl[(C₁-C₆)-alkyl]amino-(C₁-C₆)-alkyl, Aryl(arylsulfonyl)amino-(C₁-C₆)-alkyl, (C₁-C₆)-Alkyl(arylsulfonyl)amino-(C₁-C₆)-alkyl, Heteroaryl(arylsulfonyl)amino-(C₁-C₆)-alkyl, Heterocyclyl(arylsulfonyl)amino-(C₁-C₆)-alkyl, Aryl-(C₁-C₆)-alkyl(arylsulfonyl)amino-(C₁-C₆)-alkyl, Heteroaryl-(C₁-C₆)-alkyl(arylsulfonyl)aminoalkyl, Heterocyclyl-(C₁-C₆)-alkyl(arylsulfonyl)amino-(C₁-C₆)-alkyl, (C₃-C₆)-Cycloalkyl(arylsulfonyl)amino-(C₁-C₆)-alkyl, Aryl[(C₁-C₆)-alkylsulfonyl]amino-(C₁-C₆)-alkyl, (C₁-C₆)-Alkyl[(C₁-C₆)-alkylsulfonyl]amino-(C₁-C₆)-alkyl, Heteroaryl[(C₁-C₆)-alkylsulfonyl]amino-(C₁-C₆)-alkyl, Heterocyclyl-[(C₁-C₆)-alkylsulfonyl]amino-(C₁-C₆)-alkyl, Aryl-(C₁-C₆)-alkyl[(C₁-C₆)-alkylsulfonyl]amino-(C₁-C₆)-alkyl, Heteroaryl-(C₁-C₆)-alkyl[(C₁-C₆)-alkylsulfonyl]amino-(C₁-C₆)-alkyl, Heterocyclyl-(C₁-C₆)-alkyl[(C₁-C₆)-alkylsulfonyl]amino-(C₁-C₆)-alkyl, (C₃-C₆)-Cycloalkyl[(C₁-C₆)-alkylsulfonyl]amino-(C₁-C₆)-alkyl, Aryl(heteroarylsulfonyl)amino-(C₁-C₆)-alkyl, (C₁-C₆)-Alkyl(heteroarylsulfonyl)amino-(C₁-C₆)-alkyl, Heteroaryl(heteroarylsulfonyl)amino-(C₁-C₆)-alkyl, Heterocyclyl(heteroarylsulfonyl)amino-(C₁-C₆)-alkyl, Aryl-(C₁-C₆)-alkyl(heteroarylsulfonyl)amino-(C₁-C₆)-alkyl, Heteroaryl-(C₁-C₆)-alkyl(heteroarylsulfonyl)amino-(C₁-C₆)-alkyl, Heterocyclyl-(C₁-C₆)-alkyl(heteroarylsulfonyl)amino-(C₁-C₆)-alkyl, (C₃-C₆)-Cycloalkyl(heteroarylsulfonyl)amino-(C₁-C₆)-alkyl, Aryl(arylheteroarylsulfonyl)amino-(C₁-C₆)-alkyl, (C₁-C₆)-Alkyl(arylheteroarylsulfonyl)amino-(C₁-C₆)-alkyl, Heteroaryl(arylheteroarylsulfonyl)amino-(C₁-C₆)-alkyl, Heterocyclyl(arylheteroarylsulfonyl)amino-(C₁-C₆)-alkyl, Aryl-(C₁-C₆)-alkyl(arylheteroarylsulfonyl)amino-(C₁-C₆)-alkyl, Heteroaryl-(C₁-C₆)-alkyl(arylheteroarylsulfonyl)amino-(C₁-C₆)-alkyl, Heterocyclyl-(C₁-C₆)-alkyl(arylheteroarylsulfonyl)amino-(C₁-C₆)-alkyl, (C₃-C₆)-Cycloalkyl(arylheteroarylsulfonyl)amino-(C₁-C₆)-alkyl, Aryl(heteroarylheteroarylsulfonyl)amino-(C₁-C₆)-alkyl, (C₁-C₆)-Alkyl(heteroarylheteroarylsulfonyl)amino-(C₁-C₆)-alkyl, Heteroaryl(heteroarylheteroarylsulfonyl)amino-(C₁-C₆)-alkyl, Heterocyclyl(heteroarylheteroarylsulfonyl)amino-(C₁-C₆)-alkyl, Aryl-(C₁-C₆)-alkyl(heteroarylheteroarylsulfonyl)amino-(C₁-C₆)-alkyl, Heteroaryl-(C₁-C₆)-alkyl(heteroarylheteroarylsulfonyl)amino-(C₁-C₆)-alkyl, Heterocyclyl-(C₁-C₆)-alkyl(heteroarylheteroarylsulfonyl)amino-(C₁-C₆)-alkyl, (C₃-C₆)-Cycloalkyl(heteroarylheteroarylsulfonyl)amino-(C₁-C₆)-alkyl, Aminocarbonyl-(C₁-C₆)-alkyl, (C₁-C₆)-Alkylaminocarbonyl-(C₁-C₆)-alkyl, Bis-[(C₁-C₆)-alkyl]aminocarbonyl-(C₁-C₆)-alkyl, (C₂-C₆)-Alkenylaminocarbonyl-(C₁-C₆)-alkyl, (C₂-C₆)-Alkinylaminocarbonyl-(C₁-C₆)-alkyl, Cyano-(C₁-C₆)-alkylaminocarbonyl-(C₁-C₆)-alkyl, (C₃-C₆)-Cycloalkylaminocarbonyl-(C₁-C₆)-alkyl, Heterocyclylaminocarbonyl-(C₁-C₆)-alkyl, (C₁-C₆)-Alkoxycarbonyl-(C₁-C₆)-alkyl, Hydroxycarbonyl-(C₁-C₆)-alkyl, (C₁-C₆)-Haloalkoxycarbonyl-(C₁-C₆)-alkyl, Hetaroaryl-(C₁-C₆)-alkylaminocarbonyl-(C₁-C₆)-alkyl, (C₂-C₆)-Alkenyloxycarbonyl-(C₁-C₆)-alkyl, (C₃-C₆)-Cycloalkyl-(C₁-C₆)-alkoxycarbonyl-(C₁-C₆)-alkyl, Aryl-(C₁-C₆)-alkylaminocarbonyl-(C₁-C₆)-alkyl, (C₁-C₆)-Alkylthio-(C₁-C₆)-alkyl, (C₁-C₆)-Haloalkylthio-(C₁-C₆)-alkyl, Arylthio-(C₁-C₆)-alkyl, Heteroarylthio-(C₁-C₆)-alkyl, Aryl-(C₁-C₆)-alkylthio-(C₁-C₆)-alkyl, (C₁-C₆)-Alkylsulfonyl-(C₁-C₆)-alkyl, Arylsulfonyl-(C₁-C₆)-alkyl, (C₃-C₆)-Cycloalkylsulfonyl-(C₁-C₆)-alkyl, Heteroarylsulfonyl-(C₁-C₆)-alkyl, Heterocyclylsulfinyl-(C₁-C₆)-alkyl, (C₁-C₆)-Haloalkylsulfmyl-(C₁-C₆)-alkyl, (C₃-C₆)-Halocycloalkylsulfinyl-(C₁-C₆)-alkyl, (C₁-C₆)-Alkylsulfinyl-(C₁-C₆)-alkyl, Arylsulfinyl-(C₁-C₆)-alkyl, (C₃-C₆)-Cycloalkylsulfinyl-(C₁-C₆)-alkyl, Heteroarylsulfinyl-(C₁-C₆)-alkyl, Heterocyclylsulfinyl-(C₁-C₆)-alkyl, (C₁-C₆)-Haloalkylsulfinyl-(C₁-C₆)-alkyl, (C₃-C₆)-Halocycloalkylsulfinyl-(C₁-C₆)-alkyl, (C₁-C₆)-Alkoxycarbonylamino-(C₁-C₆)-alkyl, Aminocarbonylamino-(C₁-C₆)-alkyl, (C₁-C₆)-Alkylaminocarbonylamino-(C₁-C₆)-alkyl, (C₃-C₆)-Cycloalkylaminocarbonylamino-(C₁-C₆)-alkyl, Amino-(C₁-C₆)-alkylcarbonylaminophenyl-(C₁-C₆)-alkyl, (C₁-C₆)-Alkoxycarbonylamino-(C₁-C₆)-alkylcarbonylaminophenyl-(C₁-C₆)-alkyl, Arylsulfonylaminophenyl-(C₁-C₆)-alkyl, Heteroarylsulfonylaminophenyl-(C₁-C₆)-alkyl, (C₁-C₆)-Alkoxycarbonylphenyl-(C₁-C₆)-alkyl, Hydroxycarbonylphenyl-(C₁-C₆)-alkyl, Heterocyclylcarbonylphenyl-(C₁-C₆)-alkyl, (C₁-C₆)-Alkylaminocarbonylphenyl-(C₁-C₆)-alkyl, Bis-[(C₁-C₆)-alkyl]aminocarbonylphenyl-(C₁-C₆)-alkyl, (C₃-C₆)-Cycloalkylaminocarbonylphenyl-(C₁-C₆)-alkyl, (C₁-C₆)-Alkoxycarbonyl-(C₁-C₆)-alkylaminocarbonylphenyl-(C₁-C₆)-alkyl, (C₁-C₆)-Alkoxycarbonyl[(C₁-C₆)-alkyl]amino-(C₁-C₆)-alkyl, (C₂-C₆)-Alkenyloxycarbonyl[(C₁-C₆)-alkyl]amino-(C₁-C₆)-alkyl, Aryl-(C₁-C₆)-alkoxycarbonyl[(C₁-C₆)-alkyl]amino-(C₁-C₆)-alkyl, (C₃-C₆)-Cycloalkyl-(C₁-C₆)-alkoxycarbonyl[(C₁-C₆)-alky]amino-(C₁-C₆)-alkyl, Heteroaryl-N-(C₁-C₆)-alkyl, Arylheteroaryl-N-(C₁-C₆)-alkyl, (C₂-C₆)-Alkenyloxycarbonyl-N-heterocyclyl, Aryl-(C₁-C₆)-alkoxycarbonyl-N-heterocyclyl, Aryl-N-Heterocyclyl, Heteroaryl-N-heterocyclyl, Arylcarbonyl-N-heterocyclyl, (C₁-C₆)-Alkylcarbonyl-N-heterocyclyl, (C₁-C₆)-Alkylcarbonyl-(C₁-C₆)-alkylaminocarbonyl-(C₁-C₆)-alkyl, Arylcarbonyl-(C₁-C₆)-alkylaminocarbonyl-(C₁-C₆)-alkyl, Heterocyclyl-(C₁-C₆)-alkylaminocarbonyl-(C₁-C₆)-alkyl, (C₁-C₆)-Alkylcarbonyl, (C₃-C₆)-Cycloalkylcarbonyl, (C₁-C₆)-Haloalkylcarbonyl, (C₁-C₆)-Alkoxycarbonyl, (C₂-C₆)-Alkenyloxycarbonyl, Aryl-(C₁-C₆)-alkoxycarbonyl, (C₃-C₆)-Cycloalkoxycarbonyl, (C₃-C₆)-Cycloalkyl-(C₁-C₆)-alkoxycarbonyl, (C₁-C₆)-Alkylaminocarbonyl, (C₃-C₆)-Cycloalkylaminocarbonyl, Aryl-(C₁-C₆)-alkylaminocarbonyl, (C₁-C₆)-Alkylsulfonyl, Arylsulfonyl, (C₃-C₆)-Cycloalkylsulfonyl, Aryl-(C₁-C₆)-alkylsulfonyl, (C₂-C₆)-Alkenylsulfonyl, Heteroarylsulfonyl, (C₂-C₆)-Alkinylsulfonyl, (C₁-C₆)-Alkylsulfinyl, Arylsulfinyl, (C₃-C₆)-Cycloalkylsulfinyl, (C₂-C₆)-Alkenylsulfinyl, (C₂-C₆)-Alkinylsulfinyl, Arylcarbonyl, Heteroarylcarbonyl, Arylsulfonylamino-(C₁-C₆)-alkyl, (C₁-C₆)-Alkylsulfonylamino-(C₁-C₆)-alkyl, (C₃-C₆)-Cycloalkylsulfonylamino-(C₁-C₆)-alkyl, Heteroarylsulfonylamino-(C₁-C₆)-alkyl, (C₁-C₆)-Alkylcarbonylamino-(C₁-C₆)-alkyl, (C₃-C₆)-Cycloalkylcarbonylamino-(C₁-C₆)-alkyl, Arylcarbonylamino-(C₁-C₆)-alkyl, Heteroarylcarbonylamino-(C₁-C₆)-alkyl steht,
- R⁶: für Wasserstoff, Hydroxy, Methyl, Ethyl, n-Propyl, iso-Propyl, n-Butyl, iso-Butyl, tert-Butyl, n-Pentyl, iso-Pentyl, neo-Pentyl, n-Hexyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Fluor, Chlor, Brom, Iod, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, 2,2-Dichlor-2-fluororethyl, 2-Chlor-2,2-difluorethyl, Difluor-tert.-butyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, (C₃-C₆)-Cycloalkyl-(C₁-C₆)-alkyl, Cyano-(C₁-C₆)-alkyl, Nitro-(C₁-C₆)-alkyl, Aryl-(C₁-C₆)-alkyl, Heteroaryl-(C₁-C₆)-alkyl, Heterocyclyl-(C₁-C₆)-alkyl, gegebenenfalls substituiertes Phenyl, (C₁-C₆)-Alkylamino, (C₁-C₆)-Alkylamino-(C₁-C₆)-alkyl, Bis-[(C₁-C₆)-alkyl]amino-(C₁-C₆)-alkyl, Aminocarbonyl-(C₁-C₆)-alkyl, (C₁-C₆)- Alkylaminocarbonyl-(C₁-C₆)-alkyl, Bis-[(C₁-C₆)-alkyl]aminocarbonyl-(C₁-C₆)-alkyl, (C₁-C₆)-Alkoxycarbonyl-(C₁-C₆)-alkyl, Hydroxycarbonyl-(C₁-C₆)-alkyl, (C₁-C₆)-Alkylcarbonyl, (C₃-C₆)-Cycloalkylcarbonyl, (C₁-C₆)-Haloalkylcarbonyl, (C₁-C₆)-Alkoxycarbonyl, (C₂-C₆)-Alkenyloxycarbonyl, Aryl-(C₁-C₆)-alkoxycarbonyl, (C₃-C₆)-Cycloalkoxycarbonyl, (C₃-C₆)-Cycloalkyl-(C₁-C₆)-alkoxycarbonyl, (C₁-C₆)-Alkylaminocarbonyl, (C₃-C₆)-Cyclopropylaminocarbonyl, Aryl-(C₁-C₆)-alkylaminocarbonyl, (C₁-C₆)-Alkylsulfonyl, Arylsulfonyl, (C₃-C₆)-Cycloalkylsulfonyl, Aryl-(C₁-C₆)-alkylsulfonyl, (C₂-C₆)-Alkenylsulfonyl, Heteroarylsulfonyl, (C₂-C₆)-Alkinylsulfonyl, (C₁-C₆)-Alkylsulfinyl, Arylsulfinyl, (C₃-C₆)-Cycloalkylsulfinyl, (C₂-C₆)-Alkenylsulfinyl, (C₂-C₆)-Alkinylsulfinyl, Arylcarbonyl, Heteroarylcarbonyl, (C₁-C₆)-Alkoxycarbonyl-(C₁-C₆)-alkyl, (C₂-C₆)-Alkenyloxycarbonyl-(C₁-C₆)-alkyl, Hydroxycarbonyl-(C₁-C₆)-alkyl, Cyano-(C₁-C₆)-alkylaminocarbonyl, (C₂-C₆)-Alkinylaminocarbonyl, Heterocyclylcarbonyl, Hetaroaryl-(C₁-C₆)-alkylaminocarbonyl, (C₃-C₆)-Cycloalkyl-(C₁-C₆)-alkoxycarbonylcarbonyl, (C₁-C₆)-Alkoxycarbonylcarbonyl, (C₃-C₆)-Cycloalkyl-(C₁-C₆)-alkylaminocarbonyl, Aryl-(C₁-C₆)-alkylaminocarbonyl, Heterocyclyl oder eine negative Ladung steht,
- R⁷, R⁸, R⁹, R¹⁰: unabhängig voneinander für Wasserstoff, Fluor, Chlor, Brom, Iod, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, gegebenenfalls substituiertes Phenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, (C₁-C₆)-Alkoxy, (C₁-C₆)-Haloalkoxy, (C₁-C₆)-Alkylthio, (C₁-C₆)-Haloalkylthio, gegebenenfalls substituiertes Phenyl, Heteroaryl, Heterocyclyl, (C₁-C₆)-Alkoxy-(C₁-C₆)-alkyl, (C₂-C₆)-Haloalkinyl, Hydroxy, Amino, (C₁-C₆)-Alkylamino, Bis[(C₁-C₆)-alkyl]amino, Cyano, (C₁-C₆)-Alkoxy-(C₁-C₆)-alkoxy stehen,
- R¹⁹, R²⁰, R²¹, R²², R²³, R²⁴, R²⁵, R²⁶: unabhängig voneinander für Wasserstoff, Fluor, Chlor, Brom, Iod, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, gegebenenfalls substituiertes Phenyl, Heteroaryl, Heterocyclyl, (C₁-C₆)-Alkylthio, (C₁-C₆)-Haloalkylthio, Arylthio, (C₁-C₆)-Alkylamino, Bis[(C₁-C₆)-alkyl]amino, (C₁-C₆)-Alkoxy, (C₁-C₆)-Haloalkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
oder wobei R⁴ und R⁷, mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷, und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
unter der Voraussetzung, daß mindestens eines der vorgenannten Restepaare R¹ und R⁴, R⁴ und R⁷, R⁷, und R⁹, R⁴ und R²¹ sowie R⁴ und R²³ zusammen mit den anderen betreffenden vorgenannten Gruppen einen Ring bildet, so daß sich tricyclische Verbindungen der allgemeinen Formel (I) ergeben.
und R⁵ weiterhin besonders bevorzugt für eine der in der oben stehenden Tabelle beschriebenen Gruppierungen G-1 bis G-300 steht.

Im Speziellen bevorzugt sind Verbindungen der allgemeinen Formel (I), worin
- Q: für 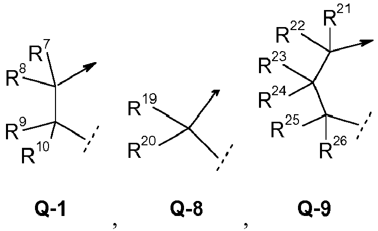
steht, wobei R⁷, R⁸, R⁹, R¹⁰, R¹⁹, R²⁰, R²¹, R²², R²³, R²⁴, R²⁵ und R²⁶ jeweils die Bedeutung gemäß der nachstehenden Definitionen haben und wobei der Pfeil für eine Bindung zur Gruppe C-R¹R² steht,
- W: für Sauerstoff steht,
- R¹, R⁴: unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Cycloheptyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Methoxy, Ethoxy, n-Propoxy, iso-Propoxy, n-Butyloxy, tert.-Butyloxy, iso-Butyloxy, n-Pentyloxy, iso-Pentyloxy, Trifluormethoxy, Difluormethoxy, 2,2-Difluorethoxy, 2,2,2-Trifluorethoxy, Hydroxy, Amino, Nitro, Cyano stehen,
- R², R³: unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, Methoxy, Ethoxy, n-Propoxy, iso-Propoxy, n-Butyloxy, Trifluormethoxy, Difluormethoxy, 2,2-Difluorethoxy, 2,2,2-Trifluorethoxy, Methylthio, Ethylthio, Trifluormethylthio stehen,
- R⁵: für eine der in der oben aufgeführten Tabelle beschriebenen Gruppierungen G-1 bis G-300 steht,
- R⁶: für Wasserstoff, Hydroxy, Methyl, Ethyl, n-Propyl, iso-Propyl, n-Butyl, iso-Butyl, tert-Butyl, n-Pentyl, iso-Pentyl, neo-Pentyl, n-Hexyl, Cyclopropyl, Cyclobutyl, Cyclopentyl, Cyclohexyl, Cycloheptyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Vinyl, Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, But-3-en-1-yl, Pentenyl, 2-Methylpentenyl, Hexenyl, Ethinyl, Propargyl, 1-Methyl-prop-2-in-1-yl, 2-Butinyl, 2-Pentinyl, 2-Hexinyl, But-2-in-1-yl, But-3-in-1-yl, 1-Methyl-but-3-in-1-yl, Cyanomethyl, Cyanoethyl, Cyano-n-propyl, Phenyl, Bis-Ethylaminoethyl, Bis-Methylaminoethyl, Methoxycarbonylmethyl, Ethoxycarbonylmethyl, Methoxycarbonylethyl, Ethoxycarbonylethyl, Hydroxycarbonylethyl, Hydroxycarbonylmethyl, Benzyloxycarbonyl, tert.-Butyloxycarbonyl, Methylcarbonyl, Ethylcarbonyl, Cyclopropylcarbonyl, Cyclobutylcarbonyl, Phenylcarbonyl, o-Chlorphenylcarbonyl, m-Chlorphenylcarbonyl, p-Chlorphenylcarbonyl, o-Fluorrphenylcarbonyl, m-Fluorphenylcarbonyl, p-Fluorphenylcarbonyl, o-Methylphenylcarbonyl, m-Methylphenylcarbonyl, p-Methylphenylcarbonyl, o-Trifluorethylphenylcarbonyl, m-Trifluormethylphenylcarbonyl, p-Trifluormethylphenylcarbonyl, Methylsulfonyl, Phenylsulfonyl, o-Chlorphenylsulfonyl, o-Methoxyphenylsulfonyl, 2,3-Dichlorphenylsulfonyl, o-Cyanophenylsulfonyl, p-Cyanophenylsulfonyl, Pyridin-2-yl, Pyridin-3-yl, Pyridin-4-yl oder eine negative Ladung steht,
- R⁷, R⁸, R⁹, R¹⁰: unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Vinyl, Allyl, Ethinyl, Propargyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Heptafluorpropyl, Nonafluorbutyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, Methoxy, Ethoxy, n-Propyloxy, iso-Propyloxy, n-Butyloxy, iso-Butyloxy, tert.-Butyloxy, Methylthio, Ethylthio, Trifluormethoxy, Difluormethoxy, Trifluormethylthio, Hydroxy, Amino, Cyano stehen,
- R¹⁹, R²⁰, R²¹, R²², R²³, R²⁴, R²⁵, R²⁶: unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Vinyl, Allyl, Ethinyl, Propargyl, Trifluormethyl, Pentafluorethyl, 1,1,2,2-Tetrafluorethyl, Heptafluorpropyl, Chlordifluormethyl, Bromdifluormethyl, Dichlorfluormethyl, Bromfluormethyl, 1-Fluorethyl, 2-Fluorethyl, Fluormethyl, Difluormethyl, 2,2-Difluorethyl, 2,2,2-Trifluorethyl, 2,2-Dichlor-2-fluororethyl, 2-Chlor-2,2-difluorethyl, Difluor-tert.-butyl, Methoxy, Ethoxy, Methylthio, Ethylthio, Trifluormethoxy, Difluormethoxy, Trifluormethylthio stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
oder wobei R⁴ und R⁷, mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷, und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
unter der Voraussetzung, daß mindestens eines der vorgenannten Restepaare R¹ und R⁴, R⁴ und R⁷, R⁷, und R⁹, R⁴ und R²¹ sowie R⁴ und R²³ zusammen mit den anderen betreffenden vorgenannten Gruppen einen Ring bildet, so daß sich tricyclische Verbindungen der allgemeinen Formel (I) ergeben.

Die oben aufgeführten allgemeinen oder in Vorzugsbereichen aufgeführten Restedefinitionen gelten sowohl für die Endprodukte der Formel (I) als auch entsprechend für die jeweils zur Herstellung benötigten Ausgangs- oder Zwischenprodukte. Diese Restedefinitionen können untereinander, also auch zwischen den angegebenen bevorzugten Bereichen beliebig kombiniert werden.

Im Hinblick auf die erfindungsgemäßen Verbindungen werden die vorstehend und weiter unten verwendeten Bezeichnungen erläutert. Diese sind dem Fachmann geläufig und haben insbesondere die im Folgenden erläuterten Bedeutungen:
Erfindungsgemäß steht "Arylsulfonyl" für gegebenenfalls substituiertes Phenylsulfonyl oder gegebenenfalls substituiertes polycyclisches Arylsulfonyl, hier insbesondere gegebenenfalls substituiertes Naphthyl-sulfonyl, beispielsweise substituiert durch Fluor, Chlor, Brom, Iod, Cyano, Nitro, Alkyl-, Haloalkyl-, Haloalkoxy-, Amino-, Alkylamino-, Alkylcarbonylamino-, Dialkylamino- oder Alkoxy-gruppen.

Erfindungsgemäß steht "Cycloalkylsulfonyl" - in Alleinstellung oder als Bestandteil einer chemischen Gruppe - für gegebenenfalls substituiertes Cycloalkylsulfonyl, vorzugsweise mit 3 bis 6 Kohlenstoffatomen wie beispielsweise Cyclopropylsulfonyl, Cyclobutylsulfonyl, Cyclopentylsulfonyl oder Cyclohexylsulfonyl.

Erfindungsgemäß steht "Alkylsulfonyl" - in Alleinstellung oder als Bestandteil einer chemischen Gruppe - für geradkettiges oder verzweigtes Alkylsulfonyl, vorzugsweise mit 1 bis 8, oder mit 1 bis 6 Kohlenstoffatomen wie beispielsweise Methylsulfonyl, Ethylsulfonyl, n-Propylsulfonyl, Isopropylsulfonyl, n-Butylsulfonyl, Isobutylsulfonyl, sec-Butylsulfonyl und tert-Butylsulfonyl.

Erfindungsgemäß steht "Heteroarylsulfonyl" für gegebenenfalls substituiertes Pyridylsulfonyl, Pyrimidinylsulfonyl, Pyrazinylsulfonyl oder gegebenenfalls substituiertes polycyclisches Heteroarylsulfonyl, hier insbesondere gegebenenfalls substituiertes Chinolinylsulfonyl, beispielsweise substituiert durch Fluor, Chlor, Brom, Iod, Cyano, Nitro, Alkyl-, Haloalkyl-, Haloalkoxy-, Amino-, Alkylamino-, Alkylcarbonylamino-, Dialkylamino- oder Alkoxygruppen.

Erfindungsgemäß steht "Alkylthio" - in Alleinstellung oder als Bestandteil einer chemischen Gruppe - für geradkettiges oder verzweigtes S-Alkyl, vorzugsweise mit 1 bis 8, oder mit 1 bis 6 Kohlenstoffatomen, wie beispielsweise Methylthio, Ethylthio, n-Propylthio, Isopropylthio, n-Butylthio, Isobutylthio, sec-Butylthio und tert-Butylthio. Alkenylthio bedeutet ein über ein Schwefelatom gebundenen Alkenylrest, Alkinylthio bedeutet ein über ein Schwefelatom gebundenen Alkinylrest, Cycloalkylthio bedeutet ein über ein Schwefelatom gebundenen Cycloalkylrest und Cycloalkenylthio bedeutet ein über ein Schwefelatom gebundenen Cycloalkenylrest.

"Alkoxy" bedeutet ein über ein Sauerstoffatom gebundenen Alkylrest, Alkenyloxy bedeutet ein über ein Sauerstoffatom gebundenen Alkenylrest, Alkinyloxy bedeutet ein über ein Sauerstoffatom gebundenen Alkinylrest, Cycloalkyloxy bedeutet ein über ein Sauerstoffatom gebundenen Cycloalkylrest und Cycloalkenyloxy bedeutet ein über ein Sauerstoffatom gebundenen Cycloalkenylrest.

Der Begriff "Aryl" bedeutet ein gegebenenfalls substituiertes mono-, bi- oder polycyclisches aromatisches System mit vorzugsweise 6 bis 14, insbesondere 6 bis 10 Ring-C-Atomen, beispielsweise Phenyl, Naphthyl, Anthryl, Phenanthrenyl, und ähnliches, vorzugsweise Phenyl.

Vom Begriff "gegebenenfalls substituiertes Aryl" sind auch mehrcyclische Systeme, wie Tetrahydronaphtyl, Indenyl, Indanyl, Fluorenyl, Biphenylyl, umfasst, wobei die Bindungsstelle am aromatischen System ist. Von der Systematik her ist "Aryl" in der Regel auch von dem Begriff "gegebenenfalls substituiertes Phenyl" umfasst. Bevorzugte Aryl-Substituenten sind hier zum Beispiel Wasserstoff, Halogen, Alkyl, Cycloalkyl, Cycloalkylalkyl, Cycloalkenyl, Halocycloalkyl, Alkenyl, Alkinyl, Aryl, Arylalkyl, Arylalkenyl, Heteroaryl, Heteroarylalkyl, Heterocyclyl, Heterocyclylalkyl, Alkoxyalkyl, Alkylthio, Haloalkylthio, Haloalkyl, Alkoxy, Haloalkoxy, Cycloalkoxy, Cycloalkylalkoxy, Aryloxy, Heteroraryloxy, Alkoxyalkoxy, Alkinylalkoxy, Alkenyloxy, Bis-alkylaminoalkoxy, Tris-[alkyl]silyl, Bis-[alkyl]arylsilyl, Bis-[alkyl]alkylsilyl, Tris-[alkyl]silylalkinyl, Arylalkinyl, Heteroarylalkinyl, Alkylalkinyl, Cycloalkylalkinyl, Haloalkylalkinyl, Heterocyclyl-N-alkoxy, Nitro, Cyano, Amino, Alkylamino, Bis-alkylamino, Alkylcarbonylamino, Cycloalkylcarbonylamino, Arylcarbonylamino, Alkoxycarbonylamino, Alkoxycarbonylalkylamino, Arylalkoxycarbonylalkylamino, Hydroxycarbonyl, Alkoxycarbonyl, Aminocarbonyl, Alkylaminocarbonyl, Cycloalkylaminocarbonyl, Bis-Alkylaminocarbonyl, Heteroarylalkoxy, Arylalkoxy

Ein heterocyclischer Rest (Heterocyclyl) enthält mindestens einen heterocyclischen Ring (=carbocyclischer Ring, in dem mindestens ein C-Atom durch ein Heteroatom ersetzt ist, vorzugsweise durch ein Heteroatom aus der Gruppe N, O, S, P) der gesättigt, ungesättigt, teilgesättigt oder heteroaromatisch ist und dabei unsubstituiert oder substituiert sein kann, wobei die Bindungsstelle an einem Ringatom lokalisiert ist. Ist der Heterocyclylrest oder der heterocyclische Ring gegebenenfalls substituiert, kann er mit anderen carbocyclischen oder heterocyclischen Ringen annelliert sein. Im Falle von gegebenenfalls substituiertem Heterocyclyl werden auch mehrcyclische Systeme umfaßt, wie beispielsweise 8-Aza-bicyclo[3.2.1]octanyl, 8-Aza-bicyclo[2.2.2]octanyl oder 1-Azabicyclo[2.2.1]heptyl. Im Falle von gegebenenfalls substituiertem Heterocyclyl werden auch spirocyclische Systeme umfaßt, wie beispielsweise 1-Oxa-5-aza-spiro[2.3]hexyl. Wenn nicht anders definiert, enthält der heterocyclische Ring vorzugsweise 3 bis 9 Ringatome, insbesondere 3 bis 6 Ringatome, und ein oder mehrere, vorzugsweise 1 bis 4, insbesondere 1, 2 oder 3 Heteroatome im heterocyclischen Ring, vorzugsweise aus der Gruppe N, O, und S, wobei jedoch nicht zwei Sauerstoffatome direkt benachbart sein sollen, wie beispielsweise mit einem Heteroatom aus der Gruppe N, O und S 1- oder 2- oder 3-Pyrrolidinyl, 3,4-Dihydro-2H-pyrrol-2- oder 3-yl, 2,3-Dihydro-1H-pyrrol-1- oder 2- oder 3- oder 4- oder 5-yl; 2,5-Dihydro-1H-pyrrol-1- oder 2- oder 3-yl, 1- oder 2- oder 3- oder 4-Piperidinyl; 2,3,4,5-Tetrahydropyridin-2- oder 3- oder 4- oder 5-yl oder 6-yl; 1,2,3,6-Tetrahydropyridin-1- oder 2- oder 3- oder 4- oder 5- oder 6-yl; 1,2,3,4-Tetrahydropyridin-1- oder 2-oder 3- oder 4- oder 5- oder 6-yl; 1,4-Dihydropyridin-1- oder 2- oder 3- oder 4-yl; 2,3-Dihydropyridin-2- oder 3- oder 4- oder 5- oder 6-yl; 2,5-Dihydropyridin-2- oder 3- oder 4- oder 5- oder 6-yl, 1- oder 2-oder 3- oder 4-Azepanyl; 2,3,4,5-Tetrahydro-1H-azepin-1- oder 2- oder 3- oder 4- oder 5- oder 6- oder 7-yl; 2,3,4,7-Tetrahydro-1H-azepin-1- oder 2- oder 3- oder 4- oder 5- oder 6- oder 7-yl; 2,3,6,7-Tetrahydro-1H-azepin-1- oder 2- oder 3- oder 4-yl; 3,4,5,6-Tetrahydro-2H-azepin-2- oder 3- oder 4-oder 5- oder 6- oder 7-yl; 4,5-Dihydro-1H-azepin-1- oder 2- oder 3- oder 4-yl; 2,5-Dihydro-1H-azepin-1- oder -2- oder 3- oder 4- oder 5- oder 6- oder 7-yl; 2,7-Dihydro-1H-azepin-1- oder -2- oder 3- oder 4-yl; 2,3-Dihydro-1H-azepin-1- oder -2- oder 3- oder 4- oder 5- oder 6- oder 7-yl; 3,4-Dihydro-2H-azepin-2- oder 3- oder 4- oder 5- oder 6- oder 7-yl; 3,6-Dihydro-2H-azepin-2- oder 3- oder 4- oder 5- oder 6-oder 7-yl; 5,6-Dihydro-2H-azepin-2- oder 3- oder 4- oder 5- oder 6- oder 7-yl; 4,5-Dihydro-3H-azepin-2- oder 3- oder 4- oder 5- oder 6- oder 7-yl; 1H-Azepin-1- oder -2- oder 3- oder 4- oder 5- oder 6- oder 7-yl; 2H-Azepin-2- oder 3- oder 4- oder 5- oder 6- oder 7-yl; 3H-Azepin-2- oder 3- oder 4- oder 5- oder 6- oder 7-yl; 4H-Azepin-2- oder 3- oder 4- oder 5- oder 6- oder 7-yl, 2- oder 3-Oxolanyl (= 2- oder 3-Tetrahydrofuranyl); 2,3-Dihydrofuran-2- oder 3- oder 4- oder 5-yl; 2,5-Dihydrofuran-2- oder 3-yl, 2-oder 3- oder 4-Oxanyl (= 2- oder 3- oder 4-Tetrahydropyranyl); 3,4-Dihydro-2H-pyran-2- oder 3- oder 4- oder 5- oder 6-yl; 3,6-Dihydro-2H-pyran-2- oder 3-oder 4- oder 5- oder 6-yl; 2H-Pyran-2- oder 3-oder 4- oder 5- oder 6-yl; 4H-Pyran-2- oder 3- oder 4-yl, 2- oder 3- oder 4-Oxepanyl; 2,3,4,5-Tetrahydrooxepin-2- oder 3- oder 4- oder 5- oder 6- oder 7-yl; 2,3,4,7-Tetrahydrooxepin-2- oder 3- oder 4- oder 5- oder 6- oder 7-yl; 2,3,6,7-Tetrahydrooxepin-2- oder 3- oder 4-yl; 2,3-Dihydrooxepin-2- oder 3- oder 4- oder 5- oder 6- oder 7-yl; 4,5-Dihydrooxepin-2- oder 3- oder 4-yl; 2,5-Dihydrooxepin-2- oder 3- oder 4- oder 5- oder 6- oder 7-yl; Oxepin-2- oder 3- oder 4- oder 5- oder 6- oder 7-yl; 2- oder 3-Tetrahydrothiophenyl; 2,3-Dihydrothiophen-2- oder 3- oder 4- oder 5-yl; 2,5-Dihydrothiophen-2- oder 3-yl; Tetrahydro-2H-thiopyran-2- oder 3- oder 4-yl; 3,4-Dihydro-2H-thiopyran-2- oder 3- oder 4- oder 5- oder 6-yl; 3,6-Dihydro-2H-thiopyran-2- oder 3- oder 4- oder 5- oder 6-yl; 2H-Thiopyran-2- oder 3-oder 4- oder 5- oder 6-yl; 4H-Thiopyran-2- oder 3- oder 4-yl. Bevorzugte 3-Ring und 4-Ring-Heterocyclen sind beispielsweise 1- oder 2-Aziridinyl, Oxiranyl, Thiiranyl, 1- oder 2- oder 3-Azetidinyl, 2- oder 3-Oxetanyl, 2- oder 3-Thietanyl, 1,3-Dioxetan-2-yl. Weitere Beispiele für "Heterocyclyl" sind ein partiell oder vollständig hydrierter heterocyclischer Rest mit zwei Heteroatomen aus der Gruppe N, O und S, wie beispielsweise 1- oder 2- oder 3- oder 4-Pyrazolidinyl; 4,5-Dihydro-3H-pyrazol- 3- oder 4-oder 5-yl; 4,5-Dihydro-1H-pyrazol-1- oder 3- oder 4- oder 5-yl; 2,3-Dihydro-1H-pyrazol-1- oder 2- oder 3- oder 4- oder 5-yl; 1- oder 2- oder 3- oder 4- Imidazolidinyl; 2,3-Dihydro-1H-imidazol-1- oder 2- oder 3- oder 4-yl; 2,5-Dihydro-1H-imidazol-1- oder 2- oder 4- oder 5-yl; 4,5-Dihydro-1H-imidazol-1- oder 2-oder 4- oder 5-yl; Hexahydropyridazin-1- oder 2- oder 3- oder 4-yl; 1,2,3,4-Tetrahydropyridazin-1- oder 2- oder 3- oder 4- oder 5- oder 6-yl; 1,2,3,6-Tetrahydropyridazin-1- oder 2- oder 3- oder 4- oder 5- oder 6-yl; 1,4,5,6-Tetrahydropyridazin-1- oder 3- oder 4- oder 5- oder 6-yl; 3,4,5,6-Tetrahydropyridazin-3-oder 4- oder 5-yl; 4,5-Dihydropyridazin-3- oder 4-yl; 3,4-Dihydropyridazin-3- oder 4- oder 5- oder 6-yl; 3,6-Dihydropyridazin-3- oder 4-yl; 1,6-Dihydropyriazin-1- oder 3- oder 4- oder 5- oder 6-yl; Hexahydropyrimidin-1- oder 2- oder 3- oder 4-yl; 1,4,5,6-Tetrahydropyrimidin-1- oder 2- oder 4- oder 5- oder 6-yl; 1,2,5,6-Tetrahydropyrimidin-1- oder 2- oder 4- oder 5- oder 6-yl; 1,2,3,4-Tetrahydropyrimidin-1- oder 2- oder 3- oder 4- oder 5- oder 6-yl; 1,6-Dihydropyrimidin-1- oder 2- oder 4- oder 5- oder 6-yl; 1,2-Dihydropyrimidin-1- oder 2- oder 4- oder 5- oder 6-yl; 2,5-Dihydropyrimidin-2- oder 4- oder 5-yl; 4,5-Dihydropyrimidin- 4- oder 5- oder 6-yl; 1,4-Dihydropyrimidin-1- oder 2- oder 4- oder 5- oder 6-yl; 1- oder 2- oder 3-Piperazinyl; 1,2,3,6-Tetrahydropyrazin-1- oder 2- oder 3- oder 5-oder 6-yl; 1,2,3,4-Tetrahydropyrazin-1- oder 2- oder 3- oder 4- oder 5- oder 6-yl; 1,2-Dihydropyrazin-1-oder 2- oder 3- oder 5- oder 6-yl; 1,4-Dihydropyrazin-1- oder 2- oder 3-yl; 2,3-Dihydropyrazin-2- oder 3- oder 5- oder 6-yl; 2,5-Dihydropyrazin-2- oder 3-yl; 1,3-Dioxolan-2- oder 4- oder 5-yl; 1,3-Dioxol-2-oder 4-yl; 1,3-Dioxan-2- oder 4- oder 5-yl; 4H-1,3-Dioxin-2- oder 4- oder 5- oder 6-yl; 1,4-Dioxan-2-oder 3- oder 5- oder 6-yl; 2,3-Dihydro-1,4-dioxin-2- oder 3- oder 5- oder 6-yl; 1,4-Dioxin-2- oder 3-yl; 1,2-Dithiolan-3- oder 4-yl; 3H-1,2-Dithiol-3- oder 4- oder 5-yl; 1,3-Dithiolan-2- oder 4-yl; 1,3-Dithiol-2- oder 4-yl; 1,2-Dithian-3- oder 4-yl; 3,4-Dihydro-1,2-dithiin-3- oder 4- oder 5- oder 6-yl; 3,6-Dihydro-1,2-dithiin-3- oder 4-yl; 1,2-Dithiin-3- oder 4-yl; 1,3-Dithian-2- oder 4- oder 5-yl; 4H-1,3-Dithiin-2-oder 4- oder 5- oder 6-yl; Isoxazolidin-2- oder 3- oder 4- oder 5-yl; 2,3-Dihydroisoxazol-2- oder 3- oder 4- oder 5-yl; 2,5-Dihydroisoxazol-2- oder 3- oder 4- oder 5-yl; 4,5-Dihydroisoxazol-3- oder 4- oder 5-yl; 1,3-Oxazolidin-2- oder 3- oder 4- oder 5-yl; 2,3-Dihydro-1,3-oxazol-2- oder 3- oder 4- oder 5-yl; 2,5-Dihydro-1,3-oxazol-2- oder 4- oder 5-yl; 4,5-Dihydro-1,3-oxazol-2- oder 4- oder 5-yl; 1,2-Oxazinan-2-oder 3- oder 4- oder 5- oder 6-yl; 3,4-Dihydro-2H-1,2-oxazin-2- oder 3- oder 4- oder 5- oder 6-yl; 3,6-Dihydro-2H-1,2-oxazin-2- oder 3- oder 4- oder 5- oder 6-yl; 5,6-Dihydro-2H-1,2-oxazin-2- oder 3- oder 4- oder 5- oder 6-yl; 5,6-Dihydro-4H-1,2-oxazin-3- oder 4- oder 5- oder 6-yl; 2H-1,2-Oxazin-2- oder 3-oder 4- oder 5- oder 6-yl; 6H-1,2-Oxazin-3- oder 4- oder 5- oder 6-yl; 4H-1,2-Oxazin-3- oder 4- oder 5-oder 6-yl; 1,3-Oxazinan-2- oder 3- oder 4- oder 5- oder 6-yl; 3,4-Dihydro-2H-1,3-oxazin-2- oder 3- oder 4- oder 5- oder 6-yl; 3,6-Dihydro-2H-1,3-oxazin-2- oder 3- oder 4- oder 5- oder 6-yl; 5,6-Dihydro-2H-1,3-oxazin-2- oder 4- oder 5- oder 6-yl; 5,6-Dihydro-4H-1,3-oxazin-2- oder 4- oder 5- oder 6-yl; 2H-1,3-Oxazin-2- oder 4- oder 5- oder 6-yl; 6H-1,3-Oxazin-2- oder 4- oder 5- oder 6-yl; 4H-1,3-Oxazin-2-oder 4- oder 5- oder 6-yl; Morpholin-2- oder 3- oder 4-yl; 3,4-Dihydro-2H-1,4-oxazin-2- oder 3- oder 4-oder 5- oder 6-yl; 3,6-Dihydro-2H-1,4-oxazin-2- oder 3- oder 5- oder 6-yl; 2H-1,4-oxazin-2- oder 3-oder 5- oder 6-yl; 4H-1,4-oxazin-2- oder 3-yl; 1,2-Oxazepan-2- oder 3- oder 4- oder 5- oder 6- oder 7-yl; 2,3,4,5-Tetrahydro-1,2-oxazepin-2- oder 3- oder 4- oder 5- oder 6- oder 7-yl; 2,3,4,7-Tetrahydro-1,2-oxazepin-2- oder 3- oder 4- oder 5- oder 6- oder 7-yl; 2,3,6,7-Tetrahydro-1,2-oxazepin-2- oder 3- oder 4- oder 5- oder 6- oder 7-yl; 2,5,6,7-Tetrahydro-1,2-oxazepin-2- oder 3- oder 4- oder 5- oder 6- oder 7-yl; 4,5,6,7-Tetrahydro-1,2-oxazepin-3- oder 4- oder 5- oder 6- oder 7-yl; 2,3-Dihydro-1,2-oxazepin-2-oder 3- oder 4- oder 5- oder 6- oder 7-yl; 2,5-Dihydro-1,2-oxazepin-2- oder 3- oder 4- oder 5- oder 6-oder 7-yl; 2,7-Dihydro-1,2-oxazepin-2- oder 3- oder 4- oder 5- oder 6- oder 7-yl; 4,5-Dihydro-1,2-oxazepin-3- oder 4- oder 5- oder 6- oder 7-yl; 4,7-Dihydro-1,2-oxazepin-3- oder 4- oder 5- oder 6- oder 7-yl; 6,7-Dihydro-1,2-oxazepin-3- oder 4- oder 5- oder 6- oder 7-yl; 1,2-Oxazepin-3- oder 4- oder 5-oder 6- oder 7-yl; 1,3-Oxazepan-2- oder 3- oder 4- oder 5- oder 6- oder 7-yl; 2,3,4,5-Tetrahydro-1,3-oxazepin-2- oder 3- oder 4- oder 5- oder 6- oder 7-yl; 2,3,4,7-Tetrahydro-1,3-oxazepin-2- oder 3- oder 4- oder 5- oder 6- oder 7-yl; 2,3,6,7-Tetrahydro-1,3-oxazepin-2- oder 3- oder 4- oder 5- oder 6- oder 7-yl; 2,5,6,7-Tetrahydro-1,3-oxazepin-2- oder 4- oder 5- oder 6- oder 7-yl; 4,5,6,7-Tetrahydro-1,3-oxazepin-2- oder 4- oder 5- oder 6- oder 7-yl; 2,3-Dihydro-1,3-oxazepin-2- oder 3- oder 4- oder 5- oder 6- oder 7-yl; 2,5-Dihydro-1,3-oxazepin-2- oder 4- oder 5- oder 6- oder 7-yl; 2,7-Dihydro-1,3-oxazepin-2- oder 4- oder 5- oder 6- oder 7-yl; 4,5-Dihydro-1,3-oxazepin-2- oder 4- oder 5- oder 6- oder 7-yl; 4,7-Dihydro-1,3-oxazepin-2- oder 4- oder 5- oder 6- oder 7-yl; 6,7-Dihydro-1,3-oxazepin-2- oder 4- oder 5-oder 6- oder 7-yl; 1,3-Oxazepin-2- oder 4- oder 5- oder 6- oder 7-yl; 1,4-Oxazepan-2- oder 3- oder 5-oder 6- oder 7-yl; 2,3,4,5-Tetrahydro-1,4-oxazepin-2- oder 3- oder 4- oder 5- oder 6- oder 7-yl; 2,3,4,7-Tetrahydro-1,4-oxazepin-2- oder 3- oder 4- oder 5- oder 6- oder 7-yl; 2,3,6,7-Tetrahydro-1,4-oxazepin-2- oder 3- oder 5- oder 6- oder 7-yl; 2,5,6,7-Tetrahydro-1,4-oxazepin-2- oder 3- oder 5- oder 6- oder 7-yl; 4,5,6,7-Tetrahydro-1,4-oxazepin-2- oder 3- oder 4- oder 5- oder 6- oder 7-yl; 2,3-Dihydro-1,4-oxazepin-2- oder 3- oder 5- oder 6- oder 7-yl; 2,5-Dihydro-1,4-oxazepin-2- oder 3- oder 5- oder 6- oder 7-yl; 2,7-Dihydro-1,4-oxazepin-2- oder 3- oder 5- oder 6- oder 7-yl; 4,5-Dihydro-1,4-oxazepin-2- oder 3- oder 4- oder 5- oder 6- oder 7-yl; 4,7-Dihydro-1,4-oxazepin-2- oder 3- oder 4- oder 5- oder 6- oder 7-yl; 6,7-Dihydro-1,4-oxazepin-2- oder 3- oder 5- oder 6- oder 7-yl; 1,4-Oxazepin-2- oder 3- oder 5- oder 6- oder 7-yl; Isothiazolidin-2- oder 3- oder 4- oder 5-yl; 2,3-Dihydroisothiazol-2- oder 3- oder 4- oder 5-yl; 2,5-Dihydroisothiazol-2- oder 3- oder 4- oder 5-yl; 4,5-Dihydroisothiazol-3- oder 4- oder 5-yl; 1,3-Thiazolidin-2- oder 3- oder 4- oder 5-yl; 2,3-Dihydro-1,3-thiazol-2- oder 3- oder 4- oder 5-yl; 2,5-Dihydro-1,3-thiazol-2- oder 4- oder 5-yl; 4,5-Dihydro-1,3-thiazol-2- oder 4- oder 5-yl; 1,3-Thiazinan-2-oder 3- oder 4- oder 5- oder 6-yl; 3,4-Dihydro-2H-1,3-thiazin-2- oder 3- oder 4- oder 5- oder 6-yl; 3,6-Dihydro-2H-1,3-thiazin-2- oder 3- oder 4- oder 5- oder 6-yl; 5,6-Dihydro-2H-1,3-thiazin-2- oder 4- oder 5- oder 6-yl; 5,6-Dihydro-4H-1,3-thiazin-2- oder 4- oder 5- oder 6-yl; 2H-1,3-Thiazin-2- oder 4- oder 5-oder 6-yl; 6H-1,3-Thiazin-2- oder 4- oder 5- oder 6-yl; 4H-1,3-Thiazin-2- oder 4- oder 5- oder 6-yl. Weitere Beispiele für "Heterocyclyl" sind ein partiell oder vollständig hydrierter heterocyclischer Rest mit 3 Heteroatomen aus der Gruppe N, O und S, wie beispielsweise 1,4,2-Dioxazolidin-2- oder 3- oder 5-yl; 1,4,2-Dioxazol-3- oder 5-yl; 1,4,2-Dioxazinan-2- oder -3- oder 5- oder 6-yl; 5,6-Dihydro-1,4,2-dioxazin-3- oder 5- oder 6-yl; 1,4,2-Dioxazin-3- oder 5- oder 6-yl; 1,4,2-Dioxazepan-2- oder 3- oder 5-oder 6- oder 7-yl; 6,7-Dihydro-5H-1,4,2-Dioxazepin-3- oder 5- oder 6- oder 7-yl; 2,3-Dihydro-7H-1,4,2-Dioxazepin-2- oder 3- oder 5- oder 6- oder 7-yl; 2,3-Dihydro-5H-1,4,2-Dioxazepin-2- oder 3- oder 5-oder 6- oder 7-yl; 5H-1,4,2-Dioxazepin-3- oder 5- oder 6- oder 7-yl; 7H-1,4,2-Dioxazepin-3- oder 5-oder 6- oder 7-yl. Strukturbeispiele für gegebenenfalls weiter substituierte Heterocyclen sind auch im Folgenden aufgeführt:

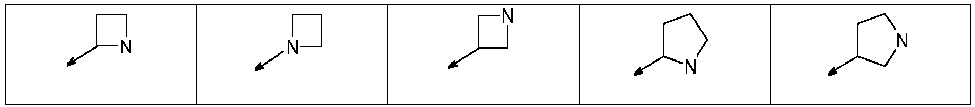

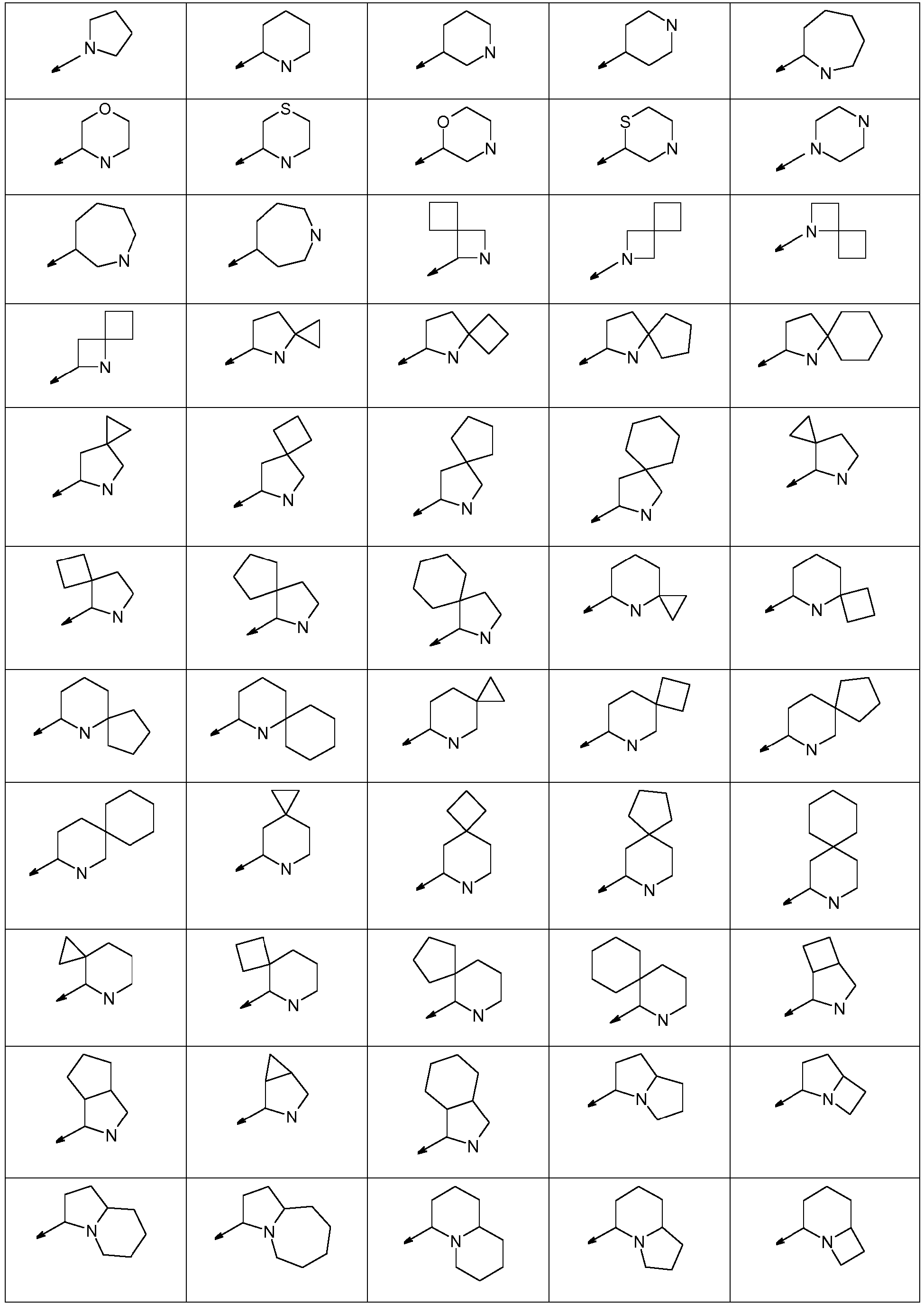

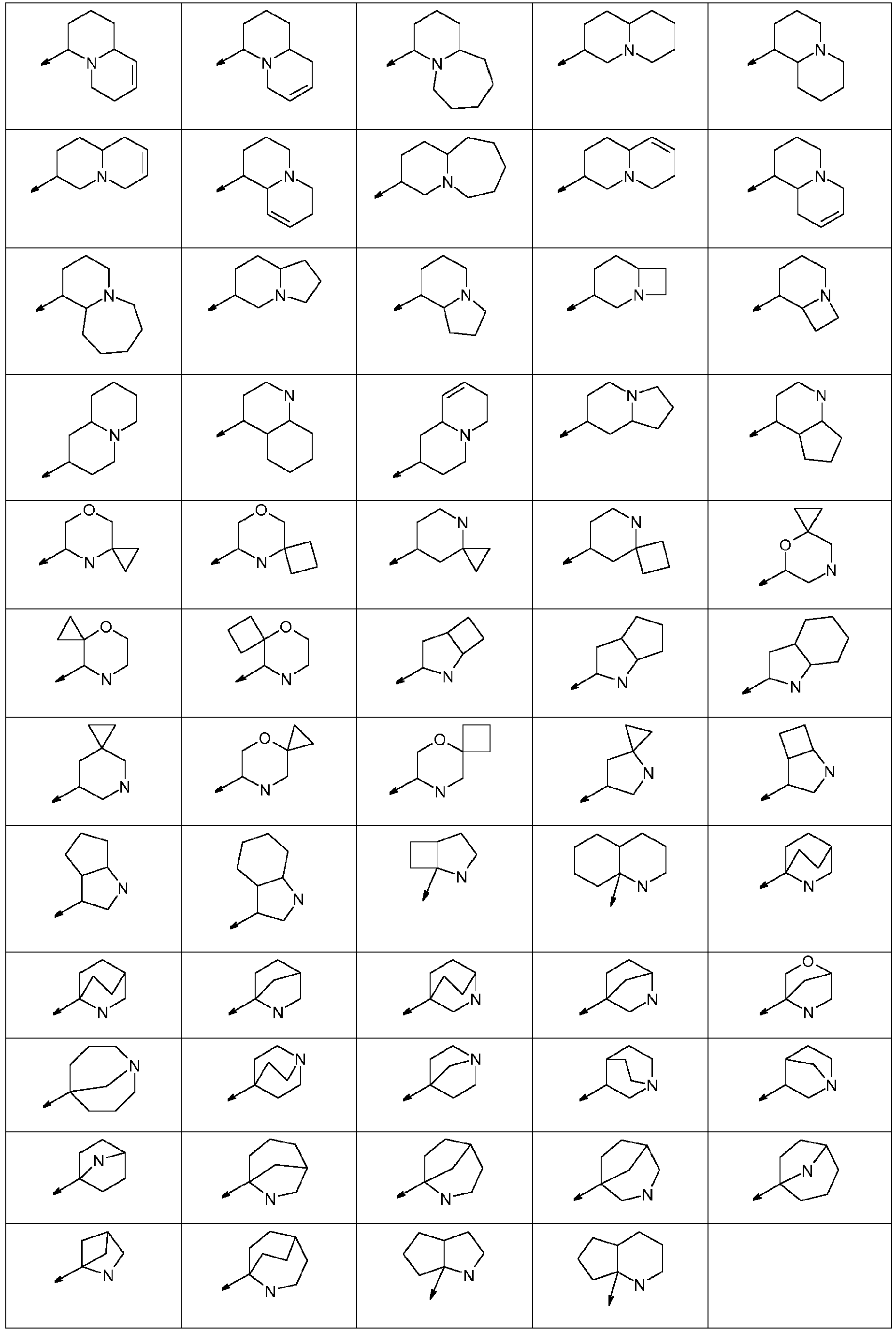

Die oben aufgeführten Heterocyclen sind bevorzugt beispielsweise durch Wasserstoff, Halogen, Alkyl, Haloalkyl, Hydroxy, Alkoxy, Cycloalkoxy, Aryloxy, Alkoxyalkyl, Alkoxyalkoxy, Cycloalkyl, Halocycloalkyl, Aryl, Arylalkyl, Heteroaryl, Heterocyclyl, Alkenyl, Alkylcarbonyl, Cycloalkylcarbonyl, Arylcarbonyl, Heteroarylcarbonyl, Alkoxycarbonyl, Hydroxycarbonyl, Cycloalkoxycarbonyl, Cycloalkylalkoxycarbonyl, Alkoxycarbonylalkyl, Arylalkoxycarbonyl, Arylalkoxycarbonylalkyl, Alkinyl, Alkinylalkyl, Alkylalkinyl, Tris-alkylsilylalkinyl, Nitro, Amino, Cyano, Haloalkoxy, Haloalkylthio, Alkylthio, Hydrothio, Hydroxyalkyl, Oxo, Heteroarylalkoxy, Arylalkoxy, Heterocyclylalkoxy, Heterocyclylalkylthio, Heterocyclyloxy, Heterocyclylthio, Heteroaryloxy, Bis-alkylamino, Alkylamino, Cycloalkylamino, Hydroxycarbonylalkylamino, Alkoxycarbonylalkylamino, Arylalkoxycarbonylalkylamino, Alkoxycarbonylalkyl(alkyl)amino, Aminocarbonyl, Alkylaminocarbonyl, Bis-alkylaminocarbonyl, Cycloalkylaminocarbonyl, Hydroxycarbonylalkylaminocarbonyl, Alkoxycarbonylalkylaminocarbonyl, Arylalkoxycarbonylalkylaminocarbonyl substituiert.

Wenn ein Grundkörper "durch einen oder mehrere Reste" aus einer Aufzählung von Resten (= Gruppe) oder einer generisch definierten Gruppe von Resten substituiert ist, so schließt dies jeweils die gleichzeitige Substitution durch mehrere gleiche und/oder strukturell unterschiedliche Reste ein.

Handelt es sich es sich um einen teilweise oder vollständig gesättigten Stickstoff-Heterocyclus, so kann dieser sowohl über Kohlenstoff als auch über den Stickstoff mit dem Rest des Moleküls verknüpft sein.

Als Substituenten für einen substituierten heterocyclischen Rest kommen die weiter unten genannten Substituenten in Frage, zusätzlich auch Oxo und Thioxo. Die Oxogruppe als Substituent an einem Ring-C-Atom bedeutet dann beispielsweise eine Carbonylgruppe im heterocyclischen Ring. Dadurch sind vorzugsweise auch Lactone und Lactame umfasst. Die Oxogruppe kann auch an den Heteroringatomen, die in verschiedenen Oxidationsstufen existieren können, z.B. bei N und S, auftreten und bilden dann beispielsweise die divalenten Gruppen N(O), S(O) (auch kurz SO) und S(O)2 (auch kurz SO2) im heterocyclischen Ring. Im Fall von -N(O)- und -S(O)-Gruppen sind jeweils beide Enantiomere umfasst.

Erfindungsgemäß steht der Ausdruck "Heteroaryl" für heteroaromatische Verbindungen, d. h. vollständig ungesättigte aromatische heterocyclische Verbindungen, vorzugsweise für 5- bis 7-gliedrige Ringe mit 1 bis 4, vorzugsweise 1 oder 2 gleichen oder verschiedenen Heteroatomen, vorzugsweise O, S oder N. Erfindungsgemäße Heteroaryle sind beispielsweise 1H-Pyrrol-1-yl; 1H-Pyrrol-2-yl; 1H-Pyrrol-3-yl; Furan-2-yl; Furan-3-yl; Thien-2-yl; Thien-3-yl, 1H-Imidazol-1-yl; 1H-Imidazol-2-yl; 1H-Imidazol-4-yl; 1H-Imidazol-5-yl; 1H-Pyrazol-1-yl; 1H-Pyrazol-3-yl; 1H-Pyrazol-4-yl; 1H-Pyrazol-5-yl, 1H-1,2,3-Triazol-1-yl, 1H-1,2,3-Triazol-4-yl, 1H-1,2,3-Triazol-5-yl, 2H-1,2,3-Triazol-2-yl, 2H-1,2,3-Triazol-4-yl, 1H-1,2,4-Triazol-1-yl, 1H-1,2,4-Triazol-3-yl, 4H-1,2,4-Triazol-4-yl, 1,2,4-Oxadiazol-3-yl, 1,2,4-Oxadiazol-5-yl, 1,3,4-Oxadiazol-2-yl, 1,2,3-Oxadiazol-4-yl, 1,2,3-Oxadiazol-5-yl, 1,2,5-Oxadiazol-3-yl, Azepinyl, Pyridin-2-yl, Pyridin-3-yl, Pyridin-4-yl, Pyrazin-2-yl, Pyrazin-3-yl, Pyrimidin-2-yl, Pyrimidin-4-yl, Pyrimidin-5-yl, Pyridazin-3-yl, Pyridazin-4-yl, 1,3,5-Triazin-2-yl, 1,2,4-Triazin-3-yl, 1,2,4-Triazin-5-yl, 1,2,4-Triazin-6-yl, 1,2,3-Triazin-4-yl, 1,2,3-Triazin-5-yl, 1,2,4-, 1,3,2-, 1,3,6- und 1,2,6-Oxazinyl, Isoxazol-3-yl, Isoxazol-4-yl, Isoxazol-5-yl, 1,3-Oxazol-2-yl, 1,3-Oxazol-4-yl, 1,3-Oxazol-5-yl, Isothiazol-3-yl, Isothiazol-4-yl, Isothiazol-5-yl, 1,3-Thiazol-2-yl, 1,3-Thiazol-4-yl, 1,3-Thiazol-5-yl, Oxepinyl, Thiepinyl, 1,2,4-Triazolonyl und 1,2,4-Diazepinyl, 2H-1,2,3,4-Tetrazol-5-yl, 1H-1,2,3,4-Tetrazol-5-yl, 1,2,3,4-Oxatriazol-5-yl, 1,2,3,4-Thiatriazol-5-yl, 1,2,3,5-Oxatriazol-4-yl, 1,2,3,5-Thiatriazol-4-yl. Die erfindungsgemäßen Heteroarylgruppen können ferner mit einem oder mehreren, gleichen oder verschiedenen Resten substituiert sein. Sind zwei benachbarte Kohlenstoffatome Bestandteil eines weiteren aromatischen Rings, so handelt es sich um annellierte heteroaromatische Systeme, wie benzokondensierte oder mehrfach annellierte Heteroaromaten. Bevorzugt sind beispielsweise Chinoline (z. B. Chinolin-2-yl, Chinolin-3-yl, Chinolin-4-yl, Chinolin-5-yl, Chinolin-6-yl, Chinolin-7-yl, Chinolin-8-yl); Isochinoline (z. B. Isochinolin-1-yl, Isochinolin-3-yl, Isochinolin-4-yl, Isochinolin-5-yl, Isochinolin-6-yl, Isochinolin-7-yl, Isochinolin-8-yl); Chinoxalin; Chinazolin; Cinnolin; 1,5-Naphthyridin; 1,6-Naphthyridin; 1,7-Naphthyridin; 1,8-Naphthyridin; 2,6-Naphthyridin; 2,7-Naphthyridin; Phthalazin; Pyridopyrazine; Pyridopyrimidine; Pyridopyridazine; Pteridine; Pyrimidopyrimidine. Beispiele für Heteroaryl sind auch 5- oder 6-gliedrige benzokondensierte Ringe aus der Gruppe 1H-Indol-1-yl, 1H-Indol-2-yl, 1H-Indol-3-yl, 1H-Indol-4-yl, 1H-Indol-5-yl, 1H-Indol-6-yl, 1H-Indol-7-yl, 1-Benzofuran-2-yl, 1-Benzofuran-3-yl, 1-Benzofuran-4-yl, 1-Benzofuran-5-yl, 1-Benzofuran-6-yl, 1-Benzofuran-7-yl, 1-Benzothiophen-2-yl, 1-Benzothiophen-3-yl, 1-Benzothiophen-4-yl, 1-Benzothiophen-5-yl, 1-Benzothiophen-6-yl, 1-Benzothiophen-7-yl, 1H-Indazol-1-yl, 1H-Indazol-3-yl, 1H-Indazol-4-yl, 1H-Indazol-5-yl, 1H-Indazol-6-yl, 1H-Indazol-7-yl, 2H-Indazol-2-yl, 2H-Indazol-3-yl, 2H-Indazol-4-yl, 2H-Indazol-5-yl, 2H-Indazol-6-yl, 2H-Indazol-7-yl, 2H-Isoindol-2-yl, 2H-Isoindol-1-yl, 2H-Isoindol-3-yl, 2H-Isoindol-4-yl, 2H-Isoindol-5-yl, 2H-Isoindol-6-yl; 2H-Isoindol-7-yl, 1H-Benzimidazol-1-yl, 1H-Benzimidazol-2-yl, 1H-Benzimidazol-4-yl, 1H-Benzimidazol-5-yl, 1H-Benzimidazol-6-yl, 1H-Benzimidazol-7-yl, 1,3-Benzoxazol-2-yl, 1,3-Benzoxazol-4-yl, 1,3-Benzoxazol-5-yl, 1,3-Benzoxazol-6-yl, 1,3-Benzoxazol-7-yl, 1,3-Benzthiazol-2-yl, 1,3-Benzthiazol-4-yl, 1,3-Benzthiazol-5-yl, 1,3-Benzthiazol-6-yl, 1,3-Benzthiazol-7-yl, 1,2-Benzisoxazol-3-yl, 1,2-Benzisoxazol-4-yl, 1,2-Benzisoxazol-5-yl, 1,2-Benzisoxazol-6-yl, 1,2-Benzisoxazol-7-yl, 1,2-Benzisothiazol-3-yl, 1,2-Benzisothiazol-4-yl, 1,2-Benzisothiazol-5-yl, 1,2-Benzisothiazol-6-yl, 1,2-Benzisothiazol-7-yl.

Die Bezeichnung "Halogen" bedeutet beispielsweise Fluor, Chlor, Brom oder Iod. Wird die Bezeichnung für einen Rest verwendet, dann bedeutet "Halogen" beispielsweise ein Fluor-, Chlor-, Brom- oder Iodatom.

Erfindungsgemäß bedeutet "Alkyl" einen geradkettigen oder verzweigten offenkettigen, gesättigten Kohlenwasserstoffrest, der gegebenenfalls ein- oder mehrfach substituiert ist und im letzteren Falle als "substituiertes Alkyl" bezeichnet wird. Bevorzugte Substituenten sind Halogenatome, Alkoxy-, Haloalkoxy-, Cyano-, Alkylthio, Haloalkylthio-, Amino- oder Nitrogruppen, besonders bevorzugt sind Methoxy, Methyl, Fluoralkyl, Cyano, Nitro, Fluor, Chlor, Brom oder Iod.

"Haloalkyl", "-alkenyl" und "-alkinyl" bedeuten durch gleiche oder verschiedene Halogenatome, teilweise oder vollständig substituiertes Alkyl, Alkenyl bzw. Alkinyl, z.B. Monohaloalkyl (= Monohalogenalkyl) wie z. B. CH₂CH₂Cl, CH₂CH₂Br, CHClCH₃, CH₂Cl, CH₂F; Perhaloalkyl wie z. B. CCl₃, CClF₂, CFCl₂,CF₂CClF₂, CF₂CClFCF₃; Polyhaloalkyl wie z. B. CH₂CHFCl, CF₂CClFH, CF₂CBrFH, CH₂CF₃; Der Begriff Perhaloalkyl umfasst dabei auch den Begriff Perfluoralkyl.

Teilfluoriertes Alkyl bedeutet einen geradkettigen oder verzweigten, gesättigten Kohlenwasserstoff, der einfach oder mehrfach durch Fluor substituiert ist, wobei sich die entsprechenden Fluoratome als Substituenten an einem oder mehreren verschiedenen Kohlenstoffatomen der geradkettigen oder verzweigten Kohlenwasserstoffkette befinden können, wie z. B. CHFCH₃, CH₂CH₂F, CH₂CH₂CF₃, CHF₂, CH₂F, CHFCF₂CF₃

Teilfluoriertes Haloalkyl bedeutet einen geradkettigen oder verzweigten, gesättigten Kohlenwasserstoff, der durch verschiedenene Halogenatomen mit mindestens einem Fluoratom substituiert ist, wobei alle anderen gegebenenfalls vorhandenen Halogenatome ausgewählt sind aus der Gruppe Fluor, Chlor oder Brom, Iod. Die entsprechenden Halogenatome können sich dabei als Substituenten an einem oder mehreren verschiedenen Kohlenstoffatomen der geradkettigen oder verzweigten Kohlenwasserstoffkette befinden. Teilfluoriertes Haloalkyl schließt auch die vollständige Substitution der geradkettigen oder verzweigten Kette durch Halogen unter Beteiligung von mindestens einem Fluoratom ein.

Haloalkoxy ist z.B. OCF₃, OCHF₂, OCH₂F, OCF₂CF₃, OCH₂CF₃ und OCH₂CH₂Cl; Entsprechendes gilt für Haloalkenyl und andere durch Halogen substituierten Reste.

Der hier beispielhaft genannte Ausdruck "(C₁-C₄)-Alkyl" bedeutet eine Kurzschreibweise für geradkettiges oder verzweigtes Alkyl mit einem bis 4 Kohlenstoffatomen entsprechend der Bereichsangabe für C-Atome, d. h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z. B. "(C₁-C₆)-Alkyl", umfassen entsprechend auch geradkettige oder verzweigte Alkylreste mit einer größeren Zahl von C-Atomen, d. h. gemäß Beispiel auch die Alkylreste mit 5 und 6 C-Atomen.

Wenn nicht speziell angegeben, sind bei den Kohlenwasserstoffresten wie Alkyl-, Alkenyl- und Alkinylresten, auch in zusammengesetzten Resten, die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Resten wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste, wobei mindestens eine Doppelbindung bzw. Dreifachbindung enthalten ist. Bevorzugt sind Reste mit einer Doppelbindung bzw. Dreifachbindung.

Der Begriff "Alkenyl" schließt insbesondere auch geradkettige oder verzweigte offenkettige Kohlenwasserstoffreste mit mehr als einer Doppelbindung ein, wie 1,3-Butadienyl und 1,4-Pentadienyl, aber auch Allenyl- oder Kumulenyl-reste mit einer bzw. mehreren kumulierten Doppelbindungen, wie beispielsweise Allenyl (1,2-Propadienyl), 1,2-Butadienyl und 1,2,3-Pentatrienyl. Alkenyl bedeutet z.B. Vinyl, welches ggf. durch weitere Alkylreste substituiert sein kann, z.B. Prop-1-en-1-yl, But-1-en-1-yl, Allyl, 1-Methyl-prop-2-en-1-yl, 2-Methyl-prop-2-en-1-yl, But-2-en-1-yl, 1-Methyl-but-3-en-1-yl und 1-Methyl-but-2-en-1-yl, 2-Methyl-prop-1-en-1-yl, 1-Methylprop-1-en-1-yl, 1-Methylprop-2-en-1-yl, 2-Methyl-prop-2-en-1-yl, But-2-en-1-yl, But-3-en-1-yl, 1-Methyl-but-3-en-1-yl oder 1-Methyl-but-2-en-1-yl, Pentenyl, 2-Methylpentenyl oder Hexenyl.

Der Begriff "Alkinyl" schließt insbesondere auch geradkettige oder verzweigte offenkettige Kohlenwasserstoffreste mit mehr als einer Dreifachbindung oder auch mit einer oder mehreren Dreifachbindungen und einer oder mehreren Doppelbindungen ein, wie beispielsweise 1,3-Butatrienyl bzw. 3-Penten-1-in-1-yl. (C₂-C₆)-Alkinyl bedeutet beispielsweise Ethinyl, Propargyl, 1-Methyl-prop-2-in-1-yl, 2-Butinyl, 2-Pentinyl oder 2-Hexinyl, vorzugsweise Propargyl, But-2-in-1-yl, But-3-in-1-yl oder 1-Methyl-but-3-in-1-yl.

Der Begriff "Cycloalkyl" bedeutet ein carbocyclisches, gesättigtes Ringsystem mit vorzugsweise 3-8 Ring-C-Atomen, z.B. Cyclopropyl, Cyclobutyl, Cyclopentyl oder Cyclohexyl. Im Falle von gegebenenfalls substituiertem Cycloalkyl werden cyclische Systeme mit Substituenten umfasst, wobei auch Substituenten mit einer Doppelbindung am Cycloalkylrest, z. B. eine Alkylidengruppe wie Methyliden, umfasst sind. Im Falle von gegebenenfalls substituiertem Cycloalkyl werden auch mehrcyclische aliphatische Systeme umfaßt, wie beispielsweise Bicyclo[1.1.0]butan-1-yl, Bicyclo[1.1.0]butan-2-yl, Bicyclo[2.1.0]pentan-1-yl, Bicyclo[2.1.0]pentan-2-yl, Bicyclo[2.1.0]pentan-5-yl, Bicyclo[2.2.1]hept-2-yl (Norbornyl), Bicyclo[2.2.2]octan-2-yl, Adamantan-1-yl und Adamantan-2-yl. Der Ausdruck "(C₃-C₇)-Cycloalkyl" bedeutet eine Kurzschreibweise für Cycloalkyl mit drei bis 7 Kohlenstoffatomen entsprechend der Bereichsangabe für C-Atome.

Im Falle von substituiertem Cycloalkyl werden auch spirocyclische aliphatische Systeme umfaßt, wie beispielsweise Spiro[2.2]pent-1-yl, Spiro[2.3]hex-1-yl, Spiro[2.3]hex-4-yl, 3-Spiro[2.3]hex-5-yl. "Cycloalkenyl" bedeutet ein carbocyclisches, nicht aromatisches, partiell ungesättigtes Ringsystem mit vorzugsweise 4-8 C-Atomen, z.B. 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, wobei auch Substituenten mit einer Doppelbindung am Cycloalkenylrest, z. B. eine Alkylidengruppe wie Methyliden, umfasst sind. Im Falle von gegebenenfalls substituiertem Cycloalkenyl gelten die Erläuterungen für substituiertes Cycloalkyl entsprechend.

Der Begriff "Alkyliden", z. B. auch in der Form (C₁-C₁₀)-Alkyliden, bedeutet den Rest eines geradkettigen oder verzweigten offenkettigen Kohlenwasserstoffrests, der über eine Zweifachbindung gebunden ist. Als Bindungsstelle für Alkyliden kommen naturgemäß nur Positionen am Grundkörper in Frage, an denen zwei H-Atome durch die Doppelbindung ersetzt werden können; Reste sind z. B. =CH₂, =CH-CH₃, =C(CH₃)-CH₃, =C(CH₃)-C₂H₅ oder =C(C₂H₅)-C₂H₅. Cycloalkyliden bedeutet ein carbocyclischer Rest, der über eine Zweifachbindung gebunden ist.

Der Begriff "Stannyl" steht für einen weiter substituierten Rest, der ein Zinn-Atom enthält; "Germanyl" steht analog für einen weiter substituierten Rest, der ein Germanium-Atom enthält. "Zirconyl" steht für einen weiter substituierten Rest, der ein Zirconium-Atom enthält. "Hafnyl" steht für einen weiter substituierten Rest, der ein Hafnium-Atom enthält. "Boryl", "Borolanyl" und "Borinanyl" steht für weiter substituierte und gegebenenfalls cyclische Gruppen, die jeweils ein Bor-Atom enthalten. "Plumbanyl" steht für einen weiter substituierten Rest, der ein Blei-Atom enthält. "Hydrargyl" steht für einen weiter substituierten Rest, der ein Quecksilber-Atom enthält. "Alanyl" steht für einen weiter substituierten Rest, der ein Aluminium-Atom enthält. "Magnesyl" steht für einen weiter substituierten Rest, der ein Magnesium-Atom enthält. "Zinkyl" steht für einen weiter substituierten Rest, der ein Zink-Atom enthält.

Die Verbindungen der allgemeinen Formel (I) können je nach Art und Verknüpfung der Substituenten als Stereoisomere vorliegen. Die durch ihre spezifische Raumform definierten möglichen Stereoisomere, wie Enantiomere, Diastereomere, Z- und E-Isomere sind alle von der Formel (I) umfasst. Sind beispielsweise eine oder mehrere Alkenylgruppen vorhanden, so können Diastereomere (Z- und E-Isomere) auftreten. Sind beispielsweise ein oder mehrere asymmetrische Kohlenstoffatome vorhanden, so können Enantiomere und Diastereomere auftreten. Stereoisomere lassen sich aus den bei der Herstellung anfallenden Gemischen nach üblichen Trennmethoden erhalten. Die chromatographische Trennung kann sowohl im analytischen Maßstab zur Feststellung des Enantiomerenüberschusses bzw. des Diastereomerenüberschusses, wie auch im präparativen Maßstab zur Herstellung von Prüfmustern für die biologische Ausprüfung erfolgen. Ebenso können Stereoisomere durch Einsatz stereoselektiver Reaktionen unter Verwendung optisch aktiver Ausgangs- und/oder Hilfsstoffe selektiv hergestellt werden. Die Erfindung betrifft somit auch alle Stereoisomeren, die von der allgemeinen Formel (I) umfasst, jedoch nicht mit ihrer spezifischen Stereoform angegeben sind, sowie deren Gemische

### Synthese:

Substituierte Pyrimidindione können nach bekannten Verfahren hergestellt werden (vgl. Bioorg. Med. Chem. Lett. 2002, 12, 3187; WO 2002/06247; WO 2003/059892; DE 2142317; DE 2041996; DE 2024942; Nucleosides Nucleotides 1994, 13, 891). Verschiedene literaturbekannte Herstellungswege zum Aufbau der Kernstruktur wurden verwendet und teilweise optimiert (siehe Schema 1). Ausgewählte detaillierte Synthesebeispiele sind im nächsten Abschnitt aufgeführt. Die eingesetzten und untersuchten Syntheserouten zur Herstellung von substituierten Pyrimidindionen gehen dabei von kommerziell erhältlichen oder anhand von literaturbeschriebenen Syntheserouten leicht herstellbaren Ketonen und Aminen aus. Das betreffende gegebenenfalls weiter substituierte cyclische Keton wird dabei zusammen mit dem entsprechenden Amin sowie einer geeigneten Säure (z. B. Camphersulfonsäure, p-Toluolsulfonsäure, Methansulfonsäure) in einem geeigneten aprotischen Lösemittel (z. B. Toluol, Dichlormethan, Trichlormethan, Tetrachlorkohlenstoff, Dioxan) unter Rückflußbedingungen umgesetzt und nach Zugabe einer geeigneten Menge von Chlorcarbonylisocyanat in das gewünschte erfindungsgemäße substituierte Pyrimidindion (I) überführt (Schema 1). R¹, R², R³, R⁴ und R⁵ sowie Q haben im nachfolgenden Schema 1 die zuvor definierten Bedeutungen.

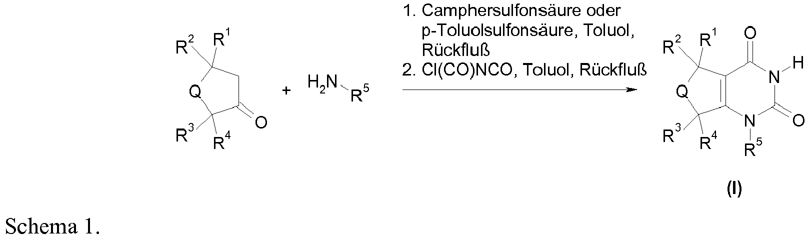

Falls der Substituent R⁵ des eingesetzten Amins über weitere funktionelle Gruppen verfügt, so können die erhaltenen Verbindungen der allgemeinen Formel (I) zu weiteren erfindungsgemäßen Pyrimidindionen umgesetzt werden. Eine enthaltene Aminogruppe kann beispielsweise unter Verwendung einer geeigneten Base (z. B. Triethylamin) in einem geeigneten polar-aprotischen Lösemittels (z. B. Dichlormethan, Tetrahydrofuran, Acetonitril) mit einem geeigneten substituierten Sulfonylchlorid in ein entsprechendes Sulfonamid oder mit einem geeigneten Säurechlorid in ein entsprechendes Amid überführt werden (Schema 2). Diese Umsetzungen werden in Schema 2 beispielhaft, aber nicht einschränkend, mit N-Methylpropan-1,3-diamin, p-Toluolsulfonsäurechlorid und Acetylchlorid beschrieben. Eine gegebenenfalls enthaltene Estergruppe kann mit Hilfe einer geeigneten Base (z. B. Natriumhydroxid oder Lithiumhydroxid) in einem geeigneten polar-protischen Lösemittelgemisch (z. B. Ethanol und Wasser) in die entsprechende Säurefunktion überführt werden. R¹, R² R³ und R⁴ sowie Q haben im nachfolgenden Schema 2 die zuvor definierten Bedeutungen. 3-( Methylamino)prop-1-yl, 3-[p-Methylphenylsulfonyl(methyl)amino]prop-1-yl, 3-[Methylcarbonyl(methyl)amino]prop-1-yl stehen im nachfolgenden Schema 2 beispielhaft, aber nicht einschränkend für R⁵.

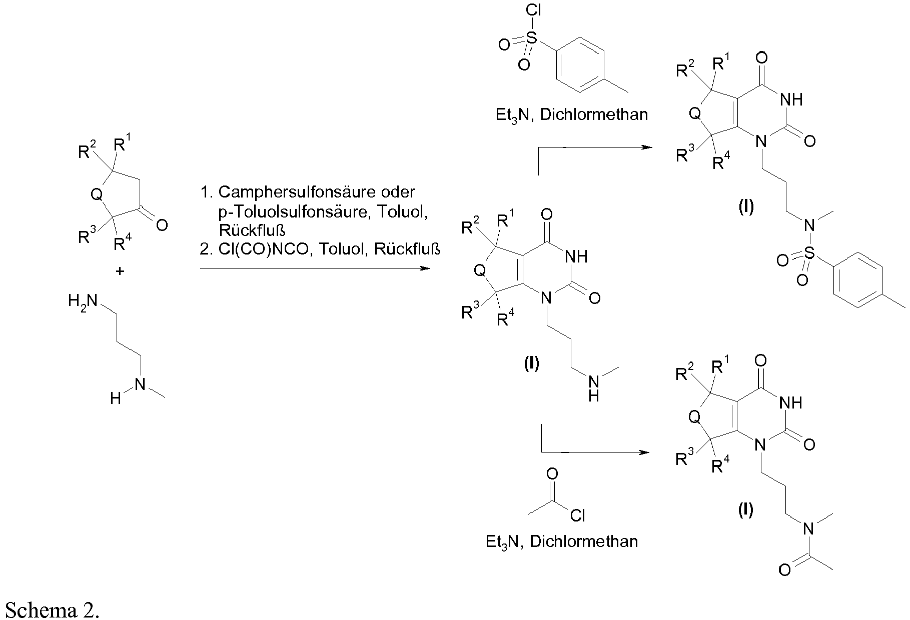

Eine in R⁵ enthaltene Carbonsäurefunktion kann dann mit geeigneten Aminen oder Aminosäuren unter Verwendung von geeigneten Kupplungsreagenzien (z. B. 1-Hydroxybenzotriazol = HOBt; 1-Ethyl-3-(3-dimethylaminopropyl)carbodiimid = EDC; Dicyclohexylcarbodiimid = DCC; Benzotriazolyloxytris[dimethylamino]-10-phosphoniumhexafluorophosphat = BOP; 2-(1H-benzotriazol-1-yL)-1,1,3,3-tetramethyluroniumhexafluorophosphat = HBTU; 2-(7-Aza-1H-benzotriazole-1-yl)-1,1,3,3-tetramethyluronium hexafluorophosphat = HATU) und einer geeigneten Base (z. B. Triethylamin, Diisopropylethylamin) in einem geeigneten polar-aprotischen Lösungsmittel (z. B. Tetrahydrofuran, Dichlormethan) in ein entsprechendes erfindungsgemäßes Amid überführt werden. Diese Umsetzung wird in Schema 3 beispielhaft, aber nicht einschränkend, mit der Verwendung von Ethyl-beta-alaninat und Glycinmethylester als Reaktionspartner gezeigt. R¹, R² R³ und R⁴ sowie Q haben im nachfolgenden Schema 3 die zuvor definierten Bedeutungen. Methoxycarbonylethyl, Hydroxycarbonylethyl und Methoxycarbonylmethylaminocarbonylethyl stehen im nachfolgenden Schema 3 beispielhaft, aber nicht einschränkend für R⁵.

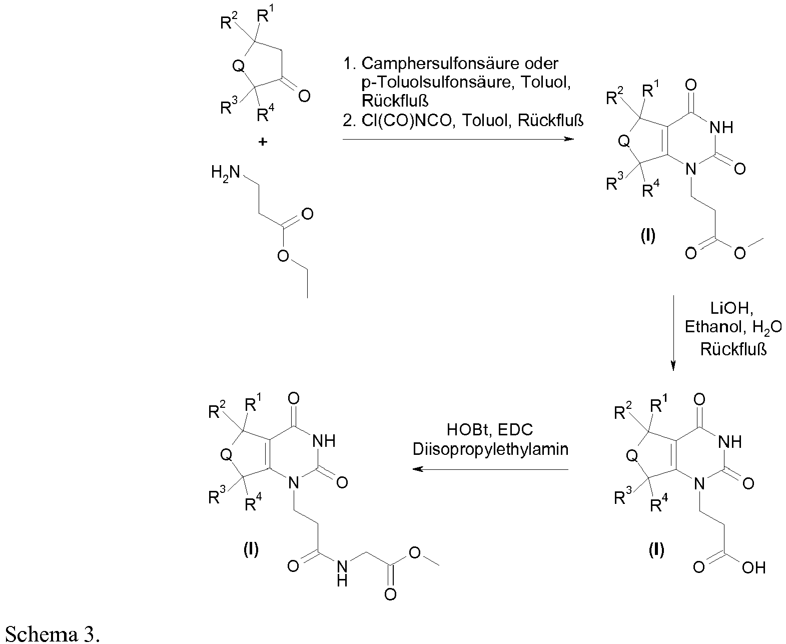

Ausgewählte detaillierte Synthesebeispiele für die erfindungsgemäßen Verbindungen der allgemeinen Formel (I) sind im Folgenden aufgeführt. Die angegebenen Beispielnummern entsprechen den in den nachstehenden Tabellen A1 bis C1 genannten Numerierungen. Die ¹H-NMR-, ¹³C-NMR- und ¹⁹F-NMR-spektroskopischen Daten, die für die in den nachfolgenden Abschnitten beschriebenen chemischen Beispiele angegeben sind, (400 MHz bei ¹H-NMR und 150 MHz bei ¹³C-NMR und 375 MHz bei ¹⁹F-NMR, Lösungsmittel CDCl₃, CD₃OD oder d₆-DMSO, interner Standard: Tetramethylsilan δ = 0.00 ppm), wurden mit einem Gerät der Firma Bruker erhalten, und die bezeichneten Signale haben die nachfolgend aufgeführten Bedeutungen: br = breit(es); s = Singulett, d = Dublett, t = Triplett, dd = Doppeldublett, ddd = Dublett eines Doppeldubletts, m = Multiplett, q = Quartett, quint = Quintett, sext = Sextett, sept = Septett, dq = Doppelquartett, dt = Doppeltriplett. Bei Diastereomerengemischen werden entweder die jeweils signifikanten Signale beider Diastereomere oder das charakteristische Signal des Hauptdiastereomers angegeben. Die verwendeten Abkürzungen für chemische Gruppen haben die nachfolgenden Bedeutungen: Me = CH₃, Et = CH₂CH₃, t-Hex = C(CH₃)₂CH(CH₃)₂, t-Bu = C(CH₃)₃, n-Bu = unverzweigtes Butyl, n-Pr = unverzweigtes Propyl, c-Hex = Cyclohexyl.

### Synthesebeispiele:

### No. A1-13: 1-(2,2,3,3,3-Pentafluorpropyl)-5,6,7,8-tetrahydrochinazolin-2,4(1H,3H)-dion

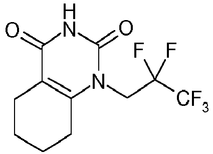

Cyclohexanon (250 mg, 2.55 mmol) und 2,2,3,3,3-Pentafluorpropylamin (380 mg, 2.55 mmol) wurden bei Raumtemperatur in abs. Toluol (4 ml) unter Argon gelöst. Nach 5 min wurden katalytische Mengen an Camphersulfonsäure (59 mg, 0.25 mmol) zugegeben, und die resultierende Reaktionslösung wurde danach 2 h lang bei Rückflußbedingungen gerührt. Nach dem Abkühlen auf Raumtemperatur wurde Chlorcarbonylisocyanat (269 mg, 2.55 mmol) vorsichtig unter intensivem Rühren zugegeben und das Reaktionsgemisch erneut 3 h lang unter Rückfluß gerührt. Nach dem Abkühlen auf Raumtemperatur erfolgte die Zugabe von Wasser und Dichlormethan. Die wäßrige Phase wurde mehrfach intensiv mit Dichlormethan extrahiert, und die vereinigten organischen Phasen wurden danach über Magnesiumsulfat getrocknet, filtriert und eingeengt. Durch abschließende säulenchromatographische Reinigung des resultierenden Rohproduktes konnte 1-(2,2,3,3,3-Pentafluorpropyl)-5,6,7,8-tetrahydrochinazolin-2,4(1H,3H)-dion in Form eines farblosen Feststoffs isoliert werden (105 mg, 13% der Theorie). ¹H-NMR (400 MHz, CDCl₃ δ, ppm) 8.03 (br. s, 1H, NH), 7.96 (d, 1H), 7.41 (dd, 1H), 7.63 (d, 1H), 5.27 (m, 1H), 3.94 (m, 2H), 2.87 (m, 2H), 2.40 (m, 1H), 2.36 (m, 1H), 1.72 (m, 2H), 1.62-1.54 (m, 4H), 1.33 (d, 6H).

### No. A1-36: 1-[2-(6-Isopropoxypyridin-3-yl)ethyl]-5,6,7,8-tetrahydrochinazolin-2,4(1H,3H)-dion

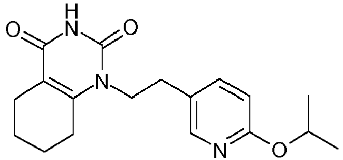

Cyclohexanon (250 mg, 2.55 mmol) und 2-(6-Isopropoxypyridin-3-yl)ethanamin (459 mg, 2.55 mmol) wurden bei Raumtemperatur in abs. Toluol (4 ml) unter Argon gelöst. Nach 5 min wurden katalytische Mengen an Camphersulfonsäure (59 mg, 0.25 mmol) zugegeben, und die resultierende Reaktionslösung wurde danach 2 h lang bei Rückflußbedingungen gerührt. Nach dem Abkühlen auf Raumtemperatur wurde Chlorcarbonylisocyanat (269 mg, 2.55 mmol) vorsichtig unter intensivem Rühren zugegeben und das Reaktionsgemisch erneut 3 h lang unter Rückfluß gerührt. Nach dem Abkühlen auf Raumtemperatur erfolgte die Zugabe von Wasser und Dichlormethan. Die wäßrige Phase wurde mehrfach intensiv mit Dichlormethan extrahiert, und die vereinigten organischen Phasen wurden danach über Magnesiumsulfat getrocknet, filtriert und eingeengt. Durch säulenchromatographische Reinigung des resultierenden Rohproduktes konnte 1-[2-(6-Isopropoxypyridin-3-yl)ethyl]-5,6,7,8-tetrahydrochinazolin-2,4(1H,3H)-dion in Form eines gelblichen Feststoffs isoliert werden (105 mg, 13% der Theorie). ¹H-NMR (400 MHz, CDCl₃ δ, ppm) 8.03 (br. s, 1H, NH), 7.96 (d, 1H), 7.41 (dd, 1H), 7.63 (d, 1H), 5.27 (m, 1H), 3.94 (m, 2H), 2.87 (m, 2H), 2.40 (m, 1H), 2.36 (m, 1H), 1.72 (m, 2H), 1.62-1.54 (m, 4H), 1.33 (d, 6H).

### No. A2-59: 1-[4-(Trifluormethyl)benzyl]-1,5,7,8-tetrahydro-2H-thiopyrano[4,3-d]pyrimidin-2,4(3H)-dion

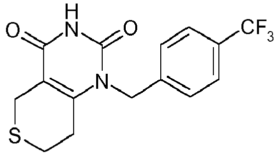

Tetrahydrothiopyran-4-on (250 mg, 2.15 mmol) und 4-(Trifluormethyl)benzylamin (377 mg, 2.15 mmol) wurden bei Raumtemperatur in abs. Toluol (4 ml) unter Argon gelöst. Nach 5 min wurden katalytische Mengen an Camphersulfonsäure (50 mg, 0.22 mmol) zugegeben, und die resultierende Reaktionslösung wurde danach 2 h lang bei Rückflußbedingungen gerührt. Nach dem Abkühlen auf Raumtemperatur wurde Chlorcarbonylisocyanat (227 mg, 2.15 mmol) vorsichtig unter intensivem Rühren zugegeben und das Reaktionsgemisch erneut 3 h lang unter Rückfluß gerührt. Nach dem Abkühlen auf Raumtemperatur erfolgte die Zugabe von Wasser und Dichlormethan. Die wäßrige Phase wurde mehrfach intensiv mit Dichlormethan extrahiert, und die vereinigten organischen Phasen wurden anschließend über Magnesiumsulfat getrocknet, filtriert und eingeengt. Durch säulenchromatographische Reinigung des resultierenden Rohproduktes konnte 1-[4-(Trifluormethyl)benzyl]-1,5,7,8-tetrahydro-2H-thiopyrano[4,3-d]pyrimidin-2,4(3H)-dion in Form eines schwach gelblichen Feststoffs isoliert werden (60 mg, 8% der Theorie). ¹H-NMR (400 MHz, CD₃OD δ, ppm) 8.69 (br. s, 1H, NH), 4.56 (br. m, 2H), 2.48 (m, 4H), 1.84 (m, 2H), 1.70 (m, 2H).

In Analogie zu den oben angeführten und an entsprechender Stelle rezitierten Herstellungsbeispielen und unter Berücksichtigung der allgemeinen Angaben zur Herstellung von substituierten Pyrimidindionen der allgemeinen Formel (I) erhält man die nachfolgend genannten Verbindungen. In den folgenden Tabellen sind Q, R¹, R², R³ und R⁴ jeweils in den allgemeinen Formeln (Iaa) bis (Ica) genau beschrieben. Die in den nachfolgenden Tabellen für R⁵ genannten "G"-Reste sind ausgewählt aus den zuvor spezifisch genannten Resten G-1 bis G-300.
A1. Verbindungen A1-1 bis A1-200 der allgemeinen Formel (Iaa), worin W, R⁵, R⁶ den Definitionen (Nos 1 bis 200; entsprechend Verbindungen A1-1 bis A1-200) in der folgenden Tabelle 1 entsprechen.

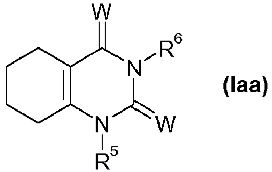

**Tabelle 1**

| No. | R⁵ | W | R⁶ |
|---|---|---|---|
| 1 | G-48 | O | H |
| 2 | G-49 | O | H |
| 3 | G-71 | O | H |
| 4 | G-72 | O | H |
| 5 | G-73 | O | H |
| 6 | G-1 | O | H |
| 7 | G-4 | O | H |
| 8 | G-6 | O | H |
| 9 | G-76 | O | H |
| 10 | G-77 | O | H |
| 11 | G-78 | O | H |
| 12 | G-79 | O | H |
| 13 | G-75 | O | H |
| 14 | G-80 | O | H |
| 15 | G-81 | O | H |
| 16 | G-82 | O | H |
| 17 | G-83 | O | H |
| 18 | G-86 | O | H |
| 19 | G-87 | O | H |
| 20 | G-88 | O | H |
| 21 | G-89 | O | H |
| 22 | G-90 | O | H |
| 23 | G-91 | O | H |
| 24 | G-92 | O | H |
| 25 | G-93 | O | H |
| 26 | G-94 | O | H |
| 27 | G-95 | O | H |
| 28 | G-96 | O | H |
| 29 | G-97 | O | H |
| 30 | G-98 | O | H |
| 31 | G-99 | O | H |
| 32 | G-100 | O | H |
| 33 | G-101 | O | H |
| 34 | G-102 | O | H |
| 35 | G-103 | O | H |
| 36 | G-104 | O | H |
| 37 | G-105 | O | H |
| 38 | G-106 | O | H |
| 39 | G-107 | O | H |
| 40 | G-109 | O | H |
| 41 | G-110 | O | H |
| 42 | G-3 | O | H |
| 43 | G-7 | O | H |
| 44 | G-11 | O | H |
| 45 | G-12 | O | H |
| 46 | G-113 | O | H |
| 47 | G-114 | O | H |
| 48 | G-115 | O | H |
| 49 | G-116 | O | H |
| 50 | G-117 | O | H |
| 51 | G-118 | O | H |
| 52 | G-119 | O | H |
| 53 | G-120 | O | H |
| 54 | G-121 | O | H |
| 55 | G-122 | O | H |
| 56 | G-123 | O | H |
| 57 | G-124 | O | H |
| 58 | G-125 | O | H |
| 59 | G-126 | O | H |
| 60 | G-127 | O | H |
| 61 | G-128 | O | H |
| 62 | G-129 | O | H |
| 63 | G-130 | O | H |
| 64 | G-131 | O | H |
| 65 | G-132 | O | H |
| 66 | G-133 | O | H |
| 67 | G-134 | O | H |
| 68 | G-135 | O | H |
| 69 | G-136 | O | H |
| 70 | G-137 | O | H |
| 71 | G-138 | O | H |
| 72 | G-139 | O | H |
| 73 | G-140 | O | H |
| 74 | G-141 | O | H |
| 75 | G-142 | O | H |
| 76 | G-143 | O | H |
| 77 | G-144 | O | H |
| 78 | G-145 | O | H |
| 79 | G-146 | O | H |
| 80 | G-147 | O | H |
| 81 | G-150 | O | H |
| 82 | G-151 | O | H |
| 83 | G-152 | O | H |
| 84 | G-153 | O | H |
| 85 | G-154 | O | H |
| 86 | G-155 | O | H |
| 87 | G-156 | O | H |
| 88 | G-157 | O | H |
| 89 | G-158 | O | H |
| 90 | G-159 | O | H |
| 91 | G-160 | O | H |
| 92 | G-161 | O | H |
| 93 | G-162 | O | H |
| 94 | G-163 | O | H |
| 95 | G-164 | O | H |
| 96 | G-165 | O | H |
| 97 | G-196 | O | H |
| 98 | G-197 | O | H |
| 99 | G-198 | O | H |
| 100 | G-199 | O | H |
| 101 | G-200 | O | H |
| 102 | G-201 | O | H |
| 103 | G-202 | O | H |
| 104 | G-203 | O | H |
| 105 | G-204 | O | H |
| 106 | G-205 | O | H |
| 107 | G-206 | O | H |
| 108 | G-207 | O | H |
| 109 | G-208 | O | H |
| 110 | G-209 | O | H |
| 111 | G-210 | O | H |
| 112 | G-211 | O | H |
| 113 | G-212 | O | H |
| 114 | G-213 | O | H |
| 115 | G-214 | O | H |
| 116 | G-215 | O | H |
| 117 | G-216 | O | H |
| 118 | G-217 | O | H |
| 119 | G-218 | O | H |
| 120 | G-219 | O | H |
| 121 | G-220 | O | H |
| 122 | G-221 | O | H |
| 123 | G-222 | O | H |
| 124 | G-223 | O | H |
| 125 | G-224 | O | H |
| 126 | G-225 | O | H |
| 127 | G-226 | O | H |
| 128 | G-227 | O | H |
| 129 | G-228 | O | H |
| 130 | G-229 | O | H |
| 131 | G-230 | O | H |
| 132 | G-231 | O | H |
| 133 | G-232 | O | H |
| 134 | G-233 | O | H |
| 135 | G-234 | O | H |
| 136 | G-235 | O | H |
| 137 | G-236 | O | H |
| 138 | G-237 | O | H |
| 139 | G-238 | O | H |
| 140 | G-239 | O | H |
| 141 | G-251 | O | H |
| 142 | G-252 | O | H |
| 143 | G-253 | O | H |
| 144 | G-254 | O | H |
| 145 | G-255 | O | H |
| 146 | G-256 | O | H |
| 147 | G-257 | O | H |
| 148 | G-258 | O | H |
| 149 | G-259 | O | H |
| 150 | G-47 | O | H |
| 151 | G-1 | O | CH₃ |
| 152 | G-4 | O | CH₃ |
| 153 | G-134 | O | CH₃ |
| 154 | G-76 | O | CH₃ |
| 155 | G-48 | O | CH₃ |
| 156 | G-72 | O | CH₃ |
| 157 | G-103 | O | CH₃ |
| 158 | G-104 | O | CH₃ |
| 159 | G-119 | O | CH₃ |
| 160 | G-126 | O | CH₃ |
| 161 | G-1 | S | H |
| 162 | G-4 | S | H |
| 163 | G-134 | S | H |
| 164 | G-76 | S | H |
| 165 | G-48 | S | H |
| 166 | G-72 | S | H |
| 167 | G-103 | S | H |
| 168 | G-104 | S | H |
| 169 | G-119 | S | H |
| 170 | G-126 | S | H |
| 171 | G-1 | O | 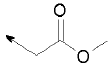 |
| 172 | G-4 | O | 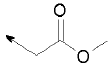 |
| 173 | G-134 | O | 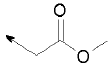 |
| 174 | G-76 | O | 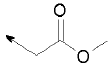 |
| 175 | G-48 | O | 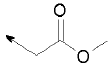 |
| 176 | G-72 | O | 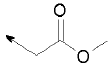 |
| 177 | G-103 | O | 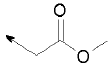 |
| 178 | G-104 | O | 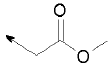 |
| 179 | G-119 | O | 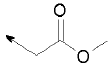 |
| 180 | G-126 | O | 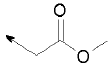 |
| 181 | G-1 | O | 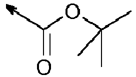 |
| 182 | G-4 | O | 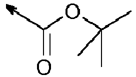 |
| 183 | G-134 | O | 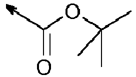 |
| 184 | G-76 | O | 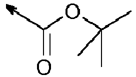 |
| 185 | G-48 | O | 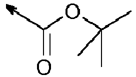 |
| 186 | G-72 | O | 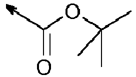 |
| 187 | G-103 | O | 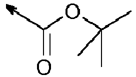 |
| 188 | G-104 | O | 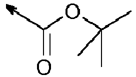 |
| 189 | G-119 | O | 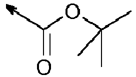 |
| 190 | G-126 | O | 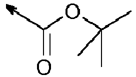 |
| 191 | G-1 | O | Ethyl |
| 192 | G-4 | O | Ethyl |
| 193 | G-134 | O | Ethyl |
| 194 | G-76 | O | Ethyl |
| 195 | G-48 | O | Ethyl |
| 196 | G-72 | O | Ethyl |
| 197 | G-103 | O | Ethyl |
| 198 | G-104 | O | Ethyl |
| 199 | G-119 | O | Ethyl |
| 200 | G-126 | O | Ethyl |

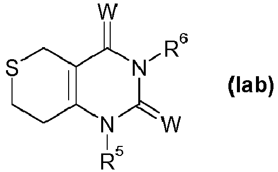

A2. Verbindungen A2-1 bis A2-200 der allgemeinen Formel (Iab), worin W, R⁵, R⁶ den Definitionen (Nos 1 bis 200; entsprechend Verbindungen A2-1 bis A2-200) in der oben stehenden Tabelle 1 entsprechen. 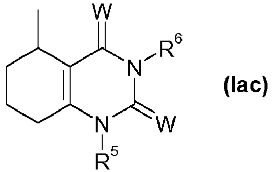 A3. Verbindungen A3-1 bis A3-200 der allgemeinen Formel (Iac), worin W, R⁵, R⁶ den Definitionen (Nos 1 bis 200; entsprechend Verbindungen A3-1 bis A3-200) in der oben stehenden Tabelle 1 entsprechen. 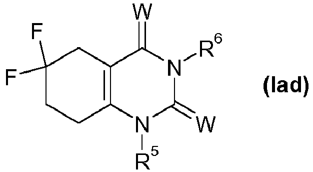 A4. Verbindungen A4-1 bis A4-200 der allgemeinen Formel (Iad), worin W, R⁵, R⁶ den Definitionen (Nos 1 bis 200; entsprechend Verbindungen A4-1 bis A4-200) in der oben stehenden Tabelle 1 entsprechen. 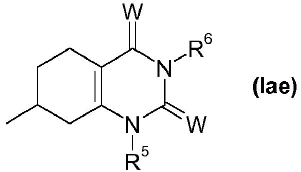 A5. Verbindungen A5-1 bis A5-200 der allgemeinen Formel (Iae), worin W, R⁵, R⁶ den Definitionen (Nos 1 bis 200; entsprechend Verbindungen A5-1 bis A5-200) in der oben stehenden Tabelle 1 entsprechen. 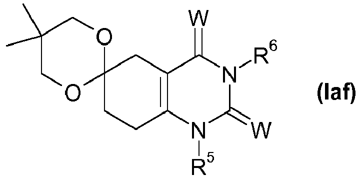 A6. Verbindungen A6-1 bis A6-200 der allgemeinen Formel (Iaf), worin W, R⁵, R⁶ den Definitionen (Nos 1 bis 200; entsprechend Verbindungen A6-1 bis A6-200) in der oben stehenden Tabelle 1 entsprechen. 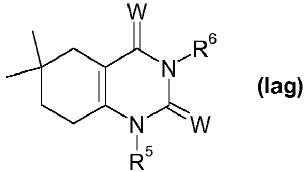 A7. Verbindungen A7-1 bis A7-200 der allgemeinen Formel (Iag), worin W, R⁵, R⁶ den Definitionen (Nos 1 bis 200; entsprechend Verbindungen A7-1 bis A7-200) in der oben stehenden Tabelle 1 entsprechen. 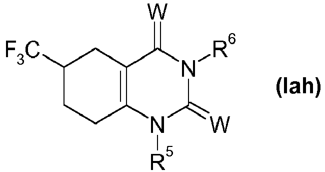 A8. Verbindungen A8-1 bis A8-200 der allgemeinen Formel (Iah), worin W, R⁵, R⁶ den Definitionen (Nos 1 bis 200; entsprechend Verbindungen A8-1 bis A8-200) in der oben stehenden Tabelle 1 entsprechen. 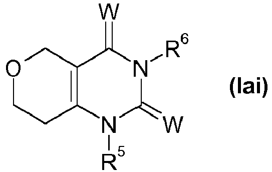 A9. Verbindungen A9-1 bis A9-200 der allgemeinen Formel (Iai), worin W, R⁵, R⁶ den Definitionen (Nos 1 bis 200; entsprechend Verbindungen A9-1 bis A9-200) in der oben stehenden Tabelle 1 entsprechen. 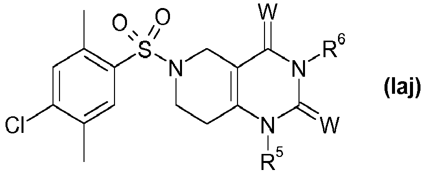 A10. Verbindungen A10-1 bis A10-200 der allgemeinen Formel (Iaj), worin W, R⁵, R⁶ den Definitionen (Nos 1 bis 200; entsprechend Verbindungen A10-1 bis A10-200) in der oben stehenden Tabelle 1 entsprechen. 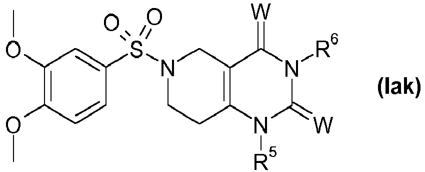 A11. Verbindungen A11-1 bis A11-200 der allgemeinen Formel (Iak), worin W, R⁵, R⁶ den Definitionen (Nos 1 bis 200; entsprechend Verbindungen A11-1 bis A11-200) in der oben stehenden Tabelle 1 entsprechen. 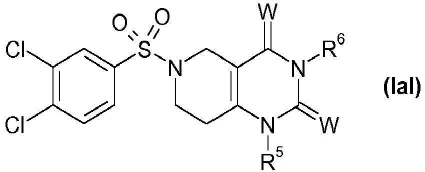 A12. Verbindungen A12-1 bis A12-200 der allgemeinen Formel (Ia1), worin W, R⁵, R⁶ den Definitionen (Nos 1 bis 200; entsprechend Verbindungen A12-1 bis A12-200) in der oben stehenden Tabelle 1 entsprechen. 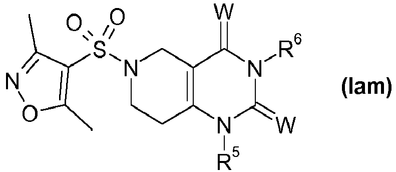 A13. Verbindungen A13-1 bis A13-200 der allgemeinen Formel (Iam), worin W, R⁵, R⁶ den Definitionen (Nos 1 bis 200; entsprechend Verbindungen A13-1 bis A13-200) in der oben stehenden Tabelle 1 entsprechen. 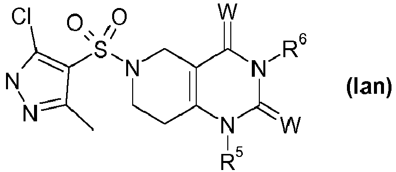 A14. Verbindungen A14-1 bis A14-200 der allgemeinen Formel (Ian), worin W, R⁵, R⁶ den Definitionen (Nos 1 bis 200; entsprechend Verbindungen A14-1 bis A14-200) in der oben stehenden Tabelle 1 entsprechen. 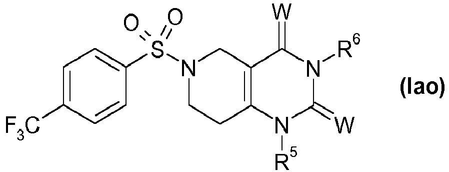 A15. Verbindungen A15-1 bis A15-200 der allgemeinen Formel (Iao), worin W, R⁵, R⁶ den Definitionen (Nos 1 bis 200; entsprechend Verbindungen A15-1 bis A15-200) in der oben stehenden Tabelle 1 entsprechen. 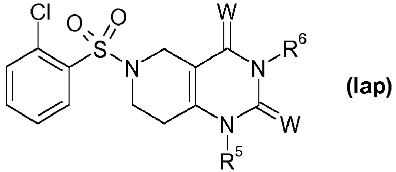 A16. Verbindungen A16-1 bis A16-200 der allgemeinen Formel (Iap), worin W, R⁵, R⁶ den Definitionen (Nos 1 bis 200; entsprechend Verbindungen A16-1 bis A16-200) in der oben stehenden Tabelle 1 entsprechen. 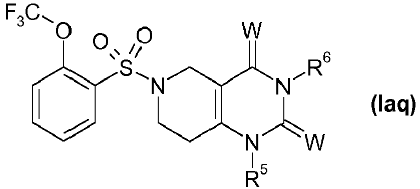 A17. Verbindungen A17-1 bis A17-200 der allgemeinen Formel (Iaq), worin W, R⁵, R⁶ den Definitionen (Nos 1 bis 200; entsprechend Verbindungen A17-1 bis A17-200) in der oben stehenden Tabelle 1 entsprechen. 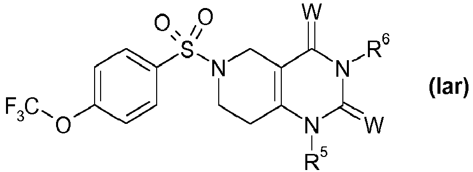 A18. Verbindungen A18-1 bis A18-200 der allgemeinen Formel (Iar), worin W, R⁵, R⁶ den Definitionen (Nos 1 bis 200; entsprechend Verbindungen A18-1 bis A18-200) in der oben stehenden Tabelle 1 entsprechen. 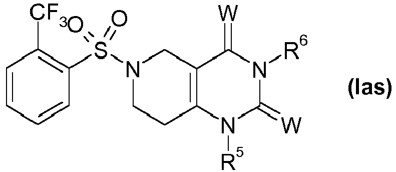 A19. Verbindungen A19-1 bis A19-200 der allgemeinen Formel (Ias), worin W, R⁵, R⁶ den Definitionen (Nos 1 bis 200; entsprechend Verbindungen A19-1 bis A19-200) in der oben stehenden Tabelle 1 entsprechen. 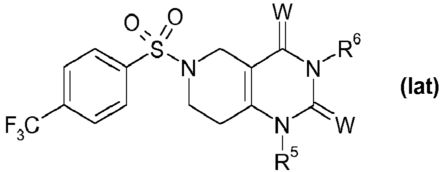 A20. Verbindungen A20-1 bis A20-200 der allgemeinen Formel (Iat), worin W, R⁵, R⁶ den Definitionen (Nos 1 bis 200; entsprechend Verbindungen A20-1 bis A20-200) in der oben stehenden Tabelle 1 entsprechen. 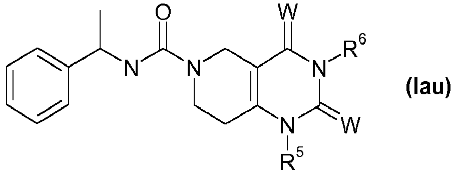 A21. Verbindungen A21-1 bis A21-200 der allgemeinen Formel (Iau), worin W, R⁵, R⁶ den Definitionen (Nos 1 bis 200; entsprechend Verbindungen A21-1 bis A21-200) in der oben stehenden Tabelle 1 entsprechen. 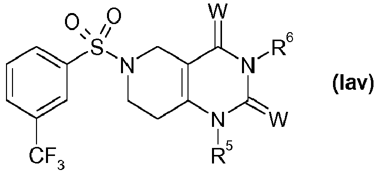 A22. Verbindungen A22-1 bis A22-200 der allgemeinen Formel (Iav), worin W, R⁵, R⁶ den Definitionen (Nos 1 bis 200; entsprechend Verbindungen A22-1 bis A22-200) in der oben stehenden Tabelle 1 entsprechen. 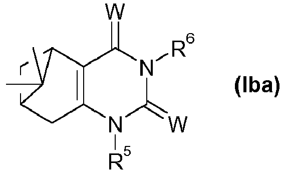 B1. Verbindungen B1-1 bis B1-200 der allgemeinen Formel (Iba), worin W, R⁵, R⁶ den Definitionen (Nos 1 bis 200; entsprechend Verbindungen B1-1 bis B1-200) in der oben stehenden Tabelle 1 entsprechen. 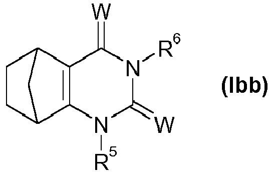 B2. Verbindungen B2-1 bis B2-200 der allgemeinen Formel (Ibb), worin W, R⁵, R⁶ den Definitionen (Nos 1 bis 200; entsprechend Verbindungen B2-1 bis B2-200) in der oben stehenden Tabelle 1 entsprechen. 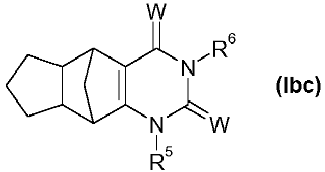 B3. Verbindungen B3-1 bis B3-200 der allgemeinen Formel (Ibc), worin W, R⁵, R⁶ den Definitionen (Nos 1 bis 200; entsprechend Verbindungen B3-1 bis B3-200) in der oben stehenden Tabelle 1 entsprechen. 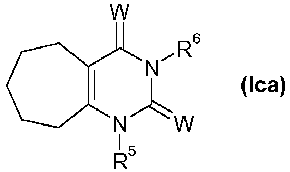 C1. Verbindungen C1-1 bis C1-200 der allgemeinen Formel (Ica), worin W, R⁵, R⁶ den Definitionen (Nos 1 bis 200; entsprechend Verbindungen C1-1 bis C1-200) in der oben stehenden Tabelle 1 entsprechen.

Spektroskopische Daten ausgewählter Tabellenbeispiele:
Beispiel No. A1-1:
   ¹H-NMR (400 MHz, CD₃OD δ, ppm) 8.20 (br. s, 1H, NH), 7.25 (m, 1H), 7.02 (m, 1H), 6.95 (m, 1H), 5.20 (s, 1H), 2.62 (t, 2H), 2.40 (t, 2H), 1.78 (m, 2H), 1.64 (m, 2H).
Beispiel No. A1-4:
   ¹H-NMR (400 MHz, d₆-DMSO δ, ppm) 11.3 (s, 1H, NH), 8.92 (s, 1H), 7.50 (s, 1H), 3.95 (m, 2H), 3.35 (m, 2H), 2.65 (m, 2H), 2.55 (m, 2H), 1.70 (m, 2H), 1.55 (m, 2H).
Beispiel No. A1-6:
   ¹H-NMR (400 MHz, CD₃OD δ, ppm) 8.33 (br. s, 1H, NH), 3.78 (m, 2H), 3.65 (m, 1H), 2.58 (m, 2H), 2.50 (m, 2H), 2.42 (m, 2H), 1.90 (m, 4H), 1.81 (m, 2H), 1.67 (m, 2H), 1.38 (m, 2H).
Beispiel No. A1-7:
   ¹H-NMR (400 MHz, d₆-DMSO δ, ppm) 10.96 (d, 1H, NH), 3.80 (s, 1H), 3.30 (m, 3H), 2.61 (m, 1H), 2.43 (m, 1H), 2.20 (t, 2H), 1.85 (m, 1H), 1.70 (m, 3H), 1.55 (m, 4H), 1.36 (m, 2H), 1.00 (d, 3H).
Beispiel No. A1-9:
   ¹H-NMR (400 MHz, CD₃OD δ, ppm) 8.27 (br. s, 1H, NH), 7.30 (m, 2H), 7.25 (m, 1H), 7.20 (m, 2H), 4.00 (t, 2H), 2.95 (t, 2H), 2.38 (t, 2H), 2.24 (t, 2H), 1.68 (m, 2H), 1.55 (m, 2H).
Beispiel No. A1-10:
   ¹H-NMR (400 MHz, CD₃OD δ, ppm) 8.55 (br. s, 1H, NH), 7.25 (m, 3H), 7.17 (m, 2H), 4.10 (dd, 1H), 3.60 (dd, 1H), 3.30 (sextett, 1H), 2.30 (m, 2H), 2.20 (m, 1H), 1.75 (m, 1H), 1.50 (m, 3H), 1.35 (d, 3H), 1.25 (m, 1H).
Beispiel No. A1-11:
   ¹H-NMR (400 MHz, CD₃OD δ, ppm) 8.50 (br. s, 1H, NH), 7.50 (m, 1H), 7.35 (m, 3H), 4.0 (t, 2H), 3.10 (t, 2H), 2.35 (m, 4H), 1.69 (m, 2H), 1.59 (m, 2H).
Beispiel No. A1-13:
   ¹H-NMR (400 MHz, d₆-DMSO δ, ppm) 11.08 (d, 1H, NH), 3.98 (s, 1H), 3.30 (s, 1H), 2.77 (m, 2H), 2.45 (m, 1H), 2.35 (m, 1H), 2.20 (m, 2H), 1.80 (m, 3H), 1.65 (m, 3H), 1.53 (m, 2H), 1.42 (m, 1H), 1.14 (m, 1H).
Beispiel No. A1-14:
   ¹H-NMR (400 MHz, CD₃OD δ, ppm) 8.10 (br. s, 1H, NH), 7.30 (m, 2H), 7.11 (m, 2H), 3.95 (t, 2H), 2.93 (t, 2H), 2.4 (t, 2H), 2.30 (t, 2H), 1.70 (m, 2H), 1.6 (m, 2H).
Beispiel No. A1-17:
   ¹H-NMR (400 MHz, CD₃OD δ, ppm) 8.56 (br. s, 1H, NH), 7.18 (dd, 2H), 7.00 (t, 2H), 3.97 (t, 2H), 2.93 (t, 2H), 2.39 (t, 2H), 2.29 (t, 2H), 1.70 (m, 2H), 1.60 (m, 2H).
Beispiel No. A1-20:
   ¹H-NMR (400 MHz, CD₃OD δ, ppm) 8.40 (br. s, 1H, NH), 7.42 (d, 2H), 7.08 (d, 2H), 3.95 (t, 2H), 2.90 (t, 2H), 2.39 (t, 2H), 2.30 (t, 2H), 1.71 (m, 2H), 1.60 (m, 2H).
Beispiel No. A1-21:
   ¹H-NMR (400 MHz, CD₃OD δ, ppm) 8.45 (br. s, 1H, NH), 7.4 (s, 1H), 7.2 (s, 2H), 3.97 (t, 2H), 3.08 (t, 2H), 2.38 (t, 4H), 1.72 (m, 2H), 1.60 (m, 2H).
Beispiel No. A1-24:
   ¹H-NMR (400 MHz, CD₃OD δ, ppm) 8.48 (br. s, 1H, NH), 7.52 (d, 1H), 7.45 (m, 3H), 4.00 (t, 2H), 3.03 (t, 2H), 2.38 (t, 2H), 2.30 (t, 2H), 1.72 (m, 2H), 1.60 (m, 2H).
Beispiel No. A1-30:
   ¹H-NMR (400 MHz, d₆-DMSO δ, ppm) 11.2 (s, 1H, NH), 7.10 (m, 4H), 3.85 (t, 2H), 2.80 (t, 2H), 2.40 (t, 2H), 2.25 (s, 3H), 2.17 (t, 2H), 1.60 (m, 2H), 1.50 (m, 2H).
Beispiel No. A1-31:
   ¹H-NMR (400 MHz, CD₃OD δ, ppm) 8.53 (d, 1H), 7.60 (t, 1H), 7.17 (d, 1H), 7.10 (m, 1H), 2.70 (m, 2H), 2.33 (m, 3H), 2.18 (m, 2H), 2.04 (m, 1H), 1.85 (m, 1H), 1.68 (m, 2H), 1.45 (m, 1H).
Beispiel No. A1-33:
   ¹H-NMR (400 MHz, CD₃OD δ, ppm) 8.40 (br. s, 1H, NH), 7.13 (m, 2H), 6.85 (m, 2H), 3.97 (t, 2H), 3.80 (d, 3H), 3.40 (m, 2H), 2.97 (m, 2H), 2.83 (m, 2H), 1.65 (m, 2H), 1.55 (m, 2H).
Beispiel No. A1-35:
   ¹H-NMR (400 MHz, CD₃OD δ, ppm) 8.20 (br. s, 1H, NH), 7.10 (d, 2H), 6.82 (d, 2H), 3.95 (t, 2H), 3.78 (s, 3H), 2.88 (t, 2H), 2.38 (t, 2H), 2.27 (t, 2H), 1.70 (m, 2H), 1.58 (m, 2H).
Beispiel No. A1-37:
   ¹H-NMR (400 MHz, CD₃OD δ, ppm) 8.10 (br. s, 1H, NH), 6.75 (d, 1H), 6.69 (s, 1H), 6.63 (dd, 1H), 5.92 (s, 2H), 3.92 (t, 2H), 2.85 (t, 2H), 2.35 (t, 2H), 2.39 (t, 2H), 2.33 (t, 2H), 1.72 (m, 2H), 1.62 (m, 2H).
Beispiel No. A1-42:
   ¹H-NMR (400 MHz, CD₃OD δ, ppm) 8.06 (br. s, 1H, NH), 3.80 (m, 1H), 2,45 (m, 2H), 2.40 (m, 2H), 2.23 (m, 1H), 1.80 (m, 3H), 1.62 (m, 4H), 1.43 (m, 1H), 1.25 (m, 2H), 1.07 (d, 1H), 0.93 (d, 3H), 1.89 (m, 1H).
Beispiel No. A1-50:
   ¹H-NMR (400 MHz, CD₃OD δ, ppm) 8.80 (br. s, 1H, NH), 7.27 (m, 2H), 7.18 (s, 1H), 7.05 (m, 1H), 5.08 (s, 2H), 2.40 (m, 4H), 1.72 (m, 2H), 1.62 (m, 2H).
Beispiel No. A1-52:
   ¹H-NMR (400 MHz, d₆-DMSO δ, ppm) 11.42 (d, 1H, NH), 7.68 (d, 1H), 7.40 (d, 1H), 6.97 (d, 1H), 5.01 (s, 2H), 2.34 (m, 2H), 2.24 (m, 2H), 1.63 (m, 2H), 1.53 (m, 2H).
Beispiel No. A1-54:
   ¹H-NMR (400 MHz, CD₃OD δ, ppm) 8.74 (br. s, 1H, NH), 7.17 (m, 2H), 7.00 (m, 2H), 5.05 (s, 2H), 2.40 (m, 4H), 1.72 (m, 2H), 1.62 (m, 2H).
Beispiel No. A1-57:
   ¹H-NMR (400 MHz, d₆-DMSO δ, ppm) 11.39 (br. s, 1H, NH), 7.29 (t, 1H), 7.10 (m, 2H), 5.06 (s, 2H), 2.40 (t, 2H), 2.23 (t, 2H), 1.64 (m, 2H), 1.54 (m, 2H).
Beispiel No. A1-58:
   ¹H-NMR (400 MHz, d₆-DMSO δ, ppm) 11.42 (br. s, 1H, NH), 7.51 (dd, 1H), 7.20 (m, 1H), 7.00 (t, 1H), 5.00 (s, 2H), 2.34 (t, 2H), 2.23 (t, 2H), 1.61 (m, 2H), 1.53 (m, 2H).
Beispiel No. A1-59:
   ¹H-NMR (400 MHz, CD₃OD δ, ppm) 8.73 (br. s, 1H, NH), 5.15 (br. s, 2H), 2,44 (m, 4H), 1.72 (m, 2H), 1.63 (m, 2H).
Beispiel No. A1-60:
   ¹H-NMR (400 MHz, CD₃OD δ, ppm) 8.69 (br. s, 1H, NH), 7.55 (d, 1H), 7.49 (m, 2H), 7.36 (d, 1H), 5.14 (s, 2H), 2.40 (m, 4H), 1.72 (m, 2H), 1.62 (m, 2H).
Beispiel No. A1-61:
   ¹H-NMR (400 MHz, d₆-DMSO δ, ppm) 11.44 (br. s, 1H, NH), 7.79 (t, 1H), 7.67 (t, 1H), 7.75 (t, 1H), 7.08 (d, 1H), 5.18 (s, 2H), 2.32 (m, 2H), 2.25 (m, 2H), 1.58 (m, 4H).
Beispiel No. A1-67:
   ¹H-NMR (400 MHz, d₆-DMSO δ, ppm) 11.39 (br. s, 1H, NH), 7.48 (d, 1H), 7.25 (d, 1H), 7.09 (t, 1H), 5.04 (s, 2H), 2.40 (t, 2H), 2.21 (t, 2H), 1.62 (m, 2H), 1.52 (m, 2H).
Beispiel No. A1-73:
   ¹H-NMR (400 MHz, CD₃OD δ, ppm) 8.92 (br. s, 1H, NH), 7.50 (d, 1H), 7.30 (d, 1H), 7.15 (m, 2H), 5.10 (s, 2H), 2.40 (m, 4H), 1.72 (m, 2H), 1.62 (m, 2H).
Beispiel No. A1-82:
   ¹H-NMR (400 MHz, CD₃OD δ, ppm) 8.55 (d, 1H), 8.12 (br. s, 1H, NH), 7.68 (t, 1H), 7.21 (m, 2H), 5.18 (s, 2H), 2.55 (m, 2H), 2.40 (m, 4H), 1.72 (m, 2H).
Beispiel No. A1-147:
   ¹H-NMR (400 MHz, CD₃OD δ, ppm) 8.54 (br. s, 1H, NH), 3.80 (d, 2H), 3.45 (t, 2H), 3.36 (m, 2H), 2.52 (t, 4H), 2.4 (t, 2H), 1.82 (m, 4H), 1.69 (m, 8H).
Beispiel No. A2-1:
   ¹H-NMR (400 MHz, CD₃OD δ, ppm) 8.49 (br. s, 1H, NH), 7.23 (d, 1H), 7.01 (d, 1H), 7.96 (t, 1H), 5.24 (s, 2H), 3.52 (s, 2H), 2.94 (d, 2H), 2.85 (t, 2H).
Beispiel No. A2-6:
   ¹H-NMR (400 MHz, d₆-DMSO δ, ppm) 11.20 (d, 1H, NH), 3.82 (br. s, 1H), 3.33 (s, 1H), 2.81 (s, 4H), 2.37 (m, 2H), 1.74 (m, 2H), 1.60 (m, 4H), 1.30 (m, 2H).
Beispiel No. A2-17:
   ¹H-NMR (400 MHz, d₆-DMSO δ, ppm) 11.44 (br. s, 1H, NH), 7.27 (t, 2H), 7.13 (t, 2H), 3.90 (t, 2H), 3.35 (s, 2H), 3.30 (d, 2H), 2.70 (m, 4H).
Beispiel No. A3-50:
   ¹H-NMR (400 MHz, d₆-DMSO δ, ppm) 11.33 (br. s, 1H, NH), 7.39-7.26 (m, 3H), 7.15 (m, 1H), 5.18 (m, 2H), 2.74 (m, 1H), 2.54-2.22 (m, 2H), 2.20-1.98 (m, 1H), 1.67 (m, 2H), 1.51 (m, 1H), 1.05/0.92 (d, 3H).
Beispiel No. A3-54:
   ¹H-NMR (400 MHz, d₆-DMSO δ, ppm) 11.35 (br. s, 1H, NH), 7.26-7.15 (m, 4H), 5.03 (m, 2H), 2.75-2.25 (m, 2H), 2.22-1.97 (m, 2H), 1.66 (m, 2H), 1.47 (m, 1H), 1.06/0.91 (d, 3H).
Beispiel No. A3-59:
   ¹H-NMR (400 MHz, d₆-DMSO δ, ppm) 11.39 (br. s, 1H, NH), 7.71 (d, 2H), 7.38 (d, 2H), 5.21 (m, 2H), 2.75 (m, 1H), 2.54-2.22 (m, 2H), 2.20-1.98 (m, 1H), 1.67 (m, 2H), 1.51 (m, 1H), 1.05/0.92 (d, 3H).
Beispiel No. A4-6:
   ¹H-NMR (400 MHz, d₆-DMSO δ, ppm) 11.26 (br. s, 1H, NH), 3.80 (m, 1H), 2.86 (m, 2H), 2.74 (m, 2H), 2.49-2.19 (m, 4H), 1.79-1.60 (m, 4H), 1.35-1.06 (m, 4H).
Beispiel No. A4-50:
   ¹H-NMR (400 MHz, d₆-DMSO δ, ppm) 11.63 (br. s, 1H, NH), 7.39-7.26 (m, 3H), 7.15 (m, 1H), 5.09 (m, 2H), 2.82-2.68 (m, 4H), 2.17 (m, 2H).
Beispiel No. A4-54:
   ¹H-NMR (400 MHz, d₆-DMSO δ, ppm) 11.62 (br. s, 1H, NH), 7.27-7.16 (m, 4H), 5.06 (m, 2H), 2.83-2.68 (m, 4H), 2.17 (m, 2H).
Beispiel No. A4-59:
   ¹H-NMR (400 MHz, d₆-DMSO δ, ppm) 11.67 (br. s, 1H, NH), 7.74 (d, 2H), 7.43 (d, 2H), 5.18 (m, 2H), 2.84-2.70 (m, 4H), 2.19 (m, 2H).
Beispiel No. A4-109:
   ¹H-NMR (400 MHz, CDCl₃ δ, ppm) 9.03 (br. s, 1H, NH), 4.19-4.07 (m, 4H), 2.97-2.87 (m, 4H), 2.82-2.73 (m, 2H), 2.33-2.20 (m, 2H), 1.26 (t, 3H).
Beispiel No. A5-6:
   ¹H-NMR (400 MHz, CDCl₃ δ, ppm) 8.41 (br. s, 1H, NH), 3.80 (m, 1H), 2.54-2.46 (m, 4H), 2.24 (m, 2H), 1.87 (m, 2H), 1.69-1.54 (m, 5H), 1.27 (m, 3H), 0.97 (s, 6H).
Beispiel No. A5-109:
   ¹H-NMR (400 MHz, CDCl₃ δ, ppm) 8.88 (br. s, 1H, NH), 4.17 (m, 2H), 4.05 (m, 2H), 2.82-2.50 (m, 4H), 2.48 (m, 1H), 2.35 (m, 1H), 2.31-2.25 (m, 1H), 1.95-1.68 (m, 2H), 1.27 (t, 3H), 1.16 / 1.12 (d, 3H).
Beispiel No. A6-6:
   ¹H-NMR (400 MHz, CDCl₃ δ, ppm) 8.53 (br. s, 1H, NH), 4.06-3.96 (m, 1H), 3.66 (m, 2H), 3.44 (m, 2H), 2.82 (m, 2H), 2.68-2.50 (m, 4H), 2.06-2.01 (m, 2H), 1.86 (m, 3H), 1.72-1.63 (m, 2H), 1.29-1.14 (m, 3H), 1.10 (s, 3H), 0.87 (s, 3H).
Beispiel No. A6-54:
   ¹H-NMR (400 MHz, CDCl₃ δ, ppm) 8.77 (br. s, 1H, NH), 7.21-7.16 (m, 2H), 7.07-7.01 (m, 2H), 5.05 (s, 2H), 3.65 (m, 2H), 3.42 (m, 2H), 2.82 (m, 2H), 2.61 (m, 2H), 1.94 (m, 2H), 1.06 (s, 3H), 0.87 (s, 3H).
Beispiel No. A6-59:
   ¹H-NMR (400 MHz, d₆-DMSO δ, ppm) 11.47 (br. s, 1H, NH), 7.74 (d, 2H), 7.39 (d, 2H), 5.14 (s, 2H), 3.44 (m, 4H), 2.54 (m, 4H), 1.93 (m, 2H), 0.91 (s, 3H), 0.87 (s, 3H).
Beispiel No. A7-3:
   ¹H-NMR (400 MHz, CDCl₃ δ, ppm) 8.75 (br. s, 1H, NH), 4.56 (m, 2H), 2.52 (m, 2H), 2.24 (m, 2H), 1.59 (m, 2H), 0.98 (s, 6H).
Beispiel No. A7-50:
   ¹H-NMR (400 MHz, CDCl₃ δ, ppm) 8.60 (br. s, 1H, NH), 7.25 (m, 2H), 7.16 (m, 1H), 7.04 (m, 1H), 5.09 (s, 2H), 2.42 (m, 2H), 2.23 (m, 2H), 1.48 (m, 2H), 0.94 (s, 6H).
Beispiel No. A7-59:
   ¹H-NMR (400 MHz, CDCl₃ δ, ppm) 8.74 (br. s, 1H, NH), 7.63 (d, 2H), 7.30 (d, 2H), 5.17 (s, 2H), 2.41 (m, 2H), 2.24 (m, 2H), 1.47 (m, 2H), 0.94 (s, 6H).
Beispiel No. A7-60:
   ¹H-NMR (400 MHz, CDCl₃ δ, ppm) 8.77 (br. s, 1H, NH), 7.57 (m, 1H), 7.50 (m, 1H), 7.40 (m, 1H), 7.35 (m, 1H), 5.17 (s, 2H), 2.43 (m, 2H), 2.24 (m, 2H), 1.50 (m, 2H), 0.94 (s, 6H).
Beispiel No. A7-150:
   ¹H-NMR (400 MHz, CDCl₃ δ, ppm) 8.82 (br. s, 1H, NH), 7.38-7.26 (m, 3H), 7.17-7.14 (m, 2H), 5.12 (s, 2H), 4.39 (m, 1H), 2.44 (m, 2H), 2.22 (m, 2H), 1.45 (m, 2H), 0.92 (s, 6H).
Beispiel No. A8-50:
   ¹H-NMR (400 MHz, d₆-DMSO δ, ppm) 11.53 (br. s, 1H, NH), 7.43-7.36 (m, 2H), 7.29 (m, 1H), 7.15 (m, 1H), 5.09 (m, 2H), 2.68-2.50 (m, 4H), 2.19-2.01 (m, 2H), 1.56 (m, 1H).
Beispiel No. A8-54:
   ¹H-NMR (400 MHz, CDCl₃ δ, ppm) 9.03 (br. s, 1H, NH), 7.17 (m, 2H), 7.05 (m, 2H), 5.17-5.01 (m, 2H), 2.90-2.84 (m, 1H), 2.74-2.67 (m, 1H), 2.50-2.11 (m, 3H), 1.69-1.61 (m, 2H).
Beispiel No. A8-59:
   ¹H-NMR (400 MHz, CDCl₃ δ, ppm) 9.11 (br. s, 1H, NH), 7.64 (d, 2H), 7.31 (d, 2H), 5.25-5.09 (m, 2H), 2.94-2.84 (m, 1H), 2.70-2.61 (m, 1H), 2.50-2.18 (m, 3H), 1.69-1.60 (m, 2H).
Beispiel No. A11-9:
   ¹H-NMR (400 MHz, CDCl₃ δ, ppm) 8.17 (br. s, 1H, NH), 7.44 (m, 1H), 7.29-7.20 (m, 3H), 7.15 (m, 3H), 6.97 (m, 1H), 3.97-3.93 (m, 7H), 3.91 (s, 3H), 3.16 (m, 2H), 2.92 (m, 2H), 2.40 (m, 2H).
Beispiel No. A16-35:
   ¹H-NMR (400 MHz, CDCl₃ δ, ppm) 8.32 (br. s, 1H, NH), 8.12 (m, 1H), 7.52 (m, 2H), 7.43 (m, 1H), 7.08 (m, 2H), 6.85 (m, 2H), 4.02 (m, 1H), 3.94 (m, 1H), 3.79 (s, 3H), 3.69 (m, 1H), 3.50 (m, 2H), 3.12 (m, 1H), 2.91 (m, 2H), 2.38 (m, 2H).
Beispiel No. B1-54:
   ¹H-NMR (400 MHz, CDCl₃ δ, ppm) 8.75 (br. s, 1H, NH), 7.18 (m, 2H), 7.03 (m, 2H), 5.33 (m, 1H), 4.86 (m, 1H), 2.82 (m, 1H), 2.67 (m, 1H), 2.61-2.48 (m, 2H), 2.26 (m, 1H), 1.80 (m, 1H), 1.23 (s, 3H), 0.54 (s, 3H).
Beispiel No. B1-60:
   ¹H-NMR (400 MHz, CDCl₃ δ, ppm) 8.67 (br. s, 1H, NH), 7.28 (m, 2H), 7.12 (m, 1H), 7.04 (m, 1H), 5.34 (m, 1H), 4.86 (m, 1H), 2.78 (m, 1H), 2.66 (m, 1H), 2.61-2.48 (m, 2H), 2.27 (m, 1H), 1.80 (m, 1H), 1.23 (s, 3H), 0.58 (s, 3H).
Beispiel No. B1-109:
   ¹H-NMR (400 MHz, CDCl₃ δ, ppm) 8.74 (br. s, 1H, NH), 4.19-4.07 (m, 4H), 2.93 (m, 1H), 2.70-2.53 (m, 6H), 2.36 (m, 1H), 1.43 (s, 3H), 1.26 (t, 3H), 0.84 (s, 3H).
Beispiel No. B2-3:
   ¹H-NMR (400 MHz, CDCl₃ δ, ppm) 8.41 (br. s, 1H, NH), 4.60 (m, 1H), 4.34 (m, 1H), 3.51 (s, 1H), 3.34 (s, 1H), 2.07-1.85 (m, 2H), 1.75 (m, 1H), 1.43 (m, 1H), 1.36-1.29 (m, 2H).
Beispiel No. B2-6:
   ¹H-NMR (400 MHz, d₆-DMSO δ, ppm) 10.81 (br. s, 1H, NH), 4.32 (m, 1H), 3.69 (m, 1H), 3.19 (m, 1H), 2.20-1.90 (m, 2H), 1.83-1.53 (m, 8H), 1.48-1.08 (m, 6H).
Beispiel No. B2-50:
   ¹H-NMR (400 MHz, d₆-DMSO δ, ppm) 11.04 (br. s, 1H, NH), 7.38 (m, 3H), 7.23 (m, 1H), 5.03 (m, 2H), 3.32 (m, 1H), 3.21 (m, 1H), 1.75 (m, 2H), 1.54 (m, 1H), 1.28 (m, 1H), 1.06 (m, 1H), 0.91 (m, 1H).
Beispiel No. B2-54:
   ¹H-NMR (400 MHz, d₆-DMSO δ, ppm) 11.03 (br. s, 1H, NH), 7.34 (m, 2H), 7.17 (m, 2H), 5.01 (m, 2H), 3.43 (m, 1H), 3.19 (m, 1H), 1.74 (m, 2H), 1.53 (m, 1H), 1.27 (m, 1H), 1.02 (m, 1H), 0.85 (m, 1H).
Beispiel No. B2-59:
   ¹H-NMR (400 MHz, d₆-DMSO δ, ppm) 11.04 (br. s, 1H, NH), 7.75 (d, 2H), 7.50 (d, 2H), 5.18 (m, 2H), 3.39 (m, 1H), 3.22 (m, 1H), 1.75 (m, 2H), 1.53 (m, 1H), 1.27 (m, 1H), 1.05 (m, 1H), 0.93 (m, 1H).
Beispiel No. B2-75:
   ¹H-NMR (400 MHz, d₆-DMSO δ, ppm) 10.97 (br. s, 1H, NH), 7.24 (d, 2H), 6.93 (d, 2H), 4.94 (m, 2H), 3.73 (s, 3H), 3.45 (m, 1H), 3.19 (m, 1H), 1.73 (m, 2H), 1.52 (m, 1H), 1.27 (m, 1H), 1.01 (m, 1H), 0.78 (m, 1H).
Beispiel No. B2-109:
   ¹H-NMR (400 MHz, CDCl₃ δ, ppm) 8.19 (br. s, 1H, NH), 4.22-4.13 (m, 4H), 3.61 (m, 1H), 3.53 (s, 1H), 2.91-2.66 (m, 2H), 2.58 (m, 2H), 2.09-1.92 (m, 2H), 1.73 (m, 1H), 1.48 (m, 1H), 1.26 (t, 3H).
Beispiel No. B2-150:
   ¹H-NMR (400 MHz, d₆-DMSO δ, ppm) 11.01 (br. s, 1H, NH), 7.34 (m, 2H), 7.28 (m, 3H), 5.02 (m, 2H), 3.39 (m, 1H), 3.20 (m, 1H), 1.71 (m, 2H), 1.50 (m, 1H), 1.25 (m, 1H), 1.02 (m, 1H), 0.86 (m, 1H).
Beispiel No. B3-50:
   ¹H-NMR (400 MHz, CDCl₃ δ, ppm) 8.20 (br. s, 1H, NH), 7.32-7.27 (m, 3H), 7.17 (m, 2H), 5.09 (m, 1H), 4.94 (m, 1H), 3.11 (m, 1H), 2.91 (m, 1H), 2.21-2.14 (m, 1H), 1.96-1.88 (m, 2H), 1.87-1.48 (m, 5H), 1.18-0.98 (m, 2H).
Beispiel No. B3-54:
   ¹H-NMR (400 MHz, CDCl₃ δ, ppm) 8.43 (br. s, 1H, NH), 7.29-7.23 (m, 2H), 7.06-6.95 (m, 2H), 5.10 (m, 1H), 4.93 (m, 1H), 3.11 (m, 1H), 2.92 (m, 1H), 2.20-2.11 (m, 2H), 2.02-1.90 (m, 2H), 1.87-1.72 (m, 3H), 1.64 (m, 1H), 1.20-1.03 (m, 2H).
Beispiel No. B3-59:
   ¹H-NMR (400 MHz, d₆-DMSO δ, ppm) 11.04 (br. s, 1H, NH), 7.73 (d, 2H), 7.51 (d, 2H), 5.11 (m, 2H), 3.05 (m, 1H), 2.86 (m, 1H), 1.97 (m, 1H), 1.78 (m, 3H), 1.64 (m, 3H), 1.43 (m, 1H), 0.99 (m, 2H).
Beispiel No. B3-109:
   ¹H-NMR (400 MHz, CDCl₃ δ, ppm) 8.44 (br. s, 1H, NH), 4.23-4.11 (m, 4H), 4.03 (m, 1H), 2.97-2.75 (m, 2H), 2.35-2.18 (m, 2H), 2.08-1.95 (m, 4H), 1.83 (m, 1H), 1.77 (m, 1H), 1.64 (m, 1H), 1.28 (t, 3H), 1.22-1.05 (m, 2H).
Beispiel No. C1-3:
   ¹H-NMR (400 MHz, d₆-DMSO δ, ppm) 11.47 (br. s, 1H, NH), 4.89-4.80 (m, 2H), 2.80 (m, 2H), 2.50 (m, 2H), 1.75 (m, 2H), 1.54 (m, 2H), 1.40 (m, 2H).
Beispiel No. C1-6:
   ¹H-NMR (400 MHz, d₆-DMSO δ, ppm) 11.01 (br. s, 1H, NH), 3.51 (m, 1H), 2.79 (m, 2H), 2.30-2.10 (m, 3H), 1.75 (m, 4H), 1.67-1.53 (m, 4H), 1.48-1.15 (m, 7H).
Beispiel No. C1-50:
   ¹H-NMR (400 MHz, d₆-DMSO δ, ppm) 11.35 (br. s, 1H, NH), 7.37-7.27 (m, 3H), 7.15 (m, 1H), 5.15 (s, 2H), 2.62 (m, 2H), 2.52 (m, 2H), 1.65 (m, 2H), 1.37 (m, 2H), 1.26 (m, 2H).
Beispiel No. C1-54:
   ¹H-NMR (400 MHz, CDCl₃ δ, ppm) 8.99 (br. s, 1H, NH), 7.23-7.16 (m, 2H), 7.09-6.99 (m, 2H), 5.17 (s, 2H), 2.67 (m, 4H), 1.75 (m, 2H), 1.51 (m, 2H), 1.34 (m, 2H).
Beispiel No. C1-59:
   ¹H-NMR (400 MHz, CDCl₃ δ, ppm) 8.95 (br. s, 1H, NH), 7.65 (d, 2H), 7.34 (d, 2H), 5.29 (s, 2H), 2.67 (m, 4H), 1.76 (m, 2H), 1.53 (m, 2H), 1.35-1.26 (m, 2H).
Beispiel No. C1-60:
   ¹H-NMR (400 MHz, d₆-DMSO δ, ppm) 11.37 (br. s, 1H, NH), 7.61 (m, 3H), 7.49 (m, 2H), 5.24 (s, 2H), 2.67 (m, 2H), 2.54 (m, 2H), 1.64 (m, 2H), 1.36 (m, 2H), 1.23 (m, 2H).
Beispiel No. C1-109:
   ¹H-NMR (400 MHz, CDCl₃ δ, ppm) 8.79 (br. s, 1H, NH), 4.23-4.09 (m, 4H), 2.81 (m, 2H), 2.68 (m, 4H), 1.84 (m, 2H), 1.69 (m, 4H), 1.54 (m, 2H), 1.27 (t, 3H).
Beispiel No. C1-150:
   ¹H-NMR (400 MHz, d₆-DMSO δ, ppm) 11.32 (br. s, 1H, NH), 7.38 (m, 2H), 7.27 (m, 1H), 7.19 (m, 2H), 5.15 (s, 2H), 2.65 (m, 2H), 2.53 (m, 2H), 1.64 (m, 2H), 1.35 (m, 2H), 1.23 (m, 2H).

Weiterer Gegenstand der vorliegenden Erfindung ist die erfindungsgemäße Verwendung mindestens einer erfindungsgemäßen Verbindung, ausgewählt aus der Gruppe, bestehend aus substituierten Pyrimidindionen der allgemeinen Formel (I), sowie von beliebigen Mischungen dieser erfindungsgemäßen substituierten Pyrimidindione der allgemeinen Formel (I) mit weiteren agrochemischen Wirkstoffen wie beispielsweise Fungizide, Insektizide, Herbizide, Pflanzenwachstumsregulatoren oder Safener, zur Steigerung der Widerstandsfähigkeit von Pflanzen gegenüber abiotischen Stressfaktoren, bevorzugt Trockenstress, sowie zur Stärkung des Pflanzenwachstums und/oder zur Erhöhung des Pflanzenertrags.

Weiterer Gegenstand der vorliegenden Erfindung ist eine Sprühlösung zur Behandlung von Pflanzen, enthaltend eine zur Steigerung der Widerstandsfähigkeit von Pflanzen gegenüber abiotischen Stressfaktoren wirksame Menge von mindestens einer Verbindung, ausgewählt aus der Gruppe, bestehend aus den erfindungsgemäß substituierten Pyrimidindionen, der allgemeinen Formel (I). Zu den dabei relativierbaren abiotischen Streßbedingungen können zum Beispiel Hitze, Dürre, Kälte- und Trockenstress (Stress verursacht durch Trockenheit und/oder Wassermangel), osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen zählen.

In einer Ausführungsform kann beispielsweise vorgesehen sein, dass die erfindungsgemäß vorgesehenen Verbindungen, d. h. die entsprechenden erfindungsgemäß substituierten Pyrimidindione der allgemeinen Formel (I), durch eine Sprühapplikation auf entsprechend zu behandelnde Pflanzen oder Pflanzenteile aufgebracht werden. Die erfindungsgemäß vorgesehene Verwendung der Verbindungen der allgemeinen Formel (I) oder deren Salze erfolgt vorzugsweise mit einer Dosierung zwischen 0,00005 und 3 kg/ha, besonders bevorzugt zwischen 0,0001 und 2 kg/ha, insbesondere bevorzugt zwischen 0,0005 und 1 kg/ha, im Speziellen bevorzugt zwischen 0,001 und 0,25 kg/ha.

Unter der Bezeichnung Resistenz bzw. Widerstandsfähigkeit gegenüber abiotischem Stress werden im Rahmen der vorliegenden Erfindung verschiedenartige Vorteile für Pflanzen verstanden. Solche vorteilhaften Eigenschaften äußern sich beispielsweise in den nachfolgend genannten verbesserten Pflanzencharakteristika: verbessertes Wurzelwachstum hinsichtlich Oberfläche und Tiefe, vermehrte Ausläuferbildung oder Bestockung, stärkere und produktivere Ausläufer und Bestockungstriebe, Verbesserung des Sproßwachstums, erhöhte Standfestigkeit, vergrößerte Sprossbasisdurchmesser, vergrößerte Blattfläche, höhere Erträge an Nähr- und Inhaltsstoffen, wie z.B. Kohlenhydrate, Fette, Öle, Proteine, Vitamine, Mineralstoffe, ätherische Öle, Farbstoffe, Fasern, bessere Faserqualität, früheres Blühen, gesteigerte Blütenanzahl, reduzierter Gehalt an toxischen Produkten wie Mycotoxine, reduzierter Gehalt an Rückständen oder unvorteilhaften Bestandteilen jeglicher Art oder bessere Verdaulichkeit, verbesserte Lagerstabilität des Erntegutes, verbesserter Toleranz gegenüber unvorteilhaften Temperaturen, verbesserter Toleranz gegenüber Dürre und Trockenheit, wie auch Sauerstoffmangel durch Wasserüberschuß, verbesserte Toleranz gegenüber erhöhten Salzgehalten in Böden und Wasser, gesteigerte Toleranz gegenüber Ozonstress, verbesserte Verträglichkeit gegenüber Herbiziden und anderen Pflanzenbehandlungsmitteln, verbesserte Wasseraufnahme und Photosyntheseleistung, vorteilhafte Pflanzeneigenschaften, wie beispielsweise Beschleunigung der Reifung, gleichmäßigere Abreife, größere Anziehungskraft für Nützlinge, verbesserte Bestäubung oder andere Vorteile, die einem Fachmann durchaus bekannt sind.

Insbesondere zeigt die erfindungsgemäße Verwendung einer oder mehrerer Verbindungen der allgemeinen Formel (I) in der Sprühapplikation auf Pflanzen und Pflanzenteilen die beschriebenen Vorteile. Die kombinierte Verwendung von erfindungsgemäßen substituierten Pyrimidindionen der allgemeinen Formel (I) mit gentechnisch veränderten Sorten in Bezug auf erhöhte abiotische Stresstoleranz ist darüber hinaus ebenfalls möglich.

Die weiter oben genannten verschiedenartigen Vorteile für Pflanzen lassen sich bekannterweise partiell zusammenfassen und mit allgemein gültigen Begriffen belegen. Soche Begriffe sind beispielsweise die nachfolgend aufgeführten Bezeichnungen: phytotonischer Effekt, Widerstandsfähigkeit gegenüber Stressfaktoren, weniger Pflanzenstress, Pflanzengesundheit, gesunde Pflanzen, Pflanzenfitness, ("Plant Fitness"), "Plant Wellness", "Plant Concept", "Vigor Effect", "Stress Shield", Schutzschild, "Crop Health", "Crop Health Properties", "Crop Health Products", "Crop Health Management", "Crop Health Therapy", "Plant Health", Plant Health Properties", Plant Health Products", "Plant Health Management", "Plant Health Therapy", Grünungseffekt ("Greening Effect" oder "Re-greening Effect"), "Freshness" oder andere Begriffe, die einem Fachmann durchaus bekannt sind.

Im Rahmen der vorliegenden Erfindung wird unter einem guten Effekt auf die Widerstandsfähigkeit gegenüber abiotischem Stress nicht beschränkend
- mindestens ein um im Allgemeinen 3 %, insbesondere größer als 5 % besonders bevorzugt größer als 10 % verbessertes Auflaufen,
- mindestens einen im Allgemeinen 3 %, insbesondere größer als 5 % besonders bevorzugt größer als 10 % gesteigerten Ertrag,
- mindestens eine um im Allgemeinen 3 %, insbesondere größer als 5 % besonders bevorzugt größer als 10 % verbesserte Wurzelentwicklung,
- mindestens eine um im Allgemeinen 3 %, insbesondere größer als 5 % besonders bevorzugt größer als 10 % ansteigende Sproßgröße,
- mindestens eine um im Allgemeinen 3 %, insbesondere größer als 5 % besonders bevorzugt größer als 10 % vergrößerte Blattfläche,
- mindestens eine um im Allgemeinen 3 %, insbesondere größer als 5 % besonders bevorzugt größer als 10 % verbesserte Photosyntheseleistung und/oder
- mindestens eine um im Allgemeinen 3 %, insbesondere größer als 5 % besonders bevorzugt größer als 10 % verbesserte Blütenausbildung
verstanden, wobei die Effekte einzeln oder aber in beliebiger Kombination von zwei oder mehreren Effekten auftreten können.

Weiterer Gegenstand der vorliegenden Erfindung ist die erfindungsgemäße Verwendung von entsprechenden Sprühlösungen zur Steigerung der Widerstandsfähigkeit von Pflanzen gegenüber abiotischen Stressfaktoren. Die nachfolgenden Ausführungen gelten sowohl für die erfindungsgemäße Verwendung einer oder mehrerer Verbindungen der allgemeinen Formel (I) an sich als auch für die entsprechenden Sprühlösungen.

Erfindunsgemäß wurde darüber hinaus gefunden, dass die erfindungsgemäße Anwendung einer oder mehrerer Verbindungen der allgemeinen Formel (I) in Kombination mit mindestens einem Düngemittel wie weiter unten stehend definiert auf Pflanzen oder in deren Umgebung möglich ist.

Düngemittel, die erfindungsgemäß zusammen mit den oben näher erläuterten Verbindungen der allgemeinen Formel (I) verwendet werden können, sind im Allgemeinen organische und anorganische Stickstoff-haltige Verbindungen wie beispielsweise Harnstoffe, Harnstoff-Formaldehyd-Kondensationsprodukte, Aminosäuren, Ammoniumsalze und -nitrate, Kaliumsalze (bevorzugt Chloride, Sulfate, Nitrate), Phosphorsäuresalze und/oder Salze von Phosphoriger Säure (bevorzugt Kaliumsalze und Ammoniumsalze). Insbesondere zu nennen sind in diesem Zusammenhang die NPK-Dünger, d.h. Düngemittel, die Stickstoff, Phosphor und Kalium enthalten, Kalkammonsalpeter, d.h. Düngemittel, die noch Calcium enthalten, Ammonsulfatsalpeter (Allgemeine Formel (NH₄)₂SO₄ NH₄NO₃), Ammonphosphat und Ammonsulfat. Diese Düngemittel sind dem Fachmann allgemein bekannt, siehe auch beispielsweise Ullmann's Encyclopedia of Industrial Chemistry, 5. Edition, Vol. A 10, Seiten 323 bis 431, Verlagsgesellschaft, Weinheim, 1987.

Die Düngemittel können auch Salze aus Mikronährstoffen (bevorzugt Calcium, Schwefel, Bor, Mangan, Magnesium, Eisen, Bor, Kupfer, Zink, Molybdän und Kobalt) und Phytohormonen (z. B. Vitamin B1 und Indol-(III)essigsäure) oder Gemische davon enthalten. Erfindungsgemäß eingesetzte Düngemittel können auch weitere Salze wie Monoammoniumphosphat (MAP), Diammoniumphosphat (DAP), Kaliumsulfat, Kaliumchlorid, Magnesiumsulfat enthalten. Geeignete Mengen für die sekundären Nährstoffe oder Spurenelemente sind Mengen von 0,5 bis 5 Gew.-%, bezogen auf das gesamte Düngemittel. Weitere mögliche Inhaltsstoffe sind Pflanzenschutzmittel, wie beispielsweise Fungizide, Insektizide, Herbizide, Pflanzenwachstumsregulatoren oder Safener, oder Gemische davon. Hierzu folgen weiter unten weitergehende Ausführungen.

Die Düngemittel können beispielsweise in Form von Pulvern, Granulaten, Prills oder Kompaktaten eingesetzt werden. Die Düngemittel können jedoch auch in flüssiger Form, gelöst in einem wässrigen Medium, eingesetzt werden. In diesem Fall kann auch verdünnter wässriger Ammoniak als Stickstoffdüngemittel eingesetzt werden. Weitere mögliche Inhaltsstoffe für Düngemittel sind beispielsweise in Ullmann's Encyclopedia of Industrial Chemistry, 5. Auflage, 1987, Band A 10, Seiten 363 bis 401, DE-A 41 28 828, DE-A 19 05 834 und DE-A 196 31 764 beschrieben. Die allgemeine Zusammensetzung der Düngemittel, bei welchen es sich im Rahmen der vorliegenden Erfindung um Einzelnährstoff- und/oder Mehrnährstoffdünger handeln kann, beispielsweise aus Stickstoff, Kalium oder Phosphor, kann innerhalb eines breiten Bereichs variieren. Im Allgemeinen ist ein Gehalt von 1 bis 30 Gew.-% Stickstoff (bevorzugt 5 bis 20 Gew.-%), von 1 bis 20 Gew.-% Kalium (bevorzugt 3 bis 15 Gew.-%) und ein Gehalt von 1 bis 20 Gew.-% Phosphor (bevorzugt 3 bis 10 Gew.-%) vorteilhaft. Der Gehalt von Mikroelementen ist üblicherweise im ppm-Bereich, bevorzugt im Bereich von von 1 bis 1000 ppm.

Im Rahmen der vorliegenden Erfindung können das Düngemittel sowie eine oder mehrere erfindungsgemäße Verbindungen der allgemeinen Formel (I) zeitgleich verabreicht werden. Es ist jedoch auch möglich, zunächst das Düngemittel und dann eine oder mehrere erfindungsgemäße Verbindungen der allgemeinen Formel (I) oder zunächst eine oder mehrere Verbindungen der allgemeinen Formel (I) und dann das Düngemittel anzuwenden. Bei nicht zeitgleicher Anwendung einer oder mehrerer Verbindungen der allgemeinen Formel (I) und des Düngemittels erfolgt im Rahmen der vorliegenden Erfindung jedoch die Anwendung in funktionellem Zusammenhang, insbesondere innerhalb eines Zeitraums von im Allgemeinen 24 Stunden, bevorzugt 18 Stunden, besonders bevorzugt 12 Stunden, speziell 6 Stunden, noch spezieller 4 Stunden, noch weiter spezieller innerhalb 2 Stunden. In ganz besonderen Ausführungsformen der vorliegenden Erfindung erfolgt die Anwendung einer oder mehrerer erfindungsgemäßer Verbindungen der Formel (I) und des Düngemittels in einem zeitlichen Rahmen von weniger als 1 Stunden, vorzugsweise weniger als 30 Minuten, besonders bevorzugt weniger als 15 Minuten.

Bevorzugt ist die erfindungsgemäße Verwendung von Verbindungen der allgemeinen Formel (I) auf Pflanzen aus der Gruppe der Nutzpflanzen, Zierpflanzen, Rasenarten, allgemein genutzte Bäume, die in öffentlichen und privaten Bereichen als Zierpflanzen Verwendungen finden, und Forstbestand. Der Forstbestand umfasst Bäume für die Herstellung von Holz, Zellstoff, Papier und Produkten die aus Teilen der Bäume hergestellt werden. Der Begriff Nutzpflanzen, wie hier verwendet, bezeichnet Kulturpflanzen, die als Pflanzen für die Gewinnung von Nahrungsmitteln, Futtermitteln, Treibstoffe oder für technische Zwecke eingesetzt werden.

Zu den Nutzpflanzen zählen z. B. folgende Pflanzenarten: Triticale, Durum (Hartweizen), Turf, Reben, Getreide, beispielsweise Weizen, Gerste, Roggen, Hafer, Reis, Mais und Hirse; Rüben, beispielsweise Zuckerrüben und Futterrüben; Früchte, beispielsweise Kernobst, Steinobst und Beerenobst, beispielsweise Äpfel, Birnen, Pflaumen, Pfirsiche, Mandeln, Kirschen und Beeren, z. B. Erdbeeren, Himbeeren, Brombeeren; Hülsenfrüchte, beispielsweise Bohnen, Linsen, Erbsen und Sojabohnen; Ölkulturen, beispielsweise Raps, Senf, Mohn, Oliven, Sonnenblumen, Kokos, Castorölpflanzen, Kakaobohnen und Erdnüsse; Gurkengewächse, beispielsweise Kürbis, Gurken und Melonen; Fasergewächse, beispielsweise Baumwolle, Flachs, Hanf und Jute; Citrusfrüchte, beispielsweise Orangen, Zitronen, Pampelmusen und Mandarinen; Gemüsesorten, beispielsweise Spinat, (Kopf)-Salat, Spargel, Kohlarten, Möhren, Zwiebeln, Tomaten, Kartoffeln und Paprika; Lorbeergewächse, beispielsweise Avocado, Cinnamomum, Kampfer, oder ebenso Pflanzen wie Tabak, Nüsse, Kaffee, Aubergine, Zuckerrohr, Tee, Pfeffer, Weinreben, Hopfen, Bananen, Naturkautschukgewächse sowie Zierpflanzen, beispielsweise Blumen, Sträucher, Laubbäume und Nadelbäume wie Koniferen. Diese Aufzählung stellt keine Limitierung dar.

Als besonders geeignete Zielkulturen für die Anwendung des erfindungsgemäßen Verfahrens sind folgende Pflanzen anzusehen: Hafer, Roggen, Triticale, Durum, Baumwolle, Aubergine, Turf, Kernobst, Steinobst, Beerenobst, Mais, Weizen, Gerste, Gurke, Tabak, Reben, Reis, Getreide, Birne, Pfeffer, Bohnen, Sojabohnen, Raps, Tomate, Paprika, Melonen, Kohl, Kartoffel und Apfel.

Als Bäume, die entsprechend dem erfindungsgemäßen Verfahren verbessert werden können, seien beispielhaft genannt: Abies sp., Eucalyptus sp., Picea sp., Pinus sp., Aesculus sp., Platanus sp., Tilia sp., Acer sp., Tsuga sp., Fraxinus sp., Sorbus sp., Betula sp., Crataegus sp., Ulmus sp., Quercus sp., Fagus sp., Salix sp., Populus sp..

Als bevorzugte Bäume, die entsprechend dem erfindungsgemäßen Verfahren verbessert werden können, können genannt werden: Aus der Baumart Aesculus: A. hippocastanum, A. pariflora, A. carnea; aus der Baumart Platanus: P. aceriflora, P. occidentalis, P. racemosa; aus der Baumart Picea: P. abies; aus der Baumart Pinus: P. radiate, P. ponderosa, P. contorta, P. sylvestre, P. elliottii, P. montecola, P. albicaulis, P. resinosa, P. palustris, P. taeda, P. flexilis, P. jeffregi, P. baksiana, P. strobes; aus der Baumart Eucalyptus: E. grandis, E. globulus, E. camadentis, E. nitens, E. obliqua, E. regnans, E. pilularus.

Als besonders bevorzugte Bäume, die entsprechend dem erfindungsgemäßen Verfahren verbessert werden können, können genannt werden: Aus der Baumart Pinus: P. radiate, P. ponderosa, P. contorta, P. sylvestre, P. strobes; aus der Baumart Eucalyptus: E. grandis, E. globulus und E. camadentis.

Als besonders bevorzugte Bäume, die entsprechend dem erfindungsgemäßen Verfahren verbessert werden können, können genannt werden: Rosskastanie, Platanengewächs, Linde und Ahornbaum.

Die vorliegende Erfindung kann auch an beliebigen Rasenarten ("turfgrasses") durchgeführt werden, einschließlich "cool season turfgrasses" und "warm season turfgrasses". Beispiele für Rasenarten für die kalte Jahreszeit sind Blaugräser ("blue grasses"; Poa spp.), wie "Kentucky bluegrass" (Poa pratensis L.), "rough bluegrass" (Poa trivialis L.), "Canada bluegrass" (Poa compressa L.), "annual bluegrass" (Poa annua L.), "upland bluegrass" (Poa glaucantha Gaudin), "wood bluegrass" (Poa nemoralis L.) und "bulbous bluegrass" (Poa bulbosa L.); Straussgräser ("Bentgrass", Agrostis spp.), wie "creeping bentgrass" (Agrostis palustris Huds.), "colonial bentgrass" (Agrostis tenuis Sibth.), "velvet bentgrass" (Agrostis canina L.), "South German Mixed Bentgrass" (Agrostis spp. einschließlich Agrostis tenius Sibth., Agrostis canina L., und Agrostis palustris Huds.), und "redtop" (Agrostis alba L.);
Schwingel ("Fescues", Festucu spp.), wie "red fescue" (Festuca rubra L. spp. rubra), "creeping fescue" (Festuca rubra L.), "chewings fescue" (Festuca rubra commutata Gaud.), "sheep fescue" (Festuca ovina L.), "hard fescue" (Festuca longifolia Thuill.), "hair fescue" (Festucu capillata Lam.), "tall fescue" (Festuca arundinacea Schreb.) und "meadow fescue" (Festuca elanor L.);
Lolch ("ryegrasses", Lolium spp.), wie "annual ryegrass" (Lolium multiflorum Lam.), "perennial ryegrass" (Lolium perenne L.) und "italian ryegrass" (Lolium multiflorum Lam.);
und Weizengräser ("wheatgrasses", Agropyron spp..), wie "fairway wheatgrass" (Agropyron cristatum (L.) Gaertn.), "crested wheatgrass" (Agropyron desertorum (Fisch.) Schult.) und "western wheatgrass" (Agropyron smithii Rydb.).

Beispiele für weitere "cool season turfgrasses" sind "beachgrass" (Ammophila breviligulata Fern.), "smooth bromegrass" (Bromus inermis Leyss.), Schilf ("cattails") wie "Timothy" (Phleum pratense L.), "sand cattail" (Phleum subulatum L.), "orchardgrass" (Dactylis glomerata L.), "weeping alkaligrass" (Puccinellia distans (L.) Parl.) und "crested dog's-tail" (Cynosurus cristatus L.).

Beispiele für "warm season turfgrasses" sind "Bermudagrass" (Cynodon spp. L. C. Rich), "zoysiagrass" (Zoysia spp. Willd.), "St. Augustine grass" (Stenotaphrum secundatum Walt Kuntze), "centipedegrass" (Eremochloa ophiuroides Munro Hack.), "carpetgrass" (Axonopus affinis Chase), "Bahia grass" (Paspalum notatum Flugge), "Kikuyugrass" (Pennisetum clandestinum Hochst. ex Chiov.), "buffalo grass" (Buchloe dactyloids (Nutt.) Engelm.), "Blue gramma" (Bouteloua gracilis (H.B.K.) Lag. ex Griffiths), "seashore paspalum" (Paspalum vaginatum Swartz) und "sideoats grama" (Bouteloua curtipendula (Michx. Torr.). "Cool season turfgrasses" sind für die erfindungsgemäße Verwendung im Allgemeinen bevorzugt. Besonders bevorzugt sind Blaugras, Straussgras und "redtop", Schwingel und Lolch. Straussgras ist insbesondere bevorzugt.

Besonders bevorzugt werden mit den erfindungsgemäß verwendeten Verbindungen der allgemeinen Formel (I) Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder mit Hilfe rekombinanter DNA-Techniken, gezüchtet worden sind. Kulturpflanzen können demnach Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

Das erfindungsgemäße Behandlungsverfahren kann somit auch für die Behandlung von genetisch modifizierten Organismen (GMOs), z. B. Pflanzen oder Samen, verwendet werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Hypochondriengenom der transformierten Pflanze dadurch neue oder verbesserte agronomische oder sonstige Eigenschaften verleiht, dass es ein interessierendes Protein oder Polypeptid exprimiert oder dasses ein anderes Gen, das in der Pflanze vorliegt bzw. andere Gene, die in der Pflanze vorliegen, herunterreguliert oder abschaltet (zum Beispiel mittels Antisense-Technologie, Co-suppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

Zu Pflanzen und Pflanzensorten, die vorzugsweise mit den erfindungsgemäßen Verbindungen der allgemeinen Formel (I) behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls mit den erfindungsgemäßen Verbindungen der allgemeinen Formel (I) behandelt werden können, sind solche Pflanzen, die gegen einen oder mehrere abiotische Streßfaktoren resistent sind. Zu den abiotischen Streßbedingungen können zum Beispiel Hitze, Dürre, Kälte- und Trockenstress" osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls mit den erfindungsgemäßen Verbindungen der allgemeinen Formel (I) behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Streß- und nicht-Streß-Bedingungen) beeinflußt werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die ebenfalls mit den erfindungsgemäßen Verbindungen der allgemeinen Formel (I) behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 92/005251, WO 95/009910, WO 98/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 91/002069).

Pflanzen oder Pflanzensorten (die mit Methoden der Pflanzenbiotechnologie, wie der Gentechnik, erhalten werden), die ebenfalls mit den erfindungsgemäßen Verbindungen der allgemeinen Formel (I) behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium Salmonella typhimurium (Comai et al., Science (1983), 221, 370-371), das CP4-Gen des Bakteriums Agrobacterium sp. (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 2001/66704) kodieren. Es kann sich auch um eine mutierte EPSPS handeln, wie sie zum Beispiel in EP-A 0837944, WO 2000/066746, WO 2000/066747 oder WO 2002/026995 beschrieben ist. Glyphosatetolerante Pflanzen können auch dadurch erhalten werden, dass man ein Gen exprimiert, das für ein Glyphosate-Oxidoreduktase-Enzym, wie es in US 5,776,760 und US 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 2002/036782, WO 2003/092360, WO 2005/012515 und WO 2007/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 2001/024615 oder WO 2003/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind zum Beispiel in US 5,561,236; US 5,648,477; US 5,646,024; US 5,273,894; US 5,637,489; US 5,276,268; US 5,739,082; US 5,908,810 und US 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 96/038567, WO 99/024585 und WO 99/024586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 99/034008 und WO 2002/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in US 5,605,011, US 5,378,824, US 5,141,870 und US 5,013,659, beschrieben ist. Die Herstellung von sulfonylharnstofftoleranten Pflanzen und imidazolinontoleranten Pflanzen ist in US 5,605,011; US 5,013,659; US 5,141,870; US 5,767,361; US 5,731,180; US 5,304,732; US 4,761,373; US 5,331,107; US 5,928,937; und US 5,378,824; sowie in der internationalen Veröffentlichung WO 96/033270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 2007/024782 beschrieben.

Weitere Pflanzen, die gegenüber ALS-Inhibitoren, insbesondere gegenüber Imidazolinonen, Sulfonylharnstoffen und/oder Sulfamoylcarbonyltriazolinonen tolerant sind, können durch induzierte Mutagenese, Selektion in Zellkulturen in Gegenwart des Herbizids oder durch Mutationszüchtung erhalten werden, wie dies zum Beispiel für die Sojabohne in US 5,084,082, für Reis in WO 97/41218, für die Zuckerrübe in US 5,773,702 und WO 99/057965, für Salat in US 5,198,599 oder für die Sonnenblume in WO 2001/065922 beschrieben ist.

Pflanzen oder Pflanzensorten (die nach Methoden der pflanzlichen Biotechnologie, wie der Gentechnik, erhalten wurden), die ebenfalls mit den erfindungsgemäßen Verbindungen der allgemeinen Formel (I) behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfaßt im vorliegenden Zusammenhang jegliche Pflanze, die mindestens ein Transgen enthält, das eine Kodiersequenz umfaßt, die für folgendes kodiert:
1) ein insektizides Kristallprotein aus Bacillus thuringiensis oder einen insektiziden Teil davon, wie die insektiziden Kristallproteine, die von Crickmore et al., Microbiology and Molecular Biology Reviews (1998), 62, 807-813, zusammengestellt wurden, von Crickmore et al. (2005) in der Bacillus thuringiensis-Toxinnomenklatur aktualisiert (online bei:
   http://www.lifesci.sussex.ac.uk/Home/Neil_Crickmore/Bt/), oder insektizide Teile davon, z.B. Proteine der Cry-Proteinklassen Cry1Ab, Cry1Ac, Cry1F, Cry2Ab, Cry3Ae oder Cry3Bb oder insektizide Teile davon; oder
2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cy34 und Cy35 besteht (Moellenbeck et al., Nat. Biotechnol. (2001), 19, 668-72; Schnepf et al., Applied Environm. Microb. (2006), 71, 1765-1774); oder
3) ein insektizides Hybridprotein, das Teile von zwei unterschiedlichen insektiziden Kristallproteinen aus Bacillus thuringiensis umfaßt, wie zum Beispiel ein Hybrid aus den Proteinen von 1) oben oder ein Hybrid aus den Proteinen von 2) oben, z. B. das Protein Cry1A.105, das von dem Mais-Event MON98034 produziert wird (WO 2007/027777); oder
4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden, wie das Protein Cry3Bb1 in Mais-Events MON863 oder MON88017 oder das Protein Cry3A im Mais-Event MIR 604; oder
5) ein insektizides sezerniertes Protein aus Bacillus thuringiensis oder Bacillus cereus oder einen insektiziden Teil davon, wie die vegetativ wirkenden insektentoxischen Proteine (vegetative insecticidal proteins, VIP), die unter folgendem Link angeführt sind, z. B. Proteine der Proteinklasse VIP3Aa: http://www.lifesci.sussex.ac.uk/Home/Neil_Crickmore/Bt/vip.html oder
6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 94/21795); oder
7) ein insektizides Hybridprotein, das Teile von verschiedenen sezernierten Proteinen von Bacillus thuringiensis oder Bacillus cereus umfaßt, wie ein Hybrid der Proteine von 1) oder ein Hybrid der Proteine von 2) oben; oder
8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfaßt, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Pflanzen oder Pflanzensorten (die nach Methoden der pflanzlichen Biotechnologie, wie der Gentechnik, erhalten wurden), die ebenfalls mit den erfindungsgemäßen Verbindungen der allgemeinen Formel (I) behandelt werden können, sind gegenüber abiotischen Streßfaktoren tolerant. Solche Pflanzen können durch genetische Transformation oder durch Selektion von Pflanzen, die eine Mutation enthalten, die solch eine Streßresistenz verleiht, erhalten werden. Zu besonders nützlichen Pflanzen mit Streßtoleranz zählen folgende:
a. Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 2000/004173 oder EP 04077984.5 oder EP 06009836.5 beschrieben ist.
b. Pflanzen, die ein streßtoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;
c. Pflanzen, die ein streßtoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotid-adenyltransferase, Nicotinamidadenindinukleotidsynthetase oder Nicotinamidphosphoribosyl-transferase, wie dies z. B. in EP 04077624.7 oder WO 2006/133827 oder PCT/EP07/002433 beschrieben ist.

Pflanzen oder Pflanzensorten (die nach Methoden der pflanzlichen Biotechnologie, wie der Gentechnik, erhalten wurden), die ebenfalls mit den erfindungsgemäßen Verbindungen der allgemeinen Formel (I) behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:
1) Transgene Pflanzen, die eine modifizierte Stärke synthetisieren, die bezüglich ihrer chemischphysikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder - pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP 0571427, WO 95/004826, EP 0719338, WO 96/15248, WO 96/19581, WO 96/27674, WO 97/11188, WO 97/26362, WO 97/32985, WO 97/42328, WO 97/44472, WO 97/45545, WO 98/27212, WO 98/40503, WO 99/58688, WO 99/58690, WO 99/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 95/26407, WO 96/34968, WO 98/20145, WO 99/12950, WO 99/66050, WO 99/53072, US 6,734,341, WO 2000/11192, WO 98/22604, WO 98/32326, WO 2001/98509, WO 2001/98509, WO 2005/002359, US 5,824,790, US 6,013,861, WO 94/004693, WO 94/009144, WO 94/11520, WO 95/35026 bzw. WO 97/20936 beschrieben.
2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 96/001904, Wo 96/021023, WO 98/039460 und WO 99/024593 beschrieben ist, Pflanzen, die alpha-1,4-Glucane produzieren, wie dies in WO 95/031553, US 2002/031826, US 6,284,479, US 5,712,107, WO 97/047806, WO 97/047807, WO 97/047808 und WO 2000/14249 beschrieben ist, Pflanzen, die alpha-1,6-verzweigte alpha-1,4-Glucane produzieren, wie dies in WO 2000/73422 beschrieben ist, und Pflanzen, die Alternan produzieren, wie dies in WO 2000/047727, EP 06077301.7, US 5,908,975 und EP 0728213 beschrieben ist.
3) Transgene Pflanzen, die Hyaluronan produzieren, wie dies zum Beispiel in WO 06/032538, WO 2007/039314, WO 2007/039315, WO 2007/039316, JP 2006/304779 und WO 2005/012529 beschrieben ist.

Pflanzen oder Pflanzensorten (die nach Methoden der pflanzlichen Biotechnologie, wie der Gentechnik, erhalten wurden), die ebenfalls mit den erfindungsgemäßen Verbindungen der allgemeinen Formel (I) behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:
a) Pflanzen wie Baumwollpflanzen, die eine veränderte Form von Cellulosesynthasegenen enthalten, wie dies in WO 98/000549 beschrieben ist,
b) Pflanzen wie Baumwollpflanzen, die eine veränderte Form von rsw2- oder rsw3-homologen Nukleinsäuren enthalten, wie dies in WO 2004/053219 beschrieben ist;
c) Pflanzen wie Baumwollpflanzen mit einer erhöhten Expression der Saccharosephosphatsynthase, wie dies in WO 2001/017333 beschrieben ist;
d) Pflanzen wie Baumwollpflanzen mit einer erhöhten Expression der Saccharosesynthase, wie dies in WO 2002/45485 beschrieben ist;
e) Pflanzen wie Baumwollpflanzen bei denen der Zeitpunkt der Durchlaßsteuerung der Plasmodesmen an der Basis der Faserzelle verändert ist, z. B. durch Herunterregulieren der faserselektiven β-1,3-Glucanase, wie dies in WO 2005/017157 beschrieben ist;
f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls mit den erfindungsgemäßen Verbindungen der allgemeinen Formel (I) behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:
a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;
b) Pflanzen wie Rapspflanzen, die Öl mit einem niedrigen Linolensäuregehalt produzieren, wie dies in US 6,270828, US 6,169,190 oder US 5,965,755 beschrieben ist.
c) Pflanzen wie Rapspflanzen, die Öl mit einem niedrigen gesättigten Fettsäuregehalt produzieren, wie dies z. B. in US 5,434,283 beschrieben ist.

Besonders nützliche transgene Pflanzen, die mit den erfindungsgemäß zu verwendenden Verbindungen der allgemeinen Formel (I) behandelt werden können, sind Pflanzen, die Transformations-Events, oder eine Kombination von Transformations-Events, enthalten und die zum Beispiel in den Dateien von verschiedenen nationalen oder regionalen Behörden angeführt sind.

Besonders nützliche transgene Pflanzen, die mit den erfindungsgemäß zu verwendenden Verbindungen der allgemeinen Formel (I) behandelt werden können, sind beispielhaft Pflanzen mit einem oder mehreren Genen, die für ein oder mehrere Toxine kodieren, sind die transgenen Pflanzen, die unter den folgenden Handelsbezeichnungen angeboten werden: YIELD GARD® (zum Beispiel Mais, Baumwolle, Sojabohnen), KnockOut® (zum Beispiel Mais), BiteGard® (zum Beispiel Mais), BT-Xtra® (zum Beispiel Mais), StarLink® (zum Beispiel Mais), Bollgard® (Baumwolle), Nucotn® (Baumwolle), Nucotn 33B® (Baumwolle), NatureGard® (zum Beispiel Mais), Protecta® und NewLeaf® (Kartoffel). Herbizidtolerante Pflanzen, die zu erwähnen sind, sind zum Beispiel Maissorten, Baumwollsorten und Sojabohnensorten, die unter den folgenden Handelsbezeichnungen angeboten werden: Roundup Ready® (Glyphosatetoleranz, zum Beispiel Mais, Baumwolle, Sojabohne), Liberty Link® (Phosphinotricintoleranz, zum Beispiel Raps), IMI® (Imidazolinontoleranz) und SCS® (Sylfonylharnstofftoleranz), zum Beispiel Mais. Zu den herbizidresistenten Pflanzen (traditionell auf Herbizidtoleranz gezüchtete Pflanzen), die zu erwähnen sind, zählen die unter der Bezeichnung Clearfield® angebotenen Sorten (zum Beispiel Mais).

Die erfindungsgemäß zu verwendenden Verbindungen der Formel (I) können in übliche Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen. Im Rahmen der vorliegenden Erfindung ist es insbesondere bevorzugt, wenn die Verbindungen der allgemeinen Formel (I) in der Form einer Sprühformulieruing verwendet werden.

Die vorliegende Erfindung betrifft daher darüber hinaus auch eine Sprühformulierung zur Steigerung der Widerstandsfähigkeit von Pflanzen gegenüber abiotischem Stress. Im Folgenden wird eine Sprühformulierung näher beschrieben:
Die Formulierungen zur Sprühapplikation werden in bekannter Weise hergestellt, z.B. durch Vermischen der erfindungsgemäß zu verwendenden Verbindungen der allgmeinen Formel (I) mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Weitere übliche Zusatzstoffe, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser, können gegebenenfalls auch verwendet werden. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Als Netzmittel, die in den erfindungsgemäß verwendbaren Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den erfindungsgemäß verwendbaren Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid-Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose. Als Gibberelline, die in den erfindungsgemäß verwendbaren Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Weitere Additive können Duftstoffe, mineralische oder vegetabilische gegebenenfalls modifizierte Öle, Wachse und Nährstoffe (auch Spurennährstoffe), wie Salze von Eisen, Mangan, Bor, Kupfer, Kobalt, Molybdän und Zink sein. Weiterhin enthalten sein können Stabilisatoren wie Kältestabilisatoren, Oxidationsschutzmittel, Lichtschutzmittel oder andere die chemische und / oder physikalische Stabilität verbessernde Mittel.

Die Formulierungen enthalten im allgemeinen zwischen 0,01 und 98 Gew.-%, vorzugsweise zwischen 0,5 und 90 %, der Verbindung der allgemeinen Formel (I).

Die erfindungsgemäßen Verbindungen der allgemeinen Formel (I) können in handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Ferner lässt sich die beschriebene positive Wirkung der Verbindungen der Formel (I) auf die pflanzeneigenen Abwehrkräfte durch eine zusätzliche Behandlung mit insektziden, fungiziden oder bakteriziden Wirkstoffen unterstützen.

Bevorzugte Zeitpunkte für die Applikation der erfindungsgemäß zu verwendenden Verbindungen der allgemeinen Formel (I) oder deren Salze zur Steigerung der Resistenz gegenüber abiotischem Stress sind Boden-, Stamm- und/oder Blattbehandlungen mit den zugelassenen Aufwandmengen.

Die erfindungsgemäßen Wirkstoffe der allgemeinen Formel (I) oder deren Salze können im Allgemeinen darüber hinaus in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, Bakteriziden, wachstumsregulierenden Stoffen, die Pflanzenreife beeinflussenden Stoffen, Safenern oder Herbiziden vorliegen.

Die Erfindung soll durch die nachfolgenden biologischen Beispiele veranschaulicht werden, ohne sie jedoch darauf einzuschränken.

### Biologische Beispiele:

### In vivo-Analysen - Teil A:

Samen von mono- bzw. dikotylen Kulturpflanzen wurden in Holzfasertöpfen in sandigem Lehmboden ausgesät, mit Erde oder Sand abgedeckt und im Gewächshaus unter guten Wachstumsbedingungen angezogen. Die Behandlung der Versuchspflanzen erfolgte im frühen Laubblattstadium (BBCH10-BBCH13). Zur Gewährleistung einer uniformen Wasserversorgung vor Stressbeginn wurden die bepflanzten Töpfe vor Substanzapplikation durch Anstaubewässerung mit Wasser versorgt.

Die in Form von benetzbaren Pulvern (WP) formulierten erfindungsgemässen Verbindungen wurden als wässrige Suspension mit einer Wasseraufwandmenge von umgerechnet 600 l/ha unter Zusatz von 0,2% Netzmittel (z.B. Agrotin) auf die grünen Pflanzenteile gesprüht. Unmittelbar nach Substanzapplikation erfolgte die Stressbehandlung der Pflanzen. Die Holzfasertöpfe wurden dazu in Plastikeinsätze transferiert, um anschliessendes, zu schnelles Abtrocknen zu verhindern.

Der Trockenstress wurde durch langsames Abtrocknen unter folgenden Bedingungen induziert:
"Tag": 14 Stunden beleuchtet bei ~ 26°C
"Nacht": 10 Stunden ohne Beleuchtung bei ~ 18°C.

Die Dauer der jeweiligen Stressphasen richtete sich hauptsächlich nach dem Zustand der gestressten Kontrollpflanzen. Sie wurde (durch Wiederbewässerung und Transfer in ein Gewächshaus mit guten Wachstumsbedingungen) beendet, sobald irreversible Schäden an den gestressten Kontrollpflanzen zu beobachten waren.

Nach Beendigung der Stressphase folgte eine ca. 4-7 tägige Erholungsphase, während der die Pflanzen abermals unter guten Wachstumsbedingungen im Gewächshaus gehalten wurden. Die Dauer der Erholungsphase richtete sich hauptsächlich danach, wann die Versuchspflanzen einen Zustand erreicht hatten, der eine visuelle Bonitur potenzieller Effekte ermöglichte, und war daher variabel.

Wenn dieser Zeitpunkt erreicht war, wurde das Erscheinungsbild der mit Testsubstanzen behandelten Pflanzen visuell im Vergleich zu unbehandelten, ungestressten Kontrollen gleichen Alters sowie den gestressten Kontrollpflanzen nach folgenden Kategorien erfasst:
0 kein positiver Effekt
+ leicht positiver Effekt
++ deutlich positiver Effekt
+++ stark positiver Effekt

Um auszuschliessen, dass die beobachteten Effekte von der ggf. fungiziden oder insektiziden Wirkung der Testverbindungen beeinflusst wurden, wurde zudem darauf geachtet, dass die Versuche ohne Pilzinfektion oder Insektenbefall abliefen. Bei den in unten stehenden Tabellen A-1 und A-4 angegebenen Werten handelt es sich um Mittelwerte aus mindestens einem Versuch mit mindestens zwei Replikaten.

Wirkungen ausgewählter Verbindungen der allgemeinen Formel (I) unter Trockenstress:

**Tabelle A-1**

| No. | Substanz | Dosierung | Einheit | Effekt (BRSNS) |
|---|---|---|---|---|
| 1 | A1-36 | 100 | g/ha | + |
| 2 | A1-67 | 100 | g/ha | +++ |
| 3 | A3-50 | 25 | g/ha | +++ |
| 4 | A6-54 | 25 | g/ha | ++ |
| 5 | A7-50 | 25 | g/ha | ++ |
| 6 | B3-109 | 250 | g/ha | +++ |
| 7 | C1-3 | 25 | g/ha | +++ |

**Tabelle A-2**

| No. | Substanz | Dosierung | Einheit | Effekt (ZEAMX) |
|---|---|---|---|---|
| 1 | A1-9 | 100 | g/ha | +++ |
| 2 | A1-10 | 25 | g/ha | +++ |
| 3 | A1-36 | 250 | g/ha | +++ |
| 4 | A1-67 | 100 | g/ha | +++ |
| 5 | A1-73 | 100 | g/ha | ++ |
| 6 | A6-54 | 25 | g/ha | +++ |
| 7 | A7-50 | 25 | g/ha | ++ |
| 8 | C1-3 | 25 | g/ha | ++ |

**Tabelle A-3**

| No. | Substanz | Dosierung | Einheit | Effekt (TRZAS) |
|---|---|---|---|---|
| 1 | A1-10 | 25 | g/ha | ++ |
| 2 | A1-36 | 250 | g/ha | ++ |
| 3 | A6-54 | 25 | g/ha | +++ |
| 4 | C1-3 | 25 | g/ha | + |

**Tabelle A-4**

| No. | Substanz | Dosierung | Einheit | Effekt (HORVS) |
|---|---|---|---|---|
| 1 | A1-52 | 1000 | g/ha | ++ |
| 2 | A1-57 | 1000 | g/ha | ++ |
| 3 | A1-67 | 100 | g/ha | ++ |
| 4 | A1-147 | 1000 | g/ha | ++ |

### In vivo-Analysen - Teil B:

Samen von mono- bzw. dikotylen Kulturpflanzen wurden in Plastik- oder Holzfasertöpfen in sandigem Lehmboden ausgesät, mit Erde oder Sand abgedeckt und im Gewächshaus unter guten Wachstumsbedingungen angezogen. Die Behandlung der Versuchspflanzen erfolgte im frühen Laubblattstadium (BBCH10 - BBCH13). Zur Gewährleistung einer uniformen Wasserversorgung vor Stressbeginn wurden die bepflanzten Töpfe vor Substanzapplikation durch Anstaubewässerung mit Wasser versorgt.

Die erfindungsgemässen Verbindungen wurden zunächst als benetzbare Pulver (WP) formuliert oder in einem Lösungsmittelgemisch gelöst. Die weitere Verdünnung erfolgte mit Wasser unter Zusatz von 0,2% Netzmittel (z.B. Agrotin). Die fertige Spritzbrühe wurde mit einer Wasseraufwandmenge von umgerechnet 600 1/ha auf die grünen Pflanzenteile gesprüht. Unmittelbar nach Substanzapplikation erfolgte die Stressbehandlung der Pflanzen. Die Holzfasertöpfe wurden dazu in Plastikeinsätze transferiert, um anschliessendes, zu schnelles Abtrocknen zu verhindern.

Der Trockenstress wurde durch langsames Abtrocknen unter folgenden Bedingungen induziert:
"Tag": 14 Stunden beleuchtet bei ~ 26-30°C
"Nacht": 10 Stunden ohne Beleuchtung bei ~ 18-20°C.

Die Dauer der jeweiligen Stressphasen richtete sich hauptsächlich nach dem Zustand der gestressten Kontrollpflanzen. Sie wurde (durch Wiederbewässerung und Transfer in ein Gewächshaus mit guten Wachstumsbedingungen) beendet, sobald irreversible Schäden an den gestressten Kontrollpflanzen zu beobachten waren.

Nach Beendigung der Stressphase folgte eine ca. 4-7 tägige Erholungsphase, während der die Pflanzen abermals unter guten Wachstumsbedingungen im Gewächshaus gehalten wurden. Die Dauer der Erholungsphase richtete sich hauptsächlich danach, wann die Versuchspflanzen einen Zustand erreicht hatten, der eine visuelle Bonitur potenzieller Effekte ermöglichte, und war daher variabel.

Wenn dieser Zeitpunkt erreicht war, wurde das Erscheinungsbild der mit Testsubstanzen behandelten Pflanzen im Vergleich zu den gestressten Kontrollpflanzen nach folgenden Kategorien erfasst:

| | |
|---|---|
| 0 | kein positiver Effekt |
| + | leicht positiver Effekt |
| ++ | deutlich positiver Effekt |
| +++ | stark positiver Effekt |

Pro Substanz und Dosierung wurden jeweils 3-4 Töpfe behandelt und ausgewertet. Die jeweiligen Wirkungsbereiche sind in den unten stehenden Tabellen B-1 und B-2 angegeben.

**Tabelle B-1**

| No. | Substanz | Dosierung | Einheit | Effekt (BRSNS) |
|---|---|---|---|---|
| 1 | A10-9 | 25 | g/ha | + |
| 2 | A10-35 | 25 | g/ha | + |
| 3 | A11-9 | 25 | g/ha | ++ |
| 4 | A16-35 | 25 | g/ha | + |
| 5 | A18-137 | 25 | g/ha | + |
| 6 | A19-137 | 25 | g/ha | + |
| 7 | A21-35 | 25 | g/ha | + |

**Tabelle B-2**

| No. | Substanz | Dosierung | Einheit | Effekt (TRZAS) |
|---|---|---|---|---|
| 1 | A10-9 | 25 | g/ha | + |
| 2 | A10-35 | 25 | g/ha | ++ |
| 3 | A16-35 | 25 | g/ha | + |

In den zuvor genannten Tabellen bedeuten:
- BRSNS: = Brassica napus
- ZEAMX: = Zea mays
- TRZAS: = Triticum aestivum
- HORVS: = Hordeum vulgare

## Patentansprüche

1. Verwendung substituierter Pyrimidindione der allgemeinen Formel (I) oder jeweils deren Salze 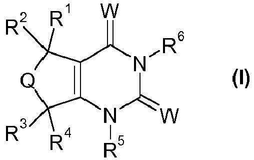 zur Erhöhung der Stresstoleranz in Pflanzen gegenüber abiotischem Stress und/oder zur Erhöhung des Pflanzenertrags, wobei
Q für 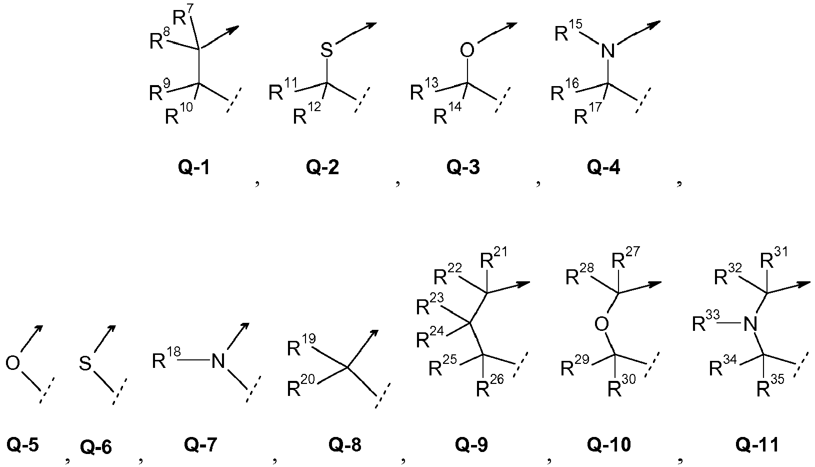
steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
W für Sauerstoff oder Schwefel steht,
R¹, R⁴ unabhängig voneinander für Wasserstoff, Halogen, Alkyl, Cycloalkyl, Alkenyl, Cycloalkenyl, Alkinyl, Aryl, Arylalkyl, Arylalkenyl, Arylalkinyl, Heteroaryl, Heterocyclyl, Cycloalkylalkyl, Cycloalkylalkenyl, Cycloalkylalkinyl, Heteroarylalkyl, Heterocyclylalkyl, Heteroarylalkenyl, Heteroarylalkinyl, Cycloalkenyl, Haloalkyl, Halocycloalkyl, Haloalkenyl, Halocycloalkenyl, Haloalkinyl, Alkoxyalkylalkinyl, Tris-alkylsilylalkinyl, Bisalkyl(aryl)silylalkinyl, Bisaryl(alkyl)silylalkinyl, Alkoxyalkyl, Alkoxy, Haloalkoxy, Cycloalkyloxy, Alkenyloxyalkyl, Heteroarylalkoxy, Arylalkoxy, Alkylthio, Alkylthioalkyl, Haloalkylthio, Arylthio, Cycloalkylthio, Alkylsulfonyl, Alkylsulfinyl, Arylsulfonyl, Arylsulfinyl, Cycloalkylsulfonyl, Cycloalkylsulfinyl, Cycloalkylalkoxy, Alkinylalkoxy, Alkenylalkoxy, Alkenyloxyalkoxy, Alkyloxyalkoxy, Alkylaminoalkoxy, Bisalkylaminoalkoxy, Cycloalkylaminoalkoxy, Heterocyclyl-N-alkoxy, Aryloxy, Heteroaryloxy, Tris-(alkyl)silyl, Bis-(alkyl)arylsilyl, Bis-(alkyl)alkylsilyl, Alkylamino, Alkenylamino, Cycloalkylamino, Arylalkylamino, Arylamino, Bis(alkyl)amino, Hydroxy, Amino, Nitro, Cyano, Alkoxyalkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
R², R³ unabhängig voneinander für Wasserstoff, Halogen, Alkyl, Cycloalkyl, Arylalkyl, Alkenyl, Haloalkyl, Alkoxy, Haloalkoxy, Alkylthio, Haloalkylthio, Alkylsulfonyl, Alkylsulfinyl, Arylsulfonyl, Arylsulfinyl stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R⁵ für Alkyl, Cycloalkyl, Alkenyl, Alkinyl, Haloalkyl, Haloalkoxyalkyl, Cyanoalkoxyalkyl, Halocycloalkyl, Cycloalkenyl, Halocycloalkenyl, Hydroxyalkyl, Tris-[Alkylsilyl]oxyalkyl, Bis-[alkyl]arylsilyloxyalkyl, Alkoxyalkyl, Alkinyl, Alkenyl, Cycloalkylalkyl, Cyanoalkyl, Nitroalkyl, Aminoalkyl, Arylalkyl, Heteroarylalkyl, Heterocyclylalkyl, Heterocyclyl-N-Alkyl, Cycloalkyloxyalkyl, Aryl, Heterocyclyl, Aryloxyalkyl, Arylalkoxyalkyl, Heteroaryloxyalkyl, Heterocyclyloxyalkyl, Alkoxycarbonyl-N-Heterocyclyl, Heteroaryl, Alkylaminoalkyl, Alkylaminocycloalkyl, Bis-Alkylaminocycloalkyl, Bisalkylaminoalkyl, Cyanoalkylaminoalkyl, Haloalkylaminoalkyl, Halocycloalkylaminoalkyl, Arylaminoalkyl, Heteroarylaminoalkyl, Heterocyclylaminoalkyl,Heterocyclylalkylaminoalkyl, Heteroarylalkylaminoalkyl, Arylalkylaminoalkyl, Cycloalkylaminoalkyl, Aryl(alkyl)aminoalkyl, Heteroaryl(alkyl)aminoalkyl, Heterocyclyl(alkyl)aminoalkyl, Arylalkyl(alkyl)aminoalkyl, Cycloalkyl(alkyl)aminoalkyl, Heteroarylalkyl(alkyl)aminoalkyl, Heterocyclylalkyl(alkyl)aminoalkyl, Aryl(arylsulfonyl)aminoalkyl, Alkyl(arylsulfonyl)aminoalkyl, Heteroaryl(arylsulfonyl)aminoalkyl, Heterocyclyl(arylsulfonyl)aminoalkyl, Arylalkyl(arylsulfonyl)aminoalkyl, Heteroarylalkyl(arylsulfonyl)aminoalkyl, Heterocyclylalkyl(arylsulfonyl)aminoalkyl, Cycloalkyl(arylsulfonyl)aminoalkyl, Aryl(alkylsulfonyl)aminoalkyl, Alkyl(alkylsulfonyl)aminoalkyl, Heteroaryl(alkylsulfonyl)aminoalkyl, Heterocyclyl(alkylsulfonyl)aminoalkyl, Arylalkyl(alkylsulfonyl)aminoalkyl, Heteroarylalkyl(alkylsulfonyl)aminoalkyl, Heterocyclylalkyl(alkylsulfonyl)aminoalkyl, Cycloalkyl(alkylsulfonyl)aminoalkyl, Aryl(heteroarylsulfonyl)aminoalkyl, Alkyl(heteroarylsulfonyl)aminoalkyl, Heteroaryl(heteroarylsulfonyl)aminoalkyl, Heterocyclyl(heteroarylsulfonyl)aminoalkyl, Arylalkyl(heteroarylsulfonyl)aminoalkyl, Heteroarylalkyl(heteroarylsulfonyl)aminoalkyl, Heterocyclylalkyl(heteroarylsulfonyl)aminoalkyl, Cycloalkyl(heteroarylsulfonyl)aminoalkyl, Aryl(arylheteroarylsulfonyl)aminoalkyl, Alkyl(arylheteroarylsulfonyl)aminoalkyl, Heteroaryl(arylheteroarylsulfonyl)aminoalkyl, Heterocyclyl(arylheteroarylsulfonyl)aminoalkyl, Arylalkyl(arylheteroarylsulfonyl)aminoalkyl, Heteroarylalkyl(arylheteroarylsulfonyl)aminoalkyl, Heterocyclylalkyl(arylheteroarylsulfonyl)aminoalkyl, Cycloalkyl(arylheteroarylsulfonyl)aminoalkyl, Aryl(heteroarylheteroarylsulfonyl)aminoalkyl, Alkyl(heteroarylheteroarylsulfonyl)aminoalkyl, Heteroaryl(heteroarylheteroarylsulfonyl)aminoalkyl, Heterocyclyl(heteroarylheteroarylsulfonyl)aminoalkyl, Arylalkyl(heteroarylheteroarylsulfonyl)aminoalkyl, Heteroarylalkyl(heteroarylheteroarylsulfonyl)aminoalkyl, Heterocyclylalkyl(heteroarylheteroarylsulfonyl)aminoalkyl, Cycloalkyl(heteroarylheteroarylsulfonyl)aminoalkyl, Aminocarbonylalkyl, Alkylaminocarbonylalkyl, Bisalkylaminocarbonylalkyl, Alkenylaminocarbonylalkyl, Alkinylaminocarbonylalkyl, Cyanoalkylaminocarbonylalkyl, Cycloalkylaminocarbonylalkyl, Heterocyclylaminocarbonylalkyl, Alkoxycarbonylalkyl, Hydroxycarbonylalkyl, Haloalkoxycarbonylalkyl, Hetaroarylalkylaminocarbonylalkyl, Alkenyloxycarbonylalkyl, Cycloalkylalkoxycarbonylalkyl, Arylalkylaminocarbonylalkyl, Alkylthioalkyl, Haloalkylthioalkyl, Arylthioalkyl, Heteroarylthioalkyl, Arylalkylthioalkyl, Alkylsulfonylalkyl, Arylsulfonylalkyl, Cycloalkylsulfonylalkyl, Heteroarylsulfonylalkyl, Heterocyclylsulfinylalkyl, Haloalkylsulfinylalkyl, Halocycloalkylsulfinylalkyl, Alkylsulfinylalkyl, Arylsulfinylalkyl, Cycloalkylsulfinylalkyl, Heteroarylsulfinylalkyl, Heterocyclylsulfinylalkyl, Haloalkylsulfinylalkyl, Halocycloalkylsulfinylalkyl, Alkoxycarbonylaminoalkyl, Aminocarbonylaminoalkyl, Alkylaminocarbonylaminoalkyl, Cycloalkylaminocarbonylaminoalkyl, Aminoalkylcarbonylaminophenylalkyl, Alkoxycarbonylaminoalkylcarbonylaminophenylalkyl, Arylsulfonylaminophenylalkyl, Heteroarylsulfonylaminophenylalkyl, Alkoxycarbonylphenylalkyl, Hydroxycarbonylphenylalkyl, Heterocyclylcarbonylphenylalkyl, Alkylaminocarbonylphenylalkyl, Bis-alkylaminocarbonylphenylalkyl, Cycloalkylaminocarbonylphenylalkyl, Alkoxycarbonylalkylaminocarbonylphenylalkyl, Alkoxycarbonyl(alkyl)aminoalkyl, Alkenyloxycarbonyl(alkyl)aminoalkyl, Arylalkoxycarbonyl(alkyl)aminoalkyl, Cycloalkylalkoxycarbonyl(alkyl)aminoalkyl, Heteroaryl-N-alkyl, Arylheteroaryl-N-alkyl, Alkenyloxycarbonyl-N-heterocyclyl, Arylalkoxycarbonyl-N-heterocyclyl, Aryl-N-Heterocyclyl, Heteroaryl-N-heterocyclyl, Arylcarbonyl-N-heterocyclyl, Alkylcarbonyl-N-heterocyclyl, Alkylcarbonylalkylaminocarbonylalkyl, Arylcarbonylalkylaminocarbonylalkyl, Heterocyclylalkylaminocarbonylalkyl, Alkylcarbonyl, Cycloalkylcarbonyl, Haloalkylcarbonyl, Alkoxycarbonyl, Alkenyloxycarbonyl, Arylalkoxycarbonyl, Cycloalkoxycarbonyl, Cycloalkylalkoxycarbonyl, Alkylaminocarbonyl, Cycloalkylaminocarbonyl, Arylalkylaminocarbonyl, Alkylsulfonyl, Arylsulfonyl, Cycloalkylsulfonyl, Arylalkylsulfonyl, Alkenylsulfonyl, Heteroarylsulfonyl, Alkinylsulfonyl, Alkylsulfinyl, Arylsulfinyl, Cycloalkylsulfinyl, Alkenylsulfinyl, Alkinylsulfinyl, Arylcarbonyl, Heteroarylcarbonyl, Arylsulfonylaminoalkyl, Alkylsulfonylaminoalkyl, Cycloalkylsulfonylaminoalkyl, Heteroarylsulfonylaminoalkyl, Alkylcarbonylaminoalkyl, Cycloalkylcarbonylaminoalkyl, Arylcarbonylaminoalkyl, Heteroarylcarbonylaminoalkyl steht,
R⁶ für Wasserstoff, Hydroxy, Alkyl, Cycloalkyl, Halogen, Haloalkyl, Alkoxyalkyl, Alkinyl, Alkenyl, Cycloalkylalkyl, Cyanoalkyl, Nitroalkyl, Arylalkyl, Heteroarylalkyl, Heterocyclylalkyl, Aryl, Alkylamino, Alkylaminoalkyl, Bisalkylaminoalkyl, Aminocarbonylalkyl, Alkylaminocarbonylalkyl, Bisalkylaminocarbonylalkyl, Alkoxycarbonylalkyl, Hydroxycarbonylalkyl, Alkylcarbonyl, Cycloalkylcarbonyl, Haloalkylcarbonyl, Alkoxycarbonyl, Alkenyloxycarbonyl, Arylalkoxycarbonyl, Cycloalkoxycarbonyl, Cycloalkylalkoxycarbonyl, Alkylaminocarbonyl, Cycloalkylaminocarbonyl, Arylalkylaminocarbonyl, Alkylsulfonyl, Arylsulfonyl, Cycloalkylsulfonyl, Arylalkylsulfonyl, Alkenylsulfonyl, Heteroarylsulfonyl, Alkinylsulfonyl, Alkylsulfinyl, Arylsulfinyl, Cycloalkylsulfinyl, Alkenylsulfinyl, Alkinylsulfinyl, Arylcarbonyl, Heteroarylcarbonyl, Alkoxycarbonylalkyl, Alkenyloxycarbonylalkyl, Hydroxycarbonylalkyl, Cyanoalkylaminocarbonyl, Alkinylaminocarbonyl, Heterocyclylcarbonyl, Hetaroarylalkylaminocarbonyl, Cycloalkylalkoxycarbonylcarbonyl, Alkoxycarbonylcarbonyl, Cycloalkylalkylaminocarbonyl, Arylalkylaminocarbonyl, Heterocyclyl oder eine negative Ladung steht,
R⁷, R⁸, R⁹, R¹⁰ unabhängig voneinander für Wasserstoff, Halogen, Alkyl, Cycloalkyl, Cycloalkenyl, Arylalkyl, Alkenyl, Haloalkyl, Alkoxy, Haloalkoxy, Alkylthio, Haloalkylthio, Aryl, Heteroaryl, Heterocyclyl, Alkoxyalkyl, Alkinyl, Haloalkinyl, Hydroxy, Amino, Alkylamino, Bis(alkyl)amino, Cyano, Alkoxyalkoxy stehen,
oder wobei R⁴ und R⁷ mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷ und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷ und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹¹, R¹², R¹³, R¹⁴ unabhängig voneinander für Wasserstoff, Alkyl, Cycloalkyl, Arylalkyl, Alkenyl, Haloalkyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹⁵, R¹⁸, R³³ unabhängig voneinander für Wasserstoff, Alkyl, Alkoxy, Cycloalkyl, Haloalkyl, Alkoxyalkyl, Alkinyl, Alkenyl, Cycloalkylalkyl, Cyanoalkyl, Nitroalkyl, Arylalkyl, Heteroarylalkyl, Heterocyclylalkyl, Aryl, Alkylaminoalkyl, Bisalkylaminoalkyl, Aminocarbonylalkyl, Alkylaminocarbonylalkyl, Bisalkylaminocarbonylalkyl, Alkoxycarbonylalkyl, Hydroxycarbonylalkyl, Alkylcarbonyl, Cycloalkylcarbonyl, Haloalkylcarbonyl, Alkoxycarbonyl, Alkenyloxycarbonyl, Alkylaminocarbonyl, Cyclopropylaminocarbonyl, Alkylsulfonyl, Arylsulfonyl, Cycloalkylsulfonyl, Arylalkylsulfonyl, Alkenylsulfonyl, Heteroarylsulfonyl, Alkinylsulfonyl, Alkylsulfinyl, Arylsulfinyl, Cycloalkylsulfinyl, Alkenylsulfinyl, Alkinylsulfinyl, Arylcarbonyl, Heteroarylcarbonyl, Heterocyclylcarbonyl, Cycloalkylalkoxycarbonylalkyl, Alkenyloxycarbonylalkyl, Cyanoalkylaminocarbonyl, Alkinylaminocarbonyl, Heterocyclylcarbonyl, Hetaroarylalkylaminocarbonyl, Alkinyloxycarbonyl, Cycloalkylalkoxycarbonyl, Cycloalkylalkoxycarbonylcarbonyl, Alkoxycarbonylcarbonyl, Cycloalkylalkylaminocarbonyl, Arylalkylaminocarbonyl, Arylthioalkylcarbonyl, Alkylthioalkylcarbonyl, Alkylaminoalkylcarbonyl, Arylaminoalkylcarbonyl, Cycloalkylaminoalkylcarbonyl, Arylaminocarbonyl, Heteroarylaminocarbonyl, Alkoxycarbonylalkylaminocarbonyl steht,
R¹⁶, R¹⁷ unabhängig voneinander für Wasserstoff, Alkyl, Aryl, Cycloalkyl, Arylalkyl, Alkenyl, Haloalkyl stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹⁹, R²⁰, R²¹, R²², R²³, R²⁴, R²⁵, R²⁶ unabhängig voneinander für Wasserstoff,
Halogen, Alkyl, Cycloalkyl, Arylalkyl, Aryl, Heteroaryl, Heterocyclyl, Alkenyl, Haloalkyl, Alkylthio, Haloalkylthio, Arylthio, Alkinyl, Alkylamino, Bis(alkyl)amino, Alkoxy, Haloalkoxy stehen,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
R²⁷, R²⁸, R²⁹, R³⁰, R³¹, R³², R³⁴, R³⁵ unabhängig voneinander für Wasserstoff, Alkyl, Aryl, Cycloalkyl, Arylalkyl, Alkenyl, Haloalkyl, Alkoxy, Haloalkoxy, Alkylamino, Bis(alkyl)amino, Alkylthio stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,

2. Verwendung gemäß Anspruch 1, wobei in Formel (I)
Q für 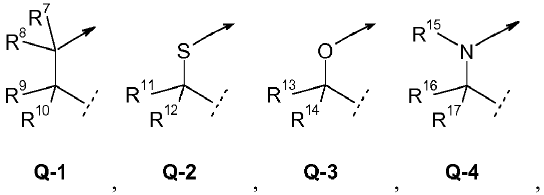 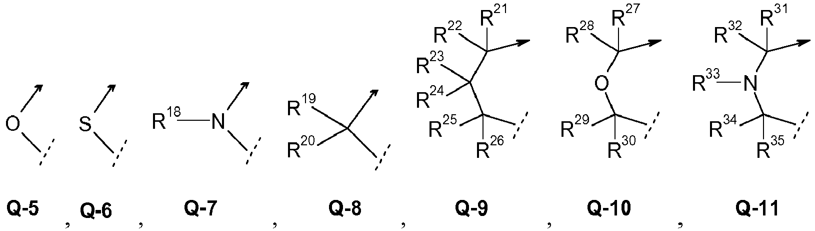
steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
W für Sauerstoff oder Schwefel steht,
R¹, R⁴ unabhängig voneinander für Wasserstoff, Halogen, (C₁-C₈)-Alkyl, (C₃-C₁₀)-Cycloalkyl, (C₂-C₈)-Alkenyl, (C₄-C₈)-Cycloalkenyl, (C₂-C₈)-Alkinyl, Aryl, Aryl-(C₁-C₈)-alkyl, Aryl-(C₂-C₈)-alkenyl, Aryl-(C₂-C₈)-alkinyl, Heteroaryl, Heterocyclyl, (C₃-C₈)-Cycloalkyl-(C₁-C₈)-alkyl, (C₃-C₈)-Cycloalkyl-(C₂-C₈)-alkenyl, (C₃-C₈)-Cycloalkyl-(C₂-C₈)-alkinyl, Heteroaryl-(C₁-C₈)-alkyl, Heterocyclyl-(C₁-C₈)-alkyl, Heteroaryl-(C₂-C₈)-alkenyl, Heteroaryl-(C₂-C₈)-alkinyl, (C₁-C₈)-Haloalkyl, (C₃-C₈)-Halocycloalkyl, (C₂-C₈)-Haloalkenyl, (C₄-C₈)-Halocycloalkenyl, (C₂-C₈)-Haloalkinyl, (C₃-C₈)-Alkoxy-(C₁-C₈)-alkyl-(C₂-C₈)-alkinyl, Tris[(C₁-C₈)-alkyl]silyl-(C₂-C₈)-alkinyl, Bis[(C₁-C₈)-alkyl](aryl)silyl-(C₂-C₈)-alkinyl, Bisaryl] (C₁-C₈)-alkyl]silyl-(C₂-C₈)-alkinyl, (C₁-C₈)-Alkoxy-(C₁-C₈)-alkyl, (C₁-C₈)-Alkoxy, (C₁-C₈)-Haloalkoxy, (C₃-C₈)-Cycloalkyloxy, (C₂-C₈)-Alkenyloxy-(C₁-C₈)-alkyl, Heteroaryl-(C₁-C₈)-alkoxy, Aryl-(C₁-C₈)-alkoxy, (C₁-C₈)-Alkylthio, (C₁-C₈)-Alkylthio-(C₁-C₈)-alkyl, (C₁-C₈)-Haloalkylthio, Arylthio, (C₃-C₈)-Cycloalkylthio, (C₁-C₈)-Alkylsulfonyl, (C₁-C₈)-Alkylsulfinyl, Arylsulfonyl, Arylsulfinyl, (C₃-C₈)-Cycloalkylsulfonyl, (C₃-C₈)-Cycloalkylsulfinyl, (C₃-C₈)-Cycloalkyl-(C₁-C₈)-alkoxy, (C₂-C₈)-Alkinyl-(C₁-C₈)-alkoxy, (C₂-C₈)-Alkenyl-(C₁-C₈)-alkoxy, (C₂-C₈)-Alkenyloxy-(C₁-C₈)-alkoxy, (C₁-C₈)-Alkyloxy-(C₁-C₈)-alkoxy, (C₁-C₈)-Alkylamino-(C₁-C₈)-alkoxy, Bis[(C₁-C₈)-alkyl]amino-(C₁-C₈)-alkoxy, (C₃-C₈)-Cycloalkylamino-(C₁-C₈)-alkoxy, Heterocyclyl-N-(C₁-C₈)-alkoxy, Aryloxy, Heteroaryloxy, Tris-[(C₁-C₈)-alkyl]silyl, Bis-[(C₁-C₈)-alkyl]arylsilyl, Bis-[(C₁-C₈)-alkyl]-[(C₁-C₈)-alkyl]silyl, (C₁-C₈)-Alkylamino, (C₂-C₈)-Alkenylamino, (C₃-C₈)-Cycloalkylamino, Aryl-(C₁-C₈)-alkylamino, Arylamino, Bis[(C₁-C₈)-alkyl]amino, Hydroxy, Amino, Nitro, Cyano, (C₁-C₈)-Alkoxy-(C₁-C₈)-alkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
R², R³ unabhängig voneinander für Wasserstoff, Halogen, (C₁-C₈)-Alkyl, (C₃-C₈)-Cycloalkyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R⁵ für (C₁-C₈)-Alkyl, (C₃-C₁₀)-Cycloalkyl, (C₂-C₈)-Alkenyl, (C₂-C₈)-Alkinyl, (C₁-C₈)-Haloalkyl, (C₁-C₈)-Haloalkoxy-(C₁-C₈)-alkyl, Cyano-(C₁-C₈)-alkoxy-(C₁-C₈)-alkyl, (C₃-C₈)-Halocycloalkyl, (C₄-C₈)-Cycloalkenyl, (C₄-C₈)-Halocycloalkenyl, Hydroxy-(C₁-C₈)-alkyl, Tris-[(C₁-C₈)-Alkylsilyl]oxy-(C₁-C₈)-alkyl, Bis-[(C₁-C₈)-alkyl]arylsilyloxy-(C₁-C₈)-alkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Amino-(C₁-C₈)-alkyl, Aryl-(C₁-C₈)-alkyl, Heteroaryl-(C₁-C₈)-alkyl, Heterocyclyl-(C₁-C₈)-alkyl, Heterocyclyl-N-(C₁-C₈)-Alkyl, (C₃-C₈)-Cycloalkyloxy-(C₁-C₈)-alkyl, Aryl, Heterocyclyl, Aryloxy-(C₁-C₈)-alkyl, Aryl-(C₁-C₈)-alkoxy-(C₁-C₈)-alkyl, Heteroaryloxy-(C₁-C₈)-alkyl, Heterocyclyloxy-(C₁-C₈)-alkyl, (C₁-C₈)-Alkoxycarbonyl-N-Heterocyclyl, Heteroaryl, (C₁-C₈)-Alkylamino-(C₁-C₈)-alkyl, (C₁-C₈)-Alkylamino-(C₃-C₈)-cycloalkyl, Bis-[(C₁-C₈)-Alkyl]amino-(C₃-C₈)-cycloalkyl, Bis-[(C₁-C₈)-alkyl]amino-(C₁-C₈)-alkyl, Cyano-(C₁-C₈)-alkylamino-(C₁-C₈)-alkyl, (C₁-C₈)-Haloalkylamino-(C₁-C₈)-alkyl, (C₃-C₈)-Halocycloalkylamino-(C₁-C₈)-alkyl, Arylamino-(C₁-C₈)-alkyl, Heteroarylamino-(C₁-C₈)-alkyl, Heterocyclylamino-(C₁-C₈)-alkyl,Heterocyclyl-(C₁-C₈)-alkylamino-(C₁-C₈)-alkyl, Heteroaryl-(C₁-C₈)-alkylamino-(C₁-C₈)-alkyl, Aryl-(C₁-C₈)-alkylamino-(C₁-C₈)-alkyl, (C₃-C₈)-Cycloalkylamino-(C₁-C₈)-alkyl, Aryl[(C₁-C₈)-alkyl]amino-(C₁-C₈)-alkyl, Heteroaryl[(C₁-C₈)-alkyl]amino-(C₁-C₈)-alkyl, Heterocyclyl[(C₁-C₈)-alkyl]amino-(C₁-C₈)-alkyl, Aryl-(C₁-C₈)-alkyl[(C₁-C₈)-alkyl]amino-(C₁-C₈)-alkyl, (C₃-C₈)-Cycloalkyl-[(C₁-C₈)-alkyl]amino-(C₁-C₈)-alkyl, Heteroaryl-(C₁-C₈)-alkyl[(C₁-C₈)-alkyl]amino-(C₁-C₈)-alkyl, Heterocyclyl-(C₁-C₈)-alkyl[(C₁-C₈)-alkyl]amino-(C₁-C₈)-alkyl, Aryl(arylsulfonyl)amino-(C₁-C₈)-alkyl, (C₁-C₈)-Alkyl(arylsulfonyl)amino-(C₁-C₈)-alkyl, Heteroaryl(arylsulfonyl)amino-(C₁-C₈)-alkyl, Heterocyclyl(arylsulfonyl)amino-(C₁-C₈)-alkyl, Aryl-(C₁-C₈)-alkyl(arylsulfonyl)amino-(C₁-C₈)-alkyl, Heteroaryl-(C₁-C₈)-alkyl(arylsulfonyl)aminoalkyl, Heterocyclylalkyl(arylsulfonyl)aminoalkyl, Cycloalkyl(arylsulfonyl)amino-(C₁-C₈)-alkyl, Aryl[(C₁-C₈)-alkylsulfonyl]amino-(C₁-C₈)-alkyl, (C₁-C₈)-Alkyl[(C₁-C₈)-alkylsulfonyl]amino-(C₁-C₈)-alkyl, Heteroaryl[(C₁-C₈)-alkylsulfonyl]amino-(C₁-C₈)-alkyl, Heterocyclyl-[(C₁-C₈)-alkylsulfonyl]amino-(C₁-C₈)-alkyl, Aryl-(C₁-C₈)-alkyl[(C₁-C₈)-alkylsulfonyl]amino-(C₁-C₈)-alkyl, Heteroaryl-(C₁-C₈)-alkyl[(C₁-C₈)-alkylsulfonyl]amino-(C₁-C₈)-alkyl, Heterocyclyl-(C₁-C₈)-alkyl[(C₁-C₈)-alkylsulfonyl]amino-(C₁-C₈)-alkyl, (C₃-C₈)-Cycloalkyl[(C₁-C₈)-alkylsulfonyl]amino-(C₁-C₈)-alkyl, Aryl(heteroarylsulfonyl)amino-(C₁-C₈)-alkyl, (C₁-C₈)-Alkyl(heteroarylsulfonyl)amino-(C₁-C₈)-alkyl, Heteroaryl(heteroarylsulfonyl)amino-(C₁-C₈)-alkyl, Heterocyclyl(heteroarylsulfonyl)amino-(C₁-C₈)-alkyl, Aryl-(C₁-C₈)-alkyl(heteroarylsulfonyl)amino-(C₁-C₈)-alkyl, Heteroaryl-(C₁-C₈)-alkyl(heteroarylsulfonyl)amino-(C₁-C₈)-alkyl, Heterocyclyl-(C₁-C₈)-alkyl(heteroarylsulfonyl)amino-(C₁-C₈)-alkyl, (C₃-C₈)-Cycloalkyl(heteroarylsulfonyl)amino-(C₁-C₈)-alkyl, Aryl(arylheteroarylsulfonyl)amino-(C₁-C₈)-alkyl, (C₁-C₈)-Alkyl(arylheteroarylsulfonyl)amino-(C₁-C₈)-alkyl, Heteroaryl(arylheteroarylsulfonyl)amino-(C₁-C₈)-alkyl, Heterocyclyl(arylheteroarylsulfonyl)amino-(C₁-C₈)-alkyl, Aryl-(C₁-C₈)-alkyl(arylheteroarylsulfonyl)amino-(C₁-C₈)-alkyl, Heteroaryl-(C₁-C₈)-alkyl(arylheteroarylsulfonyl)amino-(C₁-C₈)-alkyl, Heterocyclyl-(C₁-C₈)-alkyl(arylheteroarylsulfonyl)amino-(C₁-C₈)-alkyl, (C₃-C₈)-Cycloalkyl(arylheteroarylsulfonyl)amino-(C₁-C₈)-alkyl, Aryl(heteroarylheteroarylsulfonyl)amino-(C₁-C₈)-alkyl, (C₁-C₈)-Alkyl(heteroarylheteroarylsulfonyl)amino-(C₁-C₈)-alkyl, Heteroaryl(heteroarylheteroarylsulfonyl)amino-(C₁-C₈)-alkyl, Heterocyclyl(heteroarylheteroarylsulfonyl)amino-(C₁-C₈)-alkyl, Aryl-(C₁-C₈)-alkyl(heteroarylheteroarylsulfonyl)amino-(C₁-C₈)-alkyl, Heteroaryl-(C₁-C₈)-alkyl(heteroarylheteroarylsulfonyl)amino-(C₁-C₈)-alkyl, Heterocyclyl-(C₁-C₈)-alkyl(heteroarylheteroarylsulfonyl)amino-(C₁-C₈)-alkyl, (C₃-C₈)-Cycloalkyl(heteroarylheteroarylsulfonyl)amino-(C₁-C₈)-alkyl, Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₂-C₈)-Alkenylaminocarbonyl-(C₁-C₈)-alkyl, (C₂-C₈)-Alkinylaminocarbonyl-(C₁-C₈)-alkyl, Cyano-(C₁-C₈)-alkylaminocarbonyl-(C₁-C₈)-alkyl, (C₃-C₈)-Cycloalkylaminocarbonyl-(C₁-C₈)-alkyl, Heterocyclylaminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Haloalkoxycarbonyl-(C₁-C₈)-alkyl, Hetaroaryl-(C₁-C₈)-alkylaminocarbonyl-(C₁-C₈)-alkyl, (C₂-C₈)-Alkenyloxycarbonyl-(C₁-C₈)-alkyl, (C₃-C₈)-Cycloalkyl-(C₁-C₈)-alkoxycarbonyl-(C₁-C₈)-alkyl, Aryl-(C₁-C₈)-alkylaminocarbonyl-(C₁-C₈)-alkyl, (C₁-C₈)-Alkylthio-(C₁-C₈)-alkyl, (C₁-C₈)-Haloalkylthio-(C₁-C₈)-alkyl, Arylthio-(C₁-C₈)-alkyl, Heteroarylthio-(C₁-C₈)-alkyl, Aryl-(C₁-C₈)-alkylthio-(C₁-C₈)-alkyl, (C₁-C₈)-Alkylsulfonyl-(C₁-C₈)-alkyl, Arylsulfonyl-(C₁-C₈)-alkyl, (C₃-C₈)-Cycloalkylsulfonyl-(C₁-C₈)-alkyl, Heteroarylsulfonyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkylsulfinyl-(C₁-C₈)-alkyl, Arylsulfinyl-(C₁-C₈)-alkyl, (C₃-C₈)-Cycloalkylsulfinyl-(C₁-C₈)-alkyl, Heteroarylsulfinyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkoxycarbonylamino-(C₁-C₈)-alkyl, Aminocarbonylamino-(C₁-C₈)-alkyl, (C₁-C₈)-Alkylaminocarbonylamino-(C₁-C₈)-alkyl, (C₃-C₈)-Cycloalkylaminocarbonylamino-(C₁-C₈)-alkyl, Amino-(C₁-C₈)-alkylcarbonylaminophenyl-(C₁-C₈)-alkyl, (C₁-C₈)-Alkoxycarbonylamino-(C₁-C₈)-alkylcarbonylaminophenyl-(C₁-C₈)-alkyl, Arylsulfonylaminophenyl-(C₁-C₈)-alkyl, Heteroarylsulfonylaminophenyl-(C₁-C₈)-alkyl, (C₁-C₈)-Alkoxycarbonylphenyl-(C₁-C₈)-alkyl, Hydroxycarbonylphenyl-(C₁-C₈)-alkyl, Heterocyclylcarbonylphenyl-(C₁-C₈)-alkyl, (C₁-C₈)-Alkylaminocarbonylphenyl-(C₁-C₈)-alkyl, Bis-[(C₁-C₈)-alkyl]aminocarbonylphenyl-(C₁-C₈)-alkyl, (C₃-C₈)-Cycloalkylaminocarbonylphenyl-(C₁-C₈)-alkyl, (C₁-C₈)-Alkoxycarbonyl-(C₁-C₈)-alkylaminocarbonylphenyl-(C₁-C₈)-alkyl, (C₁-C₈)-Alkoxycarbonyl[(C₁-C₈)-alkyl]amino-(C₁-C₈)-alkyl, (C₂-C₈)-Alkenyloxycarbonyl[(C₁-C₈)-alkyl]amino-(C₁-C₈)-alkyl, Aryl-(C₁-C₈)-alkoxycarbonyl[(C₁-C₈)-alkyl]amino-(C₁-C₈)-alkyl, (C₃-C₈)-Cycloalkyl-(C₁-C₈)-alkoxycarbonyl[(C₁-C₈)-alky]amino-(C₁-C₈)-alkyl, Heteroaryl-N-(C₁-C₈)-alkyl, Arylheteroaryl-N-(C₁-C₈)-alkyl, (C₂-C₈)-Alkenyloxycarbonyl-N-heterocyclyl, Aryl-(C₁-C₈)-alkoxycarbonyl-N-heterocyclyl, Aryl-N-Heterocyclyl, Heteroaryl-N-heterocyclyl, Arylcarbonyl-N-heterocyclyl, (C₁-C₈)-Alkylcarbonyl-N-heterocyclyl, (C₁-C₈)-Alkylcarbonyl-(C₁-C₈)-alkylaminocarbonyl-(C₁-C₈)-alkyl, Arylcarbonyl-(C₁-C₈)-alkylaminocarbonyl-(C₁-C₈)-alkyl, Heterocyclyl-(C₁-C₈)-alkylaminocarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cycloalkylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, Arylsulfonylamino-(C₁-C₈)-alkyl, (C₁-C₈)-Alkylsulfonylamino-(C₁-C₈)-alkyl, (C₃-C₈)-Cycloalkylsulfonylamino-(C₁-C₈)-alkyl, Heteroarylsulfonylamino-(C₁-C₈)-alkyl, (C₁-C₈)-Alkylcarbonylamino-(C₁-C₈)-alkyl, (C₃-C₈)-Cycloalkylcarbonylamino-(C₁-C₈)-alkyl, Arylcarbonylamino-(C₁-C₈)-alkyl, Heteroarylcarbonylamino-(C₁-C₈)-alkyl steht,
R⁶ für Wasserstoff, Hydroxy, (C₁-C₈)-Alkyl, (C₃-C₈)-Cycloalkyl, Halogen, (C₁-C₈)-Haloalkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Aryl-(C₁-C₈)-alkyl, Heteroaryl-(C₁-C₈)-alkyl, Heterocyclyl-(C₁-C₈)-alkyl, Aryl, (C₁-C₈)-Alkylamino, (C₁-C₈)-Alkylamino-(C₁-C₈)-alkyl, Bis-[(C₁-C₈)-alkyl]amino-(C₁-C₈)-alkyl, Aminocarbonyl-(C₁-C₈)-alkyl, (C₁-C₈)- Alkylaminocarbonyl-(C₁-C₈)-alkyl, Bis-[(C₁-C₈)-alkyl]aminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cyclopropylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, (C₁-C₈)-Alkoxycarbonyl-(C₁-C₈)-alkyl, (C₂-C₈)-Alkenyloxycarbonyl-(C₁-C₈)-alkyl, Hydroxycarbonyl-(C₁-C₈)-alkyl, Cyano-(C₁-C₈)-alkylaminocarbonyl, (C₂-C₈)-Alkinylaminocarbonyl, Heterocyclylcarbonyl, Hetaroaryl-(C₁-C₈)-alkylaminocarbonyl, (C₃-C₈)-Cycloalkyl-(C₁-C₈)-alkoxycarbonylcarbonyl, (C₁-C₈)-Alkoxycarbonylcarbonyl, (C₃-C₈)-Cycloalkyl-(C₁-C₈)-alkylaminocarbonyl, Aryl-(C₁-C₈)-alkylaminocarbonyl, Heterocyclyl oder eine negative Ladung steht,
R⁷, R⁸, R⁹, R¹⁰ unabhängig voneinander für Wasserstoff, Halogen, (C₁-C₈)-Alkyl, (C₃-C₈)-Cycloalkyl, (C₄-C₈)-Cycloalkenyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio, Aryl, Heteroaryl, Heterocyclyl, (C₁-C₈)-Alkoxy-(C₁-C₈)-alkyl, (C₂-C₈)-Alkinyl, (C₂-C₈)-Haloalkinyl, Hydroxy, Amino, (C₁-C₈)-Alkylamino, Bis[(C₁-C₈)-alkyl]amino, Cyano, (C₁-C₈)-Alkoxy-(C₁-C₈)-alkoxy stehen,
oder wobei R⁴ und R⁷, mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷ und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷ und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹¹, R¹², R¹³, R¹⁴ unabhängig voneinander für Wasserstoff, (C₁-C₈)-Alkyl, (C₃-C₈)-Cycloalkyl, Aryl-(C₁-C₈)-alkyl, (C₂-C₈)-Alkenyl, (C₁-C₈)-Haloalkyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹⁵, R¹⁸, R³³ unabhängig voneinander für Wasserstoff, (C₁-C₈)-Alkyl, (C₁-C₈)-Alkoxy, (C₃-C₈)-Cycloalkyl, (C₁-C₈)-Haloalkyl, (C₁-C₈)-Alkoxy-(C₁-C₈)-alkyl, (C₂-C₈)-Alkinyl, (C₁-C₈)-Alkenyl, (C₃-C₈)-Cycloalkyl-(C₁-C₈)-alkyl, Cyano-(C₁-C₈)-alkyl, Nitro-(C₁-C₈)-alkyl, Aryl-(C₁-C₈)-alkyl, Heteroaryl-(C₁-C₈)-alkyl, Heterocyclyl-(C₁-C₈)-alkyl, Aryl, (C₁-C₈)-Alkylamino-(C₁-C₈)-alkyl, Bis-[(C₁-C₈)-alkyl]amino-(C₁-C₈)-alkyl, Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, (C₁-C₈)-Alkylaminocarbonyl, (C₃-C₈)-Cycloalkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, Heterocyclylcarbonyl, (C₃-C₈)-Cycloalkyl-(C₁-C₈)-alkoxycarbonyl-(C₁-C₈)-alkyl, (C₂-C₈)-Alkenyloxycarbonyl-(C₁-C₈)-alkyl, Cyano-(C₁-C₈)-alkylaminocarbonyl, (C₂-C₈)-Alkinylaminocarbonyl, Heterocyclylcarbonyl, Hetaroaryl-(C₁-C₈)-alkylaminocarbonyl, (C₂-C₈)-Alkinyloxycarbonyl, (C₃-C₈)-Cycloalkyl-(C₁-C₈)-alkoxycarbonyl, (C₃-C₈)-Cycloalkyl-(C₁-C₈)-alkoxycarbonylcarbonyl, (C₁-C₈)-Alkoxycarbonylcarbonyl, (C₃-C₈)-Cycloalkyl-(C₁-C₈)-alkylaminocarbonyl, Aryl-(C₁-C₈)-alkylaminocarbonyl, Arylthio-(C₁-C₈)-alkylcarbonyl, (C₁-C₈)-Alkylthio-(C₁-C₈)-alkylcarbonyl, (C₁-C₈)-Alkylamino-(C₁-C₈)-alkylcarbonyl, Arylamino-(C₁-C₈)-alkylcarbonyl, (C₃-C₈)-Cycloalkylamino-(C₁-C₈)-alkylcarbonyl, Arylaminocarbonyl, Heteroarylaminocarbonyl, (C₁-C₈)-Alkoxycarbonyl-(C₁-C₈)-alkylaminocarbonyl steht,
R¹⁶, R¹⁷ unabhängig voneinander für Wasserstoff, (C₁-C₈)-Alkyl, Aryl, (C₃-C₈)-Cycloalkyl, Aryl-(C₁-C₈)-alkyl, (C₂-C₈)-Alkenyl, (C₁-C₈)-Haloalkyl stehen,
R¹⁹, R²⁰, R²¹, R²², R²³, R²⁴, R²⁵, R²⁶ unabhängig voneinander für Wasserstoff, Halogen, (C₁-C₈)-Alkyl, (C₃-C₈)-Cycloalkyl, Aryl-(C₁-C₈)-alkyl, Aryl, Heteroaryl, Heterocyclyl, (C₂-C₈)-Alkenyl, (C₁-C₈)-Haloalkyl, (C₁-C₈)-Alkylthio, (C₁-C₈)-Haloalkylthio, Arylthio, (C₂-C₈)-Alkinyl, (C₁-C₈)-Alkylamino, Bis[(C₁-C₈)-alkyl]amino, (C₁-C₈)-Alkoxy, (C₁-C₈)-Haloalkoxy stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
R²⁷, R²⁸, R²⁹, R³⁰, R³¹, R³², R³⁴, R³⁵ unabhängig voneinander für Wasserstoff, (C₁-C₈)-Alkyl, Aryl, (C₃-C₈)-Cycloalkyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylamino, Bis[(C₁-C₈)-alkyl]amino, (C₁-C₈)-Alkylthio stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden.

3. Verwendung gemäß Anspruch 1, wobei in Formel (I)
Q für 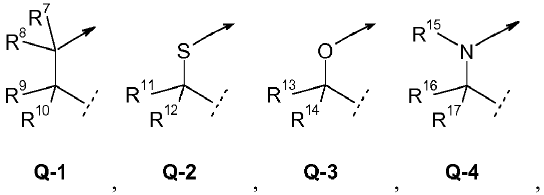 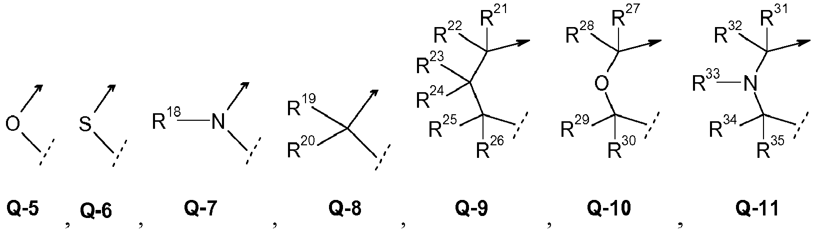 steht, wobei R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴ und R³⁵ jeweils die Bedeutung gemäß der nachstehenden Definitionen haben und wobei der Pfeil für eine Bindung zur Gruppe C-R¹R² steht,
W für Sauerstoff steht,
R¹, R⁴ unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Vinyl, Trifluormethyl, Pentafluorethyl, 1,1,2,2-Tetrafluorethyl, Chlordifluormethyl, Difluormethyl, Methoxymethyl, Ethoxymethyl, Ethoxyethyl, Methoxyethyl, Methoxy, Ethoxy, n-Propoxy, iso-Propoxy, Trifluormethoxy, Difluormethoxy, 2,2-Difluorethoxy, 2,2,2-Trifluorethoxy, Trifluormethylthio, Difluormethylthio stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
R², R³ unabhängig voneinander für Wasserstoff, Fluor, Methyl, Ethyl, n-Propyl, iso-Propyl, Methoxy, Ethoxy, Methylthio, Ethylthio, Trifluormethylthio stehen,
oder wobei R¹ und R² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R³ und R⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R⁵ für eine der in der nachstehenden Tabelle beschriebenen Gruppierungen G-1 bis G-300 steht,
| | | | | |
|---|---|---|---|---|
| 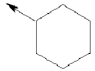 | 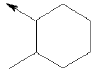 | 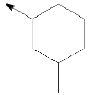 | 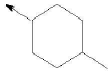 | 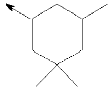 |
| G-1 | G-2 | G-3 | G-4 | G-5 |
| 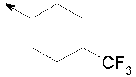 | 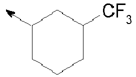 | 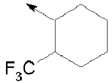 | 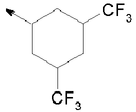 | 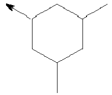 |
| G-6 | G-7 | G-8 | G-9 | G-10 |
| | | | | |
| 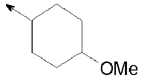 | 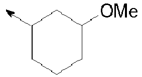 | 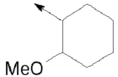 | 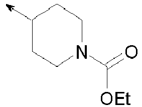 | 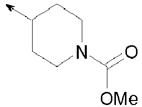 |
| G-11 | G-12 | G-13 | G-14 | G-15 |
| | | | | |
| 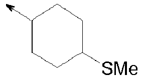 | 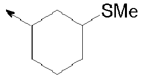 | 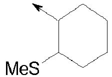 | 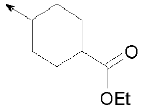 | 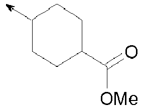 |
| G-16 | G-17 | G-18 | G-19 | G-20 |
| | | | | |
| 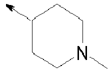 | 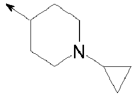 | 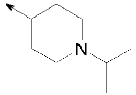 | 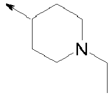 | 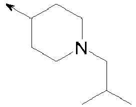 |
| G-21 | G-22 | G-23 | G-24 | G-25 |
| | | | | |
| 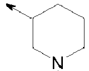 | 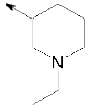 | 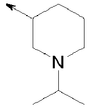 | 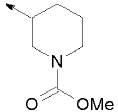 | 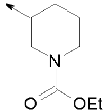 |
| G-26 | G-27 | G-28 | G-29 | G-30 |
| | | | | |
| 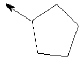 | 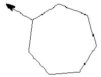 | 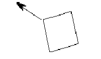 | 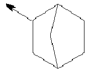 | 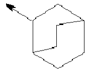 |
| G-31 | G-32 | G-33 | G-34 | G-35 |
| | | | | |
| 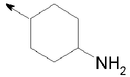 | 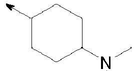 | 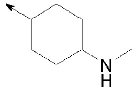 | 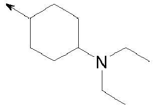 | 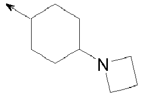 |
| G-36 | G-37 | G-38 | G-39 | G-40 |
| 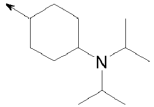 | 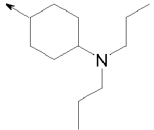 | 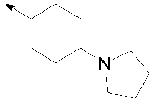 | 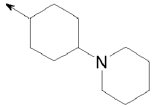 | 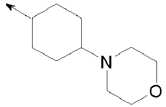 |
| G-41 | G-42 | G-43 | G-44 | G-45 |
| | | | | |
| 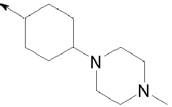 | 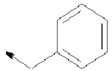 | 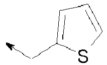 | 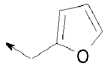 | 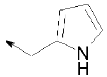 |
| G-46 | G-47 | G-48 | G-49 | G-50 |
| | | | | |
| 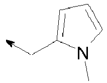 | 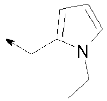 | 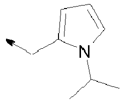 | 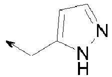 | 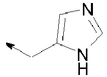 |
| G-51 | G-52 | G-53 | G-54 | G-55 |
| | | | | |
| 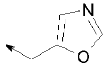 | 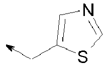 | 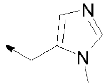 | 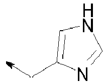 | 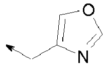 |
| G-56 | G-57 | G-58 | G-59 | G-60 |
| | | | | |
| 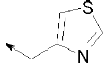 | 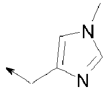 | 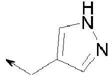 | 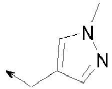 | 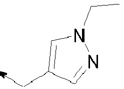 |
| G-61 | G-62 | G-63 | G-64 | G-65 |
| | | | | |
| 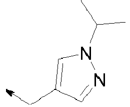 | 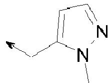 | 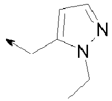 | 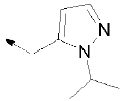 | 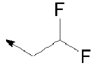 |
| G-66 | G-67 | G-68 | G-69 | G-70 |
| | | | | |
| 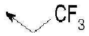 | 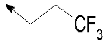 | 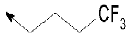 | 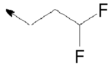 | 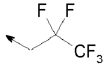 |
| G-71 | G-72 | G-73 | G-74 | G-75 |
| 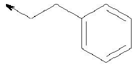 | 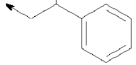 | 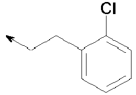 | 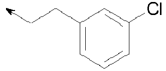 | 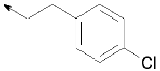 |
| G-76 | G-77 | G-78 | G-79 | G-80 |
| | | | | |
| 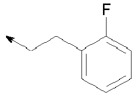 | 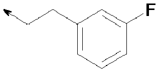 | 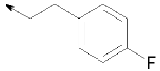 | 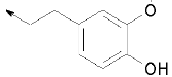 | 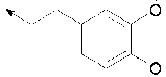 |
| G-81 | G-82 | G-83 | G-84 | G-85 |
| | | | | |
| 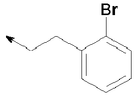 | 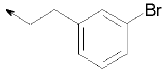 | 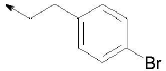 | 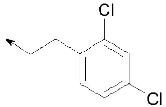 | 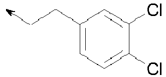 |
| G-86 | G-87 | G-88 | G-89 | G-90 |
| | | | | |
| 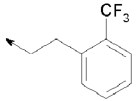 | 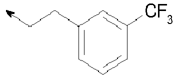 | 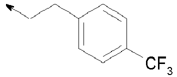 | 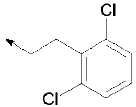 | 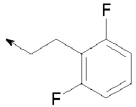 |
| G-91 | G-92 | G-93 | G-94 | G-95 |
| | | | | |
| 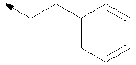 | 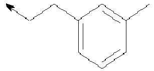 | 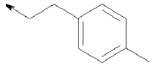 | 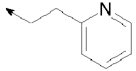 | 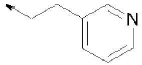 |
| G-96 | G-97 | G-98 | G-99 | G-100 |
| | | | | |
| 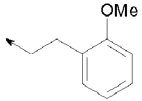 | 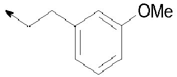 | 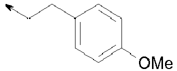 | 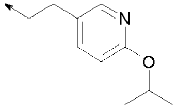 | 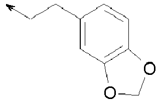 |
| G-101 | G-102 | G-103 | G-104 | G-105 |
| | | | | |
| 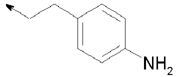 | 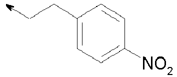 | 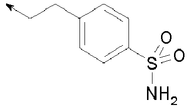 | 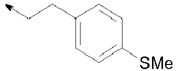 | 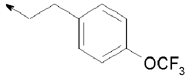 |
| G-106 | G-107 | G-108 | G-109 | G-110 |
| 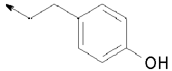 | 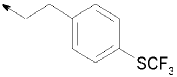 | 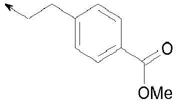 | 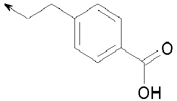 | 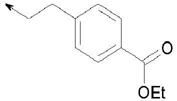 |
| G-111 | G-112 | G-113 | G-114 | G-115 |
| | | | | |
| 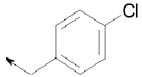 | 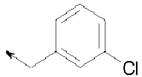 | 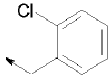 | 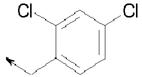 | 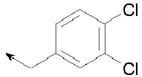 |
| G-116 | G-117 | G-118 | G-119 | G-120 |
| | | | | |
| 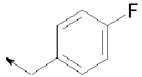 | 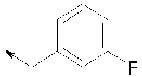 | 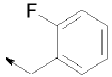 | 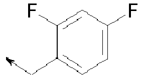 | 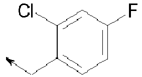 |
| G-121 | G-122 | G-123 | G-124 | G-125 |
| | | | | |
| 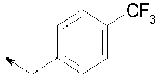 | 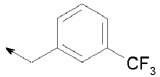 | 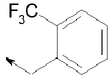 | 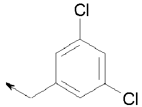 | 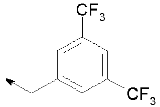 |
| G-126 | G-127 | G-128 | G-129 | G-130 |
| | | | | |
| 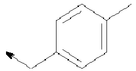 | 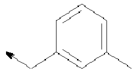 | 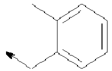 | 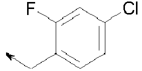 | 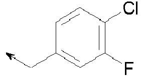 |
| G-131 | G-132 | G-133 | G-134 | G-135 |
| | | | | |
| 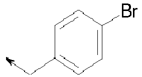 | 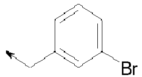 | 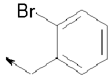 | 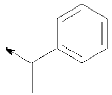 | 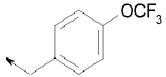 |
| G-136 | G-137 | G-138 | G-139 | G-140 |
| | | | | |
| 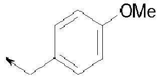 | 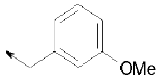 | 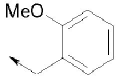 | 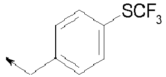 | 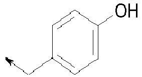 |
| G-141 | G-142 | G-143 | G-144 | G-145 |
| | | | | |
| 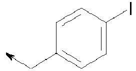 | 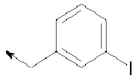 | 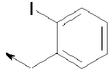 | 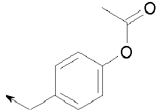 | 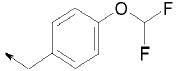 |
| G-146 | G-147 | G-148 | G-149 | G-150 |
| 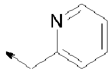 | 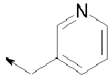 | 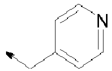 | 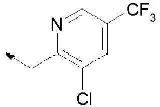 | 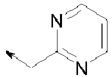 |
| G-151 | G-152 | G-153 | G-154 | G-155 |
| | | | | |
| 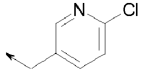 | 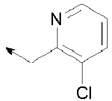 | 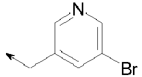 | 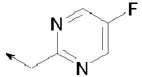 | 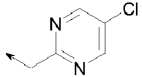 |
| G-156 | G-157 | G-158 | G-159 | G-160 |
| | | | | |
| 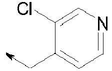 | 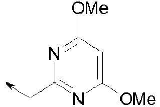 | 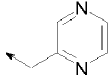 | 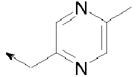 | 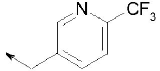 |
| G-161 | G-162 | G-163 | G-164 | G-165 |
| | | | | |
| 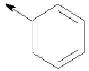 | 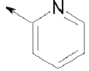 | 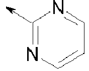 | 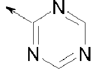 | 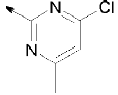 |
| G-166 | G-167 | G-168 | G-169 | G-170 |
| | | | | |
| 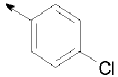 | 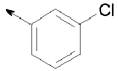 | 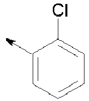 | 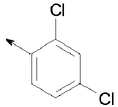 | 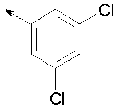 |
| G-171 | G-172 | G-173 | G-174 | G-175 |
| | | | | |
| 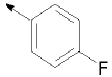 | 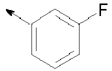 | 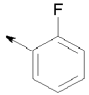 | 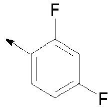 | 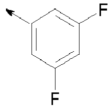 |
| G-176 | G-177 | G-178 | G-179 | G-180 |
| | | | | |
| 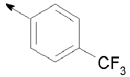 | 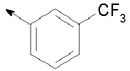 | 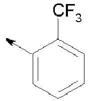 | 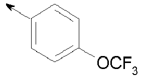 | 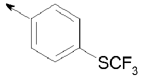 |
| G-181 | G-182 | G-183 | G-184 | G-185 |
| 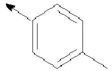 | 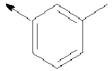 | 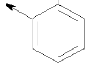 | 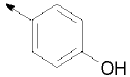 | 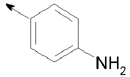 |
| G-186 | G-187 | G-188 | G-189 | G-190 |
| | | | | |
| 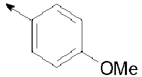 | 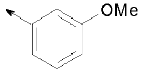 | 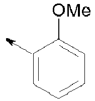 | 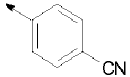 | 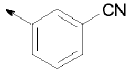 |
| G-191 | G-192 | G-193 | G-194 | G-195 |
| | | | | |
| 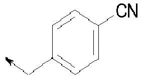 | 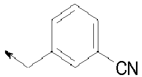 | 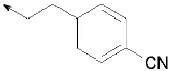 | 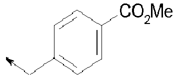 | 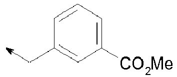 |
| G-196 | G-197 | G-198 | G-199 | G-200 |
| | | | | |
| 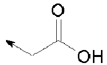 | 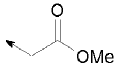 | 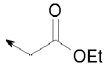 | 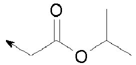 | 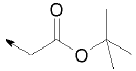 |
| G-201 | G-202 | G-203 | G-204 | G-205 |
| | | | | |
| 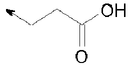 | 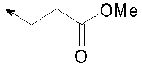 | 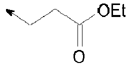 | 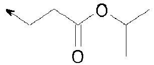 | 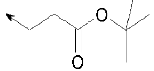 |
| G-206 | G-207 | G-208 | G-209 | G-210 |
| | | | | |
| 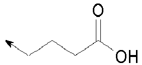 | 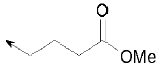 | 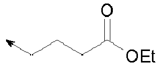 | 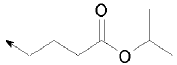 | 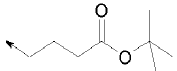 |
| G-211 | G-212 | G-213 | G-214 | G-215 |
| | | | | |
| 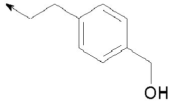 | 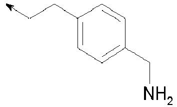 | 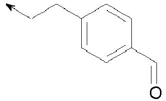 | 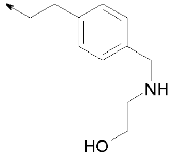 | 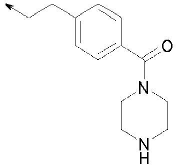 |
| G-216 | G-217 | G-218 | G-219 | G-220 |
| 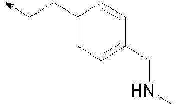 | 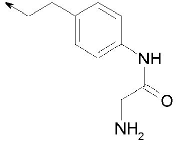 | 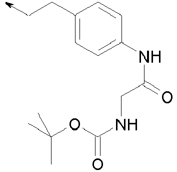 | 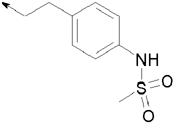 | 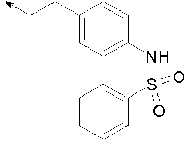 |
| G-221 | G-222 | G-223 | G-224 | G-225 |
| | | | | |
| 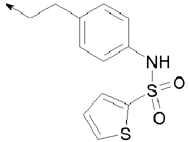 | 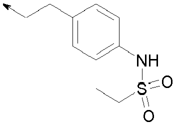 | 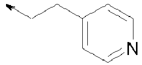 | 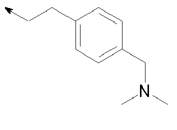 | 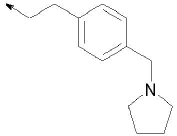 |
| G-226 | G-227 | G-228 | G-229 | G-230 |
| | | | | |
| 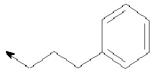 | 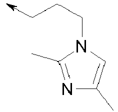 | 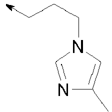 | 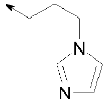 | 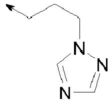 |
| G-231 | G-232 | G-233 | G-234 | G-235 |
| | | | | |
| 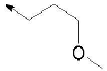 | 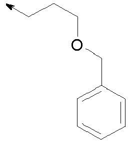 | 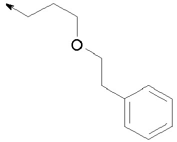 | 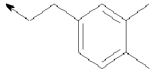 | 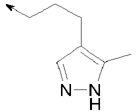 |
| G-236 | G-237 | G-238 | G-239 | G-240 |
| | | | | |
| 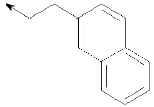 | 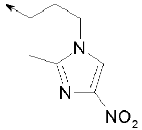 | 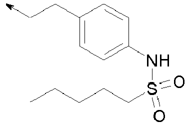 | 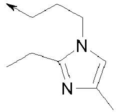 | 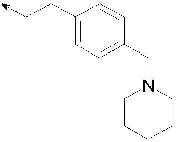 |
| G-241 | G-242 | G-243 | G-244 | G-245 |
| | | | | |
| 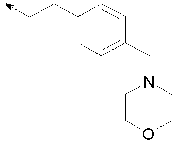 | 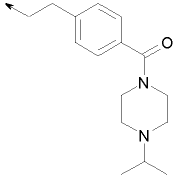 | 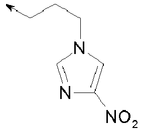 | 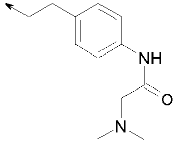 | 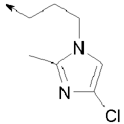 |
| G-246 | G-247 | G-248 | G-249 | G-250 |
| 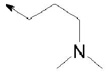 | 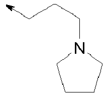 | 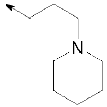 | 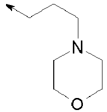 | 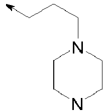 |
| G-251 | G-252 | G-253 | G-254 | G-255 |
| | | | | |
| 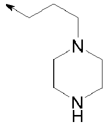 | 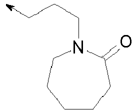 | 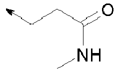 | 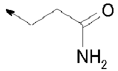 | 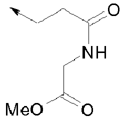 |
| G-256 | G-257 | G-258 | G-259 | G-260 |
| | | | | |
| 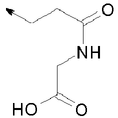 | 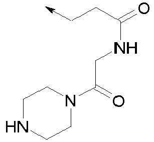 | 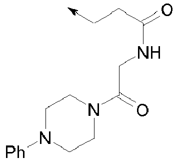 | 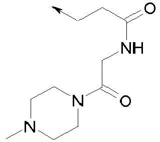 | 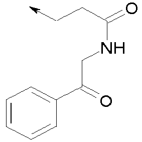 |
| G-261 | G-262 | G-263 | G-264 | G-265 |
| | | | | |
| 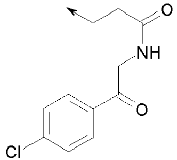 | 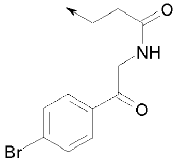 | 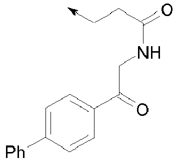 | 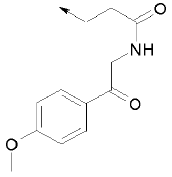 | 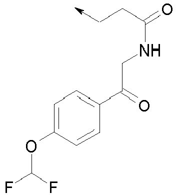 |
| G-266 | G-267 | G-268 | G-269 | G-270 |
| | | | | |
| 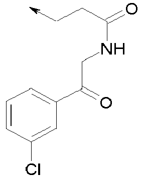 | 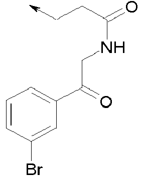 | 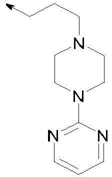 | 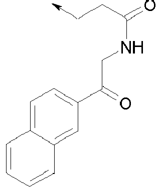 | 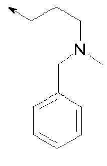 |
| G-271 | G-272 | G-273 | G-274 | G-275 |
| 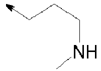 | 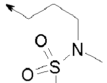 | 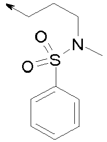 | 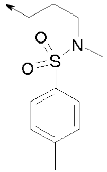 | 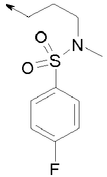 |
| G-276 | G-277 | G-278 | G-279 | G-280 |
| | | | | |
| 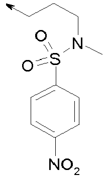 | 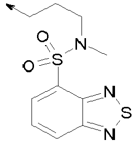 | 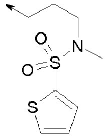 | 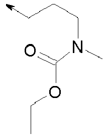 | 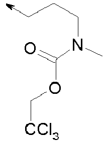 |
| G-281 | G-282 | G-283 | G-284 | G-285 |
| | | | | |
| 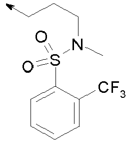 | 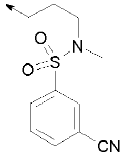 | 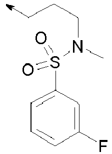 | 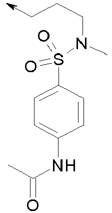 | 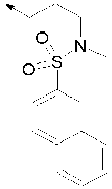 |
| G-286 | G-287 | G-288 | G-289 | G-290 |
| | | | | |
| 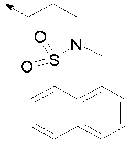 | 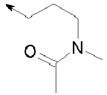 | 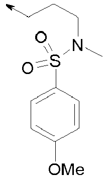 | 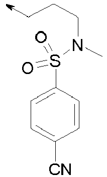 | 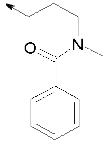 |
| G-291 | G-292 | G-293 | G-294 | G-295 |
| | | | | |
| 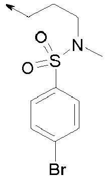 | 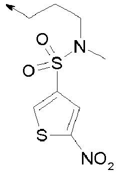 | 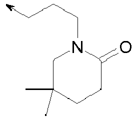 | 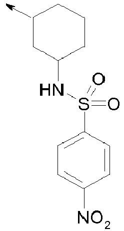 | 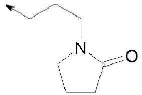 |
| G-296 | G-297 | G-298 | G-299 | G-300 |
R⁶ für Wasserstoff, Hydroxy, Methyl, Ethyl, n-Propyl, iso-Propyl, n-Butyl, Methoxymethyl, Ethoxymethyl, Ethoxyethyl, Methoxyethyl, Prop-1-en-1-yl, But-1-en-1-yl, Allyl, 1-Methyl-prop-2-en-1-yl, 2-Methyl-prop-2-en-1-yl, Propargyl, Cyclopropylmethyl, Benzyl, p-Methoxybenzyl, p-Chlorbenzyl, o-Chlorbenzyl, m-Chlorbenzyl, p-Fluorbenzyl, o-Fluorbenzyl, m-Fluorbenzyl, Cyanomethyl, Cyanoethyl, Cyano-n-propyl, 1-Phenylethyl, 1-(o-Chlorphenyl)ethyl, 1-(o-Fluorphenyl)ethyl, 1-(o-Methylphenyl)ethyl, 1-(o-Bromphenyl)ethyl, 1-(o-Iodphenyl)ethyl, Methoxycarbonylmethyl, Ethoxycarbonylmethyl, Methoxycarbonylethyl, Ethoxycarbonylethyl, Hydroxycarbonylmethyl, Hydroxycarbonylethyl, Methylcarbonyl, Ethylcarbonyl, n-Propylcarbonyl, iso-Propylcarbonyl, Cyclopropylcarbonyl, Cyclobutylcarbonyl, Cyclopentylcarbonyl, Cyclohexylcarbonyl, Trifluormethylcarbonyl, Pentafluormethylcarbonyl, Methoxycarbonyl, Ethoxycarbonyl, iso-Propyloxycarbonyl, tert.-Butyloxycarbonyl, Benzyloxycarbonyl, Allyloxycarbonyl, Methylaminocarbonyl, Ethylaminocarbonyl, n-Propylaminocarbonyl, iso-Propylaminocarbonyl, Phenylaminocarbonyl, Cyclopropylaminocarbonyl, Methylsulfonyl, Ethylsulfonyl, iso-Propylsulfonyl, Phenylsulfonyl, o-Chlorphenylsulfonyl, m-Chlorphenylsulfonyl, p-Chlorphenylsulfonyl, 2,3-Dichlorphenylsulfonyl, p-Cyanophenylsulfonyl, Phenylcarbonyl, p-Chlorphenylcarbonyl, o-Chlorphenylcarbonyl, o-Iodchlorphenylcarbonyl, o-Trifluormethylphenylcarbonyl, o-Bromphenylcarbonyl, 3,5-Dichlophenylcarbonyl, m-Chlorphenylcarbonyl, Heteroarylcarbonyl, Heterocyclyl oder eine negative Ladung steht,
R⁷, R⁸, R⁹, R¹⁰ unabhängig voneinander für Wasserstoff, Fluor, Chlor, Methyl, Ethyl, n-Propyl, iso-Propyl, n-Butyl, iso-Butyl, tert-Butyl, n-Pentyl, Cyclopropyl, Cyclobutyl, Cyclopentyl, Cyclohexyl, Vinyl, Prop-1-en-1-yl, But-1-en-1-yl, Allyl, Ethinyl, Propargyl, 1-Methyl-prop-2-in-1-yl, But-2-in-1-yl, But-3-in-1-yl, 1-Methyl-but-3-in-1-yl, Phenyl, p-Cl-Phenyl, p-F-Phenyl, p-Trifluormethylphenyl, m-Cl-Phenyl, m-F-Phenyl, m-Trifluormethylphenyl, Benzyl, p-Cl-Benzyl, p-F-Benzyl, p-Methoxybenzyl, p-Methylbenzyl, m-Cl-Benzyl, m-F-Benzyl, m-Methoxybenzyl, m-Methylbenzyl, o-Cl-Benzyl, o-F-Benzyl, o-Methoxybenzyl, o-Methylbenzyl, Trifluormethyl, Pentafluorethyl, 1,1,2,2-Tetrafluorethyl, Chlordifluormethyl, Difluormethyl, 2,2-Difluorethyl, 2,2,2-Trifluorethyl, Methoxy, Ethoxy, n-Propyloxy, iso-Propyloxy, n-Butyloxy, iso-Butyloxy, tert.-Butyloxy, Trifluormethoxy, Trifluormethylthio, Methylthio, Hydroxy, Amino, Dimethylamino, Methylamino, Ethylamino stehen,
oder wobei R⁴ und R⁷ mit den Atomen, an die sie gebunden sind, einen vollständig gesättigten oder teilgesättigten, gegebenenfalls durch Heteroatome aus der Gruppe, O, N und S unterbrochenen und gegebenenfalls weiter substituierten 4 bis 7-gliedrigen Ring bilden,
oder wobei R⁷ und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷ und R⁸ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁹ und R¹⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹¹, R¹², R¹³, R¹⁴ unabhängig voneinander für Wasserstoff, Methyl, Ethyl, n-Propyl, iso-Propyl, n-Butyl, iso-Butyl, tert-Butyl, Cyclopropyl, Cyclobutyl, Cyclopentyl, Cyclohexyl, Trifluormethyl, Pentafluorethyl, Difluormethyl, 2,2-Difluorethyl, 2,2,2-Trifluorethyl, Difluor-tert.-butyl stehen,
oder wobei R¹¹ und R¹² mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R¹³ und R¹⁴ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹⁵, R¹⁸, R³³ unabhängig voneinander für für Wasserstoff, Hydroxy, Methyl, Ethyl, n-Propyl, iso-Propyl, n-Butyl, iso-Butyl, tert-Butyl, n-Pentyl, iso-Pentyl, neo-Pentyl, n-Hexyl, Cyclopropyl, Cyclobutyl, Cyclopentyl, Cyclohexyl, Cycloheptyl, 2,2-Difluorethyl, 2,2,2-Trifluorethyl, 3,3-Difluor-n-propyl, 3,3,3-Trifluor-n-propyl, 4,4-Difluor-n-butyl, 4,4,4-Trifluor-n-butyl, Methoxymethyl, Ethoxymethyl, Ethoxyethyl, Methoxyethyl, Methoxy-n-propyl, Ethoxy-n-propyl, Methoxybutyl, Methoxy-iso-Propyl, iso-Propoxymethyl, iso-Propoxyethyl, Prop-1-en-1-yl, But-1-en-1-yl, Allyl, 1-Methyl-prop-2-en-1-yl, 2-Methyl-prop-2-en-1-yl, Propargyl, Cyclopropylmethyl, Benzyl, p-Methoxybenzyl, p-Chlorbenzyl, o-Chlorbenzyl, m- Chlorbenzyl, p-Fluorbenzyl, o-Fluorbenzyl, m-Fluorbenzyl, Cyanomethyl, Cyanoethyl, Cyano-n-propyl, 1-Phenylethyl, 1-(o-Chlorphenyl)ethyl, 1-(o-Fluorphenyl)ethyl, 1-(o-Methylphenyl)ethyl, 1-(o-Bromphenyl)ethyl, 1-(o-Iodphenyl)ethyl, Nitromethyl, Nitroethyl, Phenyl, p-Cl-Phenyl, p-F-Phenyl, p-Trifluormethylphenyl, m-Cl-Phenyl, m-F-Phenyl, m-Trifluormethylphenyl, o-Cl-Phenyl, o-F-Phenyl, o-Methoxyphenyl, p-Methoxyphenyl,o-Trifluormethylphenyl, Methoxycarbonylmethyl, Ethoxycarbonylmethyl, Methoxycarbonylethyl, Ethoxycarbonylethyl, Hydroxycarbonylmethyl, Hydroxycarbonylethyl, Methylcarbonyl, Ethylcarbonyl, n-Propylcarbonyl, iso-Propylcarbonyl, Cyclopropylcarbonyl, Cyclobutylcarbonyl, Cyclopentylcarbonyl, Cyclohexylcarbonyl, Trifluormethylcarbonyl, Pentafluormethylcarbonyl, Methoxycarbonyl, Ethoxycarbonyl, iso-Propyloxycarbonyl, tert.-Butyloxycarbonyl, Benzyloxycarbonyl, Allyloxycarbonyl, Methylaminocarbonyl, Ethylaminocarbonyl, n-Propylaminocarbonyl, iso-Propylaminocarbonyl, Phenylaminocarbonyl, Cyclopropylaminocarbonyl, 1-Phenylethyl-aminocarbonyl, Methylsulfonyl, Ethylsulfonyl, iso-Propylsulfonyl, Phenylsulfonyl, o-Chlorphenylsulfonyl, m-Chlorphenylsulfonyl, p-Chlorphenylsulfonyl, 2,3-Dichlorphenylsulfonyl, p-Cyanophenylsulfonyl, 2,5-Dimethyl-4-Chlorphenylsulfonyl, 3,4-Dimethoxyphenylsulfonyl, 3,4-Dichlorphenylsulfonyl, 3,5-Dichlorphenylsulfonyl, 2,5-Dichlorphenylsulfonyl, Heteroarylsulfonyl, p-Trifluormethylphenylsulfonyl, o-Trifluormethoxyphenylsulfonyl, p-Trifluormethoxyphenylsulfonyl, o-Trifluormethylphenylsulfonyl, m-Trifluormethylphenylsulfonyl, 2,4-Dimethylisoxazol-3-ylsulfonyl, 3-Chlor-5-methyl-pyrazol-4-ylsulfonyl, Phenylcarbonyl, p-Chlorphenylcarbonyl, o-Chlorphenylcarbonyl, o-Iodchlorphenylcarbonyl, o-Trifluormethylphenylcarbonyl, o-Bromphenylcarbonyl, 3,5-Dichlophenylcarbonyl, m-Chlorphenylcarbonyl, p-tert.-Butylphenylcarbonyl, 1-Phenyl-phenylmeth-1-ylcarbonyl, 3,4,5-Trimethoxyphenylcarbonyl, Pyridin-2-ylcarbonyl, Pyridin-3-ylcarbonyl, Pyridin-4-ylcarbonyl, Methylaminomethyl, Methylaminoethyl, Dimethylaminoethyl, Diethylaminoethyl, Methoxy, 1-Phenyleth-1-ylaminocarbonyl, Phenylaminocarbonyl, p-Cl-Phenylaminocarbonyl, p-F-Phenylaminocarbonyl, o-Cl-Phenylaminocarbonyl, o-F-Phenylaminocarbonyl steht,
R¹⁶, R¹⁷ unabhängig voneinander für Wasserstoff, Methyl, Ethyl, n-Propyl, iso-Propyl, n-Butyl, iso-Butyl, tert-Butyl, Cyclopropyl, Cyclobutyl, Cyclopentyl, Cyclohexyl, Cycloheptyl, Vinyl, Prop-1-en-1-yl, But-1-en-1-yl, Allyl stehen,
oder wobei R¹⁶ und R¹⁷ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
R¹⁹, R²⁰, R²¹, R²², R²³, R²⁴, R²⁵, R²⁶ unabhängig voneinander für Wasserstoff, Fluor, Chlor, Methyl, Ethyl, n-Propyl, iso-Propyl, Cyclopropyl, Cyclobutyl, Cyclopentyl, Cyclohexyl, Vinyl, Allyl, Trifluormethyl, Pentafluorethyl, Methylthio, Trifluormethylthio, Phenylthio, Methoxy, Ethoxy, n-Propyloxy, iso-Propyloxy, Ethinyl, Propargyl, Methylamino, Ethylamino, n-Propylamino, iso-Propylamino, Dimethylamino, Diethylamino, Trifluormethyloxy, Difluormethyloxy stehen,
oder wobei R¹⁹ und R²⁰ mit dem Atom, an das sie gebunden sind, einen vollständig gesättigten oder teilgesättigten, gegebenenfalls durch Heteroatome aus der Gruppe N, O und S unterbrochenen und gegebenenfalls weiter substituierten 3 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
R²⁷, R²⁸, R²⁹, R³⁰, R³¹, R³², R³⁴, R³⁵ unabhängig voneinander für Wasserstoff, Methyl, Ethyl, n-Propyl, iso-Propyl, Cyclopropyl, Cyclobutyl, Cyclopentyl, Cyclohexyl, Vinyl, Allyl, Trifluormethyl, Pentafluorethyl, Methoxy, Ethoxy, n-Propyloxy, iso-Propyloxy, Methylamino, Ethylamino, n-Propylamino, iso-Propylamino, Dimethylamino, Diethylamino stehen,
oder wobei R⁴ und R³¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden.

4. Behandlung von Pflanzen, umfassend die Applikation einer zur Steigerung der Widerstandsfähigkeit von Pflanzen gegenüber abiotischen Stressfaktoren wirksamen, nicht-toxischen Menge einer oder mehrerer der Verbindungen der Formel (I), oder jeweils deren Salze gemäß einem der Ansprüche 1 bis 3.

5. Behandlung gemäß Anspruch 4, wobei die abiotischen Stressbedingungen einer oder mehrerer Bedingungen ausgewählt aus der Gruppe bestehend aus Dürre, Kältestress, Hitzestress, Trockenstress, osmotischem Stress, Staunässe, erhöhtem Bodensalzgehalt, erhöhtem Ausgesetztsein an Mineralien, Ozonbedingungen, Starklichtbedingungen, beschränkter Verfügbarkeit von Stickstoffnährstoffen und beschränkter Verfügbarkeit von Phosphornährstoffen entsprechen.

6. Verwendung einer oder mehrerer Verbindungen der Formel (I), oder jeweils deren Salze gemäß einem der Ansprüche 1 bis 3 in der Sprühapplikation auf Pflanzen und Pflanzenteilen in Kombinationen mit einem oder mehrer Wirkstoffen ausgewählt aud der Gruppe der Insektizide, Lockstoffe, Akarizide, Fungizide, Nematizide, Herbizide, wachstumsregulatorische Stoffe, Safener, die Pflanzenreife beeinflussende Stoffe und Bakterizide.

7. Verwendung einer oder mehrerer Verbindungen der Formel (I), oder jeweils deren Salze gemäß einem der Ansprüche 1 bis 3 in der Sprühapplikation auf Pflanzen und Pflanzenteilen in Kombinationen mit Düngemitteln.

8. Verwendung einer oder mehrerer Verbindungen der Formel (I), oder jeweils deren Salze gemäß einem der Ansprüche 1 bis 3 zur Applikation auf gentechnisch veränderten Sorten, deren Saatgut, oder auf Anbauflächen auf denen diese Sorten wachsen.

9. Verwendung von Sprühlösungen, die eine oder mehrere der Verbindungen der Formel (I), oder jeweils deren Salze gemäß einem der Ansprüche 1 bis 3 enthalten, zur Steigerung der Widerstandsfähigkeit von Pflanzen gegenüber abiotischen Stressfaktoren.

10. Verfahren zur Erhöhung der Stresstoleranz bei Pflanzen ausgewählt aus der Gruppe der Nutzpflanzen, Zierpflanzen, Rasenarten, oder Bäumen, **dadurch gekennzeichnet, dass** die Applikation einer ausreichenden, nicht-toxischen Menge einer oder mehrere Verbindungen der Formel (I), oder jeweils deren Salze gemäß einem der Ansprüche 1 bis 3 auf die Fläche, wo die entsprechende Wirkung gewünscht wird, umfassend die Anwendung auf die Pflanzen, deren Saatgut oder auf die Fläche auf der die Pflanzen wachsen, erfolgt.

11. Verfahren gemäß Anspruch 10, wobei die Widerstandsfähigkeit der so behandelten Pflanzen gegenüber abiotischem Stress gegenüber nicht behandelten Pflanzen unter ansonsten gleichen physiologischen Bedingungen um mindestens 3% erhöht ist.

12. Tricyclische substituierte Pyrimidindione der allgemeinen Formel (I) oder deren Salze, 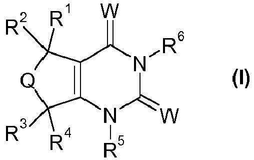 worin
Q für 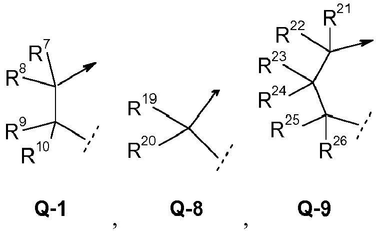
steht, wobei R⁷, R⁸, R⁹, R¹⁰, R¹⁹, R²⁰, R²¹, R²², R²³, R²⁴, R²⁵ und R²⁶ jeweils die Bedeutung gemäß der nachstehenden Definitionen haben und wobei der Pfeil für eine Bindung zur Gruppe C-R¹R² steht,
W für Sauerstoff oder Schwefel steht,
R¹, R⁴ unabhängig voneinander für Wasserstoff, Halogen, (C₁-C₈)-Alkyl, (C₃-C₁₀)-Cycloalkyl, (C₂-C₈)-Alkenyl, (C₄-C₈)-Cycloalkenyl, (C₂-C₈)-Alkinyl, Aryl, Aryl-(C₁-C₈)-alkyl, Aryl-(C₂-C₈)-alkenyl, Aryl-(C₂-C₈)-alkinyl, Heteroaryl, Heterocyclyl, (C₃-C₈)-Cycloalkyl-(C₁-C₈)-alkyl, (C₃-C₈)-Cycloalkyl-(C₂-C₈)-alkenyl, (C₃-C₈)-Cycloalkyl-(C₂-C₈)-alkinyl, Heteroaryl-(C₁-C₈)-alkyl, Heterocyclyl-(C₁-C₈)-alkyl, Heteroaryl-(C₂-C₈)-alkenyl, Heteroaryl-(C₂-C₈)-alkinyl, (C₁-C₈)-Haloalkyl, (C₃-C₈)-Halocycloalkyl, (C₂-C₈)-Haloalkenyl, (C₄-C₈)-Halocycloalkenyl, (C₂-C₈)-Haloalkinyl, (C₃-C₈)- Alkoxy-(C₁-C₈)-alkyl-(C₂-C₈)-alkinyl, Tris[(C₁-C₈)-alkyl]silyl-(C₂-C₈)-alkinyl, Bis[(C₁-C₈)-alkyl](aryl)silyl-(C₂-C₈)-alkinyl, Bisaryl] (C₁-C₈)-alkyl]silyl-(C₂-C₈)-alkinyl, (C₁-C₈)-Alkoxy-(C₁-C₈)-alkyl, (C₁-C₈)-Alkoxy, (C₁-C₈)-Haloalkoxy, (C₃-C₈)-Cycloalkyloxy, (C₂-C₈)-Alkenyloxy-(C₁-C₈)-alkyl, Heteroaryl-(C₁-C₈)-alkoxy, Aryl-(C₁-C₈)-alkoxy, (C₁-C₈)-Alkylthio, (C₁-C₈)-Alkylthio-(C₁-C₈)-alkyl, (C₁-C₈)-Haloalkylthio, Arylthio, (C₃-C₈)-Cycloalkylthio, (C₁-C₈)-Alkylsulfonyl, (C₁-C₈)-Alkylsulfinyl, Arylsulfonyl, Arylsulfinyl, (C₃-C₈)-Cycloalkylsulfonyl, (C₃-C₈)-Cycloalkylsulfinyl, (C₃-C₈)-Cycloalkyl-(C₁-C₈)-alkoxy, (C₂-C₈)-Alkinyl-(C₁-C₈)-alkoxy, (C₂-C₈)-Alkenyl-(C₁-C₈)-alkoxy, (C₂-C₈)-Alkenyloxy-(C₁-C₈)-alkoxy, (C₁-C₈)-Alkyloxy-(C₁-C₈)-alkoxy, (C₁-C₈)-Alkylamino-(C₁-C₈)-alkoxy, Bis[(C₁-C₈)-alkyl]amino-(C₁-C₈)-alkoxy, (C₃-C₈)-Cycloalkylamino-(C₁-C₈)-alkoxy, Heterocyclyl-N-(C₁-C₈)-alkoxy, Aryloxy, Heteroaryloxy, Tris-[(C₁-C₈)-alkyl]silyl, Bis-[(C₁-C₈)-alkyl]arylsilyl, Bis-[(C₁-C₈)-alkyl]-[(C₁-C₈)-alkyl]silyl, (C₁-C₈)-Alkylamino, (C₂-C₈)-Alkenylamino, (C₃-C₈)-Cycloalkylamino, Aryl-(C₁-C₈)-alkylamino, Arylamino, Bis[(C₁-C₈)-alkyl]amino, Hydroxy, Amino, Nitro, Cyano, (C₁-C₈)-Alkoxy-(C₁-C₈)-alkoxy stehen,
R², R³ unabhängig voneinander für Wasserstoff, Halogen, (C₁-C₈)-Alkyl, (C₃-C₈)-Cycloalkyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio stehen,
R⁵ für (C₁-C₈)-Alkyl, (C₃-C₁₀)-Cycloalkyl, (C₂-C₈)-Alkenyl, (C₂-C₈)-Alkinyl, (C₁-C₈)-Haloalkyl, (C₁-C₈)-Haloalkoxy-(C₁-C₈)-alkyl, Cyano-(C₁-C₈)-alkoxy-(C₁-C₈)-alkyl, (C₃-C₈)-Halocycloalkyl, (C₄-C₈)-Cycloalkenyl, (C₄-C₈)-Halocycloalkenyl, Hydroxy-(C₁-C₈)-alkyl, Tris-[(C₁-C₈)-Alkylsilyl]oxy-(C₁-C₈)-alkyl, Bis-[(C₁-C₈)-alkyl]arylsilyloxy-(C₁-C₈)-alkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Amino-(C₁-C₈)-alkyl, Aryl-(C₁-C₈)-alkyl, Heteroaryl-(C₁-C₈)-alkyl, Heterocyclyl-(C₁-C₈)-alkyl, Heterocyclyl-N-(C₁-C₈)-Alkyl, (C₃-C₈)-Cycloalkyloxy-(C₁-C₈)-alkyl, Aryl, Heterocyclyl, Aryloxy-(C₁-C₈)-alkyl, Aryl-(C₁-C₈)-alkoxy-(C₁-C₈)-alkyl, Heteroaryloxy-(C₁-C₈)-alkyl, Heterocyclyloxy-(C₁-C₈)-alkyl, (C₁-C₈)-Alkoxycarbonyl-N-Heterocyclyl, Heteroaryl, (C₁-C₈)-Alkylamino-(C₁-C₈)-alkyl, (C₁-C₈)-Alkylamino-(C₃-C₈)-cycloalkyl, Bis-[(C₁-C₈)-Alkyl]amino-(C₃-C₈)-cycloalkyl, Bis-[(C₁-C₈)-alkyl]amino-(C₁-C₈)-alkyl, Cyano-(C₁-C₈)-alkylamino-(C₁-C₈)-alkyl, (C₁-C₈)-Haloalkylamino-(C₁-C₈)-alkyl, (C₃-C₈)-Halocycloalkylamino-(C₁-C₈)-alkyl, Arylamino-(C₁-C₈)-alkyl, Heteroarylamino-(C₁-C₈)-alkyl, Heterocyclylamino-(C₁-C₈)-alkyl,Heterocyclyl-(C₁-C₈)-alkylamino-(C₁-C₈)-alkyl, Heteroaryl-(C₁-C₈)-alkylamino-(C₁-C₈)-alkyl, Aryl-(C₁-C₈)-alkylamino-(C₁-C₈)-alkyl, (C₃-C₈)-Cycloalkylamino-(C₁-C₈)-alkyl, Aryl[(C₁-C₈)-alkyl]amino-(C₁-C₈)-alkyl, Heteroaryl[(C₁-C₈)-alkyl]amino-(C₁-C₈)-alkyl, Heterocyclyl[(C₁-C₈)-alkyl]amino-(C₁-C₈)-alkyl, Aryl-(C₁-C₈)-alkyl[(C₁-C₈)-alkyl]amino-(C₁-C₈)-alkyl, (C₃-C₈)-Cycloalkyl-[(C₁-C₈)-alkyl]amino-(C₁-C₈)-alkyl, Heteroaryl-(C₁-C₈)-alkyl[(C₁-C₈)-alkyl]amino-(C₁-C₈)-alkyl, Heterocyclyl-(C₁-C₈)-alkyl[(C₁-C₈)-alkyl]amino-(C₁-C₈)-alkyl, Aryl(arylsulfonyl)amino-(C₁-C₈)-alkyl, (C₁-C₈)-Alkyl(arylsulfonyl)amino-(C₁-C₈)-alkyl, Heteroaryl(arylsulfonyl)amino-(C₁-C₈)-alkyl, Heterocyclyl(arylsulfonyl)amino-(C₁-C₈)-alkyl, Aryl-(C₁-C₈)-alkyl(arylsulfonyl)amino-(C₁-C₈)-alkyl, Heteroaryl-(C₁-C₈)-alkyl(arylsulfonyl)aminoalkyl, Heterocyclylalkyl(arylsulfonyl)aminoalkyl, Cycloalkyl(arylsulfonyl)amino-(C₁-C₈)-alkyl, Aryl[(C₁-C₈)-alkylsulfonyl]amino-(C₁-C₈)-alkyl, (C₁-C₈)-Alkyl[(C₁-C₈)-alkylsulfonyl]amino-(C₁-C₈)-alkyl, Heteroaryl[(C₁-C₈)-alkylsulfonyl]amino-(C₁-C₈)-alkyl, Heterocyclyl-[(C₁-C₈)-alkylsulfonyl]amino-(C₁-C₈)-alkyl, Aryl-(C₁-C₈)-alkyl[(C₁-C₈)-alkylsulfonyl]amino-(C₁-C₈)-alkyl, Heteroaryl-(C₁-C₈)-alkyl[(C₁-C₈)-alkylsulfonyl]amino-(C₁-C₈)-alkyl, Heterocyclyl-(C₁-C₈)-alkyl[(C₁-C₈)-alkylsulfonyl]amino-(C₁-C₈)-alkyl, (C₃-C₈)-Cycloalkyl[(C₁-C₈)-alkylsulfonyl]amino-(C₁-C₈)-alkyl, Aryl(heteroarylsulfonyl)amino-(C₁-C₈)-alkyl, (C₁-C₈)-Alkyl(heteroarylsulfonyl)amino-(C₁-C₈)-alkyl, Heteroaryl(heteroarylsulfonyl)amino-(C₁-C₈)-alkyl, Heterocyclyl(heteroarylsulfonyl)amino-(C₁-C₈)-alkyl, Aryl-(C₁-C₈)-alkyl(heteroarylsulfonyl)amino-(C₁-C₈)-alkyl, Heteroaryl-(C₁-C₈)-alkyl(heteroarylsulfonyl)amino-(C₁-C₈)-alkyl, Heterocyclyl-(C₁-C₈)-alkyl(heteroarylsulfonyl)amino-(C₁-C₈)-alkyl, (C₃-C₈)-Cycloalkyl(heteroarylsulfonyl)amino-(C₁-C₈)-alkyl, Aryl(arylheteroarylsulfonyl)amino-(C₁-C₈)-alkyl, (C₁-C₈)-Alkyl(arylheteroarylsulfonyl)amino-(C₁-C₈)-alkyl, Heteroaryl(arylheteroarylsulfonyl)amino-(C₁-C₈)-alkyl, Heterocyclyl(arylheteroarylsulfonyl)amino-(C₁-C₈)-alkyl, Aryl-(C₁-C₈)-alkyl(arylheteroarylsulfonyl)amino-(C₁-C₈)-alkyl, Heteroaryl-(C₁-C₈)-alkyl(arylheteroarylsulfonyl)amino-(C₁-C₈)-alkyl, Heterocyclyl-(C₁-C₈)-alkyl(arylheteroarylsulfonyl)amino-(C₁-C₈)-alkyl, (C₃-C₈)-Cycloalkyl(arylheteroarylsulfonyl)amino-(C₁-C₈)-alkyl, Aryl(heteroarylheteroarylsulfonyl)amino-(C₁-C₈)-alkyl, (C₁-C₈)-Alkyl(heteroarylheteroarylsulfonyl)amino-(C₁-C₈)-alkyl, Heteroaryl(heteroarylheteroarylsulfonyl)amino-(C₁-C₈)-alkyl, Heterocyclyl(heteroarylheteroarylsulfonyl)amino-(C₁-C₈)-alkyl, Aryl-(C₁-C₈)-alkyl(heteroarylheteroarylsulfonyl)amino-(C₁-C₈)-alkyl, Heteroaryl-(C₁-C₈)-alkyl(heteroarylheteroarylsulfonyl)amino-(C₁-C₈)-alkyl, Heterocyclyl-(C₁-C₈)-alkyl(heteroarylheteroarylsulfonyl)amino-(C₁-C₈)-alkyl, (C₃-C₈)-Cycloalkyl(heteroarylheteroarylsulfonyl)amino-(C₁-C₈)-alkyl, Aminocarbonyl-(C₁-C₈)-alkyl, (C₁-C₈)-Alkylaminocarbonyl-(C₁-C₈)-alkyl, Bis-[(C₁-C₈)-alkyl]aminocarbonyl-(C₁-C₈)-alkyl, (C₂-C₈)-Alkenylaminocarbonyl-(C₁-C₈)-alkyl, (C₂-C₈)-Alkinylaminocarbonyl-(C₁-C₈)-alkyl, Cyano-(C₁-C₈)-alkylanünocarbonyl-(C₁-C₈)-alkyl, (C₃-C₈)-Cycloalkylaminocarbonyl-(C₁-C₈)-alkyl, Heterocyclylaminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Haloalkoxycarbonyl-(C₁-C₈)-alkyl, Hetaroaryl-(C₁-C₈)-alkylaminocarbonyl-(C₁-C₈)-alkyl, (C₂-C₈)-Alkenyloxycarbonyl-(C₁-C₈)-alkyl, (C₃-C₈)-Cycloalkyl-(C₁-C₈)-alkoxycarbonyl-(C₁-C₈)-alkyl, Aryl-(C₁-C₈)-alkylaminocarbonyl-(C₁-C₈)-alkyl, (C₁-C₈)-Alkylthio-(C₁-C₈)-alkyl, (C₁-C₈)-Haloalkylthio-(C₁-C₈)-alkyl, Arylthio-(C₁-C₈)-alkyl, Heteroarylthio-(C₁-C₈)-alkyl, Aryl-(C₁-C₈)-alkylthio-(C₁-C₈)-alkyl, (C₁-C₈)-Alkylsulfonyl-(C₁-C₈)-alkyl, Arylsulfonyl-(C₁-C₈)-alkyl, (C₃-C₈)-Cycloalkylsulfonyl-(C₁-C₈)-alkyl, Heteroarylsulfonyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkylsulfinyl-(C₁-C₈)-alkyl, Arylsulfinyl-(C₁-C₈)-alkyl, (C₃-C₈)-Cycloalkylsulfinyl-(C₁-C₈)-alkyl, Heteroarylsulfinyl-(C₁-C₈)-alkyl, Heterocyclylsulfinyl-(C₁-C₈)-alkyl, (C₁-C₈)-Haloalkylsulfinyl-(C₁-C₈)-alkyl, (C₃-C₈)-Halocycloalkylsulfinyl-(C₁-C₈)-alkyl, (C₁-C₈)-Alkoxycarbonylamino-(C₁-C₈)-alkyl, Aminocarbonylamino-(C₁-C₈)-alkyl, (C₁-C₈)-Alkylaminocarbonylamino-(C₁-C₈)-alkyl, (C₃-C₈)-Cycloalkylaminocarbonylamino-(C₁-C₈)-alkyl, Amino-(C₁-C₈)-alkylcarbonylaminophenyl-(C₁-C₈)-alkyl, (C₁-C₈)-Alkoxycarbonylamino-(C₁-C₈)-alkylcarbonylaminophenyl-(C₁-C₈)-alkyl, Arylsulfonylaminophenyl-(C₁-C₈)-alkyl, Heteroarylsulfonylaminophenyl-(C₁-C₈)-alkyl, (C₁-C₈)-Alkoxycarbonylphenyl-(C₁-C₈)-alkyl, Hydroxycarbonylphenyl-(C₁-C₈)-alkyl, Heterocyclylcarbonylphenyl-(C₁-C₈)-alkyl, (C₁-C₈)-Alkylaminocarbonylphenyl-(C₁-C₈)-alkyl, Bis-[(C₁-C₈)-alkyl]aminocarbonylphenyl-(C₁-C₈)-alkyl, (C₃-C₈)-Cycloalkylaminocarbonylphenyl-(C₁-C₈)-alkyl, (C₁-C₈)-Alkoxycarbonyl-(C₁-C₈)-alkylaminocarbonylphenyl-(C₁-C₈)-alkyl, (C₁-C₈)-Alkoxycarbonyl[(C₁-C₈)-alkyl]amino-(C₁-C₈)-alkyl, (C₂-C₈)-Alkenyloxycarbonyl[(C₁-C₈)-alkyl]amino-(C₁-C₈)-alkyl, Aryl-(C₁-C₈)-alkoxycarbonyl[(C₁-C₈)-alkyl]amino-(C₁-C₈)-alkyl, (C₃-C₈)-Cycloalkyl-(C₁-C₈)-alkoxycarbonyl[(C₁-C₈)-alky]amino-(C₁-C₈)-alkyl, Heteroaryl-N-(C₁-C₈)-alkyl, Arylheteroaryl-N-(C₁-C₈)-alkyl, (C₂-C₈)-Alkenyloxycarbonyl-N-heterocyclyl, Aryl-(C₁-C₈)-alkoxycarbonyl-N-heterocyclyl, Aryl-N-Heterocyclyl, Heteroaryl-N-heterocyclyl, Arylcarbonyl-N-heterocyclyl, (C₁-C₈)-Alkylcarbonyl-N-heterocyclyl, (C₁-C₈)-Alkylcarbonyl-(C₁-C₈)-alkylaminocarbonyl-(C₁-C₈)-alkyl, Arylcarbonyl-(C₁-C₈)-alkylaminocarbonyl-(C₁-C₈)-alkyl, Heterocyclyl-(C₁-C₈)-alkylaminocarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cycloalkylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, Arylsulfonylamino-(C₁-C₈)-alkyl, (C₁-C₈)-Alkylsulfonylamino-(C₁-C₈)-alkyl, (C₃-C₈)-Cycloalkylsulfonylamino-(C₁-C₈)-alkyl, Heteroarylsulfonylamino-(C₁-C₈)-alkyl, (C₁-C₈)-Alkylcarbonylamino-(C₁-C₈)-alkyl, (C₃-C₈)-Cycloalkylcarbonylamino-(C₁-C₈)-alkyl, Arylcarbonylamino-(C₁-C₈)-alkyl, Heteroarylcarbonylamino-(C₁-C₈)-alkyl steht,
R⁶ für Wasserstoff, Hydroxy, (C₁-C₈)-Alkyl, (C₃-C₈)-Cycloalkyl, Halogen, (C₂-C₈)- (C₁-C₈)-Haloalkyl, (C₁-C₈)-Alkoxy-(C₁-C₈)-alkyl, (C₂-C₈)-Alkinyl, (C₂-C₈)-Alkenyl, (C₃-C₈)-Cycloalkyl-(C₁-C₈)-alkyl, Cyano-(C₁-C₈)-alkyl, Nitro-(C₁-C₈)-alkyl, Aryl-(C₁-C₈)-alkyl, Heteroaryl-(C₁-C₈)-alkyl, Heterocyclyl-(C₁-C₈)-alkyl, Aryl, (C₁-C₈)-Alkylamino, (C₁-C₈)-Alkylamino-(C₁-C₈)-alkyl, Bis-[(C₁-C₈)-alkyl]amino-(C₁-C₈)-alkyl, Aminocarbonyl-(C₁-C₈)-alkyl, (C₁-C₈)- Alkylaminocarbonyl-(C₁-C₈)-alkyl, Bis-[(C₁-C₈)-alkyl]aminocarbonyl-(C₁-C₈)-alkyl, (C₁-C₈)-Alkoxycarbonyl-(C₁-C₈)-alkyl, Hydroxycarbonyl-(C₁-C₈)-alkyl, (C₁-C₈)-Alkylcarbonyl, (C₃-C₈)-Cycloalkylcarbonyl, (C₁-C₈)-Haloalkylcarbonyl, (C₁-C₈)-Alkoxycarbonyl, (C₂-C₈)-Alkenyloxycarbonyl, Aryl-(C₁-C₈)-alkoxycarbonyl, (C₃-C₈)-Cycloalkoxycarbonyl, (C₃-C₈)-Cycloalkyl-(C₁-C₈)-alkoxycarbonyl, (C₁-C₈)-Alkylaminocarbonyl, (C₃-C₈)-Cyclopropylaminocarbonyl, Aryl-(C₁-C₈)-alkylaminocarbonyl, (C₁-C₈)-Alkylsulfonyl, Arylsulfonyl, (C₃-C₈)-Cycloalkylsulfonyl, Aryl-(C₁-C₈)-alkylsulfonyl, (C₂-C₈)-Alkenylsulfonyl, Heteroarylsulfonyl, (C₂-C₈)-Alkinylsulfonyl, (C₁-C₈)-Alkylsulfinyl, Arylsulfinyl, (C₃-C₈)-Cycloalkylsulfinyl, (C₂-C₈)-Alkenylsulfinyl, (C₂-C₈)-Alkinylsulfinyl, Arylcarbonyl, Heteroarylcarbonyl, (C₁-C₈)-Alkoxycarbonyl-(C₁-C₈)-alkyl, (C₂-C₈)-Alkenyloxycarbonyl-(C₁-C₈)-alkyl, Hydroxycarbonyl-(C₁-C₈)-alkyl, Cyano-(C₁-C₈)-alkylaminocarbonyl, (C₂-C₈)-Alkinylaminocarbonyl, Heterocyclylcarbonyl, Hetaroaryl-(C₁-C₈)-alkylaminocarbonyl, (C₃-C₈)-Cycloalkyl-(C₁-C₈)-alkoxycarbonylcarbonyl, (C₁-C₈)-Alkoxycarbonylcarbonyl, (C₃-C₈)-Cycloalkyl-(C₁-C₈)-alkylaminocarbonyl, Aryl-(C₁-C₈)-alkylaminocarbonyl, Heterocyclyl oder eine negative Ladung steht,
R⁷, R⁸, R⁹, R¹⁰ unabhängig voneinander für Wasserstoff, Halogen, (C₁-C₈)-Alkyl, (C₃-C₈)-Cycloalkyl, (C₄-C₈)-Cycloalkenyl, Aryl-(C₁-C₈)-alkyl, (C₂-C₈)-Alkenyl, (C₁-C₈)-Haloalkyl, (C₁-C₈)-Alkoxy, (C₁-C₈)-Haloalkoxy, (C₁-C₈)-Alkylthio, (C₁-C₈)-Haloalkylthio, Aryl, Heteroaryl, Heterocyclyl, (C₁-C₈)-Alkoxy-(C₁-C₈)-alkyl, (C₂-C₈)-Alkinyl, (C₂-C₈)-Haloalkinyl, Hydroxy, Amino, (C₁-C₈)-Alkylamino, Bis[(C₁-C₈)-alkyl]amino, Cyano, (C₁-C₈)-Alkoxy-(C₁-C₈)-alkoxy stehen,
R¹⁹, R²⁰, R²¹, R²², R²³, R²⁴, R²⁵, R²⁶ unabhängig voneinander für Wasserstoff, Halogen, (C₁-C₈)-Alkyl, (C₃-C₈)-Cycloalkyl, Aryl-(C₁-C₈)-alkyl, Aryl, Heteroaryl, Heterocyclyl, (C₂-C₈)-Alkenyl, (C₁-C₈)-Haloalkyl, (C₁-C₈)-Alkylthio, (C₁-C₈)-Haloalkylthio, Arylthio, (C₂-C₈)-Alkinyl, (C₁-C₈)-Alkylamino, Bis[(C₁-C₈)-alkyl]amino, (C₁-C₈)-Alkoxy, (C₁-C₈)-Haloalkoxy stehen,
oder wobei R¹ und R⁴ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 5 bis 7-gliedrigen Ring bilden,
oder wobei R⁴ und R⁷, mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁷, und R⁹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²¹ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
oder wobei R⁴ und R²³ mit den Atomen, an die sie gebunden sind, einen vollständig gesättigten oder teilgesättigten, gegebenenfalls durch Heteroatome aus der Gruppe N, O und S unterbrochenen und gegebenenfalls weiter substituierten 4 bis 7-gliedrigen Ring bilden,
unter der Voraussetzung, daß mindestens eines der vorgenannten Restepaare R¹ und R⁴, R⁴ und R⁷, R⁷ und R⁹, R⁴ und R²¹ sowie R⁴ und R²³ zusammen mit den anderen betreffenden vorgenannten Gruppen einen Ring bildet, so daß sich tricyclische Verbindungen der allgemeinen Formel (I) ergeben.

13. Sprühlösung zur Behandlung von Pflanzen, enthaltend eine zur Steigerung der Widerstandsfähigkeit von Pflanzen gegenüber abiotischen Stressfaktoren wirksame Menge einer oder mehrerer der tricyclischen substituierten Pyrimidindione .gemäß Anspruch 12.
